# EUROPEAN PATENT APPLICATION

(11) **EP 4 830 883 A1**
(43) Date of publication of application: **28.10.2026**
(21) Application number: 23960123.0
(22) Date of filing: 28.11.2023
(51) Int. Cl.: B25J 13/00, B25J 13/08

(54) **CONTROL DEVICE, CONTROL SYSTEM, ROBOT SYSTEM, CONTROL METHOD, AND COMPUTER PROGRAM**

(71) Applicant: NIKON CORPORATION, Tokyo 140-8601 (JP)
(72) Inventor: WAKIMOTO, Kenta, Tokyo 140-8601 (JP)
(74) Representative: Hoffmann Eitle
(86) International application number: PCT/JP2023/042576
(87) International publication number: WO 2025/115102

(57) **Abstract**

A control apparatus generates a first control signal for controlling at least one of a robot and a holding apparatus mounted on the robot to drop a second target object into a container, in a case where the second target object is held by the holding apparatus together with a first target object when the holding apparatus holds the first target object contained in the container; and generates a second control signal for controlling at least one of the robot and the holding apparatus to drop a fourth target object into a container from a position lower than a position from which the second target object starts to drop into the container, in a case where the fourth target object is held by the holding apparatus together with a third target object when the holding apparatus holds the third target object after the second target object has dropped into the container based on the first control signal.

## Description

### Technical Field

The present invention relates to a technical field of a control apparatus, a control system, a robot system, a control method, and a computer program that are configured to generate a control signal for controlling a robot, for example.

### Background Art

A Patent literature 1 discloses one example of a control apparatus that controls a robot to hold an object. This type of control apparatus is required to control the robot to properly hold the object.

### Citation List

### Patent Literature

Patent Literature 1: US2013/0230235A1

### Summary of Invention

A first aspect provides a control apparatus that generates a control signal for controlling at least one of a robot, on which a holding apparatus that is configured to hold a target object and an imaging system that images the target object are mounted and which moves the holding apparatus and the imaging system, and a holding apparatus, wherein the control apparatus includes: a computing apparatus that generates the control signal; and a communication apparatus that outputs the control signal generated by the computing apparatus, the computing apparatus: generates, as the control signal, a first control signal for controlling at least one of the robot and the holding apparatus so that at least a second target object drops into a container, in a case where the second target object of a plurality of target objects contained in the container is held by the holding apparatus together with a first target object, which is the target object in a target object group including at least a part of a plurality of target objects contained in the container, when the holding apparatus holds the first target object based on an imaged result by the imaging system imaging the target object group; and generates, as the control signal, a second control signal for controlling at least one of the robot and the holding apparatus so that at least a fourth target object drops into the container from a position that is lower than a position from which at least the second target object starts to drop into the container, in a case where the fourth target object of a plurality of target objects contained in the container is held by the holding apparatus together with a third target object of a plurality of target objects contained in the container, when the holding apparatus holds the third target object after at least the second target object has dropped into the container based on the first control signal.

A second aspect provides a control system including: the control apparatus provided by the first aspect; and the imaging system.

A third aspect provides a robot system including: the control apparatus provided by the first aspect; the imaging system; and the robot.

A fourth aspect provides a control method that generates a control signal for controlling at least one of a robot, on which a holding apparatus that is configured to hold a target object and an imaging system that images the target object are mounted and which moves the holding apparatus and the imaging system, and a holding apparatus, wherein the control method includes: generating, as the control signal, a first control signal for controlling at least one of the robot and the holding apparatus so that at least a second target object drops into a container, in a case where the second target object of a plurality of target objects contained in the container is held by the holding apparatus together with a first target object, which is the target object in a target object group including at least a part of a plurality of target objects contained in the container, when the holding apparatus holds the first target object based on an imaged result by the imaging system imaging the target object group; and generating, as the control signal, a second control signal for controlling at least one of the robot and the holding apparatus so that at least a fourth target object drops into the container from a position that is lower than a position from which at least the second target object starts to drop into the container, in a case where the fourth target object of a plurality of target objects contained in the container is held by the holding apparatus together with a third target object of a plurality of target objects contained in the container, when the holding apparatus holds the third target object after at least the second target object has dropped into the container based on the first control signal.

A fifth aspect provides a computer program that allows a computer to execute the control method provided by the fourth aspect.

A sixth aspect provides a control apparatus that generates a control signal for controlling at least one of a robot, on which a holding apparatus that is configured to hold a target object and an imaging system that images the target object are mounted and which moves the holding apparatus and the imaging system, and a holding apparatus, wherein the control apparatus includes: a computing apparatus that generates the control signal; and a communication apparatus that outputs the control signal generated by the computing apparatus, the computing apparatus generates, as the control signal, a first control signal for controlling at least one of the robot and the holding apparatus based on a held state of a held target object group held by the holding apparatus, which is detected based on a second imaged result acquired by the imaging system imaging the held target object group that includes a plurality of target objects held by the holding apparatus, after a holding operation by the holding apparatus is performed on the target object contained in a container based on a first imaged result acquired by the imaging system imaging at least a part of a plurality of target objects contained in the container.

A seventh aspect provides a control system including: the control apparatus provided by the sixth aspect; and the imaging system.

An eighth aspect provides a robot system including: the control apparatus provided by the sixth aspect; the imaging system; and the robot.

A ninth aspect provides a control method that generates a control signal for controlling at least one of a robot, on which a holding apparatus that is configured to hold a target object and an imaging system that images the target object are mounted and which moves the holding apparatus and the imaging system, and a holding apparatus, wherein the control method generates, as the control signal, a first control signal for controlling at least one of the robot and the holding apparatus based on a held state of a held target object group held by the holding apparatus, which is detected based on a second imaged result acquired by the imaging system imaging the held target object group that includes a plurality of target objects held by the holding apparatus, after a holding operation by the holding apparatus is performed on the target object contained in a container based on a first imaged result acquired by the imaging system imaging at least a part of a plurality of target objects contained in the container.

A tenth aspect provides a computer program that allows a computer to execute the control method provided by the ninth aspect.

A eleventh aspect provides a control apparatus that generates a control signal for controlling at least one of a robot, on which a holding apparatus that is configured to hold a target object and an imaging system that images the target object are mounted and which moves the holding apparatus and the imaging system, and a holding apparatus, wherein the control apparatus includes: a computing apparatus that generates the control signal; and a communication apparatus that outputs the control signal generated by the computing apparatus, the computing apparatus: determines the number of target objects held by the holding apparatus based on a second imaged result acquired by imaging the target objects held by the holding apparatus, after a holding operation by the holding apparatus is performed on the target objects contained in a container based on a first imaged result acquired by the imaging system imaging at least a part of a plurality of target objects contained in the container, and generates the control signal for controlling at least one of the robot and the holding apparatus so that a control aspect of at least one of the robot and the holding apparatus changes based on the determined number.

A twelfth aspect provides a control system including: the control apparatus provided by the eleventh aspect; and the imaging system.

A thirteenth aspect provides a robot system including: the control apparatus provided by the eleventh aspect; the imaging system; and the robot.

A fourteenth aspect provides a control method that generates a control signal for controlling at least one of a robot, on which a holding apparatus that is configured to hold a target object and an imaging system that images the target object are mounted and which moves the holding apparatus and the imaging system, and a holding apparatus, wherein the control method includes: determining the number of target objects held by the holding apparatus based on a second imaged result acquired by imaging the target objects held by the holding apparatus, after a holding operation by the holding apparatus is performed on the target objects contained in a container based on a first imaged result acquired by the imaging system imaging at least a part of a plurality of target objects contained in the container, and generating the control signal for controlling at least one of the robot and the holding apparatus so that a control aspect of at least one of the robot and the holding apparatus changes based on the determined number.

A fifteenth aspect provides a computer program that allows a computer to execute the control method provided by the thirteenth aspect.

An operation and another advantage of the present invention will be apparent from an example embodiment described below.

### Brief Description of Drawings

[FIG. 1] FIG. 1 is a block diagram that illustrates a configuration of a robot system in a present example embodiment.
[FIG. 2] FIG. 2 is a side view that illustrates an exterior appearance of a robot in the present example embodiment.
[FIG. 3] FIG. 3 is a block diagram that illustrates a configuration of a control apparatus in the present example embodiment.
[FIG. 4] FIG. 4 is a block diagram that illustrates a configuration of a robot control apparatus in the present example embodiment.
[FIG. 5] FIG. 5 is a flowchart that illustrates a flow of a robot control processing.
[FIG. 6] Each of FIG. 6(a) to FIG. 6(d) is a crosse-sectional view that illustrates an end effector holding a process performed object and a non-process performed object.
[FIG. 7] Each of FIG. 7(a) to FIG. 7(c) is a crosse-sectional view that illustrates a relationship between a plurality of target objects contained in a container and the end effector holding a hold target object group.
[FIG. 8] FIG. 8 is a crosse-sectional view that illustrates the process performed object and the non-process performed object dropping from the end effector.
[FIG. 9] FIG. 9 is a crosse-sectional view that illustrates the non-process performed object dropping from the end effector.
[FIG. 10] FIG. 10 is a crosse-sectional view that illustrates the non-process performed object dropping from the end effector.
[FIG. 11] FIG. 11 is a crosse-sectional view that illustrates the rotationally moving end effector.
[FIG. 12] FIG. 12 is a crosse-sectional view that illustrates the rotationally moving end effector.
[FIG. 13] FIG. 13 is a crosse-sectional view that illustrates the process performed object and the non-process performed object dropping from the end effector.
[FIG. 14] FIG. 14 is a crosse-sectional view that illustrates a height of a target object group contained in the container.
[FIG. 15] Each of FIG. 15(a) to FIG. 15(c) is a crosse-sectional view that illustrates a drop height.
[FIG. 16] Each of FIG. 16(a) to FIG. 16(b) is a crosse-sectional view that illustrates the end effector holding the non-process performed object.
[FIG. 17] FIG. 17 is a crosse-sectional view that illustrates the non-process performed object dropping from the end effector.
[FIG. 18] FIG. 18 is a crosse-sectional view that illustrates an imaging system that images the target object.
[FIG. 19] FIG. 19 is a cross-sectional view that illustrates a weight sensor that measures a weight of the target object.
[FIG. 20] FIG. 20 is a cross-sectional view that illustrates a container on which an object detection sensor for detecting the target object is positioned.
[FIG. 21] FIG. 21 is a cross-sectional view that illustrates the container on which a marker is positioned.
[FIG. 22] FIG. 22 is a flowchart that illustrates a flow of a robot control processing in a second modified example.
[FIG. 23] FIG. 23 is a cross-sectional view that illustrates one example of a state in which a desired part of the non-process performed object faces toward a desired direction.
[FIG. 24] FIG. 24 is a cross-sectional view that conceptionally illustrates an imaging apparatus that moves before imaging the non-process performed object.
[FIG. 25] FIG. 25 is a block diagram that illustrates a configuration of the robot system including a measurement system.

### Description of Example embodiments

Next, with reference to drawings, an example embodiment of a control apparatus, a control system, a robot system, a control method, and a computer program will be described. In the below described description, the example embodiment of the control apparatus, the control system, the robot system, the control method, and the computer program will be described by using a robot system SYS.

### (1) Configuration of Robot System SYS

Firstly, a configuration of the robot system SYS will be described.

### (1-1) Entire Configuration of Robot System SYS

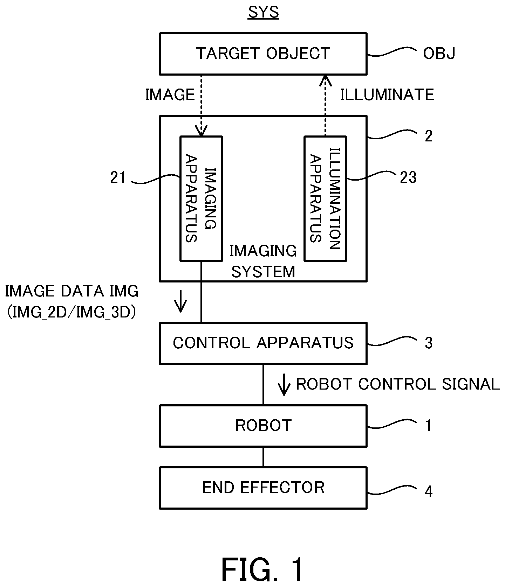

Firstly, with reference to FIG.1, an entire configuration of the robot system SYS will be described. FIG. 1 is a block diagram that illustrates the entire configuration of the robot system SYS.

As illustrated in FIG. 1, the robot system SYS includes: a robot 1; an imaging system 2, a control apparatus 3, and an end effector 4. Note that the imaging system 2 may be referred to as an imaging unit.

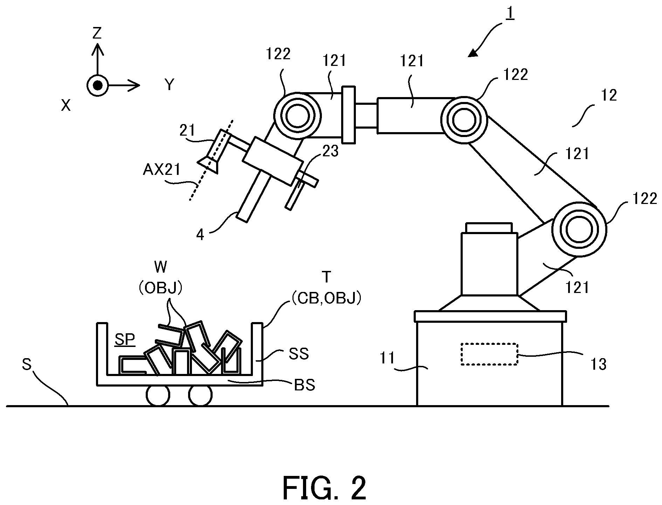

The robot 1 is an apparatus that is configured to perform a predetermined process on a target object OBJ. One example of the robot 1 is illustrated in FIG. 2. FIG. 2 is a side view that illustrates an exterior appearance of the robot 1. As illustrated in FIG. 2, the robot 1 includes: a base 11; a robot arm 12, and a robot control apparatus 13, for example.

The base 11 is a member that is a foundation of the robot 1. The base 11 is placed on a support surface S such as a floor surface. The base 11 may be fixed to the support surface S. Alternatively, the base 11 may be movable relative to the support surface S. Note that FIG. 2 illustrates an example in which the base 11 is fixed to the support surface S.

The robot arm 12 is attached to the base 11. The robot arm 12 is an apparatus in which a plurality of links 121 are connected through a joint 122. An actuator is built in the joint 122. The link 121 may be rotatable around an axis defined by the joint 122 by the actuator built in the joint 122. Note that at least one link 121 may be extendable and retractable along a direction along which the link 121 extends. Note that an apparatus including the base 11 and an apparatus in which the plurality of links 121 are connected through the joint 122 may be referred to as the robot arm 12.

The end effector 4 is attached to the robot arm 12. Namely, the end effector 4 is attached to the robot 1. In an example illustrated in FIG. 2, the end effector 4 is attached to an end of the robot arm 12. The end effector 4 is movable by a movement of the robot arm 12. Namely, the robot arm 12 moves the end effector 4. Namely, the robot 1 moves the end effector 4.

The end effector 4 is an apparatus that performs a predetermined process (in other words, a predetermined operation) on the target object OBJ. The end effector 4 that performs the predetermined process on the target object OBJ may be referred to as a process apparatus.

For example, the end effector 4 may perform a holding process for holding the target object OBJ as one example of the predetermined process. In this case, the end effector 4 may be considered to perform the holding process on the target object OBJ that should be held by the end effector 4. The end effector 4 that is configured to perform the holding process may be referred to as a holding apparatus. Note that holding the target object OBJ may be considered to be equivalent to picking-up the target object OBJ. the holding process for holding the target object OBJ may be considered to be equivalent to a picking-up process for picking-up the target object OBJ.

For example, holding the target object OBJ may include gripping the target object OBJ. For example, holding the target object OBJ may include gripping the target object OBJ by using a hand gripper that is one example of the end effector 4. Holding the target object OBJ may include sucking the target object OBJ. For example, holding the target object OBJ may include sucking (vacuum sucking) the target object OBJ by using a vacuum gripper that is one example of the end effector 4. For example, holding the target object OBJ may include sucking the target object OBJ by using a magnetic gripper (for example, a magnetic suction gripper) that is one example of the end effector 4.

For example, the end effector 4 may perform a releasing process (in other words, a releasing operation) for releasing (in other words, letting off) the held target object OBJ as one example of the predetermined process. In this case, the end effector 4 may be considered to perform the releasing process on the target object OBJ held by the end effector 4. The end effector 4 that is configured to perform the releasing process may be referred to as a releasing apparatus.

The hand gripper is one example of the end effector 4 that is configured to perform the holding process and the releasing process. The hand gripper is an end effector 4 that is configured to hold (grip) the target object OBJ by physically clamping the target object OBJ using a plurality of (for example, two, three, or four) finger members or claw members. The vacuum gripper (for example, a vacuum suction gripper) is another example of the end effector 4 that is configured to perform the holding process and the releasing process. The vacuum gripper is an end effector 4 that is configured to hold (suck) the target object OBJ by vacuum sucking the target object OBJ. The magnetic gripper (for example, the magnetic suction gripper) is another example of the end effector 4 that is configured to perform the holding process and the releasing process. FIG. 2 illustrates an example in which the end effector 4 is the hand gripper. However, the end effector 4 that is configured to perform the holding process and the releasing process is not limited to the examples described above and may be other existing end effector that is configured to hold and release the target object OBJ.

The robot 1 may perform a placing process (in other words, a placing operation) for placing the target object OBJ at a desired position by using the end effector 4 that is configured to perform the holding process and the releasing process. For example, the robot 1 may perform the placing process for holding a first target object OBJ by using the end effector 4, and then placing the first target object OBJ held by the end effector 4 at a desired position of a second target object OBJ that is different from the first target object OBJ. In this case, the end effector 4 may be considered to perform the releasing process on the second target object OBJ on which the end effector 4 should place the first target object OBJ. Similarly, the end effector 4 may be considered to perform the releasing process on the first target object OBJ that should be released by the end effector 4.

The robot 1 may perform, as one example of the placing process (in other words, the placing operation), an embedding process (in other words, an embedding operation) for embedding the first target object OBJ into the second target object OBJ that is different from the first target object OBJ by using the end effector 4 that is configured to perform the holding process and the releasing process. The embedding process may include a process for embedding (namely, inserting) the first target object OBJ (for example, a convex part of the first target object OBJ) into a concave part (for example, a hole) formed in the second target object OBJ. The embedding process may include a process for embedding the first target object OBJ (for example, a concave part of the first target object OBJ) into a convex part (for example, a stick) formed at the second target object OBJ.

The robot 1 may perform, as one example of the placing process (in other words, the placing operation), an attachment process (in other words, an attachment operation) for attaching the first target object OBJ to the second target object OBJ that is different from the first target object OBJ by using the end effector 4 that is configured to perform the holding process and the releasing process. The robot 1 may perform, as one example of the placing process (in other words, the placing operation), an adhesive process (in other words, an adhesive operation) for adhering the first target object OBJ to the second target object OBJ that is different from the first target object OBJ by using the end effector 4 that is configured to perform the holding process and the releasing process. The robot 1 may perform, as one example of the placing process (in other words, the placing operation), a welding process (in other words, a welding operation) for welding the first target object OBJ to the second target object OBJ that is different from the first target object OBJ by using the end effector 4 that is configured to perform the holding process and the releasing process. The robot 1 may perform, as one example of the placing process (in other words, the placing operation), a screw tightening process (in other words, a screw tightening operation) for tightening the first target object OBJ, which serves as a screw, into a screw hole formed in the second target object OBJ that is different from the first target object OBJ by using the end effector 4 that is configured to perform the holding process and the releasing process. In this case, the first target object OBJ may be a screw member that is configured to serve as a screw such as a bolt or a nut. Note that at least one of the attachment process, the adhesive process, the welding process, and the screw tightening process may be referred to as a processing process.

The robot 1 may perform, as one example of the placing process (in other words, the placing operation), a process (in other words, a disposal operation) for disposing of the target object OBJ by using the end effector 4 that is configured to perform the holding process and the releasing process.

For example, the end effector 4 may perform the predetermined process on each of a plurality of target objects OBJ. Namely, the end effector 4 may sequentially perform the predetermined process on the plurality of target objects OBJ. In this case, the robot 1 may move the end effector 4 to a first position at which the end effector 4 can perform the predetermined process on a first target object OBJ, and the end effector 4 may perform the predetermined process on the first target object OBJ after the end effector 4 moves to the first position. Then, the robot 1 may move end effector 4 to a second position at which the end effector 4 can perform the predetermined process on a second target object OBJ that is different from the first target object OBJ, and the end effector 4 may perform the predetermined process on the second target object OBJ after the end effector 4 moves to the second position.

For example, the end effector 4 may perform the predetermined process on each of a plurality of parts of the single target object OBJ. Namely, the end effector 4 may sequentially perform the predetermined process on the plurality of parts of the single target object OBJ. In this case, the robot 1 may move the end effector 4 to a third position at which the end effector 4 can perform the predetermined process on a first part of the target object OBJ, and the end effector 4 may perform the predetermined process on the first part of the target object OBJ after the end effector 4 moves to the third position. Then, the robot 1 may move end effector 4 to a fourth position at which the end effector 4 can perform the predetermined process on a second part of the target object OBJ, and the end effector 4 may perform the predetermined process on the second part of the target object OBJ after the end effector 4 moves to the fourth position.

The target object OBJ on which the end effector 4 performs the predetermined process may include a workpiece W, as illustrated in FIG. 2. The workpiece W may include a component or a member that is used to manufacture a desired product, for example. The workpiece W may include a component or a member that is processed to manufacture the desired product, for example. The workpiece W may include a component or a member that is transported to manufacture the desired product, for example. The workpiece W may include a component or a member that is moved by a transportation for manufacturing the desired product, for example. The workpiece W may include a component or a member that is moved to manufacture the desired product, for example.

The target object OBJ on which the end effector 4 performs the predetermined processing may include a placing apparatus T on which the workpiece W is placed, as illustrated in FIG. 2. A container (a container box) CB is one example of the placing apparatus T. The container CB may be a placing apparatus T which includes a bottom wall BS and a side wall SS protruding upward from the bottom wall BS and in which the workpiece W is placed on the bottom wall SB in a containing space surrounded by the bottom wall BS and the side wall SS. The container CB may be a placing apparatus T which includes the bottom wall BS and the side wall SS protruding upward from the bottom wall BS and which can contain the workpiece W in the containing space SP surrounded by the bottom wall BS and the side wall SS. However, the container CB may not include the side wall SS. The container CB that does not include the side wall SS may be referred to as a pallet. Moreover, the placing apparatus T is not limited to the container CB or the pallet, and may be an existing object on which the workpiece W is allowed to be placed. Note that the placing apparatus T may be referred to as a placing member. The placing apparatus T may be positioned on the support surface S. The placing apparatus T may be fixed to the support surface S. Alternatively, at least a part of the placing apparatus T may be movable relative to the support surface S. An example in which the placing apparatus T is supported by a transport apparatus that is configured to move (in other words, that is configured to transport) the placing apparatus T is a first example in which at least a part of the placing apparatus T is movable relative to the support surface S. The transport apparatus may be a belt conveyer, for example. An example in which the placing apparatus T itself is movable relative to the support surface S is a second example in which at least a part of the placing apparatus T is movable relative to the support surface S. In this case, the placing apparatus T may be at least one of an automated guided vehicle, an autonomous mobile robot, and an unmanned aerial vehicle. Note that FIG. 2 illustrates an example in which the placing apparatus T is movable by itself on the support surface S. Note that at least one of the automated guided vehicle, the autonomous mobile robot, and the unmanned aerial vehicle may be referred to as a movable apparatus.

The robot control apparatus 13 controls an operation of the robot 1.

Specifically, the robot control apparatus 13 may control an operation of the robot arm 12. For example, the robot control apparatus 13 may control the operation of the robot arm 12 so that the desired link 121 rotates around an axis defined by the desired joint 122. For example, the robot control apparatus 13 may control the operation of the robot arm 12 so that the end effector 4 attached to the robot arm 12 is positioned at a desired position. For example, the robot control apparatus 13 may control the operation of the robot arm 12 so that the end effector 4 attached to the robot arm 12 moves to a desired position.

The robot control apparatus 13 may control an operation of the end effector 4 (the process by the end effector 4) attached to the robot 1, in addition to or instead of controlling the operation of the robot 1. For example, the robot control apparatus 13 may control the operation of the end effector 4 so that the end effector 4 holds the target object OBJ at a desired timing. Namely, the robot control apparatus 13 may control the operation of the end effector 4 so that the end effector 4 performs the holding process at the desired timing. For example, the robot control apparatus 13 may control the operation of the end effector 4 so that the end effector 4 releases the held target object OBJ at a desired timing. Namely, the robot control apparatus 13 may control the operation of the end effector 4 so that the end effector 4 performs the releasing process at the desired timing. In a case where the end effector 4 is the hand gripper, the robot control apparatus 13 may control a timing at which the hand gripper opens and closes in order to hold or the release the target object OBJ by the end effector 4. In a case where the end effector 4 is the vacuum gripper, the robot control apparatus 13 may control a timing at which a vacuum apparatus of the vacuum gripper is turned on and turned off (alternatively, a vacuum suction force). In a case where the end effector 4 is the magnetic gripper, the robot control apparatus 13 may control a timing at which a magnetic suction apparatus of the magnetic gripper is turned on and turned off (alternatively, a magnetic force).

Note that FIG. 2 illustrates an example in which the robot 1 is the robot arm 12 (namely, a vertically articulated robot). However, the robot 1 may be a robot that is different from the vertically articulated of robot. For example, the robot 1 may be a SCARA robot (namely, a horizontally articulated robot). For example, the robot 1 may be a parallel link robot. For example, the robot 1 may be a dual-armed robot including two robot arms 12. For example, the robot 1 may be a Cartesian robot. For example, the robot 1 may be a cylindrical robot. The robot 1 may be referred to as a movable apparatus. The movable apparatus may include at least one of an automated guided vehicle, an autonomous mobile robot, and an unmanned aerial vehicle in addition to the robot 1. For example, the robot 1 may be mounted on at least one of the automatic guided vehicle, the autonomous mobile robot, and the unmanned aerial vehicle. In a case where the robot 1 is mounted on the movable apparatus (for example, at least one of the automatic guided vehicle, the autonomous mobile robot, and the unmanned aerial vehicle), the robot control apparatus 13 may control an operation of the movable apparatus on which the robot 1 is mounted in addition to control the operation of the robot 1.

Again in FIG. 1, the imaging system 2 images the target object OBJ. In order to image the target object OBJ, the imaging system 2 includes an imaging apparatus 21 and a an illumination apparatus 23.

The imaging apparatus 21 is a camera that is configured to images the target object OBJ. For example, the imaging apparatus 21 may image the target object OBJ under the control of the control apparatus 3. The imaging apparatus 21 generates image data IMG by imaging the target object OBJ. Namely, the imaging apparatus 21 generates image data IMG that is an imaged result of the target object OBJ. The image data IMG generated by the imaging apparatus 21 is output from the imaging apparatus 21 to the control apparatus 3. As a result, the control apparatus 3 acquires the image data IMG acquired by the imaging apparatus 21 imaging the target object OBJ.

The imaging system 2 may include the imaging apparatus 21 that includes a monocular camera. In this case, the imaging apparatus 21 may generate the image data IMG that includes single image data generated by the monocular camera. Alternatively, the imaging system 2 may include the imaging apparatus 21 that includes a stereo camera including two monocular cameras. In this case, the imaging apparatus 21 may generate the image data IMG that includes two image data generated by the two monocular cameras, respectively. Alternatively, the imaging system 2 may include the imaging apparatus 21 that includes a first monocular camera and a stereo camera including two second monocular cameras different from the first monocular camera. In this case, the imaging apparatus 21 may generate the image data IMG including single image data generated by the first monocular camera and the image data IMG including two image data generated by the two second monocular cameras, respectively.

Note that the imaging system 2 may include the imaging apparatus 21 that is different from the monocular camera and the stereo camera. For example, the imaging system 2 may include the imaging apparatus 21 that includes three or more monocular cameras. For example, the imaging system 2 may include the imaging apparatus 21 that includes at least one of a light field camera, a plenoptic camera, and a multispectral camera.

The imaging apparatus 21 may image the entire target object OBJ. Alternatively, the imaging apparatus 21 may image a part of the target object OBJ. Namely, the imaging apparatus 21 may image a part of the target object OBJ and may not image another part of the target object OBJ.

The imaging apparatus 21 may image a single target object OBJ. Namely, the single target object OBJ may be captured in the image indicated by the image data IMG. Alternatively, the imaging apparatus 21 may image a plurality of target objects OBJ. Namely, the plurality of target objects OBJ may be captured in the image illustrated by image data IMG. In this case, the control apparatus 3 may determine (in other words, select) one target object OBJ of the plurality of target objects OBJ captured by the imaging apparatus 21 as the target object OBJ on which the end effector 4 actually performs the predetermined process, as described in detail later. Note that the one target object OBJ of the plurality of target objects OBJ captured by the imaging apparatus 21 on which the end effector 4 actually performs the predetermined process may be referred to as a process performed object.

In a case where the imaging apparatus images the plurality of target objects OBJ, the plurality of target objects OBJ imaged by the imaging apparatus 21 may be positioned so that at least two of the plurality of target objects OBJ overlap at least partially. As one example, in a case where the target object OBJ is the workpiece W corresponding to the component used to manufacture the desired product, the plurality of workpieces W (namely, the plurality of components) may be positioned so that at least two of the plurality of workpieces W overlap at least partially. In this case, the end effector 4 may perform a process for holding at least one workpiece W of the plurality of workpieces W positioned in a disordered pattern as the holding process described above. In this case, the robot 1 may perform a bin picking for picking the workpiece W one by one from the plurality of workpieces W positioned in a disordered pattern. Note that the plurality of workpieces W positioned in a disordered pattern may be referred to as the plurality of workpieces W positioned in an irregular pattern, may be referred to as the plurality of workpieces W positioned in a careless pattern, and may be referred to as the plurality of workpieces W positioned in a random pattern.

Alternatively, the plurality of target objects OBJ imaged by the imaging apparatus 21 may be positioned in a regular pattern. For example, in a case where the target object OBJ is the workpiece W corresponding to the component used to manufacture the desired product, the plurality of workpieces W (namely, the plurality of components) may be positioned in a matrix pattern. In this case, the end effector 4 may perform a process for holding at least one workpiece W of the plurality of workpieces W positioned in the regular pattern as the holding process described above. Namely, the end effector 4 may pick-up the plurality of workpieces W, which is positioned in the regular pattern, one by one. Note that the plurality of workpieces W positioned in a disordered pattern may be referred to as the plurality of workpieces W positioned in an irregular pattern, and may be referred to as the plurality of workpieces W positioned based on a certain arrangement rule. Note that , as another example in which the plurality of target objects OBJ imaged by the imaging apparatus 21 are positioned in a regular pattern, the plurality of target objects OBJ may be placed on (for example, embedded into) another object that is different from the target objects OBJ.

Note that the placing process for placing the target object OBJ held by the end effector 4 may include a placing process for placing the target objects OBJ in an disordered pattern (in other words, a random pattern), and include a placing processing for placing the target objects OBJ in a regular pattern (in other words, an ordered pattern), as with the holding process. For example, the robot 1 may use the end effector 4 to hold one workpiece W of the plurality of workpieces W placed in a regular pattern or a random pattern in a first container CB, and then to place the one workpiece W held by the end effector 4 in a regular pattern or a random pattern in a second container CB.

The illumination apparatus 23 is an apparatus that is configured to irradiate the target object OBJ (for example, at least one target object in a case where there are the plurality of target objects OBJ) with illumination light. For example, the illumination apparatus 23 may irradiate the target object OBJ with the illumination light under the control of the control apparatus 3. Especially, the illumination apparatus 23 is an apparatus that is configured to illuminate the target object OBJ with the illumination light by irradiating the target object OBJ with the illumination light. In this case, the imaging apparatus 21 may image the target object OBJ illuminated with the illumination light. However, the illumination apparatus 23 may not irradiate the target object OBJ with the illumination light. In this case, the imaging system 2 (the robot system SYS) may not include the illumination apparatus 23.

In a case where the imaging apparatus 21 includes the stereo camera, the illumination apparatus 23 be an apparatus that is configured to project a desired projection pattern on the target object OBJ by irradiating the target object OBJ with the illumination light. The desired projection pattern may include a random pattern, for example. The random pattern may may include a random dot pattern. The desired projection pattern may include a one-dimensional or two-dimensional grid pattern. The desired projection pattern may include a line-shaped pattern, for example. The desired projection pattern may include a stripe-shaped pattern, for example. The desired projection pattern may include another projection pattern. However, even in a case where the imaging apparatus 21 does not include the stereo camera (for example, the imaging apparatus 21 includes the monocular camera), the illumination apparatus 23 may project the desired projection pattern on the target object OBJ by irradiating the target object OBJ with the illumination light. Note that the illumination apparatus 23 may irradiate the target object OBJ with the illumination light having a uniform intensity (for example, an even intensity) in this case. Note that the desired projection pattern may be referred to as light having a desired intensity distribution.

The imaging system 2 is attached to the robot arm 12, as with the end effector 4. Namely, the imaging apparatus 21 and the illumination apparatus 23 are attached to the robot arm 12. For example, as illustrated in FIG. 2, the imaging apparatus 21 and the illumination apparatus 23 may be attached to an end of the robot arm 12, as with the end effector 4. In this case, the imaging apparatus 21 and the illumination apparatus 23 are movable by the movement of the robot arm 12. Namely, the robot arm 12 moves the imaging apparatus 21 and the illumination apparatus 23.

However, the imaging system 2 may not be attached to the robot arm 12. For example, the imaging system 2 may be positioned at any position that allows the imaging system 2 to image the target object OBJ. Moreover, for example, the imaging system 2 may be positioned at any position that allows the imaging system 2 to irradiate the target object OBJ with the illumination light. For example, the imaging system 2 may be attached to a structural object such as a pillar. Note that of the imaging apparatus 21 and the illumination apparatus 23 may be attached to the robot arm 12, and the other one of the imaging apparatus 21 and the illumination apparatus 23 may be attached to a position (for example, the structural object such as the pillar) that is different from the robot arm 12.

The imaging apparatus 21 may image the target object OBJ (for example, at least one target object in a case where there are the plurality of target objects OBJ) in a period during which the target object OBJ and the imaging apparatus 21 are being relatively displaced. Note that a state in which the imaging apparatus 21 and the target object OBJ are relatively displaced may mean a state in which a relative positional relationship between the imaging apparatus 21 and the target object OBJ is changing. The state in which the imaging apparatus 21 and the target object OBJ are relatively displaced may mean a state in which the imaging apparatus 21 and the target object OBJ are relatively moving. For example, the state in which the imaging apparatus 21 and the target object OBJ are relatively displaced may include a state in which the target object OBJ is moving with respect to the imaging apparatus 21. For example, the state in which the imaging apparatus 21 and the target object OBJ are relatively displaced may include a state in which the imaging apparatus 21 is moving with respect to the target object OBJ. In this case, the imaging apparatus 21 may not stop in order to image the target object OBJ, and therefore, the robot system SYS can efficiently perform the predetermined process on the target object OBJ by using the end effector 4.

Alternatively, the imaging apparatus 21 may image the target object OBJ in a period during which the imaging apparatus 21 and the target object OBJ are not being relatively displaced. Note that a state in which the imaging apparatus 21 and the target object OBJ are not being relatively displaced may mean a state in which the relative positional relationship between the imaging apparatus 21 and the target object OBJ is not changed. The state in which the imaging apparatus 21 and the target object OBJ are not being relatively displaced may mean a state in which the imaging apparatus 21 and the target object OBJ are not relatively moving. The state in which the imaging apparatus 21 and the target object OBJ are not being relatively displaced may mean a state in which the imaging apparatus 21 and the target object OBJ stop. The state in which the imaging apparatus 21 and the target object OBJ are not being relatively displaced may mean a state in which the imaging apparatus 21 and the target object OBJ are moving toward the same movement direction at the same movement speed.

The control apparatus 3 performs a robot control processing. The robot control processing includes a processing for generating a robot control signal for controlling the robot 1. Specifically, the control apparatus 3 generates the robot control signal based on the image data IMG output from the imaging system 2. In the present example embodiment, the control apparatus 3 calculates at least one of a position and a pose of the target object OBJ in a global coordinate system of the robot system SYS based on the image data IMG, and generates the robot control signal based on at least one of the calculated position and pose of the target object OBJ.

The global coordinate system is a coordinate system that is a basis for the robot system SYS. For example, the global coordinate system may be a coordinate system that is a basis for the robot 1. Note that it can be said that the global coordinate system is a coordinate system that is used to control the robot 1. A world coordinate system that is defined relative to the support surface S on which the robot 1 is positioned may be used as the global coordinate system. Namely, the world coordinate system that is fixed relative to the support surface S may be used as the global coordinate system. Note that the X-axis, the Y-axis, and the Z-axis may mean the X-axis, the Y-axis, and the Z-axis in the global coordinate system, respectively, in the below-described description, if there is no notation.

However, the control apparatus 3 may calculate at least one of the position and the pose of the target object OBJ in a coordinate system that is different from the global coordinate system based on the image data IMG. The coordinate system that is different from the global coordinate system may include at least one of a robot coordinate system and an imaging coordinate system. The robot coordinate system may be a coordinate system that is defined relative to the robot 1. Namely, the robot coordinate system may be a coordinate system that is fixed relative to the robot 1 (for example, that is fixed relative to the base 11 of the robot 1). The imaging coordinate system may be a coordinate system that is defined relative to the imaging apparatus 21. Namely, the imaging coordinate system may be a coordinate system that is fixed relative to the imaging apparatus 21. A coordinate system that is defined based on an optical axis AX21 (see FIG. 2) of an optical system (especially, a terminal optical element such as an objective lens) of the imaging apparatus 21 is one example of the imaging coordinate system. A coordinate system in which one of three axes defining the imaging coordinate system is an axis that is along the optical axis AX21 (see FIG. 2) of the optical system (especially, the terminal optical element such as the objective lens) of the imaging apparatus 21 is another example of the imaging coordinate system.

The control apparatus 3 may perform an end effector control processing, in addition to performing the robot control processing. The end effector control processing may include a processing for generating an end effector control signal for controlling the end effector 4. Specifically, the control apparatus 3 may generate the end effector control signal based on at least one of the calculated position and pose of the target object OBJ.

Note that the end effector control processing may be included or may not be included in the robot control processing. Namely, the end effector control signal generated by the control apparatus 3 may be included in the robot control signal or may not be included in the robot control signal. In the below-described description, an example in which the end effector control processing is included in the robot control processing (namely, the end effector control signal is included in the robot control signal) will be described. Therefore, in the below-described description, the robot control processing may mean a processing for generating at least one of the robot control signal and the end effector control signal. Moreover, in the below-described description, the robot control signal may mean at least one of the signal for controlling the robot 1 and the signal for controlling the end effector 4. Note that the robot control signal may be simply referred to as a control signal.

In a case where the robot 1 is mounted on the movable apparatus(for example, at least one of the automatic guided vehicle, the autonomous mobile robot, and the unmanned aerial vehicle), the control apparatus 3 may perform a movable apparatus control processing, in addition to performing the robot control processing. The movable apparatus control processing may include a processing for generating a movable apparatus control signal for controlling the movable apparatus. Specifically, the control apparatus 3 may generate the movable apparatus control signal based on at least one of the calculated position and pose of the target object OBJ.

Note that the movable apparatus control processing may be included or may not be included in the robot control processing. Namely, the movable apparatus control signal generated by the control apparatus 3 may be included in the robot control signal or may not be included in the robot control signal. In the below-described description, an example in which the movable apparatus control processing is included in the robot control processing (namely, the movable apparatus control signal is included in the robot control signal) will be described. Therefore, in the below-described description, the robot control processing may mean a processing for generating at least one of the robot control signal, the end effector control signal, and the movable apparatus control signal. Moreover, in the below-described description, the robot control signal may mean at least one of the signal for controlling the robot 1, the signal for controlling the end effector 4, and the signal for controlling the movable apparatus.

In this manner, the control apparatus 3 and the imaging system 2 are used to control the robot 1. Therefore, a system including the control apparatus 3 and the imaging system 2 may be referred to as a robot control system or a control system.

The robot control signal generated by the control apparatus 3 is output to the robot control apparatus 13 of the robot 1. The robot control apparatus 13 controls the operation of the robot 1 based on the robot control signal generated by the control apparatus 3. Therefore, the robot control signal may include a signal for controlling the operation of the robot 1.

In a case where the robot control signal includes the signal for controlling the robot arm 12 as described above, the robot control apparatus 13 may control the robot arm 12 based on the robot control signal. For example, the robot control apparatus 13 may control the operation of the robot arm 12 by controlling an operation of the actuator built into the joint 122 based on the robot control signal.

For example, the robot arm 12 moves the end effector 4 as described above. In this case, the robot control signal may include a signal for controlling the robot arm 12 so that the end effector 4 is positioned at a desired position. The robot control signal may include a signal for controlling the robot arm 12 so that the end effector 4 moves to the desired position. The robot control signal may include a signal for controlling the robot arm 12 so that a positional relationship between the end effector 4 and the target object OBJ is a desired positional relationship. In this case, the robot control apparatus 13 may control the robot arm 12 based on the robot control signal so that the end effector 4 is positioned at the desired position. The robot control apparatus 13 may control the robot arm 12 based on the robot control signal so that the end effector 4 moves to the desired position. The robot control apparatus 13 may control the robot arm 12 based on the robot control signal so that the positional relationship between the end effector 4 and the target object OBJ is the desired positional relationship.

As one example, in a case where the end effector 4 performs the holding process for holding the target object OBJ, the robot control signal may include a signal for controlling the robot arm 12 so that the end effector 4 moves toward (namely, approaches) a hold target position at which the end effector 4 can hold the target object OBJ. Namely, the robot control signal may include a signal for controlling the robot arm 12 so that the end effector 4 is positioned at the hold target position. In this case, the robot control apparatus 13 may control the robot arm 12 based on the robot control signal so that the end effector 4 moves toward (namely, approaches) the hold target position. Namely, the robot control signal may control the robot arm 12 so that the end effector 4 is positioned at the hold target position.

As one example, in a case where the end effector 4 performs the holding process for holding the target object OBJ, the robot control signal may include a signal for controlling the robot arm 12 so that the pose of the end effector 4 becomes a hold target pose that allows the end effector 4 to hold the target object OBJ. In this case, the robot control apparatus 13 may control the robot arm 12 based on the robot control signal so that the pose of the end effector 4 becomes the hold target pose.

As another example, in a case where the end effector 4 performs the releasing process for releasing the held target object OBJ, the robot control signal may include a signal for controlling the robot arm 12 so that the end effector 4 moves toward (namely, approaches) a release target position at which the end effector 4 should release the held target object OBJ. Namely, the robot control signal may include a signal for controlling the robot arm 12 so that the end effector 4 is positioned at the release target position. In this case, the robot control apparatus 13 may control the robot arm 12 based on the robot control signal so that the end effector 4 moves toward (namely, approaches) the release target position. Namely, the robot control signal may control the robot arm 12 so that the end effector 4 is positioned at the release target position.

As one example, in a case where the end effector 4 performs the holding process for holding the target object OBJ, the robot control signal may include a signal for controlling the robot arm 12 so that the pose of the end effector 4 becomes a release target pose that allows the end effector 4 to release the target object OBJ. In this case, the robot control apparatus 13 may control the robot arm 12 based on the robot control signal so that the pose of the end effector 4 becomes the release target pose.

In a case where the robot control signal includes the signal for controlling the end effector 4 as described above, the robot control apparatus 13 may control the end effector 4 based on the robot control signal. For example, the robot control apparatus 13 may control the operation of the end effector 4 by controlling an operation of the actuator that moves the hand gripper constituting the end effector 4 based on the robot control signal. For example, the robot control apparatus 13 may control the operation of the end effector 4 by controlling an operation of the vacuum apparatus of the vacuum gripper constituting the end effector 4 based on the robot control signal. For example, the robot control apparatus 13 may control the operation of the end effector 4 by controlling an operation of the magnetic suction apparatus of the magnetic gripper constituting the end effector 4 based on the robot control signal.

As one example, in a case where the end effector 4 performs the holding process for holding the target object OBJ, the robot control signal may include a signal for controlling the end effector 4 so that the end effector 4, which is positioned at the above-described hold target position and / or which takes the above-described hold target pose, holds the target object OBJ. In this case, the robot control apparatus 13 may control the end effector 4 based on the robot control signal so that the end effector 4, which is positioned at the above-described hold target position and / or which takes the above-described hold target pose, holds the target object OBJ.

In a case where the robot control signal includes the signal for controlling the movable apparatus (for example, at least one of the automated guided vehicle, the autonomous mobile robot, and the unmanned aerial vehicle) on which the robot 1 is mounted, the robot control apparatus 13 may control the movable apparatus based on the robot control signal. For example, the robot control apparatus 13 may control a power source (for example, a motor or an engine) of the movable apparatus based on the robot control signal so that the robot 1 moves to a target position that is directly or indirectly indicated by the robot control signal.

As another example, in a case where the end effector 4 performs the releasing process for releasing the target object OBJ, the robot control signal may include a signal for controlling the end effector 4 so that the end effector 4, which is positioned at the above-described release target position and / or which takes the above-described release target pose, releases the target object OBJ. In this case, the robot control apparatus 13 may control the end effector 4 based on the robot control signal so that the end effector 4, which is positioned at the above-described release target position and / or which takes the above-described release target pose, releases the target object OBJ.

The robot control signal may include a signal that is usable as it is by the robot control apparatus 13 to control the operation of the robot 1. The robot control signal may include a signal that is usable as it is as a robot driving signal that is used by the robot control apparatus 13 to control the operation of the robot 1. In this case, the robot control apparatus 13 may use the robot control signal as it is to control the operation of the robot 1. Specifically, for example, the control apparatus 3 may generate a driving signal of the actuator built in the joint 122 of the robot arm 12 as the robot control signal, and the robot control apparatus 13 may use the robot control signal generated by the control apparatus 3 as it is to control the actuator built in the joint 122 of the robot arm 12. The robot control signal may include a signal that is usable as it is by the robot control apparatus 13 to control the operation of the end effector 4.

The robot control signal may include a signal that is usable as it is by the robot control apparatus 13 to control the operation of the end effector 4. The robot control signal may include a signal that is usable as it is as an end effector driving signal that is used by the robot control apparatus 13 to control the operation of the end effector 4. In this case, the robot control apparatus 13 may use the robot control signal as it is to control the operation of the end effector 4. For example, the control apparatus 3 may generate a driving signal (the end effector driving signal) of the actuator that moves the hand gripper constituting the end effector 4 as the robot control signal, and the robot control apparatus 13 may use the robot control signal generated by the control apparatus 3 as it is to control the actuator of the end effector 4. For example, the control apparatus 3 may generate a driving signal (the end effector driving signal) of the vacuum apparatus of the vacuum gripper constituting the end effector 4 as the robot control signal, and the robot control apparatus 13 may use the robot control signal generated by the control apparatus 3 as it is to control the vacuum apparatus of the end effector 4. For example, the control apparatus 3 may generate a driving signal (the end effector driving signal) of the magnetic suction apparatus of the magnetic gripper constituting the end effector 4 as the robot control signal, and the robot control apparatus 13 may use the robot control signal generated by the control apparatus 3 as it is to control the magnetic suction apparatus of the end effector 4.

The robot control signal may include a signal that is usable as it is by the robot control apparatus 13 to control the operation of the movable apparatus (for example, at least one of the automatic guided vehicle, the autonomous mobile robot, and the unmanned aerial vehicle) on which the robot 1 is mounted. The robot control signal may include a signal that is usable as it is as a movable apparatus driving signal that is used by the robot control apparatus 13 to control the operation of the movable apparatus. In this case, the robot control apparatus 13 may use the robot control signal as it is to control the operation of the movable apparatus. For example, the control apparatus 3 may generate a power source driving signal (the movable apparatus driving signal) for driving the power source (for example, the motor or the engine) of the movable apparatus as the robot control signal, and the robot control apparatus 13 may use the robot control signal generated by the control apparatus 3 as it is to control the power source of the movable apparatus.

Note that the robot 1 may not include the robot control apparatus 13 in a case where the robot control signal includes the signal that is usable as it is by the robot control apparatus 13 to control the operation of at least one of the robot 1, the end effector 4, and the movable apparatus as described above. In this case, the control apparatus 3 may control the actuator, which is built into the joint 122 of the robot arm 12, based on the robot control signal. Moreover, for example, the control apparatus 3 may control the actuator, which moves the hand gripper constituting the end effector 4 based on the robot control signal (the end effector driving signal). For example, the control apparatus 3 may control the vacuum apparatus of the vacuum gripper constituting the end effector 4 based on the robot control signal (the end effector driving signal). For example, the control apparatus 3 may control the magnetic suction apparatus of the magnetic gripper constituting the end effector 4 based on the robot control signal (the end effector driving signal). For example, the control apparatus 3 may control movable apparatus on which the robot 1 is mounted based on the robot control signal (the movable apparatus driving signal).

Alternatively, the robot control signal may include a signal that is usable by the robot control apparatus 13 to generate the robot driving signal for controlling the operation of the robot 1. In this case, the robot control apparatus 13 may generate the robot driving signal for controlling the operation of the robot 1 based on the robot control signal, and control the operation of the robot 1 based on the generated robot driving signal. For example, the robot control apparatus 13 may generate the driving signal of the actuator built in the joint 122 of the robot arm 12 based on the robot control signal, and control the actuator built in the joint 122 of the robot arm 12 based on the generated signal.

The robot control signal may include a signal that is usable by the robot control apparatus 13 to generate the end effector driving signal for controlling the operation of the end effector 4. In this case, the robot control apparatus 13 may generate the end effector driving signal for controlling the operation of the end effector 4 based on the robot control signal, and control the operation of the end effector based on the generated end effector driving signal. For example, in a case where the end effector 4 is the hand gripper, the robot control apparatus 13 may generate the end effector driving signal for driving the actuator of the hand gripper based on the robot control signal, and control the actuator of the hand gripper based on the generated end effector driving signal. For example, in a case where the end effector 4 is the magnetic gripper, the robot control apparatus 13 may generate the end effector driving signal for driving the magnetic suction apparatus of the magnetic gripper based on the robot control signal, and control the magnetic suction apparatus of the magnetic suction gripper based on the generated end effector driving signal.

The robot control signal may include a signal that is usable by the robot control apparatus 13 to generate the movable apparatus driving signal for controlling the operation of the movable apparatus on which the robot 1 is mounted. In this case, the robot control apparatus 13 may generate the movable apparatus driving signal for controlling the operation of the movable apparatus based on the robot control signal, and control the operation of the movable apparatus based on the generated movable apparatus driving signal. For example, the robot control apparatus 13 may generate the power source driving signal (the movable apparatus driving signal) for driving the power source (for example, the motor or the engine) of the movable apparatus based on the robot control signal, and control the power source of the movable apparatus based on the generated movable apparatus driving signal.

The signal that is usable by the robot control apparatus 13 to generate the robot driving signal may include a signal indicating at least one of the position and the pose of the target object OBJ in the global coordinate system. The signal that is usable by the robot control apparatus 13 to generate the robot driving signal may include a signal indicating the desired positional relationship between the robot 1 and the target object OBJ in the global coordinate system.

The signal that is usable by the robot control apparatus 13 to generate the robot driving signal may include a signal indicating the desired position of the end effector 4 in the global coordinate system. A process position at which the end effector 4 should perform the process on the target object OBJ is one example of the desired position. For example, the desired position may include the hold target position at which the end effector 4 should hold the target object OBJ. For example, the desired position may include the release target position at which the end effector 4 should release the target object OBJ. The signal that is usable by the robot control apparatus 13 to generate the robot driving signal may include a signal indicating a desired position of an end part (for example, a tool center point) of the robot arm 12 in the global coordinate system. The signal that is usable by the robot control apparatus 13 to generate the robot driving signal may include a signal indicating a desired position of the imaging system 2 in the global coordinate system.

The signal that is usable by the robot control apparatus 13 to generate the robot driving signal may include a signal indicating the desired pose of the end effector 4 in the global coordinate system. A pose (a process pose) that should be taken by the end effector 4 when the end effector 4 performs the process on the target object OBJ is one example of the desired pose. For example, the desired pose may include a pose (the hold target pose) that should be taken by the end effector 4 when the end effector 4 holds the target object OBJ. For example, the desired pose may include a pose (the release target pose) that should be taken by the end effector 4 when the end effector 4 releases the target object OBJ. The signal that is usable by the robot control apparatus 13 to generate the robot driving signal may include a signal indicating a desired pose of the end part (for example, the tool center point) of the robot arm 12 in the global coordinate system. The signal that is usable by the robot control apparatus 13 to generate the robot driving signal may include a signal indicating a desired pose of the imaging system 2 in the global coordinate system.

The signal that is usable by the robot control apparatus 13 to generate the robot driving signal may include may be signal indicating a movement distance and a movement direction from a current position of the end effector 4 to the desired position of the end effector 4.

### (1-2) Configuration of Control Apparatus 3

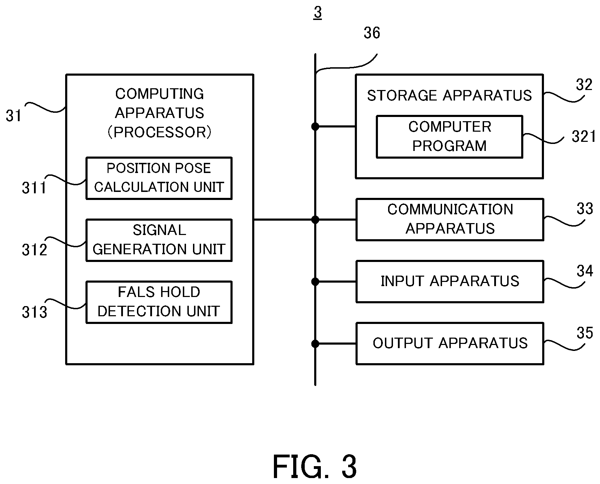

Next, with reference to FIG. 3, a configuration of the control apparatus 3 will be described. FIG. 3 is a block diagram that illustrates the configuration of the control apparatus 3.

As illustrated in FIG. 3, the control apparatus 3 includes a computing apparatus 31, a storage apparatus 32, and a communication apparatus 33. Furthermore, the control apparatus 3 may include an input apparatus 34 and an output apparatus 35. However, the control apparatus 3 may not include at least one of the input apparatus 34 and the output apparatus 35. The computing apparatus 31, the storage apparatus 32, the communication apparatus 33, the input apparatus 34, and the output apparatus 35 may be connected through a data bus 36.

The computing apparatus 31 is a hardware including at least circuit (for example, at least one of an electronic circuit and an electrical circuit). Therefore, the computing apparatus 31 may be referred to as a circuitry.

The computing apparatus 31 includes at least one processor (namely, one processor or a plurality of processors) as the hardware. The processor may include a processor conforming to a Neumann-type of computer architecture, for example. The processor conforming to the Neumann-type of computer architecture may include at least one of a CPU (Central Processing Unit) and a GPU (Graphics Processing Unit). The processor may include a processor conforming to a non-Neumann-type of computer architecture, for example. The processor conforming to the non-Neumann-type of computer architecture may include at least one of a FPGA (Field Programmable Gate Array) and an ASIC (Application Specific Circuit). The processor may be implemented by the circuitry (for example, at least one of the electronic circuit and the electrical circuit).

The computing apparatus 31 reads a computer program 321 that includes at least one of a computer program code and a computer program instruction. For example, the computing apparatus 31 may read the computer program 321 recorded in the storage apparatus 32. For example, the computing apparatus 31 may read the computer program 321 recorded in a non-transitory computer-readable recording medium by using a non-illustrated recording medium reading apparatus of the control apparatus 3. The downloaded computer program 321 read from the recording medium may be stored in the storage apparatus 32. The computing apparatus 31 may acquire (namely, download or read) the computer program 321 from a non-illustrated apparatus external to the control apparatus 3 through the communication apparatus 33 (alternatively, other communication apparatus). The downloaded computer program 321 may be stored in the storage apparatus 32.

The computing apparatus 31 executes the read computer program. As a result, a logical functional block for performing a processing that should be performed by the control apparatus 3 (for example, the above-described robot control processing) is implemented in the computing apparatus 31. In other words, the computing apparatus 31 is configured to serve as a controller or a computer for implementing the logical functional block for performing the processing that should be performed by the control apparatus 3, together with the storage apparatus 32 on which the computer program 321 is recorded (in other words, together with the storage apparatus 32 and the computer program 321 recorded on the storage apparatus 32 and the like). Namely, a memory (a recording medium) of the storage apparatus 32 and the computer program 321 are configured to allow the control apparatus 3 to perform the processing that should be performed by the control apparatus 3 (for example, the above-described robot control processing) together with at least one processor of the computing apparatus 31.

An arithmetic model that is buildable by machine learning may be implemented in the computing apparatus 31 by the computing apparatus 31 executing the computer program 321. One example of the arithmetic model that is buildable by the machine learning is an arithmetic model including a neural network (so-called Artificial Intelligence (AI)), for example. In this case, the learning of the arithmetic model may include learning of parameters of the neural network (for example, at least one of weights and biases). The computing apparatus 31 may perform the robot control processing by using the arithmetic model. Namely, an operation for performing the robot control processing may include an operation for performing the robot control processing by using the arithmetic model. Note that the arithmetic model that has been built by off-line machine learning using training data may be implemented in the computing apparatus 31. Moreover, the arithmetic model implemented in the computing apparatus 31 may be updated by online machine learning on the computing apparatus 31. Alternatively, the computing apparatus 31 may perform the robot control processing by using the arithmetic model implemented in an apparatus external to the computing apparatus 31 (namely, an apparatus external to the control apparatus 3), in addition to or instead of the arithmetic model implemented in the computing apparatus 31.

Note that at least one of an optical disc such as a CD-ROM, a CD-R, a CD-RW, a flexible disc, a MO, a DVD-ROM, a DVD-RAM, a DVD-R, a DVD+R, a DVD-RW, a DVD+RW and a Blu-ray (registered trademark), a magnetic disc such as a magnetic tape, an optical-magnetic disc, a semiconductor memory such as a USB memory, and another medium that is configured to store the program may be used as the recording medium recording therein the computer program 321 that should be executed by the computing apparatus 31. Moreover, the recording medium may include a device that is configured to record the computer program 321 (for example, a device for a universal use or a device for an exclusive use in which the computer program 321 is embedded to be executable in a form of at least one of a software, a firmware and the like). Moreover, various arithmetic processing or functions included in the computer program 321 may be realized by a logical processing block that is realized in the computing apparatus 31 by means of the computing apparatus 31 (namely, a processor) executing the computer program 321, may be realized by a hardware such as a predetermined gate array (a FPGA, an ASIC) of the computing apparatus 31, or may be realized in a form in which the logical process block and a partial hardware module that realizes a partial element of the hardware are combined.

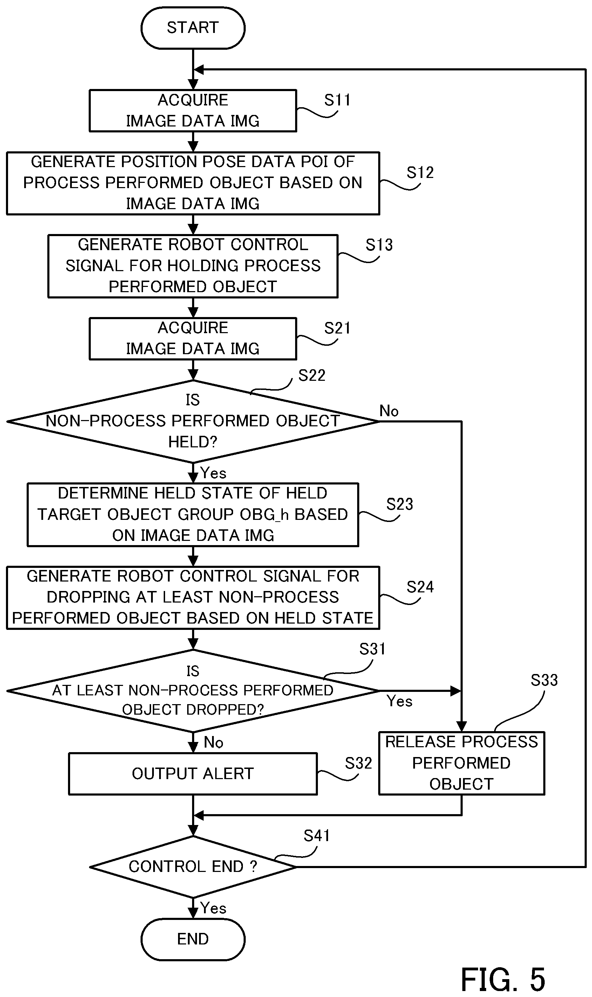

FIG. 3 illustrates one example of the logical functional block implemented in the computing apparatus 31 to perform the robot control processing. As illustrated in FIG. 3, a position pose calculation unit 311, a signal generation unit 312, and a false hold detection unit 313 are implemented in the computing apparatus 31. Note that a processing performed by each of the position pose calculation unit 311, the signal generation unit 312, and the false hold detection unit 313 will be described in detail later with reference to FIG. 5 and so on, and a description thereof is omitted here.

The storage apparatus 32 includes at least one memory that is configured to store desired data. In other words, the storage apparatus 32 includes at least one memory containing the desired data. The memory may be implemented by a circuitry (for example, at least one of an electronic circuit and an electrical circuit). For example, the storage apparatus 32 may store the computer program 321 that is executed by the computing apparatus 31. In this case, the storage apparatus 32 (the memory) may be used as the above-described recording medium for recording the computer program 321 executed by the computing apparatus 31. The storage apparatus 32 may temporarily store data temporarily used by the computing apparatus 31 in a case where the computing apparatus 31 executes the computer program 321. The storage apparatus 32 may store data stored for a long term by the control apparatus 3. Note that the storage apparatus 32 may include at least one of a RAM (Random Access Memory), a ROM (Read Only Memory), a hard disk apparatus, a magneto-optical disc, a SSD (Solid State Drive), and a disk array apparatus. Namely, the storage apparatus 32 may include a non-transitory recording medium.

The communication apparatus 33 is configured to communicate with each of the robot 1 and the imaging system 2 through a no-illustrated communication network. Alternatively, the communication apparatus 33 may be configured to communicate with other apparatus that is different from the robot 1 and the imaging system 2, in addition to or instead of at least one of the robot 1 and the imaging system 2, through a non-illustrated communication network. In the present example embodiment, the communication apparatus 33 may receive (namely, acquire) the image data IMG from the imaging system 2. Furthermore, the communication apparatus 33 may transmit (namely, output) the robot control signal to the robot 1. Note that the communication apparatus 33 that output the robot control signal to the robot 1 may be referred to as an output unit.

The input apparatus 34 is an apparatus that is configured to receive an input of information from an outside of the control apparatus 3 to the control apparatus 3. For example, the input apparatus 34 may include an operating apparatus (for example, at least one of a keyboard, a mouse, and a touch panel) that is operable by a user of the control apparatus 3. For example, the input apparatus 34 may include a recording medium reading apparatus that is configured to read information recorded as data on a recording medium that is attachable to the control apparatus 3.

Note that information is allowed to be input to the control apparatus 3 as data from the apparatus external to the control apparatus 3 through the communication apparatus 33. In this case, the communication apparatus 33 may serve as an input apparatus that receives an input of information to the control apparatus 3 from outside of the control apparatus 3.

The output apparatus 35 is an apparatus that outputs information to the outside of the control apparatus 3. For example, the output apparatus 35 may output the information as an image. Namely, the output apparatus 35 may include a display apparatus (a so-called display) that is configured to display an image. For example, the output apparatus 35 may output the information as audio. Namely, the output apparatus 35 may include an audio apparatus (so-called a speaker) that is configured output the audio. For example, the output apparatus 35 may output the information on a paper. Namely, the output apparatus 35 may include a printing apparatus (so-called a printer) that is configured to print desired information on the paper. For example, the output apparatus 35 may output the information as data on a recording medium that is attachable to the control apparatus 3.

Note that the control apparatus 3 may output the information as the data to the apparatus external to the control apparatus 3 through the communication apparatus 33. In this case, the communication apparatus 33 may serve as an output apparatus that outputs the information to the apparatus external to the control apparatus 3.

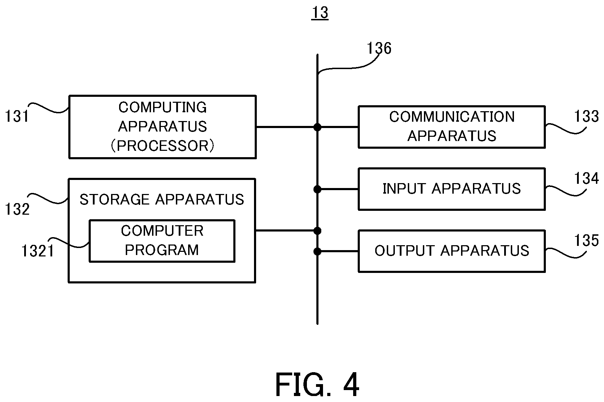

Note that the robot control apparatus 13 of the above-described robot 1 may have a configuration that is the same as that of the control apparatus 3. Namely, as illustrated in FIG. 4 that is a block diagram illustrating the configuration of the robot control apparatus 13, the robot control apparatus 13 includes a computing apparatus 131, a storage apparatus 132, and a communication apparatus 133. Furthermore, the robot control apparatus 13 may include an input apparatus 134 and an output apparatus 135. However, the robot control apparatus 13 may not include at least one of the input apparatus 134 and the output apparatus 135. The computing apparatus 131, the storage apparatus 132, the communication apparatus 133, the input apparatus 134, and the output apparatus 135 may be connected through a data bus 136.

The computing apparatus 131 includes at least one processor (namely, one processor or a plurality of processors) as the hardware. The processor may include a processor conforming to a Neumann-type of computer architecture, for example. The processor conforming to the Neumann-type of computer architecture may include at least one of a CPU (Central Processing Unit) and a GPU (Graphics Processing Unit). The processor may include a processor conforming to a non-Neumann-type of computer architecture, for example. The processor conforming to the non-Neumann-type of computer architecture may include at least one of a FPGA (Field Programmable Gate Array) and an ASIC (Application Specific Circuit).

The computing apparatus 131 reads a computer program 1321 that includes at least one of a computer program code and a computer program instruction. For example, the computing apparatus 131 may read the computer program 1321 recorded in the storage apparatus 132. For example, the computing apparatus 131 may read the computer program 1321 recorded in a non-transitory computer-readable recording medium by using a non-illustrated recording medium reading apparatus of the robot control apparatus 13. The downloaded computer program 1321 read from the recording medium may be stored in the storage apparatus 132. The computing apparatus 131 may acquire (namely, download or read) the computer program 1321 from a non-illustrated apparatus external to the robot control apparatus 13 through the communication apparatus 133 (alternatively, other communication apparatus). The downloaded computer program 1321 may be stored in the storage apparatus 132.

The computing apparatus 131 executes the read computer program. As a result, a logical functional block for performing a processing that should be performed by the robot control apparatus 13 (for example, a processing for controlling at least one of the robot 1 and the end effector 4) is implemented in the computing apparatus 131. In other words, the computing apparatus 131 is configured to serve as a controller or a computer for implementing the logical functional block for performing the processing that should be performed by the robot control apparatus 13, together with the storage apparatus 132 on which the computer program 1321 is recorded (in other words, together with the storage apparatus 132 and the computer program 1321 recorded on the storage apparatus 132 and the like). Namely, a memory (a recording medium) of the storage apparatus 132 and the computer program 1321 are configured to allow the robot control apparatus 13 to perform the processing that should be performed by the robot control apparatus 13 together with at least one processor of the computing apparatus 131.

An arithmetic model that is buildable by machine learning may be implemented in the computing apparatus 131 by the computing apparatus 131 executing the computer program 1321. One example of the arithmetic model that is buildable by the machine learning is an arithmetic model including a neural network (so-called Artificial Intelligence (AI)), for example. In this case, the learning of the arithmetic model may include learning of parameters of the neural network (for example, at least one of weights and biases). The computing apparatus 131 may control at least one of the robot 1 and the end effector 4 by using the arithmetic model. Namely, an operation for controlling at least one of the robot 1 and the end effector 4 may include an operation for controlling at least one of the robot 1 and the end effector 4 by using the arithmetic model. Note that the arithmetic model that has been built by off-line machine learning using training data may be implemented in the computing apparatus 131. Moreover, the arithmetic model implemented in the computing apparatus 131 may be updated by online machine learning on the computing apparatus 131. Alternatively, the computing apparatus 131 may perform the robot control processing by using the arithmetic model implemented in an apparatus external to the computing apparatus 131 (namely, an apparatus external to the robot control apparatus 13), in addition to or instead of the arithmetic model implemented in the computing apparatus 131.

Note that at least one of an optical disc such as a CD-ROM, a CD-R, a CD-RW, a flexible disc, a MO, a DVD-ROM, a DVD-RAM, a DVD-R, a DVD+R, a DVD-RW, a DVD+RW and a Blu-ray (registered trademark), a magnetic disc such as a magnetic tape, an optical-magnetic disc, a semiconductor memory such as a USB memory, and another medium that is configured to store the program may be used as the recording medium recording therein the computer program 1321 that should be executed by the computing apparatus 131. Moreover, the recording medium may include a device that is configured to record the computer program 1321 (for example, a device for a universal use or a device for an exclusive use in which the computer program 1321 is embedded to be executable in a form of at least one of a software, a firmware and the like). Moreover, various arithmetic processing or functions included in the computer program 1321 may be realized by a logical processing block that is realized in the computing apparatus 131 by means of the computing apparatus 131 (namely, a processor) executing the computer program 1321, may be realized by a hardware such as a predetermined gate array (a FPGA, an ASIC) of the computing apparatus 131, or may be realized in a form in which the logical process block and a partial hardware module that realizes a partial element of the hardware are combined.

The storage apparatus 132 includes at least one memory that is configured to store desired data. In other words, the storage apparatus 132 includes at least one memory containing the desired data. The memory may be implemented by a circuitry (for example, at least one of an electronic circuit and an electrical circuit). For example, the storage apparatus 132 may store the computer program 1321 that is executed by the computing apparatus 131. In this case, the storage apparatus 132 (the memory) may be used as the above-described recording medium for recording the computer program 1321 executed by the computing apparatus 131. The storage apparatus 132 may temporarily store data temporarily used by the computing apparatus 131 in a case where the computing apparatus 131 executes the computer program 1321. The storage apparatus 132 may store data stored for a long term by the robot control apparatus 13. Note that the storage apparatus 132 may include at least one of a RAM (Random Access Memory), a ROM (Read Only Memory), a hard disk apparatus, a magneto-optical disc, a SSD (Solid State Drive), and a disk array apparatus. Namely, the storage apparatus 132 may include a non-transitory recording medium.

The communication apparatus 133 is configured to communicate with at least one of the imaging system 2 and the control apparatus 3 through a no-illustrated communication network. Alternatively, the communication apparatus 133 may be configured to communicate with other apparatus that is different from the imaging system 2 and the control apparatus 3, in addition to or instead of at least one of the imaging system 2 and the control apparatus 3, through a non-illustrated communication network. In the present example embodiment, the communication apparatus 133 may receive (namely, acquire) the robot control signal from the control apparatus 3.

The input apparatus 134 is an apparatus that is configured to receive an input of information from an outside of the robot control apparatus 13 to the robot control apparatus 13. For example, the input apparatus 134 may include an operating apparatus (for example, at least one of a keyboard, a mouse, and a touch panel) that is operable by a user of the robot control apparatus 13. For example, the input apparatus 134 may include a recording medium reading apparatus that is configured to read information recorded as data on a recording medium that is attachable to the robot control apparatus 13.

Note that information is allowed to be input to the robot control apparatus 13 as data from the apparatus external to the robot control apparatus 13 through the communication apparatus 133. In this case, the communication apparatus 133 may serve as an input apparatus that receives an input of information to the robot control apparatus 13 from outside of the robot control apparatus 13.

The output apparatus 135 is an apparatus that outputs information to the outside of the robot control apparatus 13. For example, the output apparatus 135 may output the information as an image. Namely, the output apparatus 135 may include a display apparatus (a so-called display) that is configured to display an image. For example, the output apparatus 135 may output the information as audio. Namely, the output apparatus 135 may include an audio apparatus (so-called a speaker) that is configured output the audio. For example, the output apparatus 135 may output the information on a paper. Namely, the output apparatus 135 may include a printing apparatus (so-called a printer) that is configured to print desired information on the paper. For example, the output apparatus 135 may output the information as data on a recording medium that is attachable to the robot control apparatus 13.

Note that the robot control apparatus 13 may output the information as the data to the apparatus external to the robot control apparatus 13 through the communication apparatus 133. In this case, the communication apparatus 133 may serve as an output apparatus that outputs the information to the apparatus external to the robot control apparatus 13.

### (2) Robot Control Processing

Next, with reference to FIG. 5, the robot control processing performed by the control apparatus 3 will be described. FIG. 5 is a flowchart that illustrates the flow of the robot control processing.

### (2-1) Generation of Robot Control Signal for Performing Predetermined Process on Target Object OBJ

As illustrated in FIG. 5, the position pose calculation unit 3111 of the control apparatus 3 acquires the image data IMG from the imaging apparatus 21 by using the communication apparatus 33 (a step S1). Specifically, the imaging apparatus 21 images the target object OBJ at a predetermined imaging rate. For example, the imaging apparatus 21 may image the target object OBJ at the imaging rate, at which the target object OBJ is imaged tens of times to hundreds of times (as one example, 500 times) per second. Note that imaging the target object OBJ may be considered to be equivalent to imaging an interior of the container CB (namely, the containing space SP described above) in a case where the target object OBJ is contained in the container CB. The image data IMG that is the imaged result of the target object OBJ may be considered to be equivalent to the image data IMG that is the imaged result of the interior of the container CB (namely, the containing space SP described above). As a result, the imaging apparatus 21 generates the image data IMG in a cycle based on the predetermined imaging rate. For example, the imaging apparatus 21 may generate tens to hundreds of (as one example, 500) image data IMG per second. The position pose calculation unit 311 acquires the image data IMG each time the imaging apparatus 21 generates the image data IMG. Namely, the position pose calculation unit 311 may acquire tens to hundreds of (as one example, 500) image data IMG per second.

However, the imaging apparatus 21 may not periodically image the target object OBJ at the desired imaging rate. For example, the imaging apparatus 21 may image the target object OBJ when the imaging apparatus 21 receives a control signal for controlling the imaging apparatus 21 to image the target object OBJ from the control apparatus 3.

The imaging apparatus 21 may image another object that is different from the target object OBJ, in addition to the target object OBJ on which the robot 1 performs the predetermined process. Note that another object that is different from the target object OBJ is referred to as a non-target object in the below-described description, because another objects is not a target on which the robot 1 performs the predetermined process. At least a part of the end effector 4 is one example of the non-target object. At least a part of the robot arm 12 is one example of the non-target object. A surrounding object that is positioned around the robot 1 is one example of the non-target object. The placing apparatus T (in other words, the placing member, for example, the container CB) is one example of the surrounding object. For example, in a case where both the target object OBJ and the non-target object are included in an imaging range (a field of view) of the imaging apparatus 21, the imaging apparatus 21 may image both the target object OBJ and the non-target object. As a result, the imaging apparatus 21 may generate the image data IMG indicating an image in which both the target object OBJ and the non-target object are captured. However, the imaging apparatus 21 may image the target object OBJ and may not image the non-target object. Namely, the imaging apparatus 21 may generate the image data IMG indicating an image in which the target object OBJ is captured and the non-target object is not captured. In both cases, the imaging apparatus 21 generates the image data IMG indicating an image in which at least the target object OBJ is captured. Namely, the imaging apparatus 21 generates the image data IMG that includes at least image data of the target object OBJ.

In a case where the plurality of target objects OBJ are contained in the container CB as described above, the imaging apparatus 21 may image at least a part of the plurality of target objects OBJ contained in the container CB. In other words, the imaging apparatus 21 may image a target object group that includes at least a part of the plurality of target objects OBJ contained in the container CB. The target object group imaged by the imaging apparatus 21 may include a plurality of target objects OBJ included in the imaging field of view of the imaging apparatus 21 (alternatively, in some cases, a single target object OBJ included in the imaging field of view of the imaging apparatus 21), among the plurality of target objects OBJ contained in the container CB.

As described above, the imaging apparatus 21 may image the plurality of target objects OBJ on which the end effector 4 sequentially performs the predetermined process. In this case, the end effector 4 may perform the predetermined process on a first target object OBJ of the plurality of target objects OBJ in a first period, and then perform the predetermined process on a second target object OBJ, which is different from the first target object OBJ, of the plurality of target objects OBJ in a second period following the first period. In this case, in the first period, other target object OBJ (for example, the second target object OBJ), which is different from the first target object OBJ on which the end effector 4 performs the predetermined process, of the plurality of target objects OBJ may be regarded as the target object OBJ (alternatively, the non-target object) that is not the process performed object on which the robot 1 performs the predetermined process in the first period. Similarly, in the second period, other target object OBJ (for example, the first target object OBJ), which is different from the second target object OBJ on which the end effector 4 performs the predetermined process, of the plurality of target objects OBJ may be regarded as the target object OBJ (alternatively, the non-target object) that is not the process performed object on which the robot 1 performs the predetermined process in the second period.

Each time the position pose calculation unit 311 acquires the image data IMG at the step S11, the position pose calculation unit 311 calculates at least one of the position and the pose of the target object OBJ based on the image data IMG acquired at the step S1 (a step S12). As a result, the position pose calculation unit 311 generates position pose data POI indicating at least one of the position and the pose of the target object OBJ (the step S12).

In the below-described description, an example in which the position pose calculation unit 311 calculates at least one of the position and the pose of the target object OBJ in the global coordinate system at the step S12 will be described as described above. Namely, in the below-described description, an example in which the position pose calculation unit 311 generates the position pose data POI indicating at least one of the position and the pose of the target object OBJ in the global coordinate system will be described.

The position pose calculation unit 311 may calculate, as the position of the target object OBJ in the global coordinate system, at least one of a position Tx of the target object OBJ in a X-axis direction parallel to the X-axis of the global coordinate system, a position Ty of the target object OBJ in a Y-axis direction parallel to the Y-axis of the global coordinate system, and a position Tz of the target object OBJ in a Z-axis direction parallel to the Z-axis of the global coordinate system. The position pose calculation unit 311 may calculate, as the pose of the target object OBJ in the global coordinate system, at least one of a rotational amount Rx of the target object OBJ around the X-axis of the global coordinate system, a rotational amount Ry of the target object OBJ around the Y-axis of the global coordinate system, and a rotational amount Rz of the target object OBJ around the Z-axis of the global coordinate system. This is because the rotational amount Rx of the target object OBJ around the X-axis, the rotational amount Ry of the target object OBJ around the Y-axis, and the rotational amount Rz of the target object OBJ around the Z-axis are equivalent to a parameter representing the pose of the target object OBJ around the X-axis, a parameter representing the pose of the target object OBJ around the Y-axis, and a parameter representing the pose of the target object OBJ around the Z-axis, respectively. Therefore, in the below-described description, the rotational amount Rx of the target object OBJ around the X-axis, the rotational amount Ry of the target object OBJ around the Y-axis, and the rotational amount Rz of the target object OBJ around the Z-axis are referred to as the pose Rx of the target object OBJ around the X-axis, the pose Ry of the target object OBJ around the Y-axis, and the pose Rz of the target object OBJ around the Z-axis, respectively.

Note that the pose Rx of the target object OBJ around the X-axis, the pose Ry of the target object OBJ around the Y-axis, and the pose Rz of the target object OBJ around the Z-axis may be considered to represent a position of the target object OBJ in a rotational direction around the X-axis, a position of the target object OBJ in a rotational direction around the Y-axis, and a position of the target object OBJ in a rotational direction around the Z-axis, respectively. Namely, each of the pose Rx of the target object OBJ around the X-axis, the pose Ry of the target object OBJ around the Y-axis, and the pose Rz of the target object OBJ around the Z-axis may be regarded as a parameter representing the position of the target object OBJ.

At the step S12 in FIG. 5, the position pose calculation unit 311 may calculate at least one of the position and the pose of the target object OBJ by performing a matching processing using the image data IMG. Specifically, the position pose calculation unit 311 may calculate at least one of the position and the pose of the target object OBJ by performing the matching processing using the image data IMG and a template model that indicates a shape of at least a part of the target object OBJ.

For example, the position pose calculation unit 311 may calculate at least one of the position and the pose of the target object OBJ by performing a 2D matching processing that is one example of the matching processing. Specifically, in order to perform the 2D matching processing, the position pose calculation unit 311 may use the image data IMG that is generated by the imaging apparatus 21 including the monocular camera (namely, the image data IMG including the single image generated by the monocular camera, and it may be referred to as 2D image data IMG_2D as necessary). In this case, the position pose calculation unit 311 may calculate at least one of the position and the pose of the target object OBJ by performing the 2D matching processing using the 2D image data IMG_2D (namely, the image indicated by the 2D image data IMG_2D) and the template model indicating a two-dimensional shape of at least a part of the target object OBJ. In this case, the position pose calculation unit 311 may perform, as the 2D matching processing, an object detection processing for detecting the target object OBJ indicated by the template model (namely, an image part corresponding to the template model) in the image indicated by the 2D image data IMG_2D. Note that the 2D matching processing (in this case, the object detection processing) itself may be the same as an existing 2D matching processing. For example, the position pose calculation unit 311 may perform the 2D matching processing by using a known method such as a SIFT (Scale-Invariant Feature Transform) or a SURF (Speed-Upped Robust Feature).

In this case, the position pose calculation unit 311 may translate, scale and / or rotate the template model in the imaging coordinate system that is based on the imaging apparatus 21 so that a feature part (for example, at least one of a feature point and an edge) of the two-dimensional template model is closer to (typically, matches) a feature part of the target object OBJ captured in the image indicated by the 2D image data IMG_2D. As a result, the position pose calculation unit 311 can determine a positional relationship between the coordinate system of the template model and the imaging coordinate system. Then, the position pose calculation unit 311 may calculate at least one of the position and the pose of the target object OBJ in the imaging coordinate system from at least one of the position and the pose of the target object OBJ in the coordinate system of the template model based on the positional relationship between the coordinate system of the template model and the imaging coordinate system. Then, the position pose calculation unit 311 may transform at least one of the position and the pose of the target object OBJ in the imaging coordinate system to at least one of the position and the pose of the target object OBJ in the global coordinate system based on a transformation matrix for transforming a three-dimensional coordinate in the imaging coordinate system to a three-dimensional coordinate in the other global coordinate system.

Note that the template model is not limited to the model indicating two-dimensional shape of at least a part of the target object OBJ, and may be a model indicating an edge of at least a part of the target object OBJ. Moreover, the template model may be generated in advance from a CAD model of the target object, or may be generated from image data that is acquired by using the imaging apparatus 21 or another imaging apparatus imaging a reference target object OBJ.

Note that the position pose calculation unit 311 may calculate at least one of the position and the pose of the target object OBJ by using an existing method, which is different from the 2D matching processing, based on the 2D image data IMG_2D. For example, the position pose calculation unit 311 may calculate at least one of the position and the pose of the target object OBJ by use an inference model generated by a machine learning based on the 2D image data IMG_2D. The inference model may be generated by the machine learning to output at least one of the position and the pose of the target object OBJ captured in the image indicated by the image data IMG when the 2D image data IMG_2D is input thereto.

For example, in a case where the imaging apparatus 21 includes the stereo camera, the position pose calculation unit 311 may calculate at least one of the position and the pose of the target object OBJ by performing a 3D matching processing that is one example of the matching processing. Specifically, in order to perform the 3D matching processing, the position pose calculation unit 311 may use the image data IMG that is generated by the imaging apparatus 21 including the stereo camera (namely, the image data IMG including two image generated by the stereo camera, and it may be referred to as 3D image data IMG_3D as necessary). In this case, the position pose calculation unit 311 may generate three-dimensional position data, which indicates a three-dimensional position of at least a part of the target object OBJ captured in the image indicated by the 3D image data IMG_3D, based on the 3D image data IMG_3D (namely, the two images indicated by the 3D image data IMG_3D). In this case, the position pose calculation unit 311 may calculate a parallax based on the 3D image data IMG_3D (namely, the two images indicated by the 3D image data IMG_3D), and generate the three-dimensional position data by a known method based on a principle of triangulation using the calculated parallax. The three-dimensional position data may be data that indicates a three-dimensional position of each of a plurality of points of the target object OBJ. The three-dimensional position data may be data that indicates a three-dimensional position of each of the plurality of points on a surface of the target object OBJ. The three-dimensional position data may be data that indicates the three-dimensional position of each of the plurality of points corresponding to a plurality of parts of the surface of the target object OBJ, respectively. In the below-described description, an example in which point cloud data indicating a point cloud is used as the three-dimensional position data will be described. However, the three-dimensional position data that is different from the point cloud data indicating the point cloud (for example, depth image data indicating a depth image) may be used. Then, the position pose calculation unit 311 may calculate at least one of the position and the pose of the target object OBJ by performing the 3D matching processing using the three-dimensional position data (for example, the point cloud data) and a template model indicating at least a part of the three-dimensional shape of the target object OBJ. In this case, the position pose calculation unit 311 may perform, as the 3D matching processing, an object detection processing for detecting the target object OBJ indicated by the template model (namely, a group of points corresponding to the template model) in the point cloud indicated by the three-dimensional position data. Note that the 3D matching processing (in this case, the object detection processing) itself may be the same as an existing 3D matching processing. For example, the position pose calculation unit 311 may perform the 3D matching processing by using a known method such as a RANSAC (Random Sample Consensus), SIFT (Scale-Invariant Feature Transform) , ICP (Iterative Closest Point), and DSO (Direct Sparse Odometry).

Note that the template model indicating at least a part of the three-dimensional shape of the target object OBJ may be generated in advance from a CAD model of the target object OBJ, or may be generated from image data that is acquired by using the imaging apparatus 21 or another imaging apparatus imaging a reference target object OBJ.

Note that the position pose calculation unit 311 may calculate at least one of the position and the pose of the target object OBJ by using an existing method, which is different from the 3D matching processing, based on the image data IMG (namely, the two images indicated by the image data IMG. For example, the position pose calculation unit 311 may calculate at least one of the position and the pose of the target object OBJ by use an inference model generated by a machine learning based on the 3D image data IMG_3D. The inference model may be generated by the machine learning to output at least one of the position and the pose of the target object OBJ captured in the image indicated by the image data IMG when the 3D image data IMG_3D is input thereto.

Note that the position pose calculation unit 311 may calculate at least one of the position and the pose of the target object OBJ by performing the 3D matching processing that is one example of the matching processing, in addition to or instead of performing the 2D matching processing, in a case where the imaging apparatus 21 images the target object OBJ on which the illumination apparatus 23 projects the projection pattern even when the imaging apparatus 21 is the imaging apparatus 21 including the monocular camera (in other words, the imaging apparatus 21 does not include the stereo camera). This is because the position pose calculation unit 311 can calculate the parallax, which is used to generate the three-dimensional position data, based on the projection pattern (specifically, the projection pattern deformed according to the shape of the target object OBJ) captured in the image indicated by the 2D image data IMG_2D

In a case where the 3D matching processing is performed, the position pose calculation unit 311 may translate, scale and / or rotate the template model in the imaging coordinate system so that a feature part (for example, at least one of a feature point and an edge) of the three-dimensional template model is closer to (typically, matches) a feature part of the target object OBJ whose three-dimensional position is indicated by the 3D image data IMG_3D (for example, the point cloud corresponding to the target object OBJ indicated by the three-dimensional position data). As a result, the position pose calculation unit 311 can determine a positional relationship between the coordinate system of the template model and the imaging coordinate system. Then, even in a case where the 3D matching processing is performed, the position pose calculation unit 311 may calculate at least one of the position and the pose of the target object OBJ in the global coordinate system by performing a processing that is the same as that in a case where the 2D matching processing is performed.

The position pose calculation unit 311 may calculate at least one of the position and the pose of the target object OBJ by performing both the 2D matching processing and the 3D matching processing. For example, the position pose calculation unit 311 may calculate at least a part of the position and the pose of the target object OBJ by performing the 2D matching processing, and calculate at least other part of the position and the pose of the target object OBJ by performing the 3D matching processing. For example, the position pose calculation unit 311 may calculate at least one of the position and the pose of the target object OBJ by merging the calculated result of at least one of the position and the pose of the target object OBJ by the 2D matching processing with the calculated result of at least one of the position and the pose of the target object OBJ by the 3D matching processing.

In a case where the matching processing is performed, the position pose calculation unit 311 may calculate a matching similarity that is a degree of similarity between the template model and the target object OBJ captured in the image indicated by the image data IMG (alternatively, the target object OBJ whose three-dimensional position is indicated by the three-dimensional position data generated from the image data IMG). In a case where the target object OBJ whose calculated matching similarity is higher than a predetermined matching determination threshold value, which is used for the matching processing, is detected by the matching processing, the position pose calculation unit 311 may select this target object OBJ as the process performed object on which the end effector 4 should actually perform the predetermined process. On the other hand, in a case where the target object OBJ whose calculated matching similarity is lower than the predetermined matching determination threshold value is detected by the matching processing, the position pose calculation unit 311 may not select this target object OBJ as the process performed object on which the end effector 4 should actually perform the predetermined process.

Note that the matching determination threshold value is a threshold value that is used to detect the target object OBJ from the image indicated by the image data IMG by the matching processing. Specifically, the matching determination threshold value is a threshold value that is used to distinguish a state in which it is likely that the object detected from the image indicated by the image data IMG is the target object OBJ from a state in which it is unlikely that the object detected from the image indicated by the image data IMG is the target object OBJ, based on the matching similarity of the object detected from the image indicated by the image data IMG. It can be said that the matching determination threshold value is a threshold value that is used to distinguish a state in which an accuracy of at least one of the position and the pose of the target object OBJ calculated by the matching processing using the image data IMG is high from a state in which an accuracy of at least one of the position and the pose of the target object OBJ calculated by the matching processing using the image data IMG is low, based on the matching similarity.

As described above, there is a possibility that the imaging apparatus 21 images the plurality of target objects OBJ. In this case, there is a possibility that the plurality of target objects OBJ are captured in the image indicated by the image data IMG generated by the imaging apparatus 21. In this case, the position pose calculation unit 311 may select one target object OBJ of the plurality of target objects OBJ, which are captured in the image indicated by the image data IMG, as the process performed object on which the end effector 4 should actually perform the predetermined process. For example, the position pose calculation unit 311 may select one target object OBJ of the plurality of target objects OBJ, which are captured in the image indicated by the image data IMG, as the process performed object on which the end effector 4 should actually perform the predetermined process, based on the matching similarity. As one example, the position pose calculation unit 311 may select one target object OBJ, whose matching similarity is higher than the matching determination threshold value and whose matching similarity is maximum, from among the plurality of target objects OBJ as the process performed object. As other example, the position pose calculation unit 311 may select one target object OBJ, whose matching similarity is higher than the matching determination threshold value and whose matching similarity is the N-th (wherein, N is a constant value representing an integer that is equal to or larger than 2) highest, from among the plurality of target objects OBJ as the process performed object. As other example, the position pose calculation unit 311 may select one target object OBJ, which corresponds to the matching similarity higher than the matching determination threshold value, from among the plurality of target objects OBJ as the process performed object. As other example, the position pose calculation unit 311 may select one target object OBJ, which corresponds to the matching similarity higher than the matching determination threshold value and which is the closest to the end effector 4, from among the plurality of target objects OBJ as the process performed object. As other example, for example, in a case where the plurality of target objects OBJ are contained in the container CB (the placing apparatus T) (for example, in a case where the plurality of objects are randomly stacked), the position pose calculation unit 311 may select one target object OBJ, which corresponds to the matching similarity higher than the matching determination threshold value and whose Z coordinate along the Z-axis is the greatest (which is positioned at the highest position), from among the plurality of target objects OBJ as the process performed object. As other example, the position pose calculation unit 311 may select one target object OBJ, which corresponds to the matching similarity higher than the matching determination threshold value and on which the end effector 4 can perform the predetermined process, from among the plurality of target objects OBJ as the process performed object.

However, in a case where the end effector 4 can simultaneously perform the predetermined process on two or more target objects OBJ, the position pose calculation unit 311 may select each of at least two of the plurality of target objects OBJ as the process performed objects. Namely, the position pose calculation unit 311 may select at least two process performed objects on which the end effector 4 should perform the predetermined process simultaneously. Note that an example in which the position pose calculation unit 311 selects one target object OBJ of the plurality of target objects OBJ as the process performed object will be described in the below-described description for convenience of description.

Then, the signal generation unit 312 generates the robot control signal by using the position pose data POI generated at the step S21 (namely, a calculated result of at least one of the position and the pose of the process performed object, and a result of the matching processing) (a step S13). For example, the signal generation unit 312 may generate the robot control signal so that the end effector 4 performs the predetermined process on the target object OBJ (especially, the process performed object). For example, the signal generation unit 312 may generate the robot control signals so that the end effector 4 approaches the target object OBJ (especially, the process performed object) to perform the predetermined process on the target object OBJ (especially, the process performed object). For example, the signal generation unit 312 may generate the robot control signal so that the positional relationship between the end effector 4 and the target object OBJ (especially, the process performed object) becomes a desired hold target positional relationship. For example, the signal generation unit 312 may generate the robot control signal for controlling the operation of the robot arm 12 so that the positional relationship between the end effector 4 and the target object OBJ (especially, the process performed object) becomes the desired hold target positional relationship. For example, the signal generation unit 312 may generate the robot control signal so that the postural relationship between the end effector 4 and the target object OBJ (especially, the process performed object) becomes a desired hold target postural relationship. For example, the signal generation unit 312 may generate the robot control signal for controlling the operation of the robot arm 12 so that the postural relationship between the end effector 4 and the target object OBJ (especially, the process performed object) becomes the desired hold target postural relationship.

In this case, each of the hold target positional relationship and the hold target postural relationship may be set (registered) in advance. The position pose calculation unit 311 may calculate at least one of the above-described hold target position and hold target pose of the end effector 4 based on the hold target positional relationship and the hold target postural relationship, which are set in advance, and the position pose data POI generated at the step S12 so that the positional relationship between the end effector 4 and the target object OBJ (especially, the process performed object) becomes the hold target positional relationship and / or the postural relationship between the end effector 4 and the target object OBJ (especially, the process performed object) becomes the hold target postural relationship. At least one of the hold target position and the hold target pose of the end effector 4 may mean at least one of a target position and a target pose of a reference point (for example, a tool center point) of the end effector 4. Then, the signal generation unit 312 may generate the robot control signal so that the position of the end effector 4 is close to the hold target position and / or the pose of the end effector 4 is closer to the hold target pose. As a result, the end effector 4 approaches the target object OBJ (especially, the process performed object).

In a period during which the end effector 4 approaches the target object OBJ (especially, the process performed object), the imaging system 2 may re-image the target object OBJ (especially, the process performed object), the position pose calculation unit 311 may re-acquire the image data IMG that is re-generated by the imaging system 2 re-imaging the target object OBJ (especially, the process performed object) (the step S11 in FIG. 5), and the position pose calculation unit 311 may re-generate the position pose data POI based on the re-acquired image data IMG (the step S12 in FIG. 5). Namely, the position pose calculation unit 311 may update at least one of the position and the pose of the target object OBJ (especially, the process performed object). In other words, the position pose calculation unit 311 may update the position pose data POI. Then, the signal generation unit 312 may re-generate the robot control signal based on the updated position pose data POI. Namely, the signal generation unit 312 may update the robot control signal based on the updated position pose data POI. Namely, the control apparatus 3 may repeat the processing from the step S11 to the step S13 in FIG. 5 in the period during which the end effector 4 approaches the target object OBJ (especially, the process performed object).

Then, the signal generation unit 312 may generate the robot control signal so that the end effector 4 performs the predetermined process on the target object OBJ (especially, the process performed object) at a timing at which the positional relationship between the end effector 4 and the target object OBJ (especially, the process performed object) becomes the desired positional relationship. For example, the signal generation unit 312 may generate the robot control signal for controlling the operation of the end effector 4 to perform the predetermined process on the target object OBJ (especially, the process performed object) at the timing at which the positional relationship between the end effector 4 and the target object OBJ (especially, the process performed object) becomes the desired positional relationship.

Then, the signal generation unit 312 outputs the robot control signal, which is generated at the step S13, to the robot 1 (especially, the robot control apparatus 13) by using the communication apparatus 33. As a result, the robot control apparatus 13 controls at least one of the operation of the robot 1 (for example, the operation of the robot arm 12) and the operation of the end effector 4 based on the robot control signal.

In the present example embodiment, an example in which the end effector 4 performs, as one example of the predetermined process, the holding process for holding one target object OBJ, which is selected as the process performed object from among the plurality of target objects OBJ contained in the container CB will be described. In this case, the signal generation unit 312 may generate the robot control signal for controlling at least one of the operation of the robot 1 (for example, the operation of the robot arm 12) and the operation of the end effector 4 so that the end effector 4 holds the process performed object.

In a case where the holding process is performed, the robot 1 may move the robot arm 12 based on the robot control signal so that the end effector 4 moves toward (namely, approaches) the hold target position at which the end effector 4 can hold the process performed object. Then, after the end effector 4 reaches the hold target position, the end effector 4 may hold the process performed object based on the robot control signal.

In a case where the holding process is performed, the robot 1 may move the robot arm 12 based on the robot control signal so that the end effector 4 moves (namely, travels) until the pose of the end effector 4 becomes the hold target pose. Then, after the pose of the end effector 4 becomes the hold target pose, the end effector 4 may hold the process performed object based on the robot control signal.

In a case where the end effector 4 performs the holding process for holding the target object OBJ, the robot system SYS may be considered to perform the holding operation for holding the target object OBJ. For example, the robot system SYS may perform the holding process for holding the target object OBJ by using the end effector 4 as at least a part of the holding operation. Namely, the holding operation may include the holding process that is mainly performed by the end effector 4. For example, the robot system SYS may perform a movement process for moving the end effector 4 so that the end effector 4 approaches the target object OBJ (especially, the process performed object) as at least a part of the holding operation. For example, the robot system SYS may perform the movement process for moving the end effector 4 so that the end effector 4 approaches the hold target position as at least a part of the holding operation. For example, the robot system SYS may perform the movement process for moving the end effector 4 so that the pose of the end effector 4 becomes the hold target pose as at least a part of the holding operation. Namely, the holding operation may include the movement process that is mainly performed by the robot 1, in addition to the holding process described above.

After the end effector 4 holds the process performed object, the end effector 4 may perform the releasing process for releasing the process performed object held by the end effector 4, as one example of the predetermined process. Namely, the end effector 4 may perform the placing process (in other words, the placing operation) for placing the target object OBJ as one example of the predetermined process by performing the holding process and the releasing process.

In a case where the releasing process is performed, the robot 1 may move the robot arm 12 so that the end effector 4 holding the process performed object moves (namely, approaches) the release target position at which the end effector 4 can release the process performed object. The release target position may be set outside the container CB. In this case, the robot 1 may be considered to move the robot arm 12 so that the process performed object held by the end effector 4 is transported from the container CB. Then, after the end effector 4 reaches the release target position, the end effector 4 may release the process performed object held by the end effector 4.

Note that the control apparatus 3 may generate the robot control signal for controlling the robot 1 so that the end effector 4 moves toward the release target position. In this case, the robot control apparatus 13 may move the robot arm 12 based on the robot control signal so that the end effector 4 moves toward the release target position. Alternatively, the robot control apparatus 13 may move the robot arm 12 based on other robot control method such as a teaching so that the end effector 4 moves toward the release target position.

Similarly, the control apparatus 3 may generate the robot control signal for controlling the end effector 4 so that the end effector 4, which is positioned at the release target position, releases the process performed object. In this case, the end effector 4 may release the process performed object held by the end effector 4 based on the robot control signal. Alternatively, the end effector 4 may release the process performed object held by the end effector 4 based on other robot control method such as the teaching.

### (2-2) Process in a case where End Effector 4 Holds Target Object OBJ Different From Process Performed Object

Here, in a case where one target object OBJ of the plurality of target objects OBJ contained in the container CB (specifically, the plurality of target objects OBJ imaged by the imaging apparatus 21 at the step S11) is selected as the process performed object, the end effector 4 should hold the one target object OBJ that has been selected as the process performed object. However, in some cases, there is a possibility that the end effector holds at least one target object OBJ that has not been selected as the process performed object, together with the target object that has been selected as the process performed object. Namely, there is a possibility that the end effector 4 hold at least one target object OBJ that is contained in the container CB and that has not been selected as the process performed object, together with the target object that is contained in the container CB and that has been selected as the process performed object. Note that the process performed object that should be held by the end effector 4 in one period (namely, the target object OBJ that has been selected as the process performed object) is referred to as a "process performed object OBJ_tgt", and the target object OBJ that is held by the end effector 4 together with the process performed object OBJ_tgt in the same one period is referred to as a "non-process performed object OBJ_ntgt", for convenience of description in the below-described description. Note that the target object OBJ that becomes the process performed object OBJ_tgt held by the end effector 4 in one period may be the target object OBJ that is not the process performed object OBJ_tgt or may be the target object OBJ that is the non-process performed object OBJ_ntgt in other period different from the one period. Similarly, the target object OBJ that becomes the non-process performed object OBJ_ntgt held by the end effector 4 together with the process performed object OBJ_tgt in one period may be the target object OBJ that is not the non-process performed object OBJ_ntgt or may be the target object OBJ that is the process performed object OBJ_tgt in other period different from the one period.

For example, there is a possibility that the end effector 4 mistakenly holds the non-process performed object OBJ_ntgt together with the process performed object OBJ_tgt. For example, there is a possibility that the end effector 4 unintentionally holds the non-process performed object OBJ_ntgt together with the process performed object OBJ_tgt. For example, there is a possibility that the end effector 4 holds the non-process performed object OBJ_ntgt unnecessarily (in other words, excessively) together with the process performed object OBJ_tgt. For example, there is a possibility that the end effector 4 accidentally holds non-process performed object OBJ_ntgt together with the process performed object OBJ_tgt.

A state in which the end effector 4 holds the non-process performed object OBJ_ntgt together with the process performed object OBJ_tgt may include a state in which the end effector 4 directly holds the non-process performed object OBJ_ntgt.

The state in which "the end effector 4 directly holds one target object OBJ" may include a state in which the end effector 4 holds the one target object OBJ without using any other object that is different from the end effector 4 and the one target object OBJ. In this case, the state in which the end effector 4 directly holds the non-process performed object OBJ_ntgt may include a state in which the end effector 4 holds the non-process performed object OBJ_ntgt without using any other object (for example, the process performed object OBJ_tgt) that is different from the non-process performed object OBJ_ntgt.

The state in which "the end effector 4 directly holds one target object OBJ" may include a state in which the end effector 4 holds the one target object OBJ due to a holding force of the end effector 4, which is for holding the target object OBJ, acting directly on the one target object OBJ. In this case, the state in which the end effector 4 directly holds the non-process performed object OBJ_ntgt may include a state in which the end effector 4 holds the non-process performed object OBJ_ntgt due to the holding force of the end effector 4, which is for holding the target object OBJ, acting directly on the non-process performed object OBJ_ntgt.

Incidentally, in a case where the end effector 4 is the hand gripper, the holding force of the end effector 4 may include a friction force acting between the end effector 4 (for example, the finger member or the claw member of the hand gripper) and the target object OBJ contacting the end effector 4. In a case where the end effector 4 is the vacuum gripper, the holding force of the end effector 4 may include a suction force (in other words, a vacuum level) generated by the vacuum apparatus of the end effector 4. In a case where the end effector 4 is the magnetic gripper, the holding force of the end effector 4 may include a magnetic force (alternatively, an electromagnetic force) generated by the magnetic suction apparatus of the end effector 4.

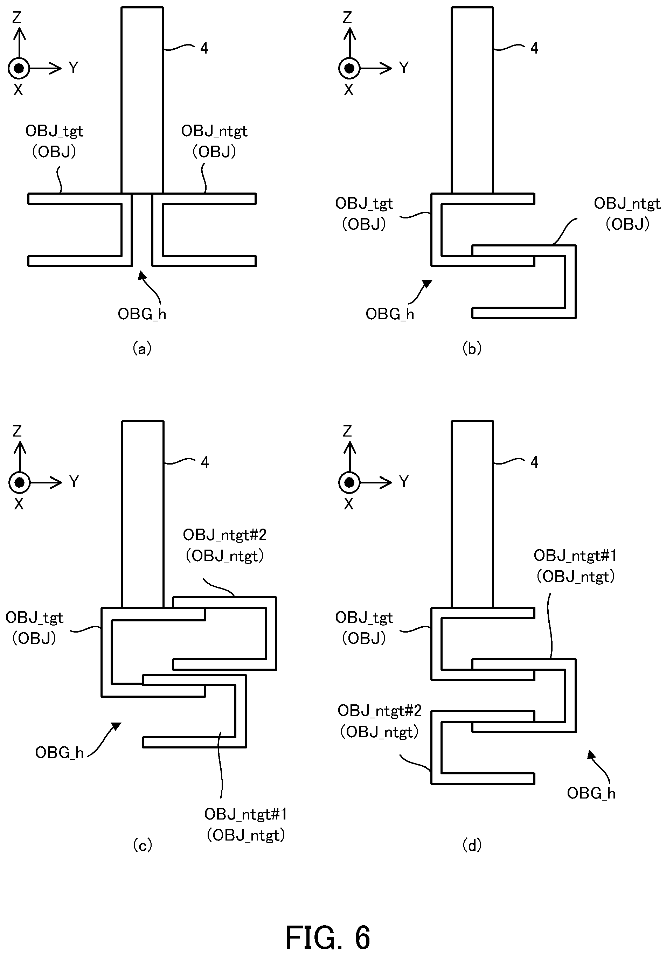

One example of the state in which the end effector 4 directly holds the non-process performed object OBJ_ntgt is illustrated in FIG. 6(a). Note that an example in which the end effector 4 is the magnetic gripper as illustrated in FIG. 6(a) will be described in the below-described description. As illustrated in FIG. 6 (a), the state in which the end effector 4 directly holds the non-process performed object OBJ_ntgt may include a state in which the end effector 4 directly holds both the process performed object OBJ_tgt and the non-process performed object OBJ_ntgt. The state in which the end effector 4 directly holds the non-process performed object OBJ_ntgt may include a state in which the end effector 4 directly holds the process performed object OBJ_tgt by the direct action of holding force of the end effector 4 and directly holds the non-process performed object OBJ_ntgt by the direct action of holding force of the end effector 4.

Note that FIG. 6(a) illustrates an example in which the end effector 4 directly holds one non-process performed object OBJ_ntgt, however, the state in which the end effector 4 directly holds the non-process performed object OBJ_ntgt may include a state in which the end effector 4 directly holds a plurality of non-processed objects OBJ_ntgt.

A state in which the end effector 4 holds the non-process performed object OBJ_ntgt together with the process performed object OBJ_tgt may include a state in which the end effector 4 indirectly holds the non-process performed object OBJ_ntgt.

The state in which "the end effector 4 indirectly holds one target object OBJ" may include a state in which the end effector 4 holds the one target object OBJ through any other object that is different from the end effector 4 and the one target object OBJ. In this case, the state in which the end effector 4 indirectly holds the non-process performed object OBJ_ntgt may include a state in which the end effector 4 holds the non-process performed object OBJ_ntgt through any other object (for example, the process performed object OBJ_tgt) that is different from the non-process performed object OBJ_ntgt.

The state in which "the end effector 4 indirectly holds one target object OBJ" may include a state in which the end effector 4 holds the one target object OBJ due to a force that is different from the holding force of the end effector 4 for holding the target object OBJ. In this case, the state in which the end effector 4 indirectly holds the non-process performed object OBJ_ntgt may include a state in which the end effector 4 holds the non-process performed object OBJ_ntgt due to the force that is different from the holding force of the end effector 4 for holding the target object OBJ.

One example of the state in which the end effector 4 indirectly holds the non-process performed object OBJ_ntgt is illustrated in FIG. 6(b). As illustrated in FIG. 6 (b), the state in which the end effector 4 indirectly holds the non-process performed object OBJ_ntgt may include a state in which the end effector 4 directly holds the process performed object OBJ_tgt and the non-process performed object OBJ_ntgt is held by the process performed object OBJ_tgt held by the end effector 4. The state in which the end effector 4 indirectly holds the non-process performed object OBJ_ntgt may include a state in which the end effector 4 directly holds the process performed object OBJ_tgt by using the holding force of the end effector 4 and holds the non-process performed object OBJ_ntgt by using the force that is different from the holding force of the end effector 4. For example, the state in which the end effector 4 indirectly holds the non-process performed object OBJ_ntgt may include a state in which where the end effector 4 directly holds the process performed object OBJ_tgt by using the holding force of the end effector 4 an the non-process performed object OBJ_ntgt is held by the friction force acting between the process performed object OBJ_tgt held by the end effector 4 and the non-process performed object OBJ_ntgt.

Note that FIG. 6(b) illustrates an example in which the end effector 4 indirectly holds one non-process performed object OBJ_ntgt, however, the state in which the end effector 4 indirectly holds the non-process performed object OBJ_ntgt may include a state in which the end effector 4 indirectly holds a plurality of non-processed objects OBJ_ntgt.

One example of the state in which the end effector 4 indirectly holds the plurality of non-process performed objects OBJ_ntgt is illustrated in FIG. 6(c). FIG. 6(c) illustrates a state in which the end effector 4 indirectly holds two non-process performed objects OBJ_ntgt#1 and OBJ_ntgt#2. As illustrated in FIG. 6(c), the state in which the end effector 4 indirectly holds the plurality of non-process performed objects OBJ_ntgt may include a state in which the end effector 4 directly holds the process performed object OBJ_tgt and the non-process performed objects OBJ_ntgt#1 and OBJ_ntgt#2 are held by the process performed object OBJ_tgt held by the end effector 4. The state in which the end effector 4 indirectly holds the plurality of non-process performed objects OBJ_ntgt may include a state in which the end effector 4 directly holds the process performed object OBJ_tgt by using the holding force of the end effector 4 and holds the non-process performed objects OBJ_ntgt #1 and OBJ_ntgt #2 by using the force that is different from the holding force of the end effector 4. For example, the state in which the end effector 4 indirectly holds the plurality of non-process performed objects OBJ_ntgt may include a state in which the end effector 4 directly holds the process performed object OBJ_tgt by using the holding force of the end effector 4, the non-process performed object OBJ_ntgt#1 is held by the friction force acting between the process performed object OBJ_tgt held by the end effector 4 and the non-process performed object OBJ_ntgt#1, and the non-process performed object OBJ_ntgt#2 is held by the friction force acting between the process performed object OBJ_tgt held by the end effector 4 and the non-process performed object OBJ_ntgt#2.

One example of the state in which the end effector 4 indirectly holds the plurality of non-process performed objects OBJ_ntgt is illustrated in FIG. 6(d). FIG. 6(d) illustrates a state in which the end effector 4 indirectly holds two non-process performed objects OBJ_ntgt#1 and OBJ_ntgt#2. As illustrated in FIG. 6(d), the state in which the end effector 4 indirectly holds the plurality of non-process performed objects OBJ_ntgt may include a state in which the end effector 4 directly holds the process performed object OBJ_tgt, the non-process performed object OBJ_ntgt#1 is held by the process performed object OBJ_tgt held by the end effector 4, and the non-process performed object OBJ_ntgt#2 is held by the non-process performed object OBJ_ntgt#1 held by the process performed object OBJ_tgt. The state in which the end effector 4 indirectly holds the plurality of non-process performed objects OBJ_ntgt may include a state in which the end effector 4 directly holds the process performed object OBJ_tgt by using the holding force of the end effector 4 and holds the non-process performed objects OBJ_ntgt#1 and OBJ_tgt#2 by using the force that is different from the holding force of the end effector 4. For example, the state in which the end effector 4 indirectly holds the plurality of non-process performed objects OBJ_ntgt may include a state in which the end effector 4 directly holds process performed object OBJ_tgt by using the holding force of the end effector 4, the non-process performed object OBJ_ntgt#1 is held by the friction force acting between the process performed object OBJ_tgt held by the end effector 4 and the non-process performed object OBJ_ntgt#1, and the non-process performed object OBJ_ntgt#2 is held by the friction force acting between the non-process performed object OBJ_ntgt#1 and the non-process performed object OBJ_ntgt#2.

Note that the state in which the end effector 4 holds the non-process performed object OBJ_ntgt together with the process performed object OBJ_tgt may include a state in which the end effector 4 directly holds at least one non-process performed object OBJ_ntgt and the end effector 4 indirectly holds at least other one non-process performed object OBJ_ntgt.

Moreover, FIG. 6(a) to FIG. 6(d) illustrate an example in which the end effector 4 holds one process performed object OBJ_tgt. However, in a case where the plurality of process performed objects OBJ_tgt are selected (in a case where the end effector 4 can hold the plurality of process performed objects OBJ_tgt) as described above, the end effector 4 may hold the plurality of process performed objects OBJ_tgt. In this case, the state in which the end effector 4 holds the non-process performed object OBJ_ntgt together with the process performed objects OBJ_tgt may include a state in which the end effector 4 directly holds the plurality of process performed objects OBJ_tgt and the end effector 4 directly or indirectly holds at least one non-process performed object OBJ_ntgt.

In a case where the end effector 4 holds the non-process performed object OBJ_ntgt when the end effector 4 holds the process performed object OBJ_tgt in this manner, the control apparatus 3 may control at least one of the robot 1 and the end effector 4 to return at least the non-process performed object OBJ_ntgt to the container CB before the end effector 4 performs the releasing process for releasing the process performed object OBJ_tgt. Namely, the control apparatus 3 may generate the robot control signal for controlling at least one of the robot 1 and the end effector 4 to return at least the non-process performed object OBJ_ntgt to the container CB. In other words, the control apparatus 3 may generate the robot control signal for controlling at least one of the robot 1 and the end effector 4 to perform a process for returning at least the non-process performed object OBJ_ntgt to the container CB.

For example, the control apparatus 3 may control at least one of the robot 1 and the end effector 4 so that at least the non-process performed object OBJ_ntgt drops into the container CB (as a result, at least the non-process performed object OBJ_ntgt is returned to the container CB). Namely, the control apparatus 3 may generate the robot control signal for controlling at least one of the robot 1 and the end effector 4 to perform a process for dropping at least the non-process performed object OBJ_ntgt into the container CB as the process for returning at least the non-process performed object OBJ_ntgt to the container CB. In this case, the non-process performed object OBJ_ntgt dropping into the container CB may be referred to as a drop target object.

Moreover, for example, the control apparatus 3 may control at least one of the robot 1 and the end effector 4 so that at least the non-process performed object OBJ_ntgt is placed on the container CB (as a result, at least the non-process performed object OBJ_ntgt is returned to the container CB) without dropping at least the non-process performed object OBJ_ntgt. Namely, the control apparatus 3 may generate the robot control signal for controlling at least one of the robot 1 and the end effector 4 to perform a process for placing at least the non-process performed object OBJ_ntgt on the container CB without dropping at least the non-process performed object OBJ_ntgt, as the process for returning at least the non-process performed object OBJ_ntgt to the container CB. In this case, compared to a case where the non-process performed object OBJ_ntgt drops into the container CB, it is less likely that at least one of the dropped non-process performed object OBJ_ntgt, the container CB into which the non-process performed object OBJ_ntgt drops, and the target object OBJ contained in the container CB into which the non-process performed object OBJ_ntgt drops is damaged by an impact caused by the drop of the non-process performed object OBJ_ntgt. Furthermore, compared to a case where the non-process performed object OBJ_ntgt drops into the container CB, the control apparatus can return at least the non-process performed object OBJ_ntgt to the container CB more quickly.

Note that the process for returning at least the non-process performed object OBJ_ntgt to the container CB and the releasing process for releasing the process performed object OBJ_tgt may be considered to be common in that they are processes for separating the target object OBJ held by the end effector 4 from the end effector 4. However, the process for returning at least the non-process performed object OBJ_ntgt to the container CB may be considered to be different from the releasing process, which is a process for separating the target object OBJ held by the end effector 4 from the end effector 4 to release the target object OBJ held by the end effector 4 at the release target position described above, in that it is a process for separating the target object OBJ held by the end effector 4 from the end effector 4 to release target object OBJ held by the end effector 4 at a position that is different from the release target position described above. The process for returning at least the non-process performed object OBJ_ntgt to the container CB may be considered to be different from the releasing process, which is a process for separating the target object OBJ held by the end effector 4 from the end effector 4 to place the target object OBJ held by the end effector 4 at a position that is different from the container CB, in that it is a process for separating the target object OBJ held by the end effector 4 from the end effector 4 to place the target object OBJ held by the end effector 4 at the container CB. The process for returning at least the non-process performed object OBJ_ntgt to the container CB may be considered to be different from the releasing process, which is a process for separating the target object OBJ held by the end effector 4 from the end effector 4 to release the process performed object OBJ_tgt that should be held by the end effector 4 at the desired release target position, in that it is a process for separating the target object OBJ held by the end effector 4 from the end effector 4 to return the non-process performed object OBJ_ntgt that may not be held by the end effector 4 to the container CB. The process for returning at least the non-process performed object OBJ_ntgt to the container CB may be considered to be different from the releasing process, which is a process for further advancing the steps of the placing process advanced by the robot, in that it is a process for partially reversing the steps of the placing process (namely, a series of process including the holding process and the releasing process) advanced by the robot 1.

In the below-described description, an example in which at least the non-process performed object OBJ_ntgt is dropped into the container CB to return at least the non-process performed object OBJ_ntgt to the container CB will be described for convenience of description. However, an operation described below may be performed even in a case where at least the non-process performed object OBJ_ntgt is placed at the container without dropping it to return the non-process performed object OBJ_ntgt to the container CB.

Again in FIG. 5, in order to drop at least the non-process performed object OBJ_ntgt into the container CB, the control apparatus 3 determines whether or not the end effector 4 is holding the non-process performed object OBJ_ntgt in addition to the process performed object OBJ_tgt after controlling at least one of the robot 1 and the end effector 4 based on the robot control signal generated at the step S13 (a step S21 to a step S22). Namely, in a case where the end effector 4 directly or indirectly holds at least the non-process performed object OBJ_ntgt, the control apparatus 3 determines whether or not the end effector 4 is holding the non-process performed object OBJ_ntgt in addition to the process performed object OBJ_tgt in order to drop at least the non-process performed object OBJ_ntgt into the container CB after the end effector 4 holds the process performed object OBJ_tgt based on the robot control signal generated at the step S13 (the step S21 to the step S22). In this case, the control apparatus 3 may determine whether or not the end effector 4 is holding the non-process performed object OBJ_ntgt at a timing at which the end effector 4 holds the process performed object OBJ_tgt. In other words, the control apparatus 3 may determine whether or not the end effector 4 is holding the non-process performed object OBJ_ntgt at a same timing at which the end effector 4 holds the process performed object OBJ_tgt. Alternatively, the control apparatus 3 may determine whether or not the end effector 4 is holding the non-process performed object OBJ_ntgt after a predetermined time has elapsed since the end effector 4 holds the process performed object OBJ_tgt. In other words, the control apparatus 3 may determine whether or not the end effector 4 is holding the non-process performed object OBJ_ntgt at a same timing at which the end effector 4 holds the process performed object OBJ_tgt. Then, in a case where it is determined that the end effector 4 holds the non-process performed object OBJ_ntgt in addition to the process performed object OBJ_tgt, the control apparatus 3 generates the robot control signal for controlling at least one of the robot 1 and the end effector 4 to return at least the non-process performed object OBJ_ntgt to the container CB (a step S23 to a step S24).

Incidentally, in a case where the end effector 4 holds no target object OBJ after at least one of the robot 1 and the end effector 4 is controlled based on the robot control signal generated at the step S13, the control apparatus 3 may determine that the end effector 4 holds no target object OBJ as a result of the determination whether or not the end effector 4 is holding the non-process performed object OBJ_ntgt in addition to the process performed object OBJ_tgt. Namely, in a case where the end effector 4 does not hold not only the non-process performed object OBJ_ntgt, which should not be held by the end effector, but also the process performed object OBJ_tgt, which should be held by the end effector 4, the control apparatus 3 may determine that the end effector 4 holds no target object OBJ as a result of the determination whether or not the end effector 4 is holding the non-process performed object OBJ_ntgt in addition to the process performed object OBJ_tgt. In this case, the control apparatus 3 may generate the robot control signal so that the end effector 4 holds the process performed object OBJ_tgt that should be held but is not held by the end effector 4. Namely, the control apparatus 3 may generate the robot control signal so that the end effector 4 holds the same process performed object OBJ_tgt (the same target object OBJ) without changing the process performed object OBJ_tgt to another target object OBJ. Alternatively, the control apparatus 3 may select, as new process performed object OBJ_tgt, the target object OBJ different from the process performed object OBJ_tgt that should be held but is not held by the end effector 4. Namely, the control apparatus 3 may select, as new process performed object OBJ_tgt, the target object OBJ which is different from the already selected process performed object OBJ_tgt and whose matching similarity satisfies the above-described condition related to the selection of the process performed object OBJ_tgt. Alternatively, in a case where there is no target object OBJ which is different from the already selected process performed object OBJ_tgt and whose matching similarity satisfies the above-described condition related to the selection of the process performed object OBJ_tgt, the control apparatus 3 may generate the robot control signal to move the imaging system 2. For example, the control apparatus 3 may generate the robot control signal for moving the imaging system 2 so that at least one of the position and the pose of the imaging system 2 changes. Then, the control apparatus 3 may acquire the image data IMG generated by the moved imaging system 2 imaging the target object OBJ, and select, as new process performed object OBJ_tgt, the target object OBJ whose matching similarity satisfies the above-described condition related to the selection of the process performed object OBJ_tgt, based on the image data IMG. Then, the control apparatus 3 may generate the robot control signal so that the end effector 4 holds the newly selected process performed object OBJ_tgt. Note that the control apparatus 3 may not generate the robot control signal for moving the imaging system 2 in this case. The control apparatus 3 may acquire the image data IMG generated by imaging the target object OBJ at the same position and pose as before, and select, as new process performed object OBJ_tgt, the target object OBJ whose matching similarity satisfies the above-described condition related to the selection of the process performed object OBJ_tgt, based on the image data IMG.

### (2-2-1) Determination whether End Effector 4 is holding Non-Process Performed Object

Specifically, after the end effector 4 holds the process performed object OBJ_tgt based on the robot control signal generated at the step S13, the imaging apparatus 21 images at least one target object OBJ held by the end effector 4 (the step S21) . For example, the imaging apparatus 21 may image an area in which the target object OBJ held by the end effector 4 is positioned assuming that the end effector 4 is holding the target object OBJ (for example, at least one of the process performed object OBJ_tgt and the non-process performed object OBJ_ntgt). In other words, in a state where the imaging range (the imaging angle of view) of the imaging apparatus 21 is positioned to include the area at which the target object OBJ held by the end effector 4 is positioned assuming that the end effector 4 is holding the target object OBJ. However, it is not yet known whether or not the end effector 4 is actually holding the target object OBJ at a timing at which the process at the step S21 is performed, but the imaging apparatus 21 may not image the target object OBJ at the step S21 in a case where the end effector 4 is holding no target object OBJ. Note that the imaging apparatus 21 that images the target object OBJ held by the end effector 4 may be considered to serve as a measurement apparatus that measures the target object OBJ held by the end effector 4.

Then, the false hold detection unit 313 of the control apparatus 3 uses the communication apparatus 33 to acquire the image data IMG generated by the imaging apparatus 21 imaging at least one target object OBJ held by the end effector 4 (the step S21). Then, the false hold detection unit 313 determines based on the image data IMG acquired at the step S21 whether or not the end effector 4 is holding the non-process performed object OBJ_ntgt (the step S22).

Specifically, the false hold detection unit 313 may calculate the number of target objects OBJ actually held by the end effector 4 by controlling the position pose calculation unit 311 to perform the matching processing (especially, the object detection processing) based on the image data IMG acquired at the step S21. Namely, the false hold detection unit 313 may calculate the number of target objects OBJ actually held by the end effector 4 by controlling the position pose calculation unit 311 to perform the matching processing (especially, the object detection processing) based on the image data IMG acquired at the step S21.

Alternatively, the false hold detection unit 313 may calculate at least one of the position and the pose of the target objects OBJ actually held by the end effector 4 by controlling the position pose calculation unit 311 to perform the matching processing (especially, the object detection processing) based on the image data IMG acquired at the step S21. Once at least one of the position and the pose of the target object OBJ actually held by the end effector 4 is determined, the number of target objects OBJ actually held by the end effector 4 is also determined. Therefore, the false hold detection unit 313 may calculate the number of target objects OBJ actually held by the end effector 4 based on a calculated result of at least one of the position and the pose of the target object OBJ actually held by the end effector 4.

Note that the matching processing itself performed at the step S22 may be the same as the matching processing performed at the step S12.

Then, the false hold detection unit 313 may determine whether or not the number of target objects OBJ actually held by the end effector 4 is equal to a predetermined hold object number that is the number of target objects OBJ that should be held by the end effector 4 (namely, the number of the process performed object OBJ_tgt that should be held by the end effector 4). For example, in a case where one target object OBJ of the plurality of target objects OBJ contained in the container CB is selected as the process performed object OBJ_tgt as described above, the false hold detection unit 313 determines whether or not the number of target objects OBJ actually held by the end effector 4 is equal to 1 that is the predetermined hold object number. For example, in a case where at least two target objects OBJ of the plurality of target objects OBJ contained in the container CB are selected as the process performed objects OBJ_tgt as described above, the false hold detection unit 313 determines whether or not the number of target objects OBJ actually held by the end effector 4 is equal to the predetermined hold object number that is the number of target objects OBJ selected as the process performed objects OBJ_tgt (namely, an integer that is equal to or larger than 2).

In a case where the number of target objects OBJ actually held by the end effector 4 is equal to the predetermined hold object number, it is unlikely that the end effector 4 is holding the non-process performed object OBJ_ntgt together with the process performed object OBJ_tgt. On the other hand, in a case where the number of target objects OBJ actually held by the end effector 4 is larger than the predetermined hold object number, it is likely that the end effector 4 is holding the non-process performed object OBJ_ntgt together with the process performed object OBJ_tgt. Therefore, in a case where the number of target objects OBJ actually held by the end effector 4 is equal to the predetermined hold object number, the false hold detection unit 313 may determine that the end effector 4 is not holding the non-process performed object OBJ_ntgt. On the other hand, in a case where the number of target objects OBJ actually held by the end effector 4 is larger than the predetermined hold object number, the false hold detection unit 313 may determine that the end effector 4 is holding the non-process performed object OBJ_ntgt.

Here, in a case where not only at least one target object OBJ held by the end effector 4 but also at least one target object OBJ remaining in the container CB are captured in the image indicated by the image data IMG generated by the imaging apparatus 21 at the step S21, there is a possibility that the matching processing (specifically, the object detection processing) performed at the step S22 erroneously detect, as the target object OBJ held by the end effector 4, at least one target object OBJ that remains in the container CB and thus is not held by the end effector 4. However, even in this case, in a case where a size of at least one target object OBJ remaining in the container CB is smaller than a size of at least one target object OBJ held by the end effector 4 in the image indicated by the image data IMG generated by the imaging apparatus 21, it is less likely that the matching processing (specifically, the object detection processing) performed at the step S22 erroneously detect, as the target object OBJ held by the end effector 4, at least one target object OBJ that remains in the container CB and thus is not held by the end effector 4. Moreover, in a case where at least one target object OBJ remaining in the container CB is blurred in the image indicated by the image data IMG generated by the imaging apparatus 21, it is less likely that the matching processing (specifically, the object detection processing) performed at the step S22 erroneously detect, as the target object OBJ held by the end effector 4, at least one target object OBJ that remains in the container CB and thus is not held by the end effector 4. This is because the matching similarity of at least one target object OBJ remaining in the container CB decreases.

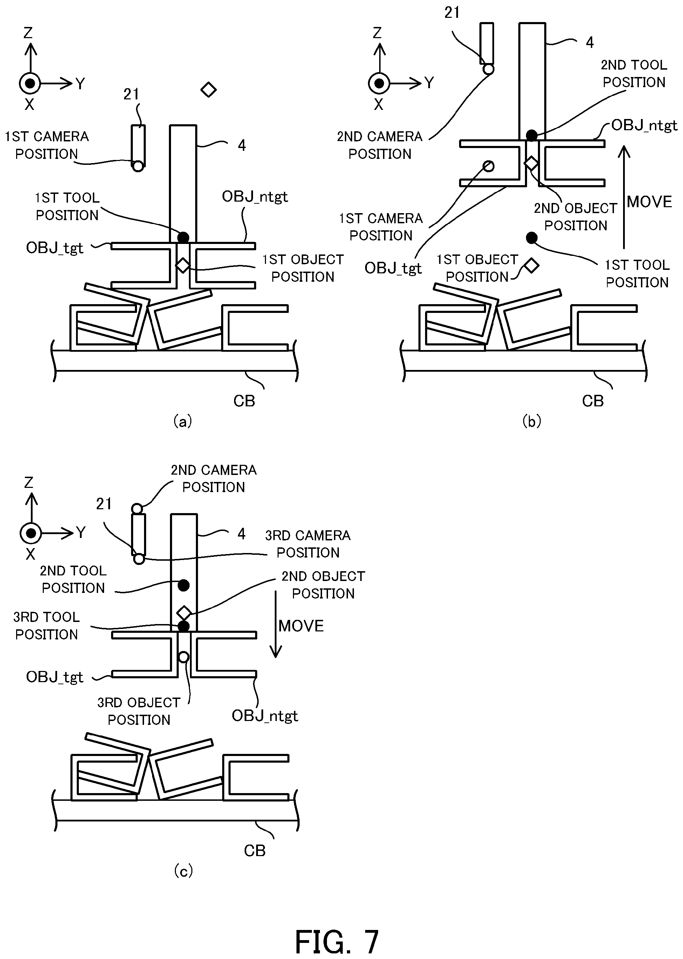

Therefore, before the imaging apparatus 21 images at least one target object OBJ held by the end effector 4 at the step S21, the signal generation unit 312 may generate the robot control signal for controlling the robot 1 so that the imaging apparatus 21 moves from a first camera position, which is a position of the imaging apparatus 21 at a timing at which the end effector 4 holds the process performed object OBJ_tgt, to be away from the container CB (especially, to be away from at least one target object OBJ contained in the container CB). In other words, before the imaging apparatus 21 images at least one target object OBJ held by the end effector 4 at the step S21, the signal generation unit 312 may generate the robot control signal for controlling the robot 1 so that the imaging apparatus 21 positioned at the first camera position moves away from the container CB (especially, moves away from at least one target object OBJ contained in the container CB). For example, as illustrated in FIG. 7(a) and FIG. 7(b), the signal generation unit 312 may generate the robot control signal for controlling the robot 1 so that the imaging apparatus 21 moves to a second camera position that is higher than the first camera position. Note that a "height" here may mean a height from the container CB (namely, a distance to the container CB). Namely, the signal generation unit 312 may generate the robot control signal for controlling the robot 1 so that the imaging apparatus 21 moves to the second camera position that is farther from the container CB (especially, is farther from at least one target object OBJ contained in the container CB) than the first camera position. Then, before the imaging apparatus 21 images at least one target object OBJ held by the end effector 4 at the step S21, the robot 1 may move the robot arm 12 based on the robot control signal so that the imaging apparatus 21 moves from the first camera position, which is the position of the imaging apparatus 21 at the timing at which the end effector 4 holds the process performed object OBJ_tgt, to be away from at least one target object OBJ contained in the container CB. In other words, before the imaging apparatus 21 images at least one target object OBJ held by the end effector 4 at the step S21, the robot 1 may move the robot arm 12 based on the robot control signal so that the imaging apparatus 21 positioned at the first camera position moves away from at least one target object OBJ contained in the container CB. As one example, the robot 1 may move the robot arm 12 so that the imaging apparatus 21 moves to the second camera position that is higher than the first camera position. After the imaging apparatus 21 moves, the imaging apparatus 21 may image at least one target object OBJ held by the end effector 4. As a result, even in a case where the imaging apparatus 21 images not only at least one target object OBJ held by the end effector 4 but also at least one target object OBJ remaining in the container CB, the size of at least one target object OBJ remaining in the container CB is smaller than the size of at least one target object OBJ held by the end effector 4 in the image indicated by the image data IMG generated by the imaging apparatus 21. Furthermore, even in a case where the imaging apparatus 21 images not only at least one target object OBJ held by the end effector 4 but also at least one target object OBJ remaining in the container CB, it is likely that at least one target object OBJ remaining in the container CB is blurred in the image indicated by the image data IMG generated by the imaging apparatus 21. As a result, it is unlikely that the false hold detection unit 313 erroneously detects, as the target object OBJ held by the end effector 4, at least one target object OBJ that remains in the container CB and thus is not held by the end effector 4. Therefore, an accuracy of determining whether or not the end effector 4 is holding the non-process performed object OBJ_ntgt is improved.

Incidentally, when the imaging apparatus 21 moves from the first camera position to the second camera position, the end effector 4, which moves together with the imaging apparatus 21, moves from a first tool position corresponding to the first camera position to a second tool position corresponding to the second camera position. Namely, the end effector 4 moves from the first tool position, which is a position of the end effector 4 at the timing at which the end effector 4 holds the process performed object OBJ_tgt, to be away from the container CB (especially, to be away from at least one target object OBJ contained in the container CB). In other words, the end effector 4 positioned at the first tool position moves away from the container CB (especially, moves away from at least one target object OBJ contained in the container CB). As one example, as illustrated in FIG. 7(a) and FIG. 7(b), the end effector 4 moves to the second tool position that is higher than the first tool position. Namely, the end effector 4 moves to the second tool position that is farther from the container CB (especially, is farther from at least one target object OBJ contained in the container CB) than the first tool position.

Moreover, when the end effector 4 moves from the first tool position to the second tool position, at least one target object OBJ held by the end effector 4 moves from a first object position corresponding to the first tool position to a second object position corresponding to the second tool position. Namely, at least one target object OBJ held by the end effector 4 moves from the first object position, which is a position of at least one target object OBJ held by the end effector 4 at the timing at which the end effector 4 holds the process performed object OBJ_tgt, to be away from the container CB (especially, to be away from at least one target object OBJ contained in the container CB). In other words, at least one target object OBJ positioned at the first object position moves away from the container CB (especially, moves away from at least one target object OBJ contained in the container CB). As one example, as illustrated in FIG. 7(a) and FIG. 7(b), at least one target object OBJ held by the end effector 4 moves to the second object position that is higher than the first object position. Namely, at least one target object OBJ held by the end effector 4 moves to the second object position that is farther from the container CB (especially, is farther from at least one target object OBJ contained in the container CB) than the first object position.

However, before the imaging apparatus 21 images at least one target object OBJ held by the end effector 4 at the step S21, the imaging apparatus 21 may not move from the first camera position, which is the position of the imaging apparatus 21 at a timing at which the end effector 4 holds the process performed object OBJ_tgt, to be away from at least one target object OBJ contained in the container CB. Namely, the imaging apparatus 21 positioned at the first camera position may image at least one target object OBJ held by the end effector 4 from the first camera position.

In a case where the imaging apparatus 21 may not move away from at least one target object OBJ contained in the container CB (namely, may not move away from the container CB) before the imaging apparatus 21 images at least one target object OBJ held by the end effector 4 in this manner, the control apparatus 3 may place (namely, return) at least the non-process performed object OBJ_ntgt to the container CB without dropping the non-process performed object OBJ_ntgt the non-process performed object OBJ_ntgt into the container CB, thereby can return at least the non-process performed object OBJ_ntgt to the container CB more quickly, compared to a case where at least the non-process performed object OBJ_ntgt is dropped into the container CB. This is because the end effector 4 does not move away from the container CB in a case where the imaging apparatus 21 does not move away from the container CB, and therefore, the end effector 4 holding the non-process performed object OBJ_ntgt may simply release (detach) the non-process performed object OBJ_ntgt at its current position (specifically, the first tool position at which the non-process performed object OBJ_ntgt is held).

Note that the number of target objects OBJ included in the target object group contained in the container CB decreases as the holding process and the releasing process described above are repeated. As a result, there is a possibility that a height of the target object group contained in the container CB decrease. In this case, before the imaging apparatus 21 images the target object group contained in the container CB at the step S11 in FIG. 5, the control apparatus 3 may control a height (for example, the height from the container CB, and the distance from the container CB) of the imaging apparatus 21 based on the height of the target object group contained in the container CB. For example, the control apparatus 3 may control the height of the imaging apparatus 21 so that the height of the imaging apparatus 21 becomes lower as the height of the target object group contained in the container CB becomes lower. As a result, the imaging apparatus 21 can properly focus on the target object group contained in the container CB even in a case where the height of the target object group contained in the container CB decreases. Therefore, the imaging apparatus 21 can properly image the target object group contained in the container CB even in a case where the height of the target object group contained in the container CB decreases. Note that the height at which the imaging apparatus 21 images at least one target object OBJ held by the end effector 4 in one period may be lower than the height at which the imaging apparatus 21 images at least one target object OBJ held by the end effector 4 in another period that is before the one period in this case. Namely, the height at which the imaging apparatus 21 images at least one target object OBJ held by the end effector 4 in one period during which the height of the target object group contained in the container CB is a first height may be lower than the height at which the imaging apparatus 21 images at least one target object OBJ held by the end effector 4 in another period during which the height of the target object group contained in the container CB is a second height that is higher than the first height.

### (2-2-2) Processing for Dropping At Least One Non-process Performed Object into Container

Again in FIG. 5, in a case where it is determined as a result of the determination at the step S22 that the end effector 4 is not holding the non-process performed object OBJ_ntgt (the step S22: No), the control apparatus 3 may not perform a processing for dropping at least the non-process performed object OBJ_ntgt into the container CB. In this case, the end effector 4 may perform the releasing process for releasing the process performed object OBJ_tgt held by the end effector 4 (a step S33). For example, as described above, the process performed object OBJ_tgt held by the end effector 4 may be transported from the container CB, and the process performed object OBJ_tgt held by the end effector 4 may be released outside the container CB.

On the other hand, in a case where it is determined as a result of the determination at the step S22 that the end effector 4 is holding the non-process performed object OBJ_ntgt (the step S22: Yes), it is estimated that the end effector 4 is holding a held target object group OBG_h that includes both the process performed object OBJ_tgt and the non-process performed object OBJ_ntgt. Note that the imaging apparatus 21 may be considered to image the held target object group OBG_h held by the end effector 4 at the step S21 described above in this case. In this case, the control apparatus 3 may perform the processing for dropping at least the non-process performed object OBJ_ntgt into the container CB (a step S23 to a step S26).

Thus, the processing for dropping at least the non-process performed object OBJ_ntgt held by the end effector 4 into the container CB may be performed in a case where the end effector 4 is holding the non-process performed object OBJ_ntgt, and the processing for dropping the non-process performed object OBJ_ntgt held by the end effector 4 into the container CB may not be performed in a case where the end effector 4 is not holding the non-process performed object OBJ_ntgt, and therefore, the control apparatus 3 may be considered to change a control aspect of at least one of the robot 1 and the end effector 4 based on a result of determining whether or not the end effector 4 is holding the non-process performed object OBJ_ntgt. The control apparatus 3 may be considered to change the control aspect of at least one of the robot 1 and the end effector 4 based on the number of target objects OBJ actually held by the end effector 4, because the number of target objects OBJ actually held by the end effector 4 is used to determine whether or not the end effector 4 is holding the non-process performed object OBJ_ntgt.

### (2-2-2-1) Processing for Determining Held State

In order to perform the processing for dropping the non-process performed object OBJ_ntgt held by the end effector 4 into the container CB, the false hold detection unit 313 determining a held state of the target object OBJ held by the end effector 4 (for example, the held target object group OBG_h, the non-process performed object OBJ_ntgt, or the process performed object OBJ_tgt) based on the image data IMG acquired at the step S21 (the step S23).

The held state may include at least one of the position and the pose of the held target object group OBG_h held by the end effector 4. Specifically, since the end effector 4 is holding the process performed object OBJ_tgt, the held state may include at least one of the position and the pose of the process performed object OBJ_tgt held by the end effector 4. Namely, at least one of the position and the pose of the held target object group OBG_h may include at least one of the position and the pose of the process performed object OBJ_tgt held by the end effector 4. Furthermore, since the end effector 4 is holding the non-process performed object OBJ_ntgt, the held state may include at least one of the position and the pose of the non-process performed object OBJ_ntgt held by the end effector 4, in addition to or instead of at least one of the position and the pose of the process performed object OBJ_tgt held by the end effector 4. Namely, at least one of the position and the pose of the held target object group OBG_h may include at least one of the position and the pose of the non-process performed object OBJ_ntgt held by the end effector 4.

In order to calculate at least one of the position and the pose of the held target object group OBG_h, the false hold detection unit 313 controls the position pose calculation unit 311 to perform the matching processing using the image data IMG acquired at the step S21. Note that the matching processing performed at the step S23 itself may be the same as the matching processing performed at the step S12. Therefore, a detailed description of the matching processing performed at the step S23 is omitted.

Note that the matching processing may be performed to determine whether or not the end effector 4 is holding the non-process performed object OBJ_ntgt at the step S22 as described above. In this case the false hold detection unit 313 may control the position pose calculation unit 311 to calculate at least one of the position and the pose of at least one target object OBJ held by the end effector 4 at the step S22 as described above. In this case, the false hold detection unit 313 may not calculate at least one of the position and the pose of the held target object group OBG_h again at the step S23. At the step S23, the false hold detection unit 313 may use, as the held state, at least one of the position and the pose of at least one target object OBJ held by the end effector 4 calculated at the step S22.

The held state may include a held aspect of the non-process performed object OBJ_ntgt by the end effector 4. Specifically, the held state may include a state in which the end effector 4 directly holds the non-process performed object OBJ_ntgt and a state in which the end effector 4 indirectly holds the non-process performed object OBJ_ntgt. Namely, the held state may include a result of determining whether the held aspect of the non-process performed object OBJ_ntgt by the end effector 4 is a first held aspect in which the end effector 4 directly holds the non-process performed object OBJ_ntgt or a second held aspect in which the end effector 4 indirectly holds the non-process performed object OBJ_ntgt.

In order to determine the held aspect of the non-process performed object OBJ_ntgt by the end effector 4, the false hold detection unit 313 may calculate a positional relationship between the plurality of target objects OBJ included in the held target object group OBG_h, based on the calculated result of at least one of the position and the pose of the held target object group OBG_h. Then, the false hold detection unit 313 may determine the held aspect of the non-process performed object OBJ_ntgt by the end effector 4 based on the positional relationship between the plurality of target objects OBJ included in the held target object group OBG_h.

In order to determine the held aspect of the non-process performed object OBJ_ntgt by the end effector 4, the false hold detection unit 313 may control the position pose calculation unit 311 to calculate at least one of the position and the pose of the end effector 4 in addition to at least one of the position and the pose of the held target object group OBG_h. In this case, the false hold detection unit 313 may calculate at least one of the position and the pose of the end effector 4 by performing the matching processing using the image data IMG acquired at the step S21 and a template model indicating a shape(a two-dimensional shape and / or a three-dimensional shape) of at least a part of the end effector 4. Note that the matching processing using the template model indicating the shape of the end effector 4 itself may be the same as the matching processing using the template model indicating the shape of the target object OBJ described above. Note that the template model is not limited to a model indicating the shape of at least a part of the end effector 4, but may be a model indicating an edge of at least a part of the end effector 4. Moreover, the template model may be generated in advance from a CAD model of the end effector 4, or may be generated from image data acquired by imaging a reference end effector 4 by using the imaging apparatus 21 or another imaging apparatus. At least one of the calculated position and pose of the end effector 4 may be at least one of the position and the pose of a tip part of the end effector 4 (especially, a part for holding the target object OBJ), or may be at least one of the position and the pose of a reference point (for example, the tool center point) of the end effector 4. Alternatively, the false hold detection unit 313 may acquire information related to at least one of the position and the pose of the end effector 4 from the robot 1 (from the robot control apparatus 13). For example, the false hold detection unit 313 may acquire, as the information related to at least one of the position and the pose of the end effector 4, a measured result by a position pose measurement apparatus (for example, an encoder) of the robot 1 for detecting at least one of the position and the pose of the end effector 4. The information related to at least one of the position and the pose of the end effector 4 may mean information related to at least one of the position and the pose of the reference point (for example, the tool center point) of the end effector 4. Then, the false hold detection unit 313 calculate the positional relationship between the held target object group OBG_h and the end effector 4 based on the calculated result of at least one of the position and the pose of the held target object group OBG_h and the calculated result of at least one of the position and the pose of the end effector 4. Then, the false hold detection unit 313 may determine the held aspect of the non-process performed object OBJ_ntgt by the end effector 4 based on the positional relationship between the held target object group OBG_h and the end effector 4. For example, in a case where there is the target object OBJ positioned at a position distant from the end effector 4 does not exist (see FIG. 6(a)), it is unlikely that the target object OBJ indirectly held by the end effector 4 exists. Therefore, in this case, the false hold detection unit 313 may determine that the end effector 4 is directly holding the non-process performed object OBJ_ntgt. For example, in a case where the target object OBJ positioned at a position distant from the end effector 4 exists (see FIG. 6(b) to FIG. 6(d)), it is likely that the target object OBJ indirectly held by the end effector 4 exists. Therefore, in this case, the false hold detection unit 313 may determine that the end effector 4 is indirectly holding the non-process performed object OBJ_ntgt. For example, in a case where the target object OBJ contacting the end effector 4 exists (see FIG. 6(a)), it is likely that the target object OBJ directly held by the end effector 4 exists. Therefore, in this case, the false hold detection unit 313 may determine that the end effector 4 is directly holding the non-process performed object OBJ_ntgt.

The held state may include the "number of target objects OBJ actually held by the end effector 4", which is used to determine whether or not the end effector 4is holding the non-process performed object OBJ_ntgt at the step S22 described above. In this case, the "number of target objects OBJ actually held by the end effector 4", which is calculated at the step S22, may be reused as at least a part of the held state.

### (2-2-2-2) Generation of Robot Control Signal for Dropping at least Non-Process Performed Object into Container

Then, the signal generation unit 312 generates, based on the held state determined at the step S23, the robot control signal for controlling at least one of the robot 1 and the end effector 4 to drop the non-process performed object OBJ_ntgt held by the end effector 4 into the container CB (the step S24).

For example, in a case where the held state includes the calculated result of at least one of the position and the pose of the held target object group OBG_h, the signal generation unit 312 may generate, based on the calculated result of at least one of the position and the pose of the non-process performed object OBJ_ntgt included in the held target object group OBG_h, the robot control signal for controlling at least one of the robot 1 and the end effector 4 to drop the non-process performed object OBJ_ntgt, which is positioned at the calculated position and / or which exists in the calculated pose, into the container CB. For example, the signal generation unit 312 may generate the robot control signal for moving the robot arm 12 to drop the non-process performed object OBJ_ntgt, which is positioned at the calculated position and / or which exists in the calculated pose, into the container CB. For example, the signal generation unit 312 may generate the robot control signal for moving the robot arm 12 so that the non-process performed object OBJ_ntgt moves to position the non-process performed object OBJ_ntgt, which is positioned at the calculated position and / or which exists in the calculated pose, at a predetermined position in the container CB.

For example, in a case where the held state includes the calculated result of at least one of the position and the pose of the held target object group OBG_h, the signal generation unit 312 may generate, based on the calculated result of at least one of the position and the pose of the process performed object OBJ_tgt included in the held target object group OBG_h, the robot control signal for controlling at least one of the robot 1 and the end effector 4 to drop the non-process performed object OBJ_ntgt held by the end effector 4 together with the process performed object OBJ_tgt, which is positioned at the calculated position and / or which exists in the calculated pose, into the container CB. For example, the signal generation unit 312 may generate the robot control signal for moving the robot arm 12 to drop the non-process performed object OBJ_ntgt, which is held by the process performed object OBJ_tgt that is positioned at the calculated position and / or that exists in the calculated pose, into the container CB. For example, the signal generation unit 312 may generate the robot control signal for moving the robot arm 12 so that the non-process performed object OBJ_ntgt moves to position the non-process performed object OBJ_ntgt, which is held by the process performed object OBJ_tgt that is positioned at the calculated position and / or that exists in the calculated pose, at a predetermined position in the container CB.

For example, in a case where the held state includes the held aspect of the non-process performed object OBJ_ntgt by the end effector 4, the signal generation unit 312 may change control aspect of at least one of the robot 1 and the end effector 4, which is for dropping the non-process performed object OBJ_ntgt into the container CB, based on the held state of the non-process performed object OBJ_ntgt by the end effector 4. Namely, the signal generation unit 312 may generate the robot control signal so that the control aspect of at least one of the robot 1 and the end effector 4 for dropping the non-process performed object OBJ_ntgt into the container CB in a case where the end effector 4 is directly holding the non-process performed object OBJ_ntgt is different from the control aspect of at least one of the robot 1 and the end effector 4 for dropping the non-process performed object OBJ_ntgt into the container CB in a case where the end effector 4 is indirectly holding the non-process performed object OBJ_ntgt. In other words, the signal generation unit 312 may generate the robot control signal so that the control aspect of at least one of the robot 1 and the end effector 4 for dropping the non-process performed object OBJ_ntgt, which is directly held by the end effector 4, into the container CB is different from the control aspect of at least one of the robot 1 and the end effector 4 for dropping the non-process performed object OBJ_ntgt, which is indirectly held by the end effector 4, into the container CB

For example, in a case where the held state includes the number of target objects OBJ actually held by the end effector 4, the signal generation unit 312 may calculate, based on the number of target objects OBJ actually held by the end effector 4, the number of non-process performed objects OBJ_ntgt that should be dropped into the container CB. For example, the signal generation unit 312 may calculate, as the number of non-process performed objects OBJ_ntgt that should be dropped into the container CB, the number that is calculated by subtracting the non-process performed objects OBJ_ntgt that should be held by the end effector 4 from the number of target objects OBJ held by the end effector 4. Then, the signal generation unit 312 may generate the robot control signal for controlling at least one of the robot 1 and the end effector 4 to drop the non-process performed objects OBJ_ntgt, whose number is equal to the calculated number, into the container CB. .

### (2-2-2-3) Generating Robot Control Signals for Dropping Non-Process Performed Objects Directly Held by End Effector 4 into Container

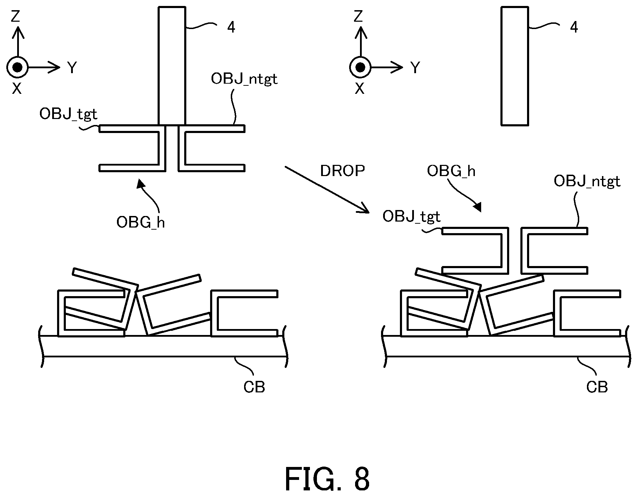

In a case where the end effector 4 is directly holding the non-process performed object OBJ_ntgt, the signal generation unit 312 may generate the robot control signal for controlling at least one of the robot 1 and the end effector 4 to drop both the non-process performed object OBJ_ntgt held by the end effector 4 and the process performed object OBJ_tgt held by the end effector 4 into the container CB as illustrated in FIG. 8. Namely, In a case where the end effector 4 is directly holding the non-process performed object OBJ_ntgt, the signal generation unit 312 may generate the robot control signal for controlling at least one of the robot 1 and the end effector 4 to drop the held target object group OBG_h held by the end effector 4 into the container CB as illustrated in FIG. 8.

The signal generation unit 312 may generate the robot control signal for controlling the end effector 4 so that the end effector 4 releases the held target object group OBG_h (as a result, the held target object group OBG_h drops) by decreasing the holding force of the end effector 4 for holding the held target object group OBG_h. For example, in a case where the end effector 4 is the hand gripper, the signal generation unit 312 may generate the robot control signal for controlling the end effector 4 so that the end effector 4 releases the held target object group OBG_h by decreasing the force with which the hand gripper (for example, the finger members or the claw members of the hand gripper) grips the held target object group OBG_h (as a result, decreasing the holding force that acts between the hand gripper and the held target object group OBG_h and that is for holding the held target object group OBG_h). For example, in a case where the end effector 4 is the vacuum gripper, the signal generation unit 312 may generate the robot control signal for controlling the end effector 4 so that the end effector 4 releases the held target object group OBG_h by decreasing the suction force generated by the end effector 4. For example, in a case where the end effector 4 is the magnetic gripper, the signal generation unit 312 may generate the robot control signal for controlling the end effector 4 so that the end effector 4 releases the held target object group OBG_h by decreasing the magnetic force (alternatively, the electromagnetic force) generated by the end effector 4.

Decreasing the holding force of the end effector 4 may include decreasing the holding force in a state where the end effector 4 generates the holding force. Namely, decreasing the holding force of the end effector 4 may include applying the holding force, which is weaker than the holding force acting on the held target object group OBG_h at a timing at which the end effector 4 holds the held target object group OBG_h, to the held target object group OBG_h from the end effector 4. In other words, decreasing the holding force of the end effector 4 may include switching a state of the end effector 4 from a state in which the end effector 4 applies the holding force, which has a first strength, to the held target object group OBG_h to a state in which the end effector 4 applies the holding force, which has a second strength weaker than the first strength, to the held target object group OBG_h.

Decreasing the holding force of the end effector 4 may include setting the holding force of the end effector 4 to zero. In other words, decreasing the holding force of the end effector 4 may include switching the state of the end effector 4 from a state in which the end effector 4 applies the holding force to the held target object group OBG_h to a state in which the end effector 4 does not apply the holding force to the held target object group OBG_h.

The signal generation unit 312 may generate the robot control signal for controlling the robot 1 so that the held target object group OBG_h drops from the end effector 4 by moving the end effector 4. For example, the signal generation unit 312 may generate the robot control signal for controlling the robot 1 so that the held target object group OBG_h drops from the end effector 4 by translationally moving the end effector 4 along a predetermined translational axis (for example, at least one of the X-axis, the Y-axis, and the Z-axis). For example, the signal generation unit 312 may generate the robot control signal for controlling the robot 1 so that the held target object group OBG_h drops from the end effector 4 by rotationally moving the end effector 4 around a predetermined rotational axis (for example, at least one of the rotational axis along the X-axis, the rotational axis along the Y-axis, and the rotational axis along the Z-axis).

As a first example, the signal generation unit 312 may generate the robot control signal for controlling the robot 1 so that the held target object group OBG_h drops from the end effector 4 by vibrating the end effector 4. As a second example, the signal generation unit 312 may generate the robot control signal for controlling the robot 1 so that the held target object group OBG_h drops from the end effector 4 by swinging the end effector 4. As a third example, the signal generation unit 312 may generate the robot control signal for controlling the robot 1 so that the held target object group OBG_h drops from the end effector 4 due to the frictional force between the held target object group OBG_h and other object by moving the end effector 4 so that the held target object group OBG_h contacts other object (for example, the container CB and the target object OBJ contained in the container CB).

Note that the signal generation unit 312 may generate the robot control signal for controlling the robot 1 so that the held target object group OBG_h drops from the end effector 4 by decreasing the holding force of the end effector 4 for holding the held target object group OBG_h and moving (for example, translationally moving and / or rotationally moving as described above) the end effector 4. Alternatively, the signal generation unit 312 may generate the robot control signal for controlling the robot 1 so that the held target object group OBG_h drops from the end effector 4 by moving the end effector 4 without decreasing the holding force of the end effector 4 for holding the held target object group OBG_h. For example, the signal generation unit 312 may generate the robot control signal for controlling the robot 1 so that the held target object group OBG_h drops from the end effector 4 by moving the end effector 4 while maintaining the holding force of the end effector 4 for holding the held target object group OBG_h.

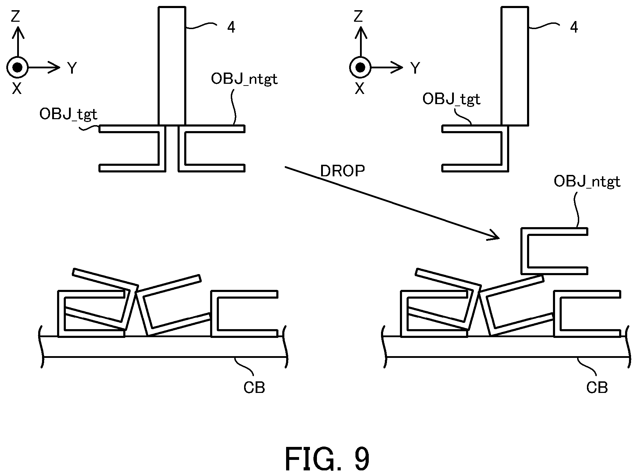

However, in a case where the end effector 4 is directly holding the non-process performed object OBJ_ntgt, the signal generation unit 312 may generate the robot control signal for controlling at least one of the robot 1 and the end effector 4 to drop one of the non-process performed object OBJ_ntgt and the process performed object OBJ_tgt held by the end effector 4 into the container CB while the end effector 4 holds the other one of the non-process performed object OBJ_ntgt and the process performed object OBJ_tgt as illustrated in FIG. 9. Namely, the signal generation unit 312 may generate the robot control signal for controlling at least one of the robot 1 and the end effector 4 to drop one of the non-process performed object OBJ_ntgt and the process performed object OBJ_tgt held by the end effector 4 into the container CB in a state where the end effector 4 is holding the other one of the non-process performed object OBJ_ntgt and the process performed object OBJ_tgt. As one example, the signal generation unit 312 may generate the robot control signal for controlling at least one of the robot 1 and the end effector 4 to drop the non-process performed object OBJ_ntgt held by the end effector 4 into the container CB in a state where the end effector 4 is holding the process performed object OBJ_tgt. In this case, after the non-process performed object OBJ_ntgt drops into the container CB, the end effector 4 may perform the releasing process for releasing the process performed object OBJ_tgt held by the end effector 4 (the step S33). As another example, the signal generation unit 312 may generate the robot control signal for controlling at least one of the robot 1 and the end effector 4 to drop the process performed object OBJ_tgt held by the end effector 4 into the container CB in a state where the end effector 4 is holding the non-process performed object OBJ_ntgt. In this case, after the process performed object OBJ_tgt drops into the container CB, the end effector 4 may perform the releasing process for releasing the non-process performed object OBJ_ntgt held by the end effector 4 (the step S33) . Namely, the non-process performed object OBJ_ntgt, which is still held by the end effector 4 after the process performed object OBJ_tgt has dropped into the container CB, may be released as a new process performed object OBJ_tgt.

Note that an example in which the signal generation unit 312 generates the robot control signal for controlling at least one of the robot 1 and the end effector 4 to drop the non-process performed object OBJ_ntgt held by the end effector 4 into the container CB in a state where the end effector 4 is holding the process performed object OBJ_tgt will be described in the below-described description.

The signal generation unit 312 may generate the robot control signal for controlling the end effector 4 so that the end effector 4 releases the non-process performed object OBJ_ntgt (as a result, the non-process performed object OBJ_ntgt drops) by decreasing the holding force of the end effector 4 for holding the non-process performed object OBJ_ntgt. Note that a detailed description of decreasing the holding force of the end effector 4 is omitted, because it has already been described.

The signal generation unit 312 may generate the robot control signal for controlling the robot 1 to drop the non-process performed object OBJ_ntgt from the end effector 4 by moving (for example, translationally moving and / or rotationally moving as described above) the end effector 4. As a first example, the signal generation unit 312 may generate the robot control signal for controlling the robot 1 to drop the non-process performed object OBJ_ntgt from the end effector 4 by vibrating the end effector 4. As a second example, the signal generation unit 312 may generate the robot control signal for controlling the robot 1 to drop the non-process performed object OBJ_ntgt from the end effector 4 by swinging the end effector 4. As a third example, the signal generation unit 312 may generate the robot control signal for controlling the robot 1 to drop the non-process performed object OBJ_ntgt from the end effector 4 due to the frictional force between the non-process performed object OBJ_ntgt and other object by moving the end effector 4 so that the non-process performed object OBJ_ntgt contacts other object (for example, the container CB and the target object OBJ contained in the container CB).

Note that the signal generation unit 312 may generate the robot control signal for controlling the robot 1 to drop the non-process performed object OBJ_ntgt from the end effector 4 by decreasing the holding force of the end effector 4 for holding the non-process performed object OBJ_ntgt and moving (for example, translationally moving and / or rotationally moving as described above) the end effector 4. For example, in a case where the end effector 4 is the magnetic gripper, there is a possibility that the holding force (for example, the magnetic force) acting on the non-process performed object OBJ_ntgt for holding the non-process performed object OBJ_ntgt, which should not be held by the end effector 4, is weaker than the holding force (for example, the magnetic force) acting on the process performed object OBJ_tgt for holing the process performed object OBJ_tgt, which should be held by the end effector 4. This is because there is a possibility that at least one of the relative positional relationship and postural relationship between the end effector 4 and the non-process performed object OBJ_ntgt, which should not be held by the end effector 4, is significantly different from at least one of ideal positional relationship and postural relationship for the end effector 4 to properly hold the target object OBJ but at least one of the relative positional relationship and postural relationship between the end effector 4 and the process performed object OBJ_tgt, which should be held by the end effector 4, is the same as at least one of the ideal positional relationship and postural relationship for the end effector 4 to properly hold the target object OBJ. Therefore, it is likely that the non-process performed object OBJ_ntgt held by the end effector 4 drops into the container CB while the end effector 4 holds the process performed object OBJ_tgt by decreasing the holding force of the end effector 4.

Alternatively, the signal generation unit 312 may generate the robot control signal for controlling the robot 1 to drop the non-process performed object OBJ_ntgt from the end effector 4 by moving the end effector 4 without decreasing the holding force of the end effector 4 for holding the non-process performed object OBJ_ntgt. For example, the signal generation unit 312 may generate the robot control signal for controlling the robot 1 to drop the non-process performed object OBJ_ntgt from the end effector 4 by moving the end effector 4 while maintaining the holding force of the end effector 4 for holding the non-process performed object OBJ_ntgt.

Note that FIG. 8 to FIG. 9 illustrate an example in which the end effector 4 directly holds a single non-process performed object OBJ_ntgt. However, as described above, there is a possibility that the end effector 4 directly holds the plurality of non-process performed objects OBJ_ntgt. In this case, the signal generation unit 312 may generate the robot control signal for controlling at least one of the robot 1 and the end effector 4 to drop all of the plurality of non-process performed objects OBJ_ntgt into the container CB. Alternatively, the signal generation unit 312 may generate the robot control signal for controlling at least one of the robot 1 and the end effector 4 to drop a part of the plurality of non-process performed objects OBJ_ntgt into the container CB. Namely, the signal generation unit 312 may generate the robot control signal for controlling at least one of the robot 1 and the end effector 4 to drop other part of the plurality of non-process performed objects OBJ_ntgt held by the end effector 4 into the container CB while the end effector 4 holds a part of the plurality of non-process performed objects OBJ_ntgt.

Moreover, FIG. 8 to FIG. 9 illustrate an example in which the end effector 4 directly holds a single process performed object OBJ_tgt. However, as described above, there is a possibility that the end effector 4 directly holds the plurality of process performed objects OBJ_tgt. In this case, the signal generation unit 312 may generate the robot control signal for controlling at least one of the robot 1 and the end effector 4 to drop all of the plurality of process performed objects OBJ_tgt into the container CB. Alternatively, the signal generation unit 312 may generate the robot control signal for controlling at least one of the robot 1 and the end effector 4 to drop a part of the plurality of process performed objects OBJ_tgt into the container CB. Namely, the signal generation may generate the robot control signal for controlling at least one of the robot 1 and the end effector 4 to drop a part of the plurality of process performed objects OBJ_tgt held by the end effector 4 into the container CB while the end effector 4 holds other part of the plurality of process performed objects OBJ_tgt.

### (2-2-2-5) Generating Robot Control Signals for Dropping Non-Process Performed Objects Indirectly Held by End Effector 4 into Container

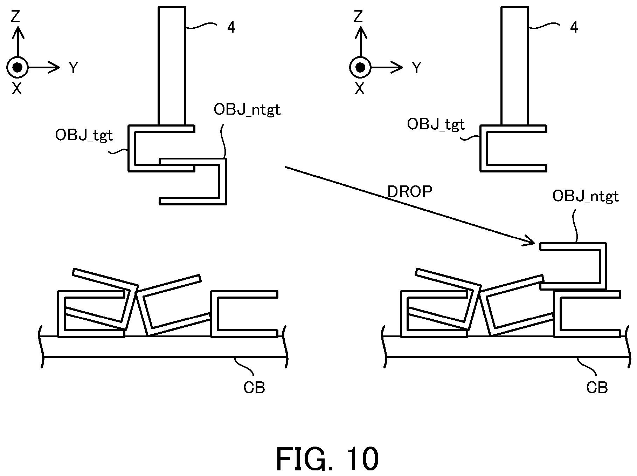

In a case where the end effector 4 indirectly holds the non-process performed object OBJ_ntgt, the signal generation unit 312 may generate the robot control signal for controlling at least one of the robot 1 and the end effector 4 to drop the non-process performed object OBJ_ntgt held by the end effector 4 into the container CB while the end effector 4 holds the process performed object OBJ_tgt as illustrated in FIG. 10. Namely, in a case where the end effector 4 is indirectly holding the non-process performed object OBJ_ntgt, the signal generation unit 312 may generate the robot control signal for controlling at least one of the robot 1 and the end effector 4 to drop the non-process performed object OBJ_ntgt indirectly held by the end effector 4 into the container CB in a state where the end effector 4 holds the process performed object OBJ_tgt as illustrated in FIG. 10. In other words, in a case where the end effector 4 is indirectly holding the non-process performed object OBJ_ntgt, the signal generation unit 312 may generate the robot control signal for controlling at least one of the robot 1 and the end effector 4 to drop only the non-process performed object OBJ_ntgt indirectly held by the end effector 4 into the container CB without dropping the process performed object OBJ_tgt held by the end effector 4 as illustrated in FIG. 10. In other words, in a case where the end effector 4 is indirectly holding the non-process performed object OBJ_ntgt, the signal generation unit 312 may generate the robot control signal for controlling at least one of the robot 1 and the end effector 4 to drop only the non-process performed object OBJ_ntgt indirectly held by the end effector 4 into the container CB.

As described above, in a case where the end effector 4 is indirectly holding the non-process performed object OBJ_ntgt, the non-process performed object OBJ_ntgt may be considered to be held by the process performed object OBJ_tgt as described above. In this case, the signal generation unit 312 may generate the robot control signal for controlling at least one of the robot 1 and the end effector 4 to drop the non-process performed object OBJ_ntgt from the process performed object OBJ_tgt into the container CB while the end effector 4 holds the process performed object OBJ_tgt. Namely, the signal generation unit 312 may generate the robot control signal for controlling at least one of the robot 1 and the end effector 4 to drop the non-process performed object OBJ_ntgt from the process performed object OBJ_tgt into the container CB in a state where the end effector 4 holds the process performed object OBJ_tgt.

The signal generation unit 312 may generate the robot control signal for controlling the end effector 4 to drop the non-process performed object OBJ_ntgt by decreasing the holding force of the end effector 4 in a state where the end effector 4 holds the process performed object OBJ_tgt. Note that a detailed description of decreasing the holding force of the end effector 4 is omitted, because it has already been described.

The signal generation unit 312 may generate the robot control signal for controlling the robot 1 to drop the non-process performed object OBJ_ntgt from the process performed object OBJ_tgt by moving (for example, translationally moving and / or rotationally moving as described above) the end effector 4 in a state where the end effector 4 holds the process performed object OBJ_tgt. As a first example, the signal generation unit 312 may generate the robot control signal for controlling the robot 1 to drop the non-process performed object OBJ_ntgt from the process performed object OBJ_tgt by vibrating the end effector 4. As a second example, the signal generation unit 312 may generate the robot control signal for controlling the robot 1 to drop the non-process performed object OBJ_ntgt from the process performed object OBJ_tgt by swinging the end effector 4. As a third example, the signal generation unit 312 may generate the robot control signal for controlling the robot 1 to drop the non-process performed object OBJ_ntgt from the process performed object OBJ_tgt due to the frictional force between the non-process performed object OBJ_ntgt and other object by moving the end effector 4 so that the non-process performed object OBJ_ntgt contacts other object (for example, the container CB and the target object OBJ contained in the container CB).

Note that the signal generation unit 312 may generate the robot control signal for controlling the robot 1 to drop the non-process performed object OBJ_ntgt from the process performed object OBJ_tgt by decreasing the holding force of the end effector 4 and moving (for example, translationally moving and / or rotationally moving as described above) the end effector 4. For example, in a case where the end effector 4 is the magnetic gripper, there is a possibility that the holding force (for example, the magnetic force) of the end effector 4 for indirectly holding the non-process performed object OBJ_ntgt is weaker than the holding force (for example, the magnetic force) of the end effector 4 for directly holing the process performed object OBJ_tgt. This is because the end effector 4 is in direct contact with the process performed object OBJ_tgt and the end effector 4 is not in direct contact with the non-process performed object OBJ_ntgt. Therefore, it is likely that the non-process performed object OBJ_ntgt held by the end effector 4 drops into the container CB while the end effector 4 holds the process performed object OBJ_tgt by decreasing the holding force of the end effector 4.

Alternatively, the signal generation unit 312 may generate the robot control signal for controlling the robot 1 to drop the non-process performed object OBJ_ntgt from the process performed object OBJ_tgt by moving the end effector 4 without decreasing the holding force of the end effector 4. For example, the signal generation unit 312 may generate the robot control signal for controlling the robot 1 to drop the non-process performed object OBJ_ntgt from the process performed object OBJ_tgt by moving the end effector 4 while maintaining the holding force of the end effector 4.

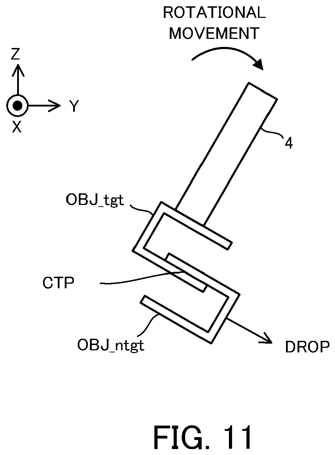

In a case where the non-process performed object OBJ_ntgt is dropped into the container CB by moving the end effector 4,, the signal generation unit 312 may generate the robot control signal for controlling the robot 1 to drop the non-process performed object OBJ_ntgt from the process performed object OBJ_tgt by rotationally moving the end effector 4 as illustrated in FIG. 11. Namely, the signal generation unit 312 may generate the robot control signal for controlling the robot 1 to drop the non-process performed object OBJ_ntgt from the process performed object OBJ_tgt by changing the pose of the end effector 4. In this case, compared to a case where the pose of the end effector 4 does not change, it is more likely that a contact surface CTP at which the non-process performed object OBJ_ntgt contacts the process performed object OBJ_tgt is inclined with respect to a horizontal plane. Especially, compared to a case where the pose of the end effector 4 does not change, it is more likely that an angle at which the horizontal plane intersects the contact surface CTP at which the non-process performed object OBJ_ntgt contacts the process performed object OBJ_tgt (namely, an inclination angle) is larger. In this case, compared to a case where the pose of the end effector 4 does not change, it is more likely that the friction force acting between the non-process performed object OBJ_ntgt and the process performed object OBJ_tgt is weaker. Alternatively, compared to a case where the pose of the end effector 4 does not change, it is likely that a force acting in a direction opposite to the frictional force between the non-process performed object OBJ_ntgt and the process performed object OBJ_tgt (specifically, a force component, which acts in the direction opposite to the frictional force between the non-process performed object OBJ_ntgt and the process performed object OBJ_tgt, of the gravity force) is larger, in addition to or instead of the friction force acting between the non-process performed object OBJ_ntgt and the process performed object OBJ_tgt being weaker. As a result, it is more likely that the non-process performed object OBJ_ntgt drops from the process performed object OBJ_tgt.

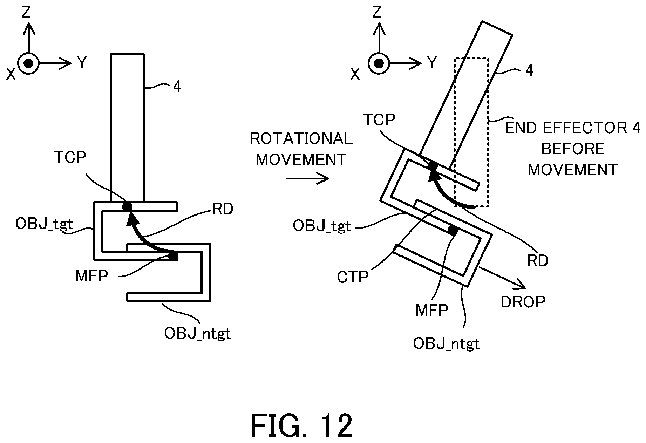

In a case where the end effector 4 is rotationally moved, the signal generation unit 312 may determine a rotational direction of the end effector 4 based on a positional relationship between an end part MFP of the process performed object OBJ_tgt held by the end effector 4 and a reference point TCP of the end effector 4 as illustrated in FIG. 12. The end part MFP of the process performed object OBJ_tgt may be an end part, which is positioned at a position that is furthest from the reference point TCP of the end effector 4, of the process performed object OBJ_tgt. The reference point TCP of the end effector 4 may be a reference point defining the position of the end effector 4. The tool center point of the end effector 4 is one example of the reference point TCP. A point set by the user on the end effector 4 is another example of the reference point TCP. Note that the tool center point of the end effector 4 may be set by the user.

Specifically, the signal generation unit 312 may determine, as the rotational direction of the reference point TCP of the end effector 4, a rotational direction RD that is directed from the end part MFP of the process performed object OBJ_tgt toward the reference point TCP of the end effector 4. Namely, the signal generation unit 312 may determine as the rotational direction of the end effector 4, the rotational direction RD that is directed from the end part MFP of the process performed object OBJ_tgt toward the reference point TCP of the end effector 4. In this case, compared to a case where a rotational direction that is different from rotational direction RD is determined as the rotational direction of the end effector 4, it is more likely that the contact surface CTP at which the non-process performed object OBJ_ntgt contacts the process performed object OBJ_tgt is inclined with respect to the horizontal plane. Especially, it is more likely that the angle at which the horizontal plane intersects the contact surface CTP at which the non-process performed object OBJ_ntgt contacts the process performed object OBJ_tgt (namely, the inclination angle) is larger. In this case, it is more likely that the friction force acting between the non-process performed object OBJ_ntgt and the process performed object OBJ_tgt is weaker. Alternatively, compared to a case where the pose of the end effector 4 does not change, it is likely that a force acting in a direction opposite to the frictional force between the non-process performed object OBJ_ntgt and the process performed object OBJ_tgt (specifically, a force component, which acts in the direction opposite to the frictional force between the non-process performed object OBJ_ntgt and the process performed object OBJ_tgt, of the gravity force) is larger, in addition to or instead of the friction force acting between the non-process performed object OBJ_ntgt and the process performed object OBJ_tgt being weaker. As a result, it is more likely that the non-process performed object OBJ_ntgt drops from the process performed object OBJ_tgt.

Note that a height of the end effector 4 changes due to the rotational movement of the end effector 4 when the end effector 4 is rotationally moved as illustrated in FIG. 12. Therefore, rotationally moving the end effector 4 may include changing the height of the end effector 4 due to the rotational movement of the end effector 4.

In a case where the end effector 4 is rotationally moved, the signal generation unit 312 may generate the robot control signal for controlling the robot 1 to drop the non-process performed object OBJ_ntgt, which has moved in a direction that is different from the rotational direction of the end effector 4 (namely, a direction in which the pose of the end effector 4 is changed), from the process performed object OBJ_tgt, as illustrated in FIG. 12. Note that the rotational direction of the end effector 4 is the rotational direction RD that is directed from the end part MFP of the process performed object OBJ_tgt toward the reference point TCP of the end effector 4 in the example illustrated in FIG. 12. However, even in a case where the rotational direction of the end effector 4 is a rotational direction that is different from the rotational direction RD directed from the end part MFP of the process performed object OBJ_tgt toward the reference point TCP of the end effector 4, the signal generation unit 312 may generate the robot control signal for controlling the robot 1 to drop the non-process performed object OBJ_ntgt, which has moved in a direction that is different from the rotational direction of the end effector 4, from the process performed object OBJ_tgt. Namely, the signal generation unit 312 may generate the robot control signal for controlling the robot 1 to rotationally move the end effector in the rotation direction, which is different from the rotational direction RD directed from the end part MFP of the process performed object OBJ_tgt toward the reference point TCP of the end effector 4, thereby drop the non-process performed object OBJ_ntgt, which has moved in the direction that is different from the rotational direction, from the process performed object OBJ_tgt.

For example, as illustrated in FIG. 12, the signal generation unit 312 may generate the robot control signal for controlling the robot 1 to drop the non-process performed object OBJ_ntgt, which has moved in the direction that is opposite to the rotational direction of the end effector 4, from the process performed object OBJ_tgt. In the example illustrated in FIG. 12, the rotational direction of the end effector 4 is a rotational direction that is directed toward the -Y side and / or the +Z side. In this case, the signal generation unit 312 may generate the robot control signal for controlling the robot 1 to drop the non-process performed object OBJ_ntgt, which has moved toward the +Y side and / or the -Z side, from the process performed object OBJ_tgt.

However, the signal generation unit 312 may not generate the robot control signal for controlling the robot 1 to drop the non-process performed object OBJ_ntgt, which has moved in the direction that is different from the rotational direction of the end effector 4, from the process performed object OBJ_tgt. Even in this case, the non-process performed object OBJ_ntgt, which has moved in the direction that is different from the rotational direction of the end effector 4, may be dropped from the process performed object OBJ_tgt as a result of the rotational movement of the end effector 4.

In a case where the end effector 4 is rotationally moved, the signal generation unit 312 may generate the robot control signal for controlling the robot 1 to drop the non-process performed object OBJ_ntgt, which has moved in a direction that is different from a direction in which the end effector 4 is positioned, as illustrated in FIG. 12. For example, the signal generation unit 312 may generate the robot control signal for controlling the robot 1 to drop the non-process performed object OBJ_ntgt, which has moved in the direction that is opposite to the direction in which the end effector 4 is positioned, from the process performed object OBJ_tgt, as illustrated in FIG. 12. In the example illustrated in FIG. 12, the end effector 4 is positioned toward the -Y side and / or the +Z side from the non-process performed object OBJ_ntgt. In this case, the signal generation unit 312 may generate the robot control signal for controlling the robot 1 to drop the non-process performed object OBJ_ntgt, which has moved toward the +Y side and / or the -Z side, from the process performed object OBJ_tgt.

However, the signal generation unit 312 may not generate the robot control signal for controlling the robot 1 to drop the non-process performed object OBJ_ntgt, which has moved in the direction that is different from the direction in which the end effector 4 is positioned, from the process performed object OBJ_tgt. Even in this case, the non-process performed object OBJ_ntgt, which has moved in the direction that is different from the rotational direction of the end effector 4, may be dropped from the process performed object OBJ_tgt as a result of the rotational movement of the end effector 4.

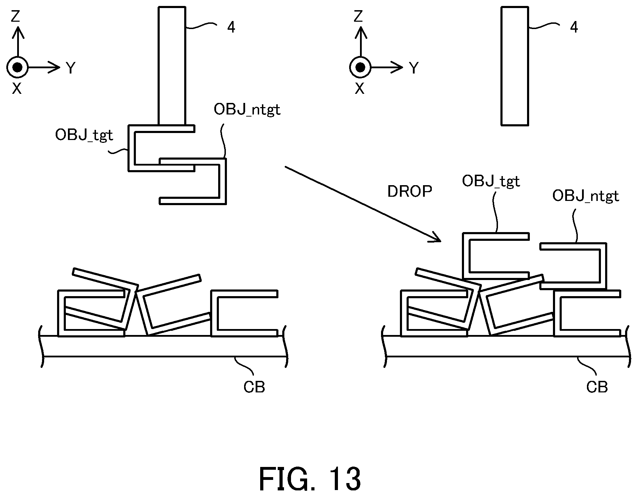

However, in a case where the end effector 4 is indirectly holding the non-process performed object OBJ_ntgt, the signal generation unit 312 may generate the robot control signal for controlling at least one of the robot 1 and the end effector 4 to drop both the non-process performed object OBJ_ntgt indirectly held by the end effector 4 and the process performed object OBJ_tgt directly held by the end effector 4 into the container CB as illustrated in FIG. 13. Namely, in a case where the end effector 4 is indirectly holding the non-process performed object OBJ_ntgt, the signal generation unit 312 may generate the robot control signal for controlling at least one of the robot 1 and the end effector 4 to drop the held target object group OBG_h held by the end effector 4 into the container CB as illustrated in FIG. 13.

The signal generation unit 312 may generate the robot control signal for controlling the end effector 4 so that the end effector 4 releases the process performed object OBJ_tgt by decreasing the holding force of the end effector 4 for holding the process performed object OBJ_tgt. As a result, the process performed object OBJ_tgt drops from the end effector 4, and the non-process performed object OBJ_ntgt held by the process performed object OBJ_tgt also drops. Note that a detailed description of decreasing the holding force of the end effector 4 is omitted, because it has already been described.

The signal generation unit 312 may generate the robot control signal for controlling the robot 1 to drop the process performed object OBJ_tgt from the end effector 4 by moving (for example, translationally moving and / or rotationally moving as described above) the end effector 4. As a result, the non-process performed object OBJ_ntgt held by the process performed object OBJ_tgt drops due to the drop of the process performed object OBJ_tgt from the end effector 4. As a first example, the signal generation unit 312 may generate the robot control signal for controlling the robot 1 to drop the process performed object OBJ_tgt (as a result, the non-process performed object OBJ_ntgt also drops) from the end effector 4 by vibrating the end effector 4. As a second example, the signal generation unit 312 may generate the robot control signal for controlling the robot 1 to drop the process performed object OBJ_tgt (as a result, the non-process performed object OBJ_ntgt also drops) from the end effector 4 by swinging the end effector 4. As a third example, the signal generation unit 312 may generate the robot control signal for controlling the robot 1 to drop the process performed object OBJ_tgt (as a result, the non-process performed object OBJ_ntgt also drops) from the end effector 4 due to the frictional force between the process performed object OBJ_tgt and other object by moving the end effector 4 so that the process performed object OBJ_tgt contacts other object (for example, the container CB and the target object OBJ contained in the container CB).

Note that the signal generation unit 312 may generate the robot control signal for controlling the robot 1 to drop the process performed object OBJ_tgt drops from the end effector 4 by decreasing the holding force of the end effector 4 for holding the process performed object OBJ_tgt and moving (for example, translationally moving and / or rotationally moving as described above) the end effector 4. Alternatively, the signal generation unit 312 may generate the robot control signal for controlling the robot 1 to drop the process performed object OBJ_tgt from the end effector 4 by moving the end effector 4 without decreasing the holding force of the end effector 4 for holding the process performed object OBJ_tgt. For example, the signal generation unit 312 may generate the robot control signal for controlling the robot 1 to drop the process performed object OBJ_tgt from the end effector 4 by moving the end effector 4 by moving the end effector 4 while maintaining the holding force of the end effector 4 for holding the process performed object OBJ_tgt.

The signal generation unit 312 may generate the robot control signal for controlling the robot 1 so that the non-process performed object OBJ_ntgt drops from the end effector 4 and then the process performed object OBJ_tgt drops from the end effector 4 by moving (for example, translationally moving and / or rotationally moving as described above) the end effector 4. As a first example, the signal generation unit 312 may generate the robot control signal for controlling the robot 1 to drop the non-process performed object OBJ_ntgt and the process performed object OBJ_tgt from the end effector 4 in this order by vibrating the end effector 4. As a second example, the signal generation unit 312 may generate the robot control signal for controlling the robot 1 to drop the non-process performed object OBJ_ntgt and the process performed object OBJ_tgt from the end effector 4 in this order by swinging the end effector 4. As a third example, the signal generation unit 312 may generate the robot control signal for controlling the robot 1 to drop the non-process performed object OBJ_ntgt from the end effector 4 due to the frictional force between the non-process performed object OBJ_ntgt and other object by moving the end effector 4 so that the non-process performed object OBJ_ntgt contacts other object (for example, the container CB and the target object OBJ contained in the container CB) and then to drop the process performed object OBJ_tgt from the end effector 4 due to the frictional force between the process performed object OBJ_tgt and other object by moving the end effector 4 so that the process performed object OBJ_tgt contacts other object (for example, the container CB and the target object OBJ contained in the container CB).

Note that the signal generation unit 312 may generate the robot control signal for controlling the robot 1 to drop the non-process performed object OBJ_ntgt from the end effector 4 and then the process performed object OBJ_tgt drops from the end effector 4 by decreasing the holding force of the end effector 4 for holding the non-process performed object OBJ_ntgt and moving (for example, translationally moving and / or rotationally moving as described above) the end effector 4. For example, in a case where the end effector 4 is the magnetic gripper, there is a possibility that the holding force (for example, the magnetic force) acting on the non-process performed object OBJ_ntgt for holding the non-process performed object OBJ_ntgt, which should not be held by the end effector 4, is weaker than the holding force (for example, the magnetic force) acting on the process performed object OBJ_tgt for holing the process performed object OBJ_tgt, which should be held by the end effector 4. This is because there is a possibility that at least one of the relative positional relationship and postural relationship between the end effector 4 and the non-process performed object OBJ_ntgt, which should not be held by the end effector 4, is significantly different from at least one of the ideal positional relationship and postural relationship for the end effector 4 to properly hold the target object OBJ but at least one of the relative positional relationship and postural relationship between the end effector 4 and the process performed object OBJ_tgt, which should be held by the end effector 4, is the same as at least one of the ideal positional relationship and postural relationship for the end effector 4 to properly hold the target object OBJ. Therefore, it is likely that the non-process performed object OBJ_ntgt held by the end effector 4 drops into the container CB while the end effector 4 holds the process performed object OBJ_tgt by decreasing the holding force of the end effector 4. As a result, it is likely that the non-process performed object OBJ_ntgt first drops from the end effector 4, and then, the process performed object OBJ_tgt drops from the end effector 4.

Alternatively, the signal generation unit 312 may generate the robot control signal for controlling the robot 1 to drop the non-process performed object OBJ_ntgt from the end effector 4 and then the process performed object OBJ_tgt drops from the end effector 4 by moving the end effector 4 without decreasing the holding force of the end effector 4 for holding the non-process performed object OBJ_ntgt. For example, the signal generation unit 312 may generate the robot control signal for controlling the robot 1 to drop the non-process performed object OBJ_ntgt from the end effector 4 and then the process performed object OBJ_tgt drops from the end effector 4 by moving the end effector 4 while maintaining the holding force of the end effector 4 for holding the non-process performed object OBJ_ntgt.

Note that FIG. 10 to FIG. 12 illustrate an example in which the end effector 4 indirectly holds a single non-process performed object OBJ_ntgt. However, as described above, there is a possibility that the end effector 4 indirectly holds the plurality of non-process performed objects OBJ_ntgt. In this case, the signal generation unit 312 may generate the robot control signal for controlling at least one of the robot 1 and the end effector 4 to drop all of the plurality of non-process performed objects OBJ_ntgt into the container CB. Alternatively, the signal generation unit 312 may generate the robot control signal for controlling at least one of the robot 1 and the end effector 4 to drop a part of the plurality of non-process performed objects OBJ_ntgt into the container CB. Namely, the signal generation unit 312 may generate the robot control signal for controlling at least one of the robot 1 and the end effector 4 to drop other part of the plurality of non-process performed objects OBJ_ntgt held by the end effector 4 into the container CB while the end effector 4 holds a part of the plurality of non-process performed objects OBJ_ntgt.

In a case where the plurality of non-process performed objects OBJ_ntgt are dropped into the container CB, the signal generation unit 312 may generate the robot control signal for controlling at least one of the robot 1 and the end effector 4 to drop the plurality of non-process performed objects OBJ_ntgt together into the container CB. Specifically, the signal generation unit 312 may generate the robot control signal for controlling at least one of the robot 1 and the end effector 4 to drop the plurality of non-process performed objects OBJ_ntgt together into the container CB by using a method that is the same as the above-described method for generating the robot control signal for controlling at least one of the robot 1 and the end effector 4 to drop the single non-process performed object OBJ_ntgt into the container CB.

Alternatively, the signal generation unit 312 may generate the robot control signal for controlling at least one of the robot 1 and the end effector 4 to drop the plurality of non-process performed objects OBJ_ntgt into the container CB one by one in order. Specifically, the signal generation unit 312 may generate the robot control signal for controlling at least one of the robot 1 and the end effector 4 to individually drop one non-process performed object OBJ_ntgt of the plurality of non-process performed objects OBJ_ntgt together into the container CB by using a method that is the same as the above-described method for generating the robot control signal for controlling at least one of the robot 1 and the end effector 4 to drop the single non-process performed object OBJ_ntgt into the container CB. Furthermore, the signal generation unit 312 may generate the robot control signal for controlling at least one of the robot 1 and the end effector 4 to individually drop another non-process performed object OBJ_ntgt, which is different from the one non-process performed object OBJ_ntgt, of the plurality of non-process performed objects OBJ_ntgt together into the container CB by using a method that is the same as the above-described method for generating the robot control signal for controlling at least one of the robot 1 and the end effector 4 to drop the single non-process performed object OBJ_ntgt into the container CB. As one example, in a case where the end effector 4 is directly holding the process performed object OBJ_tgt, the non-process performed object OBJ_ntgt#1 is held by the process performed object OBJ_tgt, and the non-process performed object OBJ_ntgt#2 is held by the non-process performed object OBJ_ntgt#2 as illustrated in the above-described FIG. 6(d), the signal generation unit 312 may generate the robot control signal for controlling at least one of the robot 1 and the end effector 4 so that the non-process performed object OBJ_ntgt#2 drops from the non-process performed object OBJ_ntgt#1 and then the non-process performed object OBJ_ntgt#1 drops from the process performed object OBJ_tgt. For example, the signal generation unit 312 may generate a first robot control signal for controlling at least one of the robot 1 and the end effector 4 to drop the non-process performed object OBJ_ntgt#2 from the non-process performed object OBJ_ntgt#1 and a second robot control signal for controlling at least one of the robot 1 and the end effector 4 to drop the non-process performed object OBJ_ntgt#1 from the process performed object OBJ_tgt. Specifically, the signal generation unit 312 may generate the first robot control signal for controlling at least one of the robot 1 and the end effector 4 to individually to drop the non-process performed object OBJ_ntgt#2 from the non-process performed object OBJ_ntgt#1 into the container CB by using a method that is the same as the above-described method for generating the robot control signal for controlling at least one of the robot 1 and the end effector 4 to drop the single non-process performed object OBJ_ntgt into the container CB. Furthermore, the signal generation unit 312 may generate the second robot control signal for controlling at least one of the robot 1 and the end effector 4 to individually to drop the non-process performed object OBJ_ntgt#1 from the process performed object OBJ_tgt into the container CB by using a method that is the same as the above-described method for generating the robot control signal for controlling at least one of the robot 1 and the end effector 4 to drop the single non-process performed object OBJ_ntgt into the container CB, separately from the first robot control signal.

Moreover, FIG. 10 to FIG. 12 illustrate an example in which the end effector 4 indirectly holds a single process performed object OBJ_tgt. However, as described above, there is a possibility that the end effector 4 directly holds the plurality of process performed objects OBJ_tgt. In this case, the signal generation unit 312 may generate the robot control signal for controlling at least one of the robot 1 and the end effector 4 to drop the non-process performed object OBJ_ntgt into the container CB while holding all of the plurality of process performed objects OBJ_tgt. Alternatively, the signal generation unit 312 may generate the robot control signal for controlling at least one of the robot 1 and the end effector 4 to drop a part of the plurality of process performed objects OBJ_tgt held by the end effector 4 into the container CB while the end effector 4 holds other part of the plurality of process performed objects OBJ_tgt. Alternatively, the signal generation unit 312 may generate the robot control signal for controlling at least one of the robot 1 and the end effector 4 to drop all of the plurality of process performed objects OBJ_tgt held by the end effector 4 into the container CB.

### (2-2-3) Control Based On Robot Control Signal For Dropping Non-Process Performed Object into Container

Again in FIG. 5, then, the signal generation unit 312 outputs the robot control signal, which is generated at the step S24, to the robot 1 (especially, the robot control apparatus 13) by using the communication apparatus 33. As a result, the robot control apparatus 13 controls at least one of the operation of the robot 1 (for example, the operation of the robot arm 12) and the operation of the end effector 4 based on the robot control signal. Namely, the robot control apparatus 13 controls at least one of the operation of the robot 1 (for example, the operation of the robot arm 12) and the operation of the end effector 4 based on the robot control signal so that at least the non-process performed object OBJ_ntgt drops into the container CB.

Here, as described above with reference to FIG. (a) to FIG. 7(b), the imaging apparatus 21 positioned at the first camera position may move to the second camera position that is higher than the first camera position after the end effector 4 holds the held target object group OBG_h at the step S13 and after the imaging apparatus 21 images the held target object group OBG_h at the step S21. As a result, the end effector 4 positioned at the first tool position may move to the second tool position that is higher than the first tool position, as described with reference to FIG. 7(a) to FIG. 7(b). In this case, before starting the control of the operation of the robot 1 based on the robot control signal generated at the step S24 so that at least the non-process performed object OBJ_ntgt drops into the container CB, the signal generation unit 312 may generate the robot control signal for controlling the robot 1 so that the end effector 4 approaches the container CB (specifically, approaches at least one target object OBJ contained in the container CB) from the second tool position. Namely, before starting the control of the operation of the robot 1 based on the robot control signal generated at the step S24 so that at least the non-process performed object OBJ_ntgt drops into the container CB, the signal generation unit 312 may generate the robot control signal for controlling the robot 1 so that the end effector 4 positioned at the second tool approaches the container CB (specifically, approaches at least one target object OBJ contained in the container CB) from the second tool position. As one example, as illustrated in FIG. 7(c), the signal generation unit 312 may generate the robot control signal for controlling the robot 1 so that the end effector 4 moves to a third tool position that is lower than the second tool position. Namely, the signal generation unit 312 may generate the robot control signal for controlling the robot 1 so that the end effector 4 moves to the third tool position that is closer to the container CB (specifically, closer to at least one target object OBJ contained in the container CB) than the second tool position is. Then, the control of the operation of the robot 1 may be started based on the robot control signal generated at the step S24 so that at least the non-process performed object OBJ_ntgt drops into the container CB. In this case, a drop position from which at least the non-process performed object OBJ_ntgt drops into the container CB is lower. For example, the non-process performed object OBJ_ntgt drops into the container CB from a drop position that is lower than a drop position (not illustrated) corresponding to the second tool position (namely, a drop position corresponding to the third tool position that is lower than the second tool position). As a result, the impact caused by the drop of the non-process performed object OBJ_ntgt into the container CB is reduced. Therefore, it is less likely that other target object OBJ, onto which the non-process performed object OBJ_ntgt drops, is damaged.

Note that, target object group OBG_h held by the end effector 4 moves from the second object position corresponding to the second tool position to a third object position corresponding to the third tool position (namely, the third object position that is lower than the second object position and thereby is closer to the container CB than the second object position is) when the end effector 4 moves from the second tool position to the third tool position as illustrated in FIG. 7(c). In this case, at least the non-process performed object OBJ_ntgt may be considered to drop into the container CB from the third object position that is lower than the second object position. Similarly, the imaging system 2, which moves together with the end effector 4, moves from the second camera position corresponding to the second tool position to a third camera position corresponding to the third tool position (namely, the third camera position that is lower than the second camera position and thereby is closer to the container CB than the second camera position is) when the end effector 4 moves from the second tool position to the third tool position. In this case, at least the non-process performed object OBJ_ntgt may be considered to drop into the container CB from the third camera position that is lower than the second camera position.

Again in FIG. 5, after starting the control of the operation of the robot 1 based on the robot control signal generated at the step S24, the false hold detection unit 313 determines whether or not at least the non-process performed object OBJ_ntgt has dropped into the container CB (a step S31). For example, the false hold detection unit 313 determines whether or not at least the non-process performed object OBJ_ntgt has dropped into the container CB in a period during which the operation of the robot 1 is controlled based on the robot control signal generated at the step S24. For example, the false hold detection unit 313 determines whether or not at least the non-process performed object OBJ_ntgt has dropped into the container CB after the control of the operation of the robot 1 based on the robot control signal generated at the step S24 is completed.

In order to determine whether or not the non-process performed object OBJ_ntgt has dropped into the container CB, the imaging apparatus 21 may image an area in which the target object OBJ, which is held by the end effector 4 assuming that the end effector 4 is holding the target object OBJ, is expected to exist, after starting the control of the operation of the robot 1 based on the robot control signal generated at the step S24. For example, the imaging apparatus 21 may image the area in which the target object OBJ, which is held by the end effector 4 assuming that the end effector 4 is holding the target object OBJ, is expected to exist by imaging at least a part of the end effector 4 (especially, a part of the end effector 4 for holding the target object OBJ). In this case, in a case where the process performed object OBJ_tgt has dropped from the end effector 4, the imaging apparatus 21 may image the end effector 4 from which the process performed object OBJ_tgt has dropped. Namely, the imaging apparatus 21 may image the end effector 4 that is not holding the process performed object OBJ_tgt. On the other hand, in a case where the process performed object OBJ_tgt has not dropped from the end effector 4, the imaging apparatus 21 may image the process performed object OBJ_tgt held by the end effector 4. In a case where the non-process performed object OBJ_ntgt has dropped from the end effector 4, the imaging apparatus 21 may the end effector 4 from which the non-process performed object OBJ_ntgt has dropped. Namely, the imaging apparatus 21 may image the end effector 4 that is not holding the non-process performed object OBJ_ntgt. On the other hand, in a case where the non-process performed object OBJ_ntgt has not dropped from the end effector 4, the imaging apparatus 21 may image the non-process performed object OBJ_ntgt held by the end effector 4. Then, the false hold detection unit 313 of the control apparatus 3 may acquire the image data IMG, which is generated by the imaging apparatus 21 imaging the end effector 4, by using the communication apparatus 33.

Then, the false hold detection unit 313 determines based on the image data IMG whether or not at least the non-process performed object OBJ_ntgt has dropped into the container CB.

As a first example of the operation for determining based on the image data IMG whether or not at least the non-process performed object OBJ_ntgt has dropped into the container CB, the false hold detection unit 313 may calculate the number of target objects OBJ actually held by the end effector 4 by controlling the position pose calculation unit 311 to perform the matching processing (for example, the object detection processing) based on the image data IMG, thereby. Alternatively, the false hold detection unit 313 may calculate at least one of the position and the pose of the target object OBJ actually held by the end effector 4 by controlling the position pose calculation unit 311 to perform the matching processing based on the image data IMG. In this case, as described above, once at least one of the position and the pose of the target object OBJ actually held by the end effector 4 is determined, the number of target objects OBJ actually held by the end effector 4 is also determined. Therefore, the false hold detection unit 313 may calculate the number of target objects OBJ actually held by the end effector 4 based on the calculated result of at least one of the position and the pose of the target object OBJ actually held by the end effector 4. Note that the matching processing itself performed at the step S31 may be the same as the matching processing performed at the step S12 and the step S22. Then, the false hold detection unit 313 may determine based on the number of target objects OBJ actually held by the end effector 4 whether or not at least the non-process performed object OBJ_ntgt has dropped into the container CB.

For example, in a case where at least one of the robot 1 and the end effector 4 is controlled to drop the non-process performed object OBJ_ntgt into the container CB while the end effector 4 holds the process performed object OBJ_tgt as described above, the false hold detection unit 313 may determine whether or not the number of target objects OBJ actually held by the end effector 4 is equal to the predetermined held object number, which is the number of target objects OBJ that should be held by the end effector 4 (namely, the number of process performed objects OBJ_tgt that should be held by the end effector 4). Note that the processing for determining whether or not the number of target objects OBJ actually held by the end effector 4 is equal to the predetermined hold object number at the step S31 may be the same as the processing for determining whether or not the number of target objects OBJ actually held by the end effector 4 is equal to the predetermined hold object number at the step S22. In this case, in a case where the number of target objects OBJ actually held by the end effector 4 is equal to the predetermined hold object number, it is likely that the non-process performed object OBJ_ntgt held by the end effector 4 drops and the end effector 4 is holding the process performed object OBJ_tgt. On the other hand, in a case where the number of target objects OBJ actually held by the end effector 4 is larger than the predetermined hold object number, it is likely that the end effector 4 is still holding at least one non-process performed object OBJ_ntgt. Therefore, in a case where the number of target objects OBJ actually held by the end effector 4 is equal to the predetermined hold object number, the false hold detection unit 313 may determine that the non-process performed object OBJ_ntgt has dropped into the container CB. On the other hand, in a case where the number of target objects OBJ actually held by the end effector 4 is larger than the predetermined hold object number, the false hold detection unit 313 may determine that at least one non-process performed object OBJ_ntgt has not dropped into the container CB (specifically, there is a non-process performed object OBJ_ntgt that has not dropped into the container CB).

For example, in a case where at least one of the robot 1 and the end effector 4 is controlled to drop both the process performed object OBJ_tgt and the non-process performed object OBJ_ntgt into the container CB, the false hold detection unit 313 may determine whether or not the number of target objects OBJ actually held by the end effector 4 is zero. In this case, in a case where the number of target objects OBJ actually held by the end effector 4 is zero, it is likely that both the process performed object OBJ_tgt and the non-process performed object OBJ_ntgt held by the end effector 4 have dropped. On the other hand, in a case where the number of target objects OBJ actually held by the end effector 4 is larger than zero, it is likely that the end effector 4 is still holding at least one of the process performed object OBJ_tgt and the non-process performed object OBJ_ntgt. Therefore, in a case where the number of target objects OBJ actually held by the end effector 4 is zero, the false hold detection unit 313 may determine that the process performed object OBJ_tgt and the non-process performed object OBJ_ntgt have dropped into the container CB. On the other hand, in a case where the number of target objects OBJ actually held by the end effector 4 is larger than zero, the false hold detection unit 313 may determine that at least one of the process performed object OBJ_tgt and the non-process performed object OBJ_ntgt has not dropped into the container CB (specifically, there is at least one of the process performed object OBJ_tgt and the non-process performed object OBJ_ntgt that has not dropped into the container CB).

As a second example of the operation for determining based on the image data IMG whether or not at least the non-process performed object OBJ_ntgt has dropped into the container CB, the false hold detection unit 313 may calculate at least one of the position and the pose of the target object OBJ actually held by the end effector 4 by controlling the position pose calculation unit 311 to perform the matching processing based on the image data IMG. Furthermore, the false hold detection unit 313 may calculate at least one of the position and the pose of the end effector 4 by controlling the position pose calculation unit 311 to perform the matching processing based on the image data IMG. Note that the matching processing itself for calculating at least one of the position and the pose of the end effector 4 at the step S31 may be the same as the matching processing for determining the held aspect of the non-process performed object OBJ_ntgt by the end effector 4 at the step S23 described above. Then, the false hold detection unit 313 may determine based on the calculated result of at least one of the position and the pose of the target object OBJ actually held by the end effector 4 and the calculated result of at least one of the position and the pose of the end effector 4 whether or not at least the non-process performed object OBJ_ntgt has dropped into the container CB. For example, in a case where the result of the matching processing at the step S31 indicates that there is no target object OBJ positioned at a position that is away from the end effector 4 in a situation where it is determined that the end effector 4 is indirectly holding the non-process performed object OBJ_ntgt at the step S23 (see FIG. 6(a)), it is unlikely that there is the non-process performed object OBJ_ntgt indirectly held by the end effector 4. Therefore, in this case, the false hold detection unit 313 may determine that at least the non-processed target object OBJ_ntgt has dropped into the container CB. For example, in a case where the result of the matching processing at the step S31 indicates that there is the target object OBJ positioned at a position that is away from the end effector 4 in a situation where it is determined that the end effector 4 is indirectly holding the non-process performed object OBJ_ntgt at the step S23 (see FIG. 6(b) to FIG. 6(d)), it is likely that there is the non-process performed object OBJ_ntgt indirectly held by the end effector 4. Therefore, in this case, the false hold detection unit 313 may determine that at least the non-processed target object OBJ_ntgt has not dropped into the container CB.

In a case where it is determined as a result of the determination at the step S31 that at least the non-process performed object OBJ_ntgt has not dropped into the container CB (the step S31: No), the false hold detection unit 313 may control the output apparatus 35 to output an alert for notifying the user (the operator) of the robot system SYS that it is unable to drop at least the non-process performed object OBJ_ntgt into the container CB (a step S32).

After the alert is output, the control apparatus 3 may temporarily terminate the robot control processing illustrated in FIG. 5. In this case, the user may manually return the non-process performed object OBJ_ntgt, which has not dropped from the end effector 4, to the container CB. Then, the temporarily terminated robot control processing may be resumed. For example, the end effector 4 may perform the releasing process for releasing the process performed object OBJ_tgt held by the end effector 4 (a step S33).

However, even in a case where it is determined that at least the non-process performed object OBJ_ntgt has not dropped into the container CB, the false hold detection unit 313 may not output the alert for notifying the user (the operator) of the robot system SYS that it is unable to drop at least the non-process execution object OBJ_ntgt into the container CB.

On the other hand, in a case where it is determined as a result of the determination at the step S31 that at least the non-process performed object OBJ_ntgt has dropped into the container CB (the step S31: Yes), the false hold detection unit 313 may not control the output apparatus 35 to output the alert. In this case, the end effector 4 may perform the releasing process for releasing the process performed object OBJ_tgt held by the end effector 4 (the step S33) . For example, as described above, the process performed object OBJ_tgt held by the end effector 4 may be transported from the container CB, and the process performed object OBJ_tgt held by the end effector 4 may be released outside the container CB.

However, in a case where at least one of the robot 1 and the end effector 4 is controlled to drop both the process performed object OBJ_tgt and the non-process performed object OBJ_ntgt into the container CB as described above, the end effector 4 holds no target object OBJ. In this case, the end effector 4 may not perform the releasing process and the control apparatus 3 may perform a series of processing from the step S11 to the step S33 again (however, the processing at the step S32 and the processing at the step S33 are performed exclusively). Namely, the imaging apparatus 21 may newly image a part of the plurality of target objects OBJ contained in the container CB, and the control apparatus 3 may newly acquire the image data IMG from the imaging apparatus 21. In this case, the signal generation unit 311 may newly generate the robot control signal for controlling the robot 1 so that the imaging apparatus 21 newly images a part of the plurality of target objects OBJ contained in the container CB. The robot 1 may move the robot arm 12 based on the robot control signal generated by the signal generation unit 312 so that the imaging apparatus 21 images a part of the plurality of target objects OBJ contained in the container CB. Alternatively, the robot 1 may move the robot arm 12 based on other robot control method such as the teaching so that imaging apparatus 21 images a part of the plurality of target objects OBJ contained in the container CB. Then, the control apparatus 3 may perform a series of processing from the step S11 to the step S33 again (however, the processing at the step S32 and the processing at the step S33 are performed exclusively) by using the image data IMG newly acquired at the step S11.

However, in a case where at least one of the robot 1 and the end effector 4 is controlled to drop both the process performed object OBJ_tgt and the non-process performed object OBJ_ntgt into the container CB, the imaging apparatus 21 may not image a part of the plurality of target objects OBJ contained in the container CB again. For example, in a case where the plurality of target objects OBJ, whose matching similarities are higher than the matching determination threshold value, have already been detected at the step S12 described above based on the image data IMG that has been already acquired, the position pose calculation unit 311 may select one target object OBJ, which has not been selected as the process performed object OBJ_tgt, of the plurality of target objects OBJ whose matching similarities are higher than the matching determination threshold, as the new process performed object OBJ_tgt. Then, the signal generation unit 312 may generate the robot control signal to perform the predetermined process on the newly selected the process performed object OBJ_tgt (the step S13). Then, the control apparatus 3 may perform a series of processing from the step S11 to the step S33 again (however, the processing at the step S32 and the processing at the step S33 are performed exclusively).

Then, after the alert is output (the step S32) or after the process performed object OBJ_tgt is released (the step S33), the control apparatus 3 repeats a series of processing from the step S11 to the step S33 (however, the processing at the step S32 and the processing at the step S33 are performed exclusively) until there is no target object OBJ, on which the end effector 4 should perform the predetermined process, in the container CB (a step S41). However, in a case where the plurality of target objects OBJ, whose matching similarities are higher than the matching determination threshold value, have already been detected at the step S12 described above based on the image data IMG that has been already acquired, the control apparatus 3 may not acquire the image data IMG again at the step S11. The imaging apparatus 21 may not image a part of the plurality of target objects OBJ contained in the container CB again at the step S11. In this case, the position pose calculation unit 311 may select one target object OBJ, which has not been selected as the process performed object OBJ_tgt, of the plurality of target objects OBJ whose matching similarities are higher than the matching determination threshold, as the new the process performed object OBJ_tgt. Then, the signal generation unit 312 may generate the robot control signal to perform the predetermined process on the newly selected the process performed object OBJ_tgt (the step S13). Then, the control apparatus 3 may perform a series of processing from the step S11 to the step S33 again (however, the processing at the step S32 and the processing at the step S33 are performed exclusively).

### (3) Technical Effect

As described above, according to the present example embodiment, in a case where the end effector 4 is holding both the process performed object OBJ_tgt and the non-process performed object OBJ_ntgt, the control apparatus 3 may control at least one of the robot 1 and the end effector 4 to drop (namely, return) at least the non-process performed object OBJ_ntgt into the container CB. Therefore, the control apparatus 3 can switch a state of the end effector 4 from an abnormal state in which the end effector 4 is holding both the process performed object OBJ_tgt and the non-process performed object OBJ_ntgt to a normal state in which the end effector 4 is holding only the process performed object OBJ_tgt without holding the non-process performed object OBJ_ntgt. Therefore, the control apparatus 3 can control the robot 1 so that the end effector 4 properly holds the process performed object OBJ_tgt.

Additionally, in a case where the end effector 4 is holding the non-process performed object OBJ_ntgt, there is a possibility that the non-process performed object OBJ_ntgt, which is being held by the end effector 4 together with the process performed object OBJ_tgt, prevents the releasing process in performing the releasing process for releasing the process performed object OBJ_tgt held by the end effector 4 at the desired position outside the container CB. For example, there is a possibility that the non-process performed object OBJ_ntgt interferes with the process performed object OBJ_tgt in releasing the process performed object OBJ_tgt at the desired position outside the container CB, and thereby the process performed object OBJ_tgt is released at a position that different from the desired position In another example, there is a possibility that the non-process performed object OBJ_ntgt collides with an object (for example, the placing apparatus T) on which the process performed object OBJ_tgt should be released, and thereby object (for example, the placing apparatus T) on which the process performed object OBJ_tgt should be released is damaged. However, in the present example embodiment, since the non-process performed object OBJ_ntgt drops (namely, returns) into the container CB, such a technical problem does not arise. Therefore, the end effector 4 can properly place the held the process performed object OBJ_tgt at the desired position outside the container CB.

Additionally, if the operation for dropping the non-process performed object OBJ_ntgt held by the end effector 4 is not performed, the robot control processing illustrated in FIG. 5 should be temporarily terminated, then, the user should manually return the non-process performed object OBJ_ntgt, which has not dropped from the end effector 4, to the container CB, and then, the temporarily terminated robot control processing should be resumed. Therefore, there is a possibility that a throughput of the robot control processing deteriorates. In other words, a tact time of the robot control processing increases. However, in the present example embodiment, since the operation for dropping the non-process performed object OBJ_ntgt held by the end effector 4 is performed, the deterioration of the throughput (namely, the increase of the tact time) is minimally suppressed.

Additionally, the control apparatus 3 may control at least one of the robot 1 and the end effector 4 to drop (namely, return) at least the non-process performed object OBJ_ntgt into the container CB based on the calculated result of at least one of the position and the pose of the target object OBJ (for example, the held target object group OBG_h, the non-process performed object OBJ_ntgt, or the process performed object OBJ_tgt) held by the end effector 4, which is one example of the held state. For example, the control apparatus 3 may generate the robot control signal for controlling at least one of the robot 1 and the end effector 4 in a control aspect to which the calculated result of at least one of the position and the pose of the non-process performed object OBJ_ntgt to drop the non-process performed object OBJ_ntgt whose position is known and / or whose pose is known into the container CB. The control apparatus 3 may generate the robot control signal for controlling at least one of the robot 1 and the end effector 4 in a control aspect to which the calculated result of at least one of the position and the pose of the process performed object OBJ_tgt to properly (for example, surely) drop the non-process performed object OBJ_ntgt from the process performed object OBJ_tgt whose position is known and / or whose pose is known into the container CB. If the position and the pose of the target object OBJ (for example, the held target object group OBG_h, the non-process performed object OBJ_ntgt, or the process performed object OBJ_tgt) held by the end effector 4 is not known, it is difficult to control at least one of the robot 1 and the end effector 4 in a control aspect to which the calculated result of at least one of the position and the pose of the target object OBJ held by the end effector 4, and thereby, there is a possibility that the control aspect for dropping the non-process performed object OBJ_ntgt becomes a control aspect that depends on luck. However, in the present example embodiment, the control apparatus 3 may use, as the control aspect of at least one of the robot 1 and the end effector 4, the control aspect that can increases the possibility of properly (for example, surely) drop at least the non-process performed object OBJ_ntgt into the container CB based on the calculated result of at least one of the position and the pose of the target object OBJ (for example, the held target object group OBG_h, the non-process performed object OBJ_ntgt, or the process performed object OBJ_tgt) held by the end effector 4. Therefore, the control apparatus 3 can properly drop at least the non-process performed object OBJ_ntgt into the container CB.

### (4) Modified Example

Next, a modified example of the robot system SYS will be described. Note that each modified example described below may be combined with other modified example. Moreover, in the below-described description, a detailed description of a component, which has been already described, is omitted. Moreover, in the below-described description, a detailed description of a processing, which has been already described, is omitted. Namely, in the below-described description, a component that is different from the component already described and a processing that is different from the processing already described will be mainly described. Therefore, unless there is no specific notation, the robot system SYS may include the component that has been already described and the robot system SYS may perform the processing that has been already described even in the modified example described below.

### (4-1) First Modified Example

### (4-1-1) Control of Drop Height Hd

In a first modified example, the false hold detection unit 313 may control a drop height Hd, which indicates a height (namely, a position in the Z-axis direction) from which at least the non-process performed object OBJ_ntgt starts to drop into the container CB, in generating the robot control signal to drop at least the non-process performed object OBJ_ntgt.

### (4-1-1-1) Definition of Drop Height Hd

The drop height Hd may mean a height (namely, a distance in the Z-axis direction) from a predetermined height reference plane. In the first modified example, an example in which a bottom surface (an upper surface) of the bottom wall BS of the container CB is used as the height reference plane will be described.

However, a reference plane that is different from the bottom surface of the bottom wall BS of the container CB may be used as the height reference plane. For example, a placement surface of the placing apparatus T on which the target object OBJ is placed may be used as the height reference plane. Alternatively, the drop height Hd may mean a coordinate value along the Z-axis in a global coordinate system. Namely, the drop height Hd may mean a height from an origin point of the global coordinate system. Note that the drop height Hd may mean a coordinate value along the Z-axis in a coordinate system (for example, the robot coordinate system) that is different from the global coordinate system. Namely, the drop height Hd may mean a height from an origin point of the coordinate system (for example, the robot coordinate system) that is different from the global coordinate system.

As a first example, the drop height Hd may mean the height of at least one of the non-process performed object OBJ_ntgt and the process performed object OBJ_tgt at a timing at which at least the non-process performed object OBJ_ntgt starts to drop into the container CB (in other words, at a timing at which the non-process performed object OBJ_ntgt drops into the container CB, the same applies in the below-described description). Incidentally, in a case where the non-process performed object OBJ_ntgt drops into the container CB and the process performed object OBJ_tgt does not drop into the container CB (namely, the process performed object OBJ_tgt remains held by the end effector 4) as described above, "the timing at which at least the non-process performed object OBJ_ntgt starts to drop into the container CB" may mean "a timing at which the non-process performed object OBJ_ntgt starts to drop into the container CB". In a case where not only the non-process performed object OBJ_ntgt but also the process performed object OBJ_tgt drop into the container CB, "the timing at which at least the non-process performed object OBJ_ntgt starts to drop into the container CB" may mean "a timing at which only the non-process performed object OBJ_ntgt starts to drop into the container CB", or may mean "a timing at which both the non-process performed object OBJ_ntgt and the process performed object OBJ_tgt start to drop into the container CB".

As a second example, the drop height Hd may be a height of the non-process performed object OBJ_ntgt and the process performed object OBJ_tgt when at least the non-process performed object OBJ_ntgt starts to drop into the container CB. More specifically, the drop height Hd may be a height that is determined based on the heights of the non-process performed object OBJ_ntgt and the process performed object OBJ_tgt when the non-process performed object OBJ_ntgt starts to drop into the container CB. For example, the drop height Hd may mean an average height (namely, an intermediate height) of the height of the non-process performed object OBJ_ntgt when at least the non-process performed object OBJ_ntgt starts to drop into the container CB and the height of the process performed object OBJ_tgt when at least the non-process performed object OBJ_ntgt starts to drop into the container CB. For example, the drop height Hd may mean a higher one of the height of the non-process performed object OBJ_ntgt when at least the non-process performed object OBJ_ntgt starts to drop into the container CB and the height of the process performed object OBJ_tgt when at least the non-process performed object OBJ_ntgt starts to drop into the container CB. For example, the drop height Hd may mean a lower one of the height of the non-process performed object OBJ_ntgt when at least the non-process performed object OBJ_ntgt starts to drop into the container CB and the height of the process performed object OBJ_tgt when at least the non-process performed object OBJ_ntgt starts to drop into the container CB. For example, the drop height Hd may mean any height between the height of the non-process performed object OBJ_ntgt when at least the non-process performed object OBJ_ntgt starts to drop into the container CB and the height of the process performed object OBJ_tgt when at least the non-process performed object OBJ_ntgt starts to drop into the container CB.

As a third example, the drop height Hd may mean a height of an object, which is different from the non-process performed object OBJ_ntgt and the process performed object OBJ_tgt, when the non-process performed object OBJ_ntgt starts to drop into the container CB. For example, the drop height Hd may mean a height of the imaging system 2 (specifically, the imaging apparatus 21) when the non-process performed object OBJ_ntgt starts to drop into the container CB. For example, the drop height Hd may mean a height of the end effector 4 when the non-process performed object OBJ_ntgt starts to drop into the container CB. The height of the end effector 4 may mean a height of the reference point TCP (for example, the tool center point described above or the point set by the user on the end effector 4) of the end effector 4, or may mean a height of any part of the end effector 4.

As a fourth example, the drop height Hd may mean a height of the robot arm 12 when the non-process performed object OBJ_ntgt starts to drop into the container CB. In this case, the height of the robot arm 12 may mean a height of a flange (a part at which the end effector 4 is attached to the robot arm 12) of the robot arm 12.

### (4-1-1-2) Control of Drop Height Hd Based On Height of Target Object Group Contained in Container CB

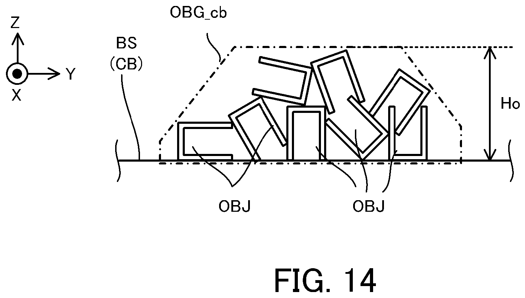

In order to control the drop height Hd, the false hold detection unit 313 may use an object height Ho, which is a height of the plurality of target objects OBJ contained in the container CB, as illustrated in FIG. 14. Namely, the false hold detection unit 313 may control the drop height Hd by setting (in other words, determining) the drop height Hd based on the object height Ho.

Note that the object height Ho may mean a height (namely, a distance in the Z-axis direction) from the predetermined height reference plane, as with the drop height Hd. Alternatively, the object height Ho may mean a coordinate value along the Z-axis in the global coordinate system. In other words, the object height Ho may mean a height from the origin point of the global coordinate system. Alternatively, the object height Ho may mean a coordinate value along the Z-axis in the coordinate system (for example, the robot coordinate system) that is different from the global coordinate system. Namely, the object height Ho may mean a height from an origin point of the coordinate system (for example, the robot coordinate system) that is different from the global coordinate system.

The object height Ho may mean a height of the target object group OBG_cb including all of the plurality of target objects OBJ contained in the container CB. Alternatively, the object height Ho may mean a height of the target object group OBG_cb including a part of the plurality of target objects OBJ contained in the container CB. Namely, the object height Ho may mean the height of the target object group OBG_cb including at least a part of the plurality of target objects OBJ contained in the container CB.

A height of the highest part of the target object group OBG_cb may be used as the object height Ho. For example, a height of one target object OBJ, which is positioned at the highest position, of the plurality of target objects OBJ included in the target object group OBG_cb may be used as the object height Ho. For example, a height of the highest part of one target object OBJ, which is positioned at the highest position, of the plurality of target objects OBJ included in the target object group OBG_cb may be used as the object height Ho. For example, a height of any part of one target object OBJ, which is positioned at the highest position, of the plurality of target objects OBJ included in the target object group OBG_cb may be used as the object height Ho.

A height of the highest part of a part of the target object group OBG_cb may be used as the object height Ho. For example, a height of at least one target object OBJ, which is selected based on a desired selection condition, of the plurality of target object OBJ included in the target object group OBG_cb may be used as the object height Ho. For example, a height of the highest part of at least one target object OBJ, which is selected based on the desired selection condition, of the plurality of target objects OBJ included in the target object group OBG_cb may be used as the object height Ho. For example, a height of any part of at least one target object OBJ, which is selected based on the desired selection condition, of the plurality of target objects OBJ included in the target object group OBG_cb may be used as the object height Ho.

An average height of the target object group OBG_cb may be used as the object height Ho. The average height of the target object group OBG_cb may mean an average value of the heights of a plurality of parts of the target object group OBG_cb. The average height of the target object group OBG_cb may mean an average value of the heights of the plurality of target object OBJ included in the target object group OBG_cb. In a case where the plurality of target objects OBJ are stacked (namely, randomly stacked), the average height of the target object group OBG_cb may mean an average height of some target object OBJ on which other target object OBJ is not stacked (namely, some target object OBJ positioned at the uppermost position) of the plurality of target objects OBJ included in the target object group OBG_cb. In a case where the plurality of target objects OBJ are stacked (namely, randomly stacked), the average height of the target object group OBG_cb may mean an average height of some target object OBJ whose upper part is exposed at least partially (namely, some target object OBJ positioned at the uppermost position) of the plurality of target objects OBJ included in the target object group OBG_cb.

An average height of a part of the target object group OBG_cb may be used as the object height Ho. The average height of a part of the target object group OBG_cb may mean an average height of at least one target object OBJ, which is selected based on a desired selection condition, of the plurality of target objects OBJ included in the target object group OBG_cb.

The false hold detection unit 313 may set the drop height Hd based on the object height Ho so that the drop height Hd that is used in a case where the object height Ho is at a first height is lower than the drop height Hd that is used in a case where the object height Ho is at a second height higher than the first height. In other words, the false hold detection unit 313 may determine the drop height Hd based on the object height Ho so that the drop height Hd that is used in a case where the object height Ho is the first height is higher than the drop height Hd that is used in a case where the object height Ho is a third height lower than the first height.

Especially, the false hold detection unit 313 may set the drop height Hd based on the object height Ho so that the drop height Hd becomes lower as the object height Ho becomes lower. In other words, the false hold detection unit 313 may set the drop height Hd based on the object height Ho so that the drop height Hd becomes higher as the object height Ho becomes higher.

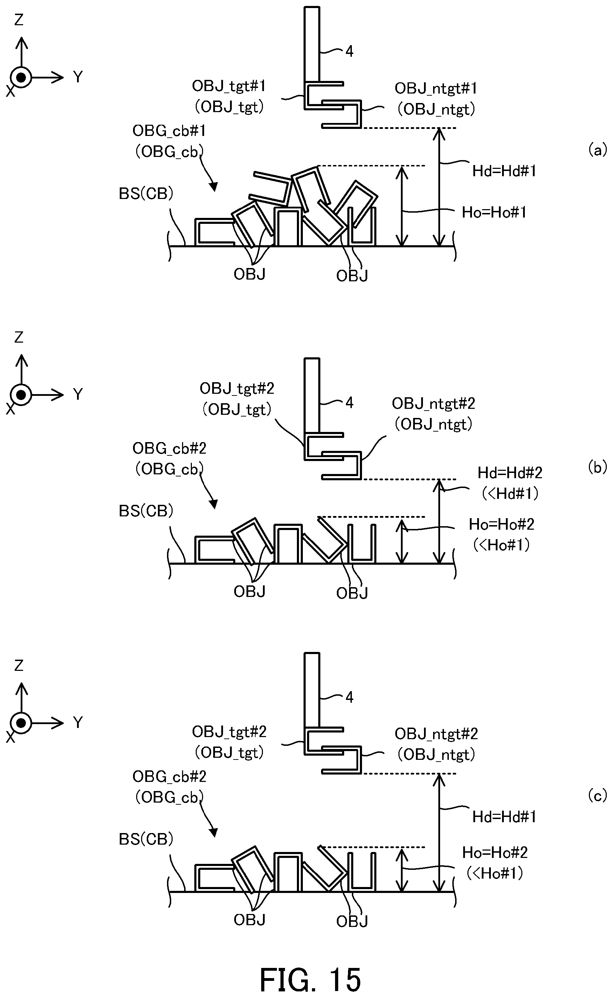

One example of the drop height Hd that is set based on the object height Ho is illustrated in FIG. 15(a) to FIG. 15(b). FIG. 15(a) illustrates an example in which the end effector 4 is holding the non-process performed object OBJ_ntgt#1 together with the process performed object OBJ_tgt#1. Furthermore, FIG. 15(a) illustrates an example in which the target object group _cb#1 is contained in the container CB and the object height Ho of the target object group OBG_cb#1 is a first object height Ho#1 at a timing at which the end effector 4 is holding the non-process performed object OBJ_ntgt#1 together with the process performed object OBJ_tgt#1. In this case, the false hold detection unit 313 may set the drop height Hd to a first drop height Hd#1 based on the first object height Ho#1 that is the object height Ho of the target object group OBG_cb#1. For example, the false hold detection unit 313 may set the drop height Hd to the first drop height Hd#1, which is a height calculated by adding a predetermined first margin height to the first object height Ho#1.

Note that the first margin height may be set in advance or may be set in setting the drop height Hd. The first margin height may be set manually by the user or may be set automatically by the control apparatus 3.

Then, the false hold detection unit 313 may generate the robot control signal based on the first drop height Hd#1.

For example, in a case where the drop height Hd means the height of the non-process performed object OBJ_ntgt, the signal generation unit 312 may generate the robot control signal so that the non-process performed object OBJ_ntgt#1 is positioned at the first drop height Hd#1 at a timing at which at least the non-process performed object OBJ_ntgt#1 starts to drop into the container CB. Namely, the signal generation unit 312 may generate the robot control signal so that the non-process performed object OBJ_ntgt#1 is positioned at a Z position indicated by the first drop height Hd#1 at the timing at which at least the non-process performed object OBJ_ntgt#1 starts to drop into the container CB. In this case, the signal generation unit 312 may generate the robot control signal for controlling the robot 1 so that a difference between a current height of the non-process performed object OBJ_ntgt#1 and the first drop height Hd#1 becomes smaller (for example, zero). The position (especially, the Z position) of the non-process performed object OBJ_ntgt#1, which is calculated at the step S23 in FIG. 5 to determine the held state, may be used as the current height of the non-process performed object OBJ_ntgt#1. Alternatively, the signal generation unit 312 may calculate (estimate) the current height of the non-process performed object OBJ_ntgt#1 based on at least one of the position and the pose of the end effector 4 that is calculated at the step S23 in FIG. 5 to determine the held state. Alternatively, the signal generation unit 312 may acquire information related to at least one of the current position and pose of the reference point (for example, the tool center point) of the end effector 4 from the robot control apparatus 13, and calculate (estimate) the current height of the non-process performed object OBJ_ntgt#1 based on the acquired information. As a result, the robot 1 moves the end effector 4 so that the non-process performed object OBJ_ntgt#1 moves to the first drop height H d#1. Namely, the robot 1 changes (namely, controls or adjusts) the height of the end effector 4 so that the non-process performed object OBJ_ntgt#1 moves to the first drop height Hd#1. Then, at least one of the robot 1 and the end effector 4 is controlled to drop at least the non-process performed object OBJ_ntgt#1. As a result, at least the non-process performed object OBJ_ntgt#1 drops from the first drop height Hd#1 (in other words, the Z-position indicated by the first drop height Hd#1).

For example, in a case where the drop height Hd means the height of the process performed object OBJ_tgt, the signal generation unit 312 may generate the robot control signal so that the process performed object OBJ_tgt#1 is positioned at the first drop height Hd#1 at a timing at which at least the non-process performed object OBJ_ntgt#1 starts to drop into the container CB. Namely, the signal generation unit 312 may generate the robot control signal so that the process performed object OBJ_tgt#1 is positioned at a Z position indicated by the first drop height Hd#1 at the timing at which at least the non-process performed object OBJ_ntgt#1 starts to drop into the container CB. In this case, the signal generation unit 312 may generate the robot control signal for controlling the robot 1 so that a difference between a current height of the process performed object OBJ_tgt#1 and the first drop height Hd#1 becomes smaller (for example, zero). The position (especially, the Z position) of the process performed object OBJ_tgt#1, which is calculated at the step S23 in FIG. 5 to determine the held state, may be used as the current height of the process performed object OBJ_tgt#1. Alternatively, the signal generation unit 312 may calculate (estimate) the current height of the process performed object OBJ_tgt#1 based on at least one of the position and the pose of the end effector 4 that is calculated at the step S23 in FIG. 5 to determine the held state. Alternatively, the signal generation unit 312 may acquire information related to at least one of the current position and pose of the reference point (for example, the tool center point) of the end effector 4 from the robot control apparatus 13, and calculate (estimate) the current height of the process performed object OBJ_tgt#1 based on the acquired information. As a result, the robot 1 moves the end effector 4 so that the process performed object OBJ_tgt#1 moves to the first drop height H d#1. Namely, the robot 1 changes (namely, controls or adjusts) the height of the end effector 4 so that the process performed object OBJ_tgt#1 moves to the first drop height Hd#1. Then, at least one of the robot 1 and the end effector 4 is controlled to drop at least the non-process performed object OBJ_ntgt#1. As a result, at least the non-process performed object OBJ_ntgt#1 drops in a situation where the process performed object OBJ_tgt#1 is positioned at the first drop height Hd#1 (in other words, the Z-position indicated by the first drop height Hd#1). Note that a state in which "the non-process performed object OBJ_ntgt#1 drops in a situation where the process performed object OBJ_tgt#1 is positioned at the first drop height Hd#1" may be considered to be equivalent to a state in which "the non-process performed object OBJ_ntgt#1 drops from the first drop height Hd#1".

For example, in a case where the drop height Hd means the height that is determined based on the heights of the process performed object OBJ_tgt and the non-process performed object OBJ_ntgt, the signal generation unit 312 may generate the robot control signal so that the height that is determined based on the heights of the process performed object OBJ_tgt#1 and the non-process performed object OBJ_ntgt#1 is equal to the first drop height Hd#1 at a timing at which at least the non-process performed object OBJ_ntgt#1 starts to drop into the container CB. As a result, the robot 1 moves the end effector 4 so that the height that is determined based on the heights of the non-process performed object OBJ_ntgt#1 and the process performed object OBJ_tgt#1 is equal to the first drop height Hd#1. Namely, Namely, the robot 1 changes (namely, controls or adjusts) the height of the end effector 4 so that the height that is determined based on the heights of the non-process performed object OBJ_ntgt#1 and the process performed object OBJ_tgt#1 is equal to the first drop height Hd#1. In this case, the signal generation unit 312 may calculated the current heights of the non-process performed object OBJ_ntgt#1 and of the process performed object OBJ_tgt#1 by using the position (especially, the Z-position) of the non-process performed object OBJ_ntgt#1 and the position (especially, the Z-position) of the process performed object OBJ_tgt#1, which are calculated at the step S23 in FIG. 5 to determine the held state, as the current height of the non-process performed object OBJ_ntgt#1 and the current height of the process performed object OBJ_tgt#1, respectively. Alternatively, the signal generation unit 312 may calculate (estimate) the current heights of the non-process performed object OBJ_ntgt#1 and the process performed object OBJ_tgt#1 based on at least one of the position and the pose of the end effector 4 that is calculated at the step S23 in FIG. 5 to determine the held state. Alternatively, the signal generation unit 312 may acquire information related to at least one of the current position and pose of the reference point (for example, the tool center point) of the end effector 4 from the robot control apparatus 13, and calculate (estimate) the current heights of the non-process performed object OBJ_ntgt#1 and the process performed object OBJ_tgt#1 based on the acquired information. Then, the signal generation unit 312 may generate the robot control signal for controlling the robot 1 so that a difference between the current heights of the non-process performed object OBJ_ntgt#1 and the process performed object OBJ_tgt#1 and the first drop height Hd#1 becomes smaller (for example, zero). Then, at least one of the robot 1 and the end effector 4 is controlled to drop at least the non-process performed object OBJ_ntgt#1. As a result, at least the non-process performed object OBJ_ntgt#1 drops in a situation where the height that is determined based on the heights of the process performed object OBJ_tgt#1 and the non-process performed object OBJ_ntgt#1 is equal to the first drop height Hd#1. Note that a state in which "the non-process performed object OBJ_ntgt#1 drops in a situation where the height that is determined based on the heights of the process performed object OBJ_tgt#1 and the non-process performed object OBJ_ntgt#1 is equal to the first drop height Hd#1" may be considered to be equivalent to a state in which "the non-process performed object OBJ_ntgt#1 drops from the first drop height Hd#1".

For example, in a case where the drop height Hd means the height of the imaging system 2 (especially, the imaging apparatus 21), the signal generation unit 312 may generate the robot control signal so that the imaging system 2 is positioned at the first drop height Hd#1 at a timing at which at least the non-process performed object OBJ_ntgt#1 starts to drop into the container CB. Namely, the signal generation unit 312 may generate the robot control signal so that the imaging system 2 is positioned at a Z position indicated by the first drop height Hd#1 at the timing at which at least the non-process performed object OBJ_ntgt#1 starts to drop into the container CB. In this case, the signal generation unit 312 may calculate the current height of the imaging system 2. For example, the signal generation unit 312 may calculate (estimate) the current height of the imaging system 2 from the position (especially, the Z position) of at least one of the non-process performed object OBJ_ntgt#1 and the process performed object OBJ_tgt#1, which is calculated at the step S23 in FIG. 5 to determine the held state. Alternatively, the signal generation unit 312 may calculate (estimate) the current height of the imaging system 2 based on at least one of the position and the pose of the end effector 4 that is calculated at the step S23 in FIG. 5 to determine the held state. Alternatively, the signal generation unit 312 may acquire information related to at least one of the current position and pose of the reference point (for example, the tool center point) of the end effector 4 from the robot control apparatus 13, and calculate (estimate) the current height of the imaging system 2 based on the acquired information. Then, the signal generation unit 312 may generate the robot control signal for controlling the robot 1 so that a difference between a current height of the imaging system 2 and the first drop height Hd#1 becomes smaller (for example, zero). As a result, the robot 1 moves the end effector 4 so that the imaging system 2 moves to the first drop height H d#1. Namely, the robot 1 changes (namely, controls or adjusts) the height of the end effector 4 so that the imaging system 2 moves to the first drop height Hd#1. Then, at least one of the robot 1 and the end effector 4 is controlled to drop at least the non-process performed object OBJ_ntgt#1. As a result, at least the non-process performed object OBJ_ntgt#1 drops in a situation where the imaging system 2 is positioned at the first drop height Hd#1 (in other words, the Z-position indicated by the first drop height Hd#1). Note that a state in which "the non-process performed object OBJ_ntgt#1 drops in a situation where the imaging system 2 is positioned at the first drop height Hd#1" may be considered to be equivalent to a state in which "the non-process performed object OBJ_ntgt#1 drops from the first drop height Hd#1".

For example, in a case where the drop height Hd means the height of the end effector 4 (for example, the height of the reference point TCP of the end effector 4), the signal generation unit 312 may generate the robot control signal so that the end effector 4 is positioned at the first drop height Hd#1 at a timing at which at least the non-process performed object OBJ_ntgt#1 starts to drop into the container CB. Namely, the signal generation unit 312 may generate the robot control signal so that the end effector 4 is positioned at a Z position indicated by the first drop height Hd#1 at the timing at which at least the non-process performed object OBJ_ntgt#1 starts to drop into the container CB. In this case, the signal generation unit 312 may generate the robot control signal for controlling the robot 1 so that a difference between a current height of the end effector 4 and the first drop height Hd#1 becomes smaller (for example, zero). The position (especially, the Z position) of the end effector 4, which is calculated at the step S23 in FIG. 5 to determine the held state, may be used as the current height of the end effector 4. Alternatively, the signal generation unit 312 may calculate (estimate) the current height of the end effector 4 based on at least one of the position and the pose of at least one of the non-process performed object OBJ_ntgt#1 and the process performed object OBJ_tgt#1 that is calculated at the step S23 in FIG. 5 to determine the held state. Alternatively, the signal generation unit 312 may acquire information related to at least one of the current position and pose of the reference point (for example, the tool center point) of the end effector 4 from the robot control apparatus 13, and calculate (estimate) the current height of the end effector 4 based on the acquired information. As a result, the robot 1 moves the end effector 4 so that the end effector 4 moves to the first drop height H d#1. Namely, the robot 1 changes (namely, controls or adjusts) the height of the end effector 4 so that the end effector 4 moves to the first drop height Hd#1. Then, at least one of the robot 1 and the end effector 4 is controlled to drop at least the non-process performed object OBJ_ntgt#1. As a result, at least the non-process performed object OBJ_ntgt#1 drops in a situation where the end effector 4 is positioned at the first drop height Hd#1 (in other words, the Z-position indicated by the first drop height Hd#1). Note that a state in which "the non-process performed object OBJ_ntgt#1 drops in a situation where the end effector 4 is positioned at the first drop height Hd#1" may be considered to be equivalent to a state in which "the non-process performed object OBJ_ntgt#1 drops from the first drop height Hd#1".

For example, in a case where the drop height Hd means the height of the robot arm 12 (for example. The height of the flange of the robot arm 12), the signal generation unit 312 may generate the robot control signal so that the robot arm 12 is positioned at the first drop height Hd#1 at a timing at which at least the non-process performed object OBJ_ntgt#1 starts to drop into the container CB. Namely, the signal generation unit 312 may generate the robot control signal so that the robot arm 12 is positioned at a Z position indicated by the first drop height Hd#1 at the timing at which at least the non-process performed object OBJ_ntgt#1 starts to drop into the container CB. In this case, the signal generation unit 312 may calculate the current height of the robot arm 12. For example, the signal generation unit 312 may calculate (estimate) the current height of the robot arm 12 based on at least one of the position and the pose of at least one of the non-process performed object OBJ_ntgt#1 and the process performed object OBJ_tgt#1 that is calculated at the step S23 in FIG. 5 to determine the held state. Alternatively, the signal generation unit 312 may calculate (estimate) the current height of the robot arm 12 based on at least one of the position and the pose of the end effector 4 that is calculated at the step S23 in FIG. 5 to determine the held state. Alternatively, the signal generation unit 312 may acquire information related to at least one of the current position and pose of the reference point (for example, the tool center point) of the end effector 4 from the robot control apparatus 13, and calculate (estimate) the current height of the robot arm 12 based on the acquired information. Then, the signal generation unit 312 may generate the robot control signal for controlling the robot 1 so that a difference between a current height of the robot arm 12 and the first drop height Hd#1 becomes smaller (for example, zero). As a result, the robot 1 moves the end effector 4 so that the robot arm 12 moves to the first drop height H d#1. Namely, the robot 1 changes (namely, controls or adjusts) the height of the end effector 4 so that the robot arm 12 moves to the first drop height Hd#1. Then, at least one of the robot 1 and the end effector 4 is controlled to drop at least the non-process performed object OBJ_ntgt#1. As a result, at least the non-process performed object OBJ_ntgt#1 drops in a situation where the robot arm 12 is positioned at the first drop height Hd#1 (in other words, the Z-position indicated by the first drop height Hd#1). Note that a state in which "the non-process performed object OBJ_ntgt#1 drops in a situation where the robot arm 12 is positioned at the first drop height Hd#1" may be considered to be equivalent to a state in which "the non-process performed object OBJ_ntgt#1 drops from the first drop height Hd#1".

After at least the non-process performed object OBJ_ntgt#1 drops into the container CB, the end effector 4 newly holds the process performed object OBJ_tgt#2 as illustrated in FIG. 15(b). In this case, as illustrated in FIG. 15(b), an example in which the end effector 4 is holding the non-process performed object OBJ_ntgt#2 together with the process performed object OBJ_tgt#2 will be described. Furthermore, FIG. 15(b) illustrates an example in which the target object group _cb#2 is contained in the container CB and the object height Ho of the target object group OBG_cb#2 is a first object height Ho#2 at a timing at which the end effector 4 is holding the non-process performed object OBJ_ntgt#2 together with the process performed object OBJ_tgt#2.

Note that FIG. 15(b) may be considered to illustrate an example in which the end effector 4 is holding the non-process performed object OBJ_ntgt#2 together with the process performed object OBJ_tgt#2 without performing the placing process, which is for holding another process performed object OBJ_tgt newly selected from the plurality of target objects OBJ contained in the container CB and for releasing the held another process performed object OBJ_tgt outside the container CB, after at least the non-process performed object OBJ_ntgt#1 drops into the container CB. Alternatively, FIG. 15(b) may be considered to illustrate an example in which the end effector 4 is holding the non-process performed object OBJ_ntgt#2 together with the process performed object OBJ_tgt#2 after performing the placing process, which is for holding another process performed object OBJ_tgt newly selected from the plurality of target objects OBJ contained in the container CB and for releasing the held another process performed object OBJ_tgt outside the container CB, at least once after at least the non-process performed object OBJ_ntgt#1 drops into the container CB.

The target object group OBG_cb#2 may be different from the target object group OBG_cb#1. For example, in a case where the end effector 4 is holding the non-process performed object OBJ_ntgt#2 together with the process performed object OBJ_tgt#2 after performing the placing process, which is for holding another process performed object OBJ_tgt newly selected from the plurality of target objects OBJ contained in the container CB and for releasing the held another process performed object OBJ_tgt outside the container CB, at least once after at least the non-process performed object OBJ_ntgt#1 drops into the container CB, at least one target object OBJ included in the target object group OBG_cb#1 has been transported outside the container CB. In this case, at least one target object OBJ included in target object group OBG_cb#1 may not be included in target object group OBG_cb#2. For example, even in a case where the end effector 4 is holding the non-process performed object OBJ_ntgt#2 together with the process performed object OBJ_tgt#2 without performing the placing process after at least the non-process performed object OBJ_ntgt#1 drops into the container CB, at least one of the process performed object OBJ_tgt#2 and the non-process performed object OBJ_ntgt#2 is the target object OBJ included in the target object group OBG_cb#1. Therefore, even in this case, at least one target object OBJ included in target object group OBG_cb#1 may not be included in the target object group OBG_cb#2.

Thus, it is likely that the number of target objects OBJ included in target object group OBG_cb#2 is smaller than the number of target objects OBJ included in target object group OBG_cb#1. As a result, as illustrated in FIG. 15(b), it is likely that the second the object height Ho#2, which is the object height Ho#2 of the target object group OBG_cb#2, is lower than the second object height Ho#1, which is the object height Ho#2 of the target object group OBG_cb#2. In this case, as illustrated in FIG. 15(b) , the false hold detection unit 313 may set the drop height Hd to a second drop height Hd#2 that is lower than the first drop height Hd#1, based on the second the object height Ho#2 that is the object height Ho of the target object group OBG_cb#2. For example, the false hold detection unit 313 may set the drop height Hd to the second drop height Hd#2, which is a height calculated by adding a predetermined second margin height to the second object height Ho#2.

The second margin height may be set in advance or may be set in setting the drop height Hd. The second margin height may be set manually by the user or may be set automatically by the control apparatus 3. The second margin height that is used to set the second drop height Hd#2 may be the same as or may be different from the above-described first margin height that is used to set the first drop height Hd#1. In a case where the second margin height is the same as the first margin height, a common margin height, which is used as each of the first and second margin heights, may be set. The common margin height may be set in advance or may be set in setting the drop height Hd. The common margin height may be manually set by the user or may be automatically set by the control apparatus 3. Then, the false hold detection unit 313 may generate the robot control signal based on the second drop height Hd#2.

For example, in a case where the drop height Hd means the height of the non-process performed object OBJ_ntgt, the signal generation unit 312 may generate the robot control signal so that the non-process performed object OBJ_ntgt#2 is positioned at the second drop height Hd#2 at a timing at which at least the non-process performed object OBJ_ntgt#2 starts to drop into the container CB. Namely, the signal generation unit 312 may generate the robot control signal so that the non-process performed object OBJ_ntgt#2 is positioned at a Z position indicated by the second drop height Hd#2 at the timing at which at least the non-process performed object OBJ_ntgt#2 starts to drop into the container CB. In this case, the signal generation unit 312 may generate the robot control signal for controlling the robot 1 so that a difference between a current height of the non-process performed object OBJ_ntgt#2 and the second drop height Hd#2 becomes smaller (for example, zero). The position (especially, the Z position) of the non-process performed object OBJ_ntgt#2, which is calculated at the step S23 in FIG. 5 to determine the held state, may be used as the current height of the non-process performed object OBJ_ntgt#2. Alternatively, the signal generation unit 312 may calculate (estimate) the current height of the non-process performed object OBJ_ntgt#2 based on at least one of the position and the pose of the end effector 4 that is calculated at the step S23 in FIG. 5 to determine the held state. Alternatively, the signal generation unit 312 may acquire information related to at least one of the current position and pose of the reference point (for example, the tool center point) of the end effector 4 from the robot control apparatus 13, and calculate (estimate) the current height of the non-process performed object OBJ_ntgt#2 based on the acquired information. As a result, the robot 1 moves the end effector 4 so that the non-process performed object OBJ_ntgt#2 moves to the second drop height H d#2. Namely, the robot 1 changes (namely, controls or adjusts) the height of the end effector 4 so that the non-process performed object OBJ_ntgt#2 moves to the second drop height Hd#2. Then, at least one of the robot 1 and the end effector 4 is controlled to drop at least the non-process performed object OBJ_ntgt#2. As a result, at least the non-process performed object OBJ_ntgt#2 drops from the second drop height Hd#2 (in other words, the Z-position indicated by the second drop height Hd#2).

For example, in a case where the drop height Hd means the height of the process performed object OBJ_tgt, the signal generation unit 312 may generate the robot control signal so that the process performed object OBJ_tgt#2 is positioned at the second drop height Hd#2 at a timing at which at least the non-process performed object OBJ_ntgt#2 starts to drop into the container CB. Namely, the signal generation unit 312 may generate the robot control signal so that the process performed object OBJ_tgt#2 is positioned at a Z position indicated by the second drop height Hd#2 at the timing at which at least the non-process performed object OBJ_ntgt#2 starts to drop into the container CB. In this case, the signal generation unit 312 may generate the robot control signal for controlling the robot 1 so that a difference between a current height of the process performed object OBJ_tgt#2 and the second drop height Hd#2 becomes smaller (for example, zero). The position (especially, the Z position) of the process performed object OBJ_tgt#2, which is calculated at the step S23 in FIG. 5 to determine the held state, may be used as the current height of the process performed object OBJ_tgt#2. Alternatively, the signal generation unit 312 may calculate (estimate) the current height of the process performed object OBJ_tgt#2 based on at least one of the position and the pose of the end effector 4 that is calculated at the step S23 in FIG. 5 to determine the held state. Alternatively, the signal generation unit 312 may acquire information related to at least one of the current position and pose of the reference point (for example, the tool center point) of the end effector 4 from the robot control apparatus 13, and calculate (estimate) the current height of the process performed object OBJ_tgt#2 based on the acquired information. As a result, the robot 1 moves the end effector 4 so that the process performed object OBJ_tgt#2 moves to the second drop height H d#2. Namely, the robot 1 changes (namely, controls or adjusts) the height of the end effector 4 so that the process performed object OBJ_tgt#2 moves to the second drop height Hd#2. Then, at least one of the robot 1 and the end effector 4 is controlled to drop at least the non-process performed object OBJ_ntgt#2. As a result, at least the non-process performed object OBJ_ntgt#2 drops in a situation where the process performed object OBJ_tgt#2 is positioned at the second drop height Hd#2 (in other words, the Z-position indicated by the second drop height Hd#2). Note that a state in which "the non-process performed object OBJ_ntgt#2 drops in a situation where the process performed object OBJ_tgt#2 is positioned at the second drop height Hd#2" may be considered to be equivalent to a state in which "the non-process performed object OBJ_ntgt#2 drops from the second drop height Hd#2".

For example, in a case where the drop height Hd means the height that is determined based on the heights of the process performed object OBJ_tgt and the non-process performed object OBJ_ntgt, the signal generation unit 312 may generate the robot control signal so that the height that is determined based on the heights of the process performed object OBJ_tgt#2 and the non-process performed object OBJ_ntgt#2 is equal to the second drop height Hd#2 at a timing at which at least the non-process performed object OBJ_ntgt#2 starts to drop into the container CB. As a result, the robot 1 moves the end effector 4 so that the height that is determined based on the heights of the non-process performed object OBJ_ntgt#2 and the process performed object OBJ_tgt#2 is equal to the second drop height Hd#2. Namely, Namely, the robot 1 changes (namely, controls or adjusts) the height of the end effector 4 so that the height that is determined based on the heights of the non-process performed object OBJ_ntgt#2 and the process performed object OBJ_tgt#2 is equal to the second drop height Hd#2. In this case, the signal generation unit 312 may calculated the current heights of the non-process performed object OBJ_ntgt#2 and of the process performed object OBJ_tgt#2 by using the position (especially, the Z-position) of the non-process performed object OBJ_ntgt#2 and the position (especially, the Z-position) of the process performed object OBJ_tgt#2, which are calculated at the step S23 in FIG. 5 to determine the held state, as the current height of the non-process performed object OBJ_ntgt#2 and the current height of the process performed object OBJ_tgt#2, respectively. Alternatively, the signal generation unit 312 may calculate (estimate) the current heights of the non-process performed object OBJ_ntgt#2 and the process performed object OBJ_tgt#2 based on at least one of the position and the pose of the end effector 4 that is calculated at the step S23 in FIG. 5 to determine the held state. Alternatively, the signal generation unit 312 may acquire information related to at least one of the current position and pose of the reference point (for example, the tool center point) of the end effector 4 from the robot control apparatus 13, and calculate (estimate) the current heights of the non-process performed object OBJ_ntgt#2 and the process performed object OBJ_tgt#2 based on the acquired information. Then, the signal generation unit 312 may generate the robot control signal for controlling the robot 1 so that a difference between the current heights of the non-process performed object OBJ_ntgt#2 and the process performed object OBJ_tgt#2 and the second drop height Hd#2 becomes smaller (for example, zero). Then, at least one of the robot 1 and the end effector 4 is controlled to drop at least the non-process performed object OBJ_ntgt#2. As a result, at least the non-process performed object OBJ_ntgt#2 drops in a situation where the height that is determined based on the heights of the process performed object OBJ_tgt#2 and the non-process performed object OBJ_ntgt#2 is equal to the second drop height Hd#2. Note that a state in which "the non-process performed object OBJ_ntgt#2 drops in a situation where the height that is determined based on the heights of the process performed object OBJ_tgt#2 and the non-process performed object OBJ_ntgt#2 is equal to the second drop height Hd#2" may be considered to be equivalent to a state in which "the non-process performed object OBJ_ntgt#2 drops from the second drop height Hd#2".

For example, in a case where the drop height Hd means the height of the imaging system 2 (especially, the imaging apparatus 21), the signal generation unit 312 may generate the robot control signal so that the imaging system 2 is positioned at the second drop height Hd#2 at a timing at which at least the non-process performed object OBJ_ntgt#2 starts to drop into the container CB. Namely, the signal generation unit 312 may generate the robot control signal so that the imaging system 2 is positioned at a Z position indicated by the second drop height Hd#2 at the timing at which at least the non-process performed object OBJ_ntgt#2 starts to drop into the container CB. In this case, the signal generation unit 312 may calculate the current height of the imaging system 2. For example, the signal generation unit 312 may calculate (estimate) the current height of the imaging system 2 from the position (especially, the Z position) of at least one of the non-process performed object OBJ_ntgt#2 and the process performed object OBJ_tgt#2, which is calculated at the step S23 in FIG. 5 to determine the held state. Alternatively, the signal generation unit 312 may calculate (estimate) the current height of the imaging system 2 based on at least one of the position and the pose of the end effector 4 that is calculated at the step S23 in FIG. 5 to determine the held state. Alternatively, the signal generation unit 312 may acquire information related to at least one of the current position and pose of the reference point (for example, the tool center point) of the end effector 4 from the robot control apparatus 13, and calculate (estimate) the current height of the imaging system 2 based on the acquired information. Then, the signal generation unit 312 may generate the robot control signal for controlling the robot 1 so that a difference between a current height of the imaging system 2 and the second drop height Hd#2 becomes smaller (for example, zero). As a result, the robot 1 moves the end effector 4 so that the imaging system 2 moves to the second drop height H d#2. Namely, the robot 1 changes (namely, controls or adjusts) the height of the end effector 4 so that the imaging system 2 moves to the second drop height Hd#2. Then, at least one of the robot 1 and the end effector 4 is controlled to drop at least the non-process performed object OBJ_ntgt#2. As a result, at least the non-process performed object OBJ_ntgt#2 drops in a situation where the imaging system 2 is positioned at the second drop height Hd#2 (in other words, the Z-position indicated by the second drop height Hd#2). Note that a state in which "the non-process performed object OBJ_ntgt#2 drops in a situation where the imaging system 2 is positioned at the second drop height Hd#2" may be considered to be equivalent to a state in which "the non-process performed object OBJ_ntgt#2 drops from the second drop height Hd#2".

For example, in a case where the drop height Hd means the height of the end effector 4 (for example, the height of the reference point TCP of the end effector 4), the signal generation unit 312 may generate the robot control signal so that the end effector 4 is positioned at the second drop height Hd#2 at a timing at which at least the non-process performed object OBJ_ntgt#2 starts to drop into the container CB. Namely, the signal generation unit 312 may generate the robot control signal so that the end effector 4 is positioned at a Z position indicated by the second drop height Hd#2 at the timing at which at least the non-process performed object OBJ_ntgt#2 starts to drop into the container CB. In this case, the signal generation unit 312 may generate the robot control signal for controlling the robot 1 so that a difference between a current height of the end effector 4 and the second drop height Hd#2 becomes smaller (for example, zero). The position (especially, the Z position) of the end effector 4, which is calculated at the step S23 in FIG. 5 to determine the held state, may be used as the current height of the end effector 4. Alternatively, the signal generation unit 312 may calculate (estimate) the current height of the end effector 4 based on at least one of the position and the pose of at least one of the non-process performed object OBJ_ntgt#2 and the process performed object OBJ_tgt#2 that is calculated at the step S23 in FIG. 5 to determine the held state. Alternatively, the signal generation unit 312 may acquire information related to at least one of the current position and pose of the reference point (for example, the tool center point) of the end effector 4 from the robot control apparatus 13, and calculate (estimate) the current height of the end effector 4 based on the acquired information. As a result, the robot 1 moves the end effector 4 so that the end effector 4 moves to the second drop height H d#2. Namely, the robot 1 changes (namely, controls or adjusts) the height of the end effector 4 so that the end effector 4 moves to the second drop height Hd#2. Then, at least one of the robot 1 and the end effector 4 is controlled to drop at least the non-process performed object OBJ_ntgt#2. As a result, at least the non-process performed object OBJ_ntgt#2 drops in a situation where the end effector 4 is positioned at the second drop height Hd#2 (in other words, the Z-position indicated by the second drop height Hd#2). Note that a state in which "the non-process performed object OBJ_ntgt#2 drops in a situation where the end effector 4 is positioned at the second drop height Hd#2" may be considered to be equivalent to a state in which "the non-process performed object OBJ_ntgt#2 drops from the second drop height Hd#2".

For example, in a case where the drop height Hd means the height of the robot arm 12 (for example. The height of the flange of the robot arm 12), the signal generation unit 312 may generate the robot control signal so that the robot arm 12 is positioned at the second drop height Hd#2 at a timing at which at least the non-process performed object OBJ_ntgt#2 starts to drop into the container CB. Namely, the signal generation unit 312 may generate the robot control signal so that the robot arm 12 is positioned at a Z position indicated by the second drop height Hd#2 at the timing at which at least the non-process performed object OBJ_ntgt#2 starts to drop into the container CB. In this case, the signal generation unit 312 may calculate the current height of the robot arm 12. For example, the signal generation unit 312 may calculate (estimate) the current height of the robot arm 12 based on at least one of the position and the pose of at least one of the non-process performed object OBJ_ntgt#2 and the process performed object OBJ_tgt#2 that is calculated at the step S23 in FIG. 5 to determine the held state. Alternatively, the signal generation unit 312 may calculate (estimate) the current height of the robot arm 12 based on at least one of the position and the pose of the end effector 4 that is calculated at the step S23 in FIG. 5 to determine the held state. Alternatively, the signal generation unit 312 may acquire information related to at least one of the current position and pose of the reference point (for example, the tool center point) of the end effector 4 from the robot control apparatus 13, and calculate (estimate) the current height of the robot arm 12 based on the acquired information. Then, the signal generation unit 312 may generate the robot control signal for controlling the robot 1 so that a difference between a current height of the robot arm 12 and the second drop height Hd#2 becomes smaller (for example, zero). As a result, the robot 1 moves the end effector 4 so that the robot arm 12 moves to the second drop height H d#2. Namely, the robot 1 changes (namely, controls or adjusts) the height of the end effector 4 so that the robot arm 12 moves to the second drop height Hd#2. Then, at least one of the robot 1 and the end effector 4 is controlled to drop at least the non-process performed object OBJ_ntgt#2. As a result, at least the non-process performed object OBJ_ntgt#2 drops in a situation where the robot arm 12 is positioned at the second drop height Hd#2 (in other words, the Z-position indicated by the second drop height Hd#2). Note that a state in which "the non-process performed object OBJ_ntgt#2 drops in a situation where the robot arm 12 is positioned at the second drop height Hd#2" may be considered to be equivalent to a state in which "the non-process performed object OBJ_ntgt#2 drops from the second drop height Hd#2".

Thus, in the first modified example, the control apparatus 3 may drop at least the non-process performed object OBJ_ntgt#2 from the second drop height Hd#2 that is lower than the first drop height Hd#1 from which the non-process performed object OBJ_ntgt#1 has dropped. Namely, the control apparatus 3 may drop at least the non-process performed object OBJ_ntgt#2 from a position that is lower than a position from which the non-process performed object OBJ_ntgt#1 has dropped. As a result, compared to a case where at least the non-process performed object OBJ_ntgt#2 drops from the first drop height Hd#1 (see FIG. 15 (c)), the height of the non-process performed object OBJ_ntgt#2 from the target object group OBG_cb#2 or from the container CB at a timing at which the non-process performed object OBJ_ntgt#2 starts to drop into the container CB is reduced. Therefore, the impact caused by the drop of at least the non-process performed object OBJ_ntgt#2 is reduced. As a result, it is less likely that at least one of the non-process performed object OBJ_ntgt#2, the target object group OBG_cb#2, and the container CB is damaged by the impact caused by the drop of at least the non-process performed object OBJ_ntgt#2.

However, in a case where both the non-process performed object OBJ_ntgt#1 and the process performed object OBJ_tgt#1 drop into the container CB in a situation illustrated in FIG. 15(a), there is a possibility that the non-process performed object OBJ_ntgt#1 and the process performed object OBJ_tgt#1, which have been dropped, are held again by the end effector 4 as the non-process performed object OBJ_ntgt#2 and the process performed object OBJ_tgt#2. In this case, the target object group OBG_cb#2 may be the same as the target object group OBG_cb#1. Furthermore, the second drop height Hd#2 may be the same as the first drop height Hd#1. Namely, the control apparatus 3 may drop the non-process performed object OBJ_ntgt#2 from the second drop height Hd#2 that is the same as the first drop height Hd#1 from which the non-process performed object OBJ_ntgt#1 has dropped.

Note that the control apparatus 3 sets the drop height Hd based on the object height Ho, moves the non-process performed object OBJ_ntgt and the like to the set drop height Hd, and then starts to drop at least the non-process performed object OBJ_ntgt in the above-described description. However, the control apparatus 3 may starts to drop at least the non-process performed object OBJ_ntgt without setting the drop height Hd.

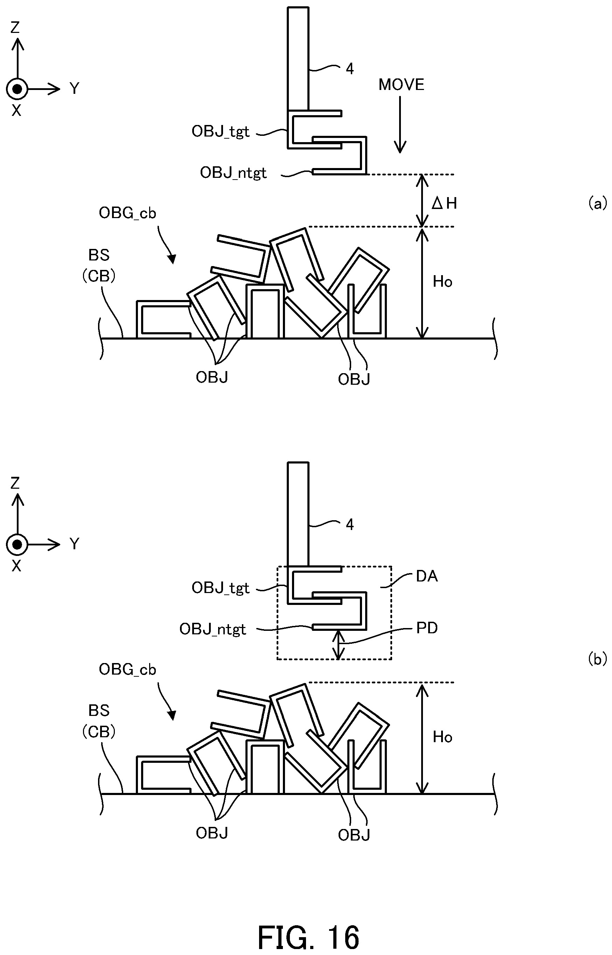

As a first example, as illustrated in FIG. 16(a), the signal generation unit 312 may generate the robot control signal so that the end effector 4 holding the non-process performed object OBJ_ntgt approaches the container CB (especially, the target object group OBG_cb contained in the container CB). As a result, the end effector 4 holding the non-process performed object OBJ_ntgt approaches the container CB (especially, the target object group OBG_cb contained in the container CB). In a period during which the end effector 4 approaches the container CB (especially, the target object group OBG_cb contained in the container CB), the false hold detection unit 313 may determine based on the calculated result of the object height Ho whether or not a distance (especially, the distance in the Z-axis direction) ΔH between the object height Ho and the non-process performed object OBJ_ntgt is equal to or smaller than a predetermined distance threshold value. In a case where the distance (especially, the distance in the Z-axis direction) ΔH between the object height Ho and the non-process performed object OBJ_ntgt is not equal to or smaller than the predetermined distance threshold value, it is estimated that the height of the non-process performed object OBJ_ntgt from the target object group OBG_cb is not sufficiently low. In this case, the signal generation unit 312 may generate the robot control signal so that the end effector 4 holding the non-process performed object OBJ_ntgt further approaches the container CB (especially, the target object group OBG_cb contained in the container CB). As a result, the end effector 4 may further approach the container CB (especially, the target object group OBG_cb contained in the container CB). On the other hand, in a case where the distance (especially, the distance in the Z-axis direction) ΔH between the object height Ho and the non-process performed object OBJ_ntgt is equal to or smaller than the predetermined distance threshold value, it is estimated that the height of the non-process performed object OBJ_ntgt from the target object group OBG_cb is sufficiently low. In this case, the control apparatus 3 may start to drop at least the non-process performed object OBJ_ntgt. As a result, even in this case, the impact caused by the drop of at least the non-process performed object OBJ_ntgt is reduced. As a result, it is less likely that at least one of the non-process performed object OBJ_ntgt, the target object group OBG_cb, and the container CB is damaged by the impact caused by the drop of at least the non-process performed object OBJ_ntgt.

As a second example, as illustrated in FIG. 16(b), the signal generation unit 312 may generate the robot control signal so that the end effector 4 holding the non-process performed object OBJ_ntgt approaches the container CB (especially, the target object group OBG_cb contained in the container CB). Furthermore, the false hold detection unit 313 may define a drop trigger area DA centered around the non-process performed object OBJ_ntgt held by the end effector 4. The drop trigger area DA may be an area in which a distance from the non-process performed object OBJ_ntgt is equal to or smaller than a predetermined upper limit distance PD, as illustrated in FIG. 16(b). Then, in the period during which the end effector 4 approaches the container CB (especially, the target object group OBG_cb contained in the container CB), the false hold detection unit 313 may determine whether or not the target object group OBG_cb has entered the drop trigger area DA. In a case where the target object group OBG_cb has not entered the drop trigger area DA, it is estimated that the height of the non-process performed object OBJ_ntgt from the target object group OBG_cb is not sufficiently low. In this case, the signal generation unit 312 may generate the robot control signal so that the end effector 4 holding the non-process performed object OBJ_ntgt further approaches the container CB (especially, the target object group OBG_cb contained in the container CB). As a result, the end effector 4 may further approach the container CB (especially, the target object group OBG_cb contained in the container CB). On the other hand, in a case where the target object group OBG_cb has entered the drop trigger area DA, it is estimated that the height of the non-process performed object OBJ_ntgt from the target object group OBG_cb is sufficiently low. In this case, the control apparatus 3 may start to drop at least the non-process performed object OBJ_ntgt. As a result, even in this case, the impact caused by the drop of at least the non-process performed object OBJ_ntgt is reduced. As a result, it is less likely that at least one of the non-process performed object OBJ_ntgt, the target object group OBG_cb, and the container CB is damaged by the impact caused by the drop of at least the non-process performed object OBJ_ntgt.

### (4-1-1-3) Calculation Method of Object Height Ho

The false hold detection unit 313 may calculate the object height Ho by using the image data IMG generated by the imaging system 2 imaging the target object group OBG_cb. Note that the imaging system 2 may image the entire target object group OBG_cb. For example, the imaging system 2 may image all of the plurality of target objects OBJ included in the target object group OBG_cb. Alternatively, the imaging system 2 may image a part of the target object group OBG_cb and may not image other part of the target object group OBG_cb . For example, the imaging system 2 may image a part of the plurality of target objects OBJ included in the target object group OBG_cb and may not image other part of the plurality of target objects OBJ included in the target object group OBG_cb. For example, in a case where the plurality of target objects OBJ are stacked (namely, randomly stacked) in the container CB as described above, the imaging system 2 may image a part of the target object OBJ, which is positioned on a surface of the target object group OBG_cb, of the plurality of target objects OBJ included in the target object group OBG_cb and may not image other part of the target object OBJ, which is positioned on the surface of the target object group OBG_cb, of the plurality of target objects OBJ included in the target object group OBG_cb.

For example, the false hold detection unit 313 may calculate the object height Ho by analyzing the image indicated by the image data IMG. Alternatively, the false hold detection unit 313 may calculate at least one of the position and the pose of the target object OBJ included in the target object group OBG_cb by controlling the position pose calculation unit 311 to perform the matching processing using the image data IMG, and calculate the object height Ho based on the calculated result of at least one of the position and the pose of the target object OBJ. Alternatively, the false hold detection unit 313 may place a three-dimensional model of the target object OBJ in a virtual simulation space, which simulate a three-dimensional space in which the target object group OBG_cb is positioned, based on the calculated result of at least one of the position and the pose of the target object OBJ by the matching processing, and calculated a height of the three-dimensional model as the object height Ho. Alternatively, the false hold detection unit 313 may calculate the height of the target object OBJ captured in the image indicated by the image data IMG as the object height Ho by performing a segmentation using the image data IMG.

Alternatively, the false hold detection unit 313 may calculate the object height Ho by using the three-dimensional position data (for example, the point cloud data described above) generated from the image data IMG, in addition to or instead of analyzing the image indicated by the image data IMG. As one example, the false hold detection unit 313 may calculate the height of the point cloud indicated by the three-dimensional position data (especially, the height of the point cloud corresponding to the target object group OBG_cb) as the object height Ho.

In a case where the height of the point cloud indicated by the three-dimensional position data is calculated as the object height Ho, the false hold detection unit 313 may calculate the object height Ho by using the following method. For example, the false hold detection unit 313 may calculate, as the object height Ho, a height of at least a part of the plurality of points included in the point cloud indicated by the three-dimensional position data. For example, the false hold detection unit 313 may calculate, as the object height Ho, the height of the point, which is positioned at the highest position, of the plurality of points included in the point cloud indicated by the three-dimensional position data. In this case, the false hold detection unit 313 can calculate, as the object height Ho, the height of the highest part of the target object group OBG_cb. Alternatively, for example, the false hold detection unit 313 may calculate, as the object height Ho, the height of the point, which is positioned at the N-th (wherein N is a constant value representing an integer that is equal to or larger than 2) highest position, of the plurality of points included in the point cloud indicated by the three-dimensional position data. In this case, it is likely that the false hold detection unit 313 calculates, as the object height Ho, the height of one target object OBJ, which is positioned at the highest position, of the plurality of target objects OBJ included in the target object group OBG_cb. Alternatively, for example, the false hold detection unit 313 may calculate, as the object height Ho, an average value of the height of at least a part of the plurality of points included in the point cloud indicated by the three-dimensional position data. In this case, the false hold detection unit 313 can calculate, as the object height Ho, the average height of at least a part of the target object group OBG_cb. As one example, the false hold detection unit 313 may calculate, as the object height Ho, an average value of the height of all of the plurality of points included in the point cloud indicated by the three-dimensional position data. As another example, the false hold detection unit 313 may calculate, as the object height Ho, an average value of the height of a partial point cloud, which is included in a predetermined point cloud space, of the plurality of points included in the point cloud indicated by the three-dimensional position data. A space including the point, which is positioned at the highest position (alternatively, the N-th highest position), of the plurality of points included in the point cloud indicated by the three-dimensional position data is one example of the predetermined point cloud space. For example, the predetermined point cloud space may be a three-dimensional space including a space between a virtual plane (for example, a horizontal plane) that includes the point, which is positioned at the highest position (alternatively, the N-th highest position), of the plurality of points included in the point cloud indicated by the three-dimensional position data and a virtual plane (for example, a horizontal plane) that is positioned at a position whose height is lower than this point (the highest point) by a predetermined height along the Z-axis direction.

The false hold detection unit 313 may calculate the object height Ho by using the image data IMG, which is generated by the imaging apparatus 21 imaging the target object group OBG_cb after the end effector 4 holds the process performed object OBJ_tgt based on the robot control signal generated at the step S13 in FIG. 5. In this case, the imaging apparatus 21 may image the target object group OBG_cb after the end effector 4 holds the process performed object OBJ_tgt based on the robot control signal generated at the step S13 in FIG. 5. As one example, the false hold detection unit 313 may calculate the object height Ho by using the image data IMG, which is generated by the imaging apparatus 21 imaging the target object group OBG_cb after it is determined at the step S22 in FIG. 5 that the end effector 4 is holding the non-process performed object OBJ_ntgt, because the object height Ho may be calculated in a case where the end effector 4 is holding the non-process performed object OBJ_ntgt. In this case, the imaging apparatus 21 may image the target object group OBG_cb after it is determined at the step S22 in FIG. 5 that the end effector 4 is holding the non-process performed object OBJ_ntgt.

Alternatively, the false hold detection unit 313 may calculate the object height Ho by using the image data IMG acquired at the step S11 in FIG. 5. Namely, the false hold detection unit 313 may calculate the object height Ho by using the image data IMG that is used to generate the position pose data POI at the step S12 in FIG. 5. However, the end effector 4 has not yet held the process performed object OBJ_tgt and the non-process performed object OBJ_ntgt at a timing at which the image data IMG is acquired at the step S11 in FIG. 5. Therefore, not only the target object group OBG_cb, which has been contained in the container CB after the end effector 4 has held the process performed object OBJ_tgt and the non-process performed object OBJ_ntgt, but also the process performed object OBJ_tgt and the non-process performed object OBJ_ntgt that have been already held by the end effector 4 are captured in the image indicated by the image data IMG acquired at the step S11 in FIG. 5. Therefore, there is a possibility that the object height Ho calculated based on the image data IMG acquired at the step S11 in FIG. 5 has an error relative to the actual height of the target object group OBG_cb. However, it is estimated that an amount of the error is small, because this error is caused by only two target objects OBJ including the process performed object OBJ_tgt and the non-process performed object OBJ_ntgt. Namely, it is estimated that an influence of the error is small. Therefore, the object height Ho calculated based on the image data IMG acquired at the step S11 in FIG. 5 may be regarded as the height of the target object group OBG_cb.

Alternatively, the false hold detection unit 313 may use the position pose data POI, which has been generated at the step S12 in FIG. 5, as the object height Ho. For example, the false hold detection unit 313 may use the Z position (for example, the Z position of the plurality of target objects OBJ included in the target object group OBG_cb or a position (a height) calculated from this Z position) indicated by the position pose data POI, which has been generated at the step S12 in FIG. 5, as the object height Ho. In this case, the false hold detection unit 313 may not calculate the object height Ho again to set the drop height Hd.

Thus, in the first modified example, the false hold detection unit 313 calculates the object height Ho by using the imaging system 2. In this case, the imaging system 2 may be considered to serve as a measurement apparatus configured to directly or indirectly measure the object height Ho.

Note that it can be said that the object height Ho is the height of the target object group OBG_cb including at least one target object OBJ, which is included in the imaging range of the imaging system 2 (namely, a measurement range of the imaging system 2 serving as the measurement apparatus), of the plurality of target objects OBJ contained in the container CB, because the object height Ho is calculated based on the image data IMG. In this case, it can be said that the drop height Hd that is set based on the object height Ho is set based on the object height Ho, which is the height of the target object group OBG_cb including at least one target object OBJ, which is included in the imaging range of the imaging system 2 (namely, a measurement range of the imaging system 2 serving as the measurement apparatus), of the plurality of target objects OBJ contained in the container CB. In this case, the non-process performed object OBJ_ntgt, which drops from the set drop height Hd, may be dropped to a dropped position included in the imaging range of the imaging system 2 (namely, the measurement range of the imaging system 2 serving as the measurement apparatus).

### (4-1-3) Change of Drop Height Hd Based On Pose Change of End Effector 4 for Dropping At Least Non-Process Performed Object_ntgt

As described above, the control apparatus 3 may generate the robot control signal to drop at least the non-process performed object OBJ_ntgt into the container CB by changing the pose of the end effector 4. Furthermore, as described above, there is a possibility that the height of the end effector 4 changes due to the change of the pose of the end effector 4 when the pose of the end effector 4 changes. As a result, there is a possibility that the heights of the process performed object OBJ_tgt and the non-process performed object OBJ_ntgt held by the end effector 4 change due to the change of the pose of the end effector 4. Furthermore, there is a possibility that the height of the imaging system 2, which moves together with the end effector 4, changes due to the change of the pose of the end effector 4. Furthermore, there is a possibility that the height of the robot arm 12, which moves together with the end effector 4, changes due to the change of the pose of the end effector 4.

In this case, even after at least one of the process performed object OBJ_tgt, the non-process performed object OBJ_ntgt, the end effector 4, the imaging system 2, and the robot arm 12 has moved to the set drop height Hd, there is a possibility that at least one of the process performed object OBJ_tgt, the non-process performed object OBJ_ntgt, the end effector 4, the imaging system 2, and the robot arm 12 moves to a height that is different from the set drop height Hd due to the change of the pose of the end effector 4 for dropping at least the non-process performed object OBJ_ntgt. As a result, there is a possibility that at least the non-process performed object OBJ_ntgt drops from a height that is different from the set drop height Hd.

Therefore, in a case where the pose of the end effector 4 changes to drop at least the non-process performed object OBJ_ntgt, the signal generation unit 312 may generates the robot control signal for changing the height of at least one of the process performed object OBJ_tgt, the non-process performed object OBJ_ntgt, the end effector 4, the imaging system 2, and the robot arm 12 so that the height of at least one of the process performed object OBJ_tgt, the non-process performed object OBJ_ntgt, the end effector 4, imaging system 2, and the robot arm 12 is equal to the set drop height Hd. Namely, the signal generation unit 312 may generate the robot control signal for changing the height of at least one of the process performed object OBJ_tgt, the non-process performed object OBJ_ntgt, the end effector 4, the imaging system 2, and the robot arm 12 based on an change amount of the pose of the pose of the end effector 4 for dropping at least the non-process performed object OBJ_ntgt. As a result, even in a case where the pose of at least one end effector 4 changes to drop at least the non-process performed object OBJ_ntgt, the control apparatus 3 can drop at least the non-process performed object OBJ_ntgt from the set drop height Hd.

The signal generation unit 312 may generate the robot control signal for changing the height of at least one of the process performed object OBJ_tgt, the non-process performed object OBJ_ntgt, the end effector 4, the imaging system 2, and the robot arm 12 by a height corresponding to the change amount of the pose of the end effector 4 for dropping at least the non-process performed object OBJ_ntgt. As one example, the signal generation unit 312 may generate the robot control signal for changing the height of at least one of the process performed object OBJ_tgt, the non-process performed object OBJ_ntgt, the end effector 4, the imaging system 2, and the robot arm 12 by a height that is proportional to the change amount of the pose of the end effector 4 for dropping at least the non-process performed object OBJ_ntgt.

the signal generation unit 312 may generate the robot control signal so that the pose of the end effector 4 changes to drop at least the non-process performed object OBJ_ntgt, and then, the height of at least one of the process performed object OBJ_tgt, the non-process performed object OBJ_ntgt, the end effector 4, imaging system 2, and the robot arm 12 changes. The signal generation unit 312 may generate the robot control signal so that the height of at least one of the process performed object OBJ_tgt, the non-process performed object OBJ_ntgt, the end effector 4, imaging system 2, and the robot arm 12 changes each time the pose of the end effector 4 changes by a certain amount to drop the non-process performed object OBJ_ntgt.

Alternatively, the signal generation unit 312 may generate the robot control signal so that the height of at least one of the non-process performed object OBJ_ntgt, the process performed object OBJ_tgt, the end effector 4, imaging system 2, and the robot arm 12 changes while changing the pose of the end effector 4 to drop at least the non-process performed object OBJ_ntgt. Namely, the signal generation unit 312 may generate the robot control signal so that the height of at least one of the non-process performed object OBJ_ntgt, the process performed object OBJ_tgt, the end effector 4, imaging system 2, and the robot arm 12 changes in synchronization with the change of the pose of the end effector 4 for dropping at least the non-process performed object OBJ_ntgt.

### (4-1-4) Control of Dropped Position of Non-Process Performed Object OBJ_ntgt

The signal generation unit 312 may control the dropped position to which the non-process performed object OBJ_ntgt drops in the container CB, in addition to or instead of controlling the drop height Hd from which at least the non-process performed object OBJ_ntgt starts to drop into the container CB. Namely, the signal generation unit 312 may control the dropped position (for example, a position in a horizontal plane) that is a position of the non-process performed object OBJ_ntgt, which has dropped to be positioned in the container CB, in addition to or instead of controlling the drop height Hd.

Specifically, the signal generation unit 312 may control the robot control signal so that at least the non-process performed object OBJ_ntgt drops to a desired position in the container CB. Incidentally, a placing apparatus T different from the container CB is used, the signal generation unit 312 may control the robot control signal so that at least the non-process performed object OBJ_ntgt drops to a desired position on the placing apparatus T.

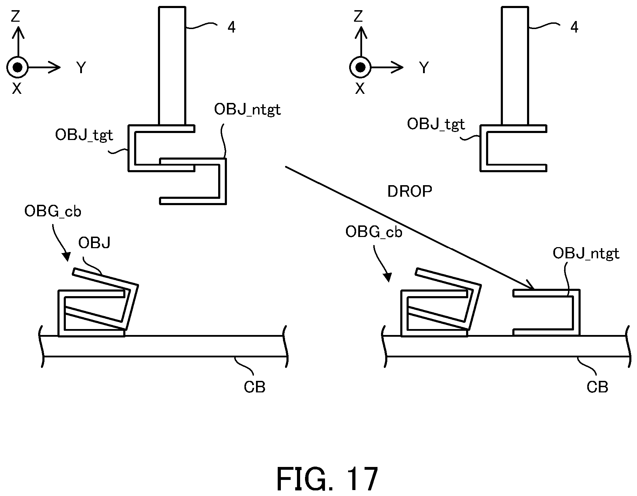

For example, as illustrated in FIG. 17 that is a cross-sectional view illustrating the dropping non-process performed object OBJ_ntgt, the signal generation unit 312 may control the robot control signal so that at least the non-process performed object OBJ_ntgt drops to a position at which there is no target object OBJ in the container CB. The signal generation unit 312 may control the robot control signal so that at least the non-process performed object OBJ_ntgt drops to a position at which there is no target object group OBG_cb in the container CB. As a result, it is less likely that the dropping non-process performed object OBJ_ntgt and the target object OBJ (the target object group OBG_cb) contained in the container CB are damaged by the impact caused by the drop of the non-process performed object OBJ_ntgt, compared to a case where the non-process performed object OBJ_ntgt drops to a position at which there is the target object OBJ (the target object group OBG_cb) in the container CB.

For example, the signal generation unit 312 may control the robot control signal so that at least the non-process performed object OBJ_ntgt drops to a position having a small undulations in the container CB. A position at which there is fewer target object OBJ whose vertex, edge, or corner faces upwardly that may be the undulations is one example of the position having the small undulations. As a result, it is less likely that the dropping non-process performed object OBJ_ntgt and the target object OBJ (the target object group OBG_cb) contained in the container CB are damaged by the impact caused by the drop of the non-process performed object OBJ_ntgt, compared to a case where the non-process performed object OBJ_ntgt drops to a position having a large undulations in the container CB.

For example, the signal generation unit 312 may control the robot control signal so that at least the non-process performed object OBJ_ntgt drops to a position having no undulations in the container CB. A position at which there is a target object OBJ whose vertex, edge, or corner faces upwardly that may be the undulations is one example of the position having no undulations. As a result, it is less likely that the dropping non-process performed object OBJ_ntgt and the target object OBJ (the target object group OBG_cb) contained in the container CB are damaged by the impact caused by the drop of the non-process performed object OBJ_ntgt, compared to a case where the non-process performed object OBJ_ntgt drops to a position having undulations in the container CB.

In a case where the non-process performed object OBJ_ntgt drops to the position at which there is no target object OBJ (target object group OBG_cb) in the container CB, the position pose calculation unit 311 may calculate the position of the target object OBJ (the target object group OBG_cb) contained in the container CB by using the image data IMG that is generated by the imaging system 2 imaging the target object OBJ (the target object group OBG_cb) contained in the container CB. Then, the signal generation unit 312 may determine the position at which there is no target object OBJ (target object group OBG_cb) in the container CB based on the calculated result of the position of the target object OBJ (the target object group OBG_cb) contained in the container CB, then generate the robot control signal so that at least the non-process performed object OBJ_ntgt drops to the determined position.

In a case where the non-process performed object OBJ_ntgt drops to the position having the small undulations in the container CB, the position pose calculation unit 311 may calculate the pose of the target object OBJ (the target object group OBG_cb) contained in the container CB by using the image data IMG that is generated by the imaging system 2 imaging the target object OBJ (the target object group OBG_cb) contained in the container CB. Then, the signal generation unit 312 may determine the position having the small undulations (for example, the position at which there is fewer target object OBJ whose vertex, edge, or corner faces upwardly that may be the undulations, as described above) in the container CB based on the calculated result of the pose of the target object OBJ (the target object group OBG_cb) contained in the container CB, then generate the robot control signal so that at least the non-process performed object OBJ_ntgt drops to the determined position.

In a case where the non-process performed object OBJ_ntgt drops to the position having no undulations in the container CB, the position pose calculation unit 311 may calculate the pose of the target object OBJ (the target object group OBG_cb) contained in the container CB by using the image data IMG that is generated by the imaging system 2 imaging the target object OBJ (the target object group OBG_cb) contained in the container CB. Then, the signal generation unit 312 may determine the position having no undulations (for example, the position at which there is no target object OBJ whose vertex, edge, or corner faces upwardly that may be the undulations, as described above) in the container CB based on the calculated result of the pose of the target object OBJ (the target object group OBG_cb) contained in the container CB, then generate the robot control signal so that at least the non-process performed object OBJ_ntgt drops to the determined position.

However, in a case where the position of the target object OBJ contained in the container CB has already been calculated by the position pose calculation unit 311 at the step S12 in FIG. 5, the signal generation unit 312 may use the position of the target object OBJ calculated at the step S12 in FIG. 5 as the position of the target object OBJ (the target object group OBG_cb) contained in the container CB.

Alternatively, the position pose calculation unit 311 may calculate the position of the target object OBJ (the target object group OBG_cb) contained in the container CB separately from the step S12 in FIG. 5. In this case, the position pose calculation unit 311 may calculate the position of the target object OBJ (the target object group OBG_cb) contained in the container CB by using the image data IMG, which is generated by the imaging apparatus 21 imaging the target object group OBG_cb after the end effector 4 holds the process performed object OBJ_tgt based on the robot control signal generated at the step S13 in _FIG. 5. Then, the signal generation unit 312 may determine the position at which there is no target object OBJ (target object group OBG_cb) in the container CB, based on the new calculated result of the position of the target object OBJ (the target object group OBG_cb) contained in the container CB.

Incidentally, in a case where the process performed object OBJ_tgt drops into the container CB together with the non-process performed object OBJ_ntgt, the signal generation unit 312 may control the robot control signal so that the process performed object OBJ_tgt drops to a desired position in the container CB. For example, the signal generation unit 312 may control the robot control signal so that the process performed object OBJ_tgt drops to a position at which there is no target object OBJ (target object group OBG_cb) in the container CB.

However, the signal generation unit 312 may control the robot control signal so that at least one of the non-process performed object OBJ_ntgt and the process performed object OBJ_tgt drops to a position at which there is the target object OBJ (the target object group OBG_cb) in the container CB.

### (4-1-5) Other Example of Calculation Method of Object Height Ho

In the above-described description, the control apparatus 3 (especially, the false hold detection unit 313) calculates the object height Ho by using the image data IMG generated by the imaging system 2 in order to set (control) the drop height Hd. however, the control apparatus 3 may calculate the object height Ho by using a height calculation method that is different from a height calculation method using the image data IMG generated by the imaging system 2. Next, a specific example of the height calculation method, which is different from the method using the image data IMG generated by the imaging system 2, will be described.

### (4-1-5-1) First Height Calculation Method using Imaging System 91a different from Imaging System 2

The control apparatus 3 may calculate the object height Ho by using an imaging system 91a that is different from imaging system 2. For example, in a case where the robot system SYS includes the imaging system 91a, the control apparatus 3 may calculate the object height Ho by using the imaging system 91a of the robot system SYS. For example, in a case where the robot system SYS does not include the imaging system 91a, the control apparatus 3 may calculate the object height Ho by using the imaging system 91a external to the robot system SYS. The imaging system 91a may be positioned at a position and a pose that allow an imaging field of view of the imaging system 91a to include as many target objects OBJ as possible.

The imaging system 91a may be attached to the robot 1. The imaging system 91a may be attached to the robot arm 12. The imaging system 91a may be attached to a part that is different from the robot 1 (especially, the robot arm 12). For example, the imaging system 91a may be attached to a ceiling of a building in which the robot system SYS is installed. For example, the imaging system 91a may be attached to a robot that is different from the robot 1. For example, the imaging system 91a may be attached to a structural object such as a pillar.

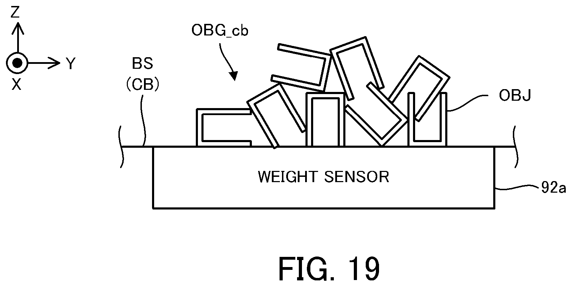

As illustrated in FIG. 19 that is a cross-sectional view illustrating the imaging system 91a, the imaging system 91a is configured to image the target object group OBG contained in the container CB. The imaging system 91a is configured to image the target object group OBG contained in the container CB to generate image data indicating an image in which the target object group OBG is captured. The control apparatus 3 may calculate the object height Ho by using the image data generated by the imaging system 91a.

Note that a method for calculating the object height Ho by using the image data generated by the imaging system 91a may be the same as a method for calculating the object height Ho by using the image data IMG generated by the imaging system 2. For example, the control apparatus 3 may calculate the object height Ho by analyzing the image indicated by the image data generated by the imaging system 91a. The control apparatus 3 may calculate the object height Ho by performing the matching processing using the image data generated by the imaging system 91a. the control apparatus may generate three-dimensional position data (for example, point cloud data) from the image data generated by the imaging system 91a, and calculate the object height Ho by using the generated three-dimensional position data.

Thus, according to a first height calculation method, the control apparatus 3 calculates the object height Ho by using the imaging system 91a. In this case, the imaging system 91a may be considered to serve as a measurement apparatus that is configured to directly or indirectly measure the object height Ho.

### (4-1-5-2) Second Height Calculation Method using Weight Sensor 92a

The control apparatus 3 may calculate the object height Ho by using a weight sensor 92a. For example, as illustrated in FIG. 19 that is a cross-sectional view illustrating the weight sensor 92a, the weight sensor 92a is configured to measure a weight of the target object group OBG contained in the container CB. In this case, the weight sensor 92a may be built into the container CB. Alternatively, the container CB may be positioned on the weight sensor 92a and the target object group OBG may be contained in the container CB that is positioned on the weight sensor 92a. A measured result by the weight sensor 92a (namely, a measured result of the weight of the target object group OBG) is output to the control apparatus 3.

The control apparatus 3 may calculate the object height Ho based on the measured result by the weight sensor 92a (namely, the measured result of the weight of the target object group OBG). Specifically, it is expected that the weight of the target object group OBG is heavier and the object height Ho is higher as the number of target objects OBJ included in the target object group OBG contained in the container CB is larger. In other words, it is expected that the weight of the target object group OBG is lighter and the object height Ho is lower as the number of target objects OBJ included in the target object group OBG contained in the container CB is smaller. Namely, it is expected that the weight of the target object group OBG and the object height Ho have a relationship that the object height Ho is higher as the weight of the target object group OBG is heavier. In other words, namely, it is expected that the weight of the target object group OBG and the object height Ho have a relationship that the object height Ho is lower as the weight of the target object group OBG is lighter. The control apparatus 3 may calculate (in this case, estimate) the object height Ho based on the measured result by the weight sensor 92a (namely, the measured result of the weight of the target object group OBG) by using this relationship. For example, the control apparatus 3 may calculate (in this case, estimate) the object height Ho by using a table, which indicates the relationship between the object height Ho and the weight of the target object group OBG, and the measured result by the weight sensor 92a.

Thus, according to a second height calculation method, the control apparatus 3 calculates the object height Ho by using the weight sensor 92a that is configured to measure the weight, which is a parameter different from the height. In this case, the weight sensor 92a may be considered to serve as a measurement apparatus that is configured to indirectly measure the object height Ho.

### (4-1-5-3) Third Height Calculation Method using Object Detection Sensor 93a

The control apparatus 3 may calculate the object height Ho by using an object detection sensor 93a. For example, in a case where the robot system SYS includes the object detection sensor 93a, the control apparatus 3 may calculate the object height Ho by using the object detection sensor 93a of the robot system SYS. For example, in a case where the robot system SYS does not include the object detection sensor 93a, the control apparatus 3 may calculate the object height Ho by using the object detection sensor 93a external to the robot system SYS.

The object detection sensor 93a is configured to detect the target object OBJ. For example, the object detection sensor 93a may be an optical sensor, such as a photoelectric sensor, that is configured to detect the target object OBJ by emitting detection light toward the target object OBJ and detecting reflected light from the target object OBJ. However, the object detection sensor 93a may be an optical sensor that is different from the photoelectric sensor. Moreover, as long as the object detection sensor 93a is configured to detect the target object OBJ, the object detection sensor 93a may be an existing sensor that is different from the optical sensor.

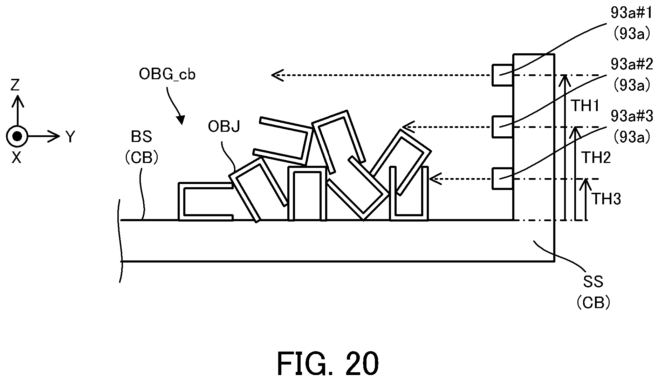

The object detection sensor 93a may be positioned at a desired position so that the object height Ho can be calculated based on a detected result of the target object OBJ by the object detection sensor 93a. For example, as illustrated in FIG. 20, a plurality of object detection sensors 93a may be positioned at mutually different heights, respectively. In the example illustrated in FIG. 20, three object detection sensors 93a (specifically, the object detection sensor 93a#1, the object detection sensor 93a#2, and the object detection sensor 93a#3) are positioned at a first height TH1, a second height TH2, and a third height TH3 that are different from one another on the side wall SS of the container CB, respectively. Note that each of the first height TH1, the second height TH2, and the third height TH3 may mean the height from the above-described reference plane (for example, the bottom surface of the bottom wall BS of the container CB), and may mean the Z coordinate value in the global coordinate system or the like. Moreover, the first height TH1 is higher than the second height TH2, and the second height TH2 is higher than the third height TH3. Furthermore, in the example illustrated in FIG. 20, each object detection sensor 93a emits the detection light along a horizontal direction. In this case, each object detection sensor 93a may detect the target object OBJ that is positioned at the height at which each object detection sensor 93a is positioned. For example, object detection sensor 93a#1 may detect the target object OBJ that is positioned at the first height TH1. For example, the object detection sensor 93a#2 may detect the target object OBJ that is positioned at the second height TH2. For example, the object detection sensor 93a#3 may detect the target object OBJ that is positioned at a third height TH3.

The detected results by the plurality of object detection sensors 93a are output to the control apparatus 3. The control apparatus 3 may calculate the object height Ho based on the detected results by the plurality of object detection sensors 93a. For example, in a case where one object detection sensor 93a positioned at one height detects the target object OBJ (namely, the detection light is irradiated onto the target object OBJ, and the reflected light from the target object OBJ returns to the one object detection sensor 93a), it is expected that the object height Ho is higher than the one height. On the other hand, in a case where the object detection sensor 93a positioned at the one height does not detect the target object OBJ (namely, the detection light is not irradiated onto the target object OBJ, and the reflected light from the target object OBJ does not return to the object detection sensor 93a), it is expected that the object height Ho is lower than the one height. Therefore, the control apparatus 3 can calculate (in this case, estimate) the object height Ho (especially, the approximate object height Ho) based on the detected results by the plurality of object detection sensors 93a. For example, in a case where all object detection sensors 93a#1 to 93#3 have detected the target object OBJ, the control apparatus 3 may calculate a height that is equal to or higher than the first height TH1 as the object height Ho. For example, in a case where the object detection sensor 93a#1 has not detected the target object OBJ and the object detection sensors 93a#2 to 93#3 have detected the target object OBJ, the control apparatus 3 may calculate a height that is equal to or higher than the second height TH2 and that is equal to or lower than the first height TH1 as the object height Ho. For example, in a case where the object detection sensors 93a#1 to 93#2 have not detected the target object OBJ and the object detection sensor 93a#3 has detected the target object OBJ, the control apparatus 3 may calculate a height that is equal to or higher than the third height TH3 and that is equal to or lower than the second height TH2 as the object height Ho. For example, in a case where none of the object detection sensors 93a#1 to 93#3 have detected the target object OBJ, the control apparatus 3 may calculate a height that is equal to or lower than the third height TH3 as the object height Ho.

Calculating the object height Ho based on the detected results by the plurality of object detection sensors 93a may be considered to be equivalent to calculating the object height Ho based on the number of object detection sensors 93a that have not detected the target object OBJ. For example, in a case where the number of object detection sensors 93a that have not detect the target object OBJ is zero (namely, all object detection sensors 93a#1 to 93#3 detect the target object OBJ), the control apparatus 3 may calculate a height that is equal to or higher than the first height TH1 as the object height Ho. For example, in a case where the number of object detection sensors 93a that have not detect the target object OBJ is one (namely, the object detection sensor 93a#1 has not detected the target object OBJ and the object detection sensors 93a#2 to 93#3 have detected the target object OBJ), the control apparatus 3 may calculate a height that is equal to or higher than the second height TH2 and that is equal to or lower than the first height TH1 as the object height Ho. For example, in a case where the number of object detection sensors 93a that have not detected the target object OBJ is two (namely, the object detection sensors 93a#1 to 93#2 have not detected the target object OBJ and the object detection sensor 93a#3 has detected the target object OBJ), the control apparatus 3 may calculate a height that is equal to or higher than the third height TH3 and that is equal to or lower than the second height TH2 as the object height Ho. For example, in a case where the number of object detection sensors 93a that have not detected the target object OBJ is zero (namely, none of object detection sensors 93a#1 to 93#3 have detected the target object OBJ), the control apparatus 3 may calculate a height that is equal to or lower than the third height TH3 as the object height Ho.

Thus, according to the third height calculation method, the control apparatus 3 calculates the object height Ho by using the object detection sensors 93a. In this case, the object detection sensors 93a may be considered to serve as a measurement apparatuses that is configured to directly measure the object height Ho.

### (4-1-5-4) Fourth Height Calculation Method using Marker 94a

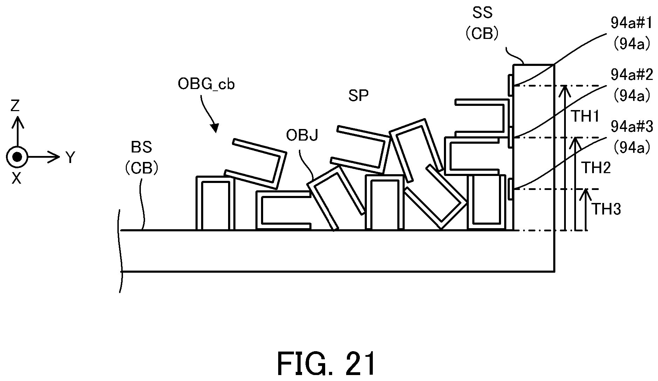

The control apparatus 3 may calculate the object height Ho by using a marker 94a. Specifically, as illustrated in FIG. 21 that illustrates the marker 94a, the marker 94a may be positioned on the container CB in which the target object OBJ is contained. Especially, the marker 94a may be placed on a surface (usually, an inner surface) of the container CB facing the containing space SP in which the target object OBJ is contained. As one example, the marker 94a may be positioned on the side wall SS of the container CB facing the containing space SP.

The marker 94a may be detachable from the container CB. The marker 94a may be fixed to the container CB. The marker 94a may be formed on the container CB. For example, the marker 94a may be printed on the container CB. For example, the marker 94a may be engraved on the container CB using laser light or the like.

The marker 94a is a marker that can be imaged by the imaging system 2 (alternatively, the imaging system 91a used in the first height calculation method, the same applies in the below-described description of the fourth height calculation method). However, since the marker 94a is positioned at a position facing the containing space SP for the target object OBJ, the imaging system 2 cannot image the marker 94a in a case where the marker 94a is hidden by the target object OBJ.

The marker 94a may be positioned at a desired position so that the object height Ho can be calculated based on the imaged result of the marker 94a by the imaging system 2 (namely, the image data IMG generated by the imaging system 2 imaging the marker 94a). For example, as illustrated in FIG. 21, a plurality of markers 94a may be positioned at mutually different heights, respectively. In the example illustrated in FIG. 21, three markers 94a (specifically, the marker 94a#1, the marker 94a#2, and the marker 94a#3) are positioned at a first height TH1, a second height TH2, and a third height TH3 that are different from one another on the side wall SS of the container CB, respectively. Note that each of the first height TH1, the second height TH2, and the third height TH3 may mean the height from the above-described reference plane, and may mean the Z coordinate value in the global coordinate system or the like. Moreover, the first height TH1 is higher than the second height TH2, and the second height TH2 is higher than the third height TH3.

In this case, the control apparatus 3 may calculate the object height Ho based on the imaged result of the markers 94a by the imaging system 2. For example, in a case where one marker 94a positioned at one height is not captured in the image generated by the imaging system 2 (namely, in a case where the marker 94a cannot be detected based on the image data that is the imaged result by the imaging system 2), it is expected that the one marker 94a is hidden by the target object OBJ. In this case, it is expected that the target object OBJ is positioned at the one height at which the one marker 94a is positioned or at a position that is higher than the one height. As a result, it is expected that the object height Ho is higher than the one height. On the other hand, for example, in a case where one marker 94a positioned at one height is captured in the image generated by the imaging system 2 (namely, in a case where the marker 94a can be detected based on the image data that is the imaged result by the imaging system 2), it is expected that the one marker 94a is not hidden by the target object OBJ. In this case, it is expected that the target object OBJ is not positioned at the one height at which the one marker 94a is positioned or at a position that is higher than the one height. As a result, it is expected that the object height Ho is lower than the one height. Therefore, the control apparatus 3 can calculate (in this case, estimate) the object height Ho (especially, the approximate object height Ho) based on the imaged result of the marker 94a by the imaging system 2. For example, in a case where none of the markers 94a#1 to 94a#3 are captured in the image generated by the imaging system 2, the control apparatus 3 may calculate a height that is equal to or higher than the first height TH1 as the object height Ho. For example, in a case where the marker 94a#1 is captured in the image generated by the imaging system 2 and the markers 94a#2 to 94a#3 are not captured in the image generated by the imaging system 2, the control apparatus 3 may calculate a height that is equal to or higher than the second height TH2 and that is equal to or lower than the first height TH1 as the object height Ho. For example, in a case where the markers 94a#1 and 94a#2 are captured in the image generated by the imaging system 2 and the marker 94a#3 is not captured in the image generated by the imaging system 2, the control apparatus 3 may calculate a height that is equal to or higher than the third height TH3 and that is equal to or lower than the second height TH2 as the object height Ho. For example, in a case where all markers 94a#1 to 94a#3 are captured in the image generated by the imaging system 2, the control apparatus 3 may calculate a height that is equal to or lower than the third height TH3 as the object height Ho.

The control apparatus 3 may calculate the object height Ho by using the image data IMG acquired at the step S11 in FIG. 5 as the imaged result of the markers 94a by the imaging system 2. In this case, the imaging system 2 may not newly image the marker 94a to calculate the height H. However, the imaging system 2 may newly image the marker 94a to calculate the object height Ho. The control apparatus 3 may calculate the object height Ho by using the image data IMG generated by the imaging system 2 newly imaging the marker 94a to calculate the object height Ho, without using the image data IMG acquired at the step S11 in FIG. 5 as the imaged result of the marker 94a by the imaging system 2.

Calculating the object height Ho based on the imaged result of the marker 94a by the imaging system 2 may be considered to be equivalent to calculating the object height Ho based on the number of markers 94a detected based on the imaged result of the marker 94a by the imaging system 2. For example, in a case where the number of detected markers 94a is zero (namely, none of the markers 94a#1 to 94a#3 are captured in the image generated by the imaging system 2), the control apparatus 3 may calculate a height that is equal to or higher than the first height TH1 as the object height Ho. For example, in a case where the number of detected markers 94a is one (namely, the marker 94a#1 is captured in the image generated by the imaging system 2 and the markers 94a#2 to 94a#3 are not captured in the image generated by the imaging system 2), the control apparatus 3 may calculate a height that is equal to or higher than the second height TH2 and that is equal to or lower than the first height TH1 as the object height Ho. In a case where the number of detected markers 94a is two (namely, the markers 94a#1 and 94a#2 are captured in the image generated by the imaging system 2 and the marker 94a#3 is not captured in the image generated by the imaging system 2), the control apparatus 3 may calculate a height that is equal to or higher than the third height TH3 and that is equal to or lower than the second height TH2 as the object height Ho. For example, in a case where the number of detected markers 94a is three (namely, all markers 94a#1 to 94a#3 are captured in the image generated by the imaging system 2), the control apparatus 3 may calculate a height that is equal to or lower than the third height TH3 as the object height Ho.

Shapes of the plurality of markers 94a may be different from each other. In this case, the control apparatus 3 may calculate the object height Ho based on the shape of the marker 94a captured in the image generated by the imaging system 2. For example, an example in which the marker 94a#1 has a first shape, the marker 94a#2 has a second shape that is different from the first shape, and the marker 94a#3 has a third shape that is different from the first to second shapes in the example illustrated in FIG. 21 will be described. In this case, in a case where the shape of the marker 94a captured in the image generated by the imaging system 2 is only the first shape (namely, only the marker 94a#1 is captured in the image generated by the imaging system 2), the control apparatus 3 may calculate a height that is equal to or higher than the second height TH2 and that is equal to or lower than the first height TH1 as the object height Ho. For example, in a case where the shapes of the markers 94a captured in the image generated by the imaging system 2 are only the first and second shapes (namely, only the markers 94a#1 to 94a#2 are captured in the image generated by the imaging system 2), the control apparatus 3 may calculate a height that is equal to or higher than the third height TH3 and that is equal to or lower than the second height TH2 as the object height Ho. For example, in a case where the shapes of the marker 94a captured in the image generated by the imaging system 2 are the first to third shapes (namely, all markers 94a#1 to 94a#3 are captured in the image generated by the imaging system 2), the control apparatus 3 may calculate a height that is equal to or lower than the third height TH3 as the object height Ho.

Thus, according to the fourth height calculation method, the control apparatus 3 calculates the object height Ho by using the markers 94a and the imaging system 2. In this case, the imaging system 2 may be considered to serve as a measurement apparatus that is configured to directly measure the object height Ho, and the marker 94a may be considered to serve as a measurement member that is configured to directly measure the object height Ho.

### (4-1-5-5) Fifth Height Calculation Method using Number of Target Object OBJ (Non-Process Performed Object OBJ_ntgt) released by End Effector 4

The control apparatus 3 may calculate the object height Ho by using information related to the number of target objects OBJ that has been released outside the container CB by the end effector 4. Note that the information related to the number of target objects OBJ that has been released outside the container CB by the end effector 4 is known information to the control apparatus 3, because the end effector 4 releases the target object OBJ under the control of the control apparatus 3.

Specifically, it is expected that the number of target objects remaining in the container CB is smaller and the object height Ho is lower as the number of target objects OBJ that has been released by the end effector 4 (namely, the number of target objects OBJ that has been taken out from the container CB) is larger. In other words, it is expected that the number of target objects remaining in the container CB is larger and the object height Ho is higher as the number of target objects OBJ that has been released by the end effector 4 is smaller. Namely, it is expected that the number of target objects OBJ that has been released by the end effector 4 and the object height Ho have a relationship that the object height Ho is higher as the number of target objects OBJ that has been released by the end effector 4 is smaller. In other words, namely, it is expected that the number of target objects OBJ that has been released by the end effector 4 and the object height Ho have a relationship that the object height Ho is lower as the number of target objects OBJ that has been released by the end effector 4 is larger. The control apparatus 3 may calculate (in this case, estimate) the object height Ho based on the information related to the number of target objects OBJ that has been released by the end effector 4 by using this relationship. For example, the control apparatus 3 may calculate (In this case, estimate) the object height Ho by using a table, which indicates the relationship between the object height Ho and the number of target objects OBJ that has been released by the end effector 4, and the information related to the number of target objects OBJ that has been released by the end effector 4.

### (4-1-6) Control of Drop Height Hd using Parameter different from Object Height Ho

In the above-described description, the control apparatus 3 controls the drop height Hd, which indicates the height (namely, the position in the Z-axis direction) from which the non-process performed object OBJ_ntgt starts to drop, based on the object height Ho, which is the height of the target object group OBG_cb contained in the container CB. Here, it can be said that the object height Ho of the target object group OBG_cb contained in the container CB is a parameter indicating a quantity of the target object group OBG_cb contained in the container CB (namely, a quantity of the target object OBJ included in the target object group OBG_cb). This is because it can be said that the quantity of the target object group OBG_cb is larger as the object height Ho of the target object group OBG_cb is higher. In other words, it can be said that the quantity of the target object group OBG_cb is smaller as the object height Ho of the target object group OBG_cb is lower.

Considering that the object height Ho of the target object group OBG_cb is considered to be equivalent to the quantity of the target object group OBG_cb, the control apparatus 3 may control the drop height Hd based on the quantity of the target object group OBG_cb in addition to or instead of the object height Ho of the target object group OBG_cb, in a case where any parameter that is different from the object height Ho indicates the quantity of the target object group OBG_cb. In this case, the quantity of the target object group OBG_cb contained in the container CB may mean a quantity of all of the plurality of target objects OBJ contained in the container CB (namely, the quantity of the target object group OBG_cb that includes all of the plurality of target objects OBJ contained in the container CB). Alternatively, the quantity of the target object group OBG_cb contained in the container CB may mean a quantity of a part of the plurality of target objects OBJ contained in the container CB (namely, the quantity of the target object group OBG_cb that includes a part of the plurality of target objects OBJ contained in the container CB). For example, the target object group OBG_cb for which the quantity is calculated may be the target object group OBG_cb that includes at least one target object OBJ imaged by the imaging system 2 to adjust the drop height Hd of the imaging system 2. For example, the target object group OBG_cb for which the quantity is calculated may be the target object group OBG_cb that includes at least one target object OBJ imaged by the imaging system 2 to control the drop height Hd. For example, the target object group OBG_cb for which the quantity is calculated may be the target object group OBG_cb that includes at least one target object OBJ included in the imaging field of view of the imaging system 2 that images the target object OBJ to control the drop height Hd.

The quantity of whole of the target object group OBG_cb may be used as the quantity of the target object group OBG_cb. For example, the quantity of whole of the plurality of target objects OBJ included in the target object group OBG_cb may be used as the quantity of the target object group OBG_cb. Alternatively, the quantity of a part of the target object group OBG_cb may be used as the quantity of the target object group OBG_cb. For example, the quantity of at least one target object OBJ, which is selected from the plurality of target objects OBJ included in the target object group OBG_cb based on a desired selection condition, may be used as the quantity of the target object group OBG_cb.

The number of target objects OBJ included in the target object group OBG_cb is one example of the parameter that indicates the quantity of the target object group OBG_cb. A weight of the target object group OBG_cb (namely, a weight of the target objects OBJ included in the target object group OBG_cb) is one example of the parameter that indicates the quantity of the target object group OBG_cb. A volume of the target object group OBG_cb (namely, a volume of the target objects OBJ included in the target object group OBG_cb) is one example of the parameter that indicates the quantity of the target object group OBG_cb.

Next, the examples of the parameter that indicates the quantity of the target object group OBG_cb will be described specifically.

### (4-1-6-1) Number of Target Object OBJ included in Target Object Group OBG_cb

The control apparatus 3 may control the drop height Hd based on the number of target objects OBJ included in the target object group OBG_cb. In this case, the control apparatus 3 may control the drop height Hd so that the drop height Hd is lower as the number of target objects OBJ included in the target object group OBG_cb is smaller. The control apparatus 3 may control the drop height Hd so that the drop height Hd is higher as the number of target objects OBJ included in the target object group OBG_cb is larger. The control apparatus 3 may control the drop height Hd based on the number of target objects OBJ included in the target object group OBG_cb by using a table that indicates a relationship between the number of target objects OBJ included in the target object group OBG_cb and the drop height Hd. In this case, an effect, which is the same as an effect that is achievable in a case where the drop height Hd is determined based on the object height Ho of the target object group OBG_cb described above, is achievable. This is because it is expected that the number of target objects OBJ included in the target object group OBG_cb and the object height Ho of the target object group OBG_cb have a relationship that the object height Ho is higher as the number of target objects OBJ included in the target object group OBG_cb is larger (namely, the object height Ho is lower as the number of target objects OBJ included in the target object group OBG_cb is smaller).

The control apparatus 3 may calculate the number of target objects OBJ included in the target object group OBG_cb and control the drop height Hd based on the calculated number.

As a first example, the control apparatus 3 may calculate the number of target objects OBJ included in the target object group OBG_cb by using the image data IMG generated by the imaging system 2 (alternatively, the image data generated by the imaging system 91a used by the first height calculation method described above, the same applies in the below-described description). For example, the control apparatus 3 may calculate the number of target objects OBJ included in the target object group OBG_cb by analyzing the image indicated by the image data IMG. Alternatively, the control apparatus 3 may calculate the number of target objects OBJ included in the target object group OBG_cb by using the three-dimensional position data (for example, the point cloud data) generated from the image data IMG, in addition to or instead of analyzing the image indicated by the image data IMG. In this case, the imaging system 2 (alternatively, the imaging system 91a) may be considered to serve as a measurement apparatus that is configured to indirectly measure the number (the quantity) of target objects OBJ included in the target object group OBG_cb.

As a second example, the control apparatus 3 may calculate the number of target objects OBJ included in the target object group OBG_cb based on the measured result by the weight sensor 92a used by the second height calculation method described above (namely, the measured result of the weight of the target object group OBG_cb). Specifically, it is expected that the weight of the target object group OBG_cb is heavier as the number of target objects OBJ included in the target object group OBG_cb is larger. In other words, it is expected that the weight of the target object group OBG_cb is lighter as the number of target objects OBJ included in the target object group OBG_cb is smaller. Namely, it is expected that the number of target objects OBJ included in the target object group OBG_cb and the weight of the target object group OBG_cb have a relationship that the number of target objects OBJ included in the target object group OBG_cb is larger as the weight of the target object group OBG_cb is heavier. In other words, it is expected that the number of target objects OBJ included in the target object group OBG_cb and the weight of the target object group OBG_cb have a relationship that the number of target objects OBJ included in the target object group OBG_cb is smaller as the weight of the target object group OBG_cb is lighter. The control apparatus 3 may calculate (in this case, estimate) the number of target objects OBJ included in the target object group OBG_cb based on the measured result by the weight sensor 92a (namely, the measured result of the weight of the target object group OBG_cb) by using this relationship. For example, the control apparatus 3 may calculate (in this case, estimate) the number of target objects OBJ included in the target object group OBG) by using a table, which indicates the relationship between the number of target objects OBJ included in the target object group OBG_cb and the weight of the target object group OBG_cb, and the measured result by the weight sensor 92a. In this case, the weight sensor 92a may be considered to serve as a measurement apparatus that is configured to indirectly measure the number (the quantity) of target objects OBJ included in the target object group OBG_cb.

As a third example, the control apparatus 3 may calculate the number of target objects OBJ included in the target object group OBG_cb based on the information that is related to the number of target objects OBJ that has been released by the end effector 4 and that is used by the fifth height calculation method described above. For example, the control apparatus 3 may calculate, as the number of target objects OBJ included in the target object group OBG_cb (namely, the number of target objects OBJ remaining in the container CB), a number that is calculated by subtracting the number of target objects OBJ, which has been released by the end effector 4, from the number of target objects OBJ, which has been contained in the container CB before starting the robot control processing.

Note that the control apparatus 3 may calculate the number of target objects OBJ included in the target object group OBG_cb based on the detected result by the object detection sensor 93a used by the third height calculation method described above. The control apparatus 3 may calculate the number of target objects OBJ included in the target object group OBG_cb based on the imaged result of the marker 94a used by the fourth height calculation method described above. This is because it is expected that the number of target objects OBJ included in the target object group OBG_cb and the object height Ho of the target object group OBG_cb have a relationship that the number of target objects OBJ included in the target object group OBG_cb is larger as the object height Ho of the target object group OBG_cb is higher (namely, the number of target objects OBJ included in the target object group OBG_cb is smaller as the object height Ho of the target object group OBG_cb is lower).

### (4-1-6-2) Weight of Target Object Group OBG_cb

The control apparatus 3 may control the drop height Hd based on the weight of the target object group OBG_cb. In this case, the control apparatus 3 may control the drop height Hd so that the drop height Hd is lower as the weight of the target object group OBG_cb is lighter. The control apparatus 3 may control the drop height Hd so that the drop height Hd is higher as the weight of the target object group OBG_cb is heavier. The control apparatus 3 may control the drop height Hd based on the weight of the target object group OBG_cb by using a table that indicates a relationship between the weight of the target object group OBG_cb and the drop height Hd. In this case, an effect, which is the same as an effect that is achievable in a case where the drop height Hd is determined based on the object height Ho described above, is achievable. This is because it is expected that the weight of the target object group OBG_cb and the object height Ho of the target object group OBG_cb have a relationship that the object height Ho of the target object group OBG_cb is higher as the weight of the target object group OBG_cb is heavier (namely, the object height Ho of the target object group OBG_cb is lower as the weight of the target object group OBG_cb is lighter).

The control apparatus 3 may calculate the weight of the target object group OBG_cb and control the drop height Hd based on the calculated weight.

As a first example, the control apparatus 3 may calculate the weight of the target object group OBG_cb by using the image data IMG generated by the imaging system 2 (alternatively, the image data generated by the imaging system 91a used by the first height calculation method described above, the same applies in the below-described description). For example, the control apparatus 3 may calculate the weight of the target object group OBG_cb by analyzing the image indicated by the image data generated by the imaging system 2. Alternatively, the control apparatus 3 may calculate the weight of the target object group OBG_cb by using the three-dimensional position data (for example, the point cloud data) generated from the image data IMG, in addition to or instead of analyzing the image indicated by the image data IMG. In this case, the imaging system 2 (alternatively, the imaging system 91a) may be considered to serve as a measurement apparatus that is configured to indirectly measure the weight (the quantity) of target object group OBG_cb.

As a second example, the control apparatus 3 may calculate the weight of the target object group OBG_cb based on the measured result by the weight sensor 92a used by the second height calculation method described above (namely, the measured result of the weight of the target object group OBG_cb). In this case, the weight sensor 92a may be considered to serve as a measurement apparatus that is configured to directly measure the weight (the quantity) of the target object group OBG_cb.

As a third example, the control apparatus 3 may calculate the weight of the target object group OBG_cb based on the information that is related to the number of target objects OBJ released by the end effector 4 and that is used by the fifth height calculation method described above. Specifically, it is expected that the weight of the target object group OBG_cb remaining in the container CB is heavier as the number of target objects OBJ that has been released by the end effector 4 (namely, the number of target objects OBJ that has been taken out from the container CB) is smaller. In other words, it is expected that the weight of the target object group OBG_cb remaining in the container CB is lighter as the number of target objects OBJ that has been released by the end effector 4 (namely, the number of target objects OBJ that has been taken out from the container CB) is larger. Namely, it is expected that the number of target objects OBJ that has been released by the end effector 4 and the weight of the target object group OBG_cb has a relationship that the weight of the target object group OBG_cb is heavier as the number of target objects OBJ that has been released by the end effector 4 is smaller. In other words, it is expected that the number of target objects OBJ that has been released by the end effector 4 and the weight of the target object group OBG_cb has a relationship that the weight of the target object group OBG_cb is lighter as the number of target objects OBJ that has been released by the end effector 4 is larger. The control apparatus 3 may calculate (in this case, estimate) the weight of the target object group OBG_cb based on the information related to the number of target objects OBJ that has been released by the end effector 4 by using this relationship. For example, the control apparatus 3 may calculate (in this case, estimate) the weight of the target object group OBG_cb by using a table, which indicates the relationship between the number of target object OBJ that has been released by the end effector 4 and the weight of the target object group OBG_cb, and the information related to the number of target object OBJ that has been released by the end effector 4.

Note that the control apparatus 3 may calculate the weight of the target object group OBG_cb based on the detected result by the object detection sensor 93a that is used by the third height calculation method described above. The control apparatus 3 may calculate the weight of the target object group OBG_cb based on the imaged result of the marker 94a that is used by the fourth height calculation method described above. This is because it is expected that the weight of the target object group OBG_cb and the object height Ho of the target object group OBG_cb have a relationship that the weight of the target object group OBG_cb is heavier as the object height Ho of the target object group OBG_cb is higher (namely, the weight of the target object group OBG_cb is lighter as the object height Ho of the target object group OBG_cb is lower).

### (4-1-6-3) Volume of Target Object Group OBG_cb

The control apparatus 3 may control the drop height Hd based on the volume of the target object group OBG_cb. In this case, in this case, the control apparatus 3 may control the drop height Hd so that the drop height Hd is lower as the volume of the target object group OBG_cb is smaller. The control apparatus 3 may control the drop height Hd so that the drop height Hd is higher as the volume of the target object group OBG_cb is larger. The control apparatus 3 may control the drop height Hd based on the volume of the target object group OBG_cb by using a table that indicates a relationship between the volume of the target object group OBG_cb and the drop height Hd. In this case, an effect, which is the same as an effect that is achievable in a case where the drop height Hd is determined based on the object height Ho described above, is achievable. This is because it is expected that the volume of the target object group OBG_cb and the object height Ho of the target object group OBG_cb have a relationship that the object height Ho of the target object group OBG_cb is higher as the volume of the target object group OBG_cb is larger (namely, the object height Ho of the target object group OBG_cb is lower as the volume of the target object group OBG_cb is smaller).

The control apparatus 3 may calculate the volume of the target object group OBG_cb and control the drop height Hd based on the calculated volume.

As a first example, the control apparatus 3 may calculate the volume of the target object group OBG_cb by using the image data IMG generated by the imaging system 2 (alternatively, the image data generated by the imaging system 91a used by the first height calculation method described above, the same applies in the below-described description). For example, the control apparatus 3 may calculate the volume of the target object group OBG_cb by analyzing the image indicated by the image data generated by the imaging system 2. Alternatively, the control apparatus 3 may calculate the volume of the target object group OBG_cb by using the three-dimensional position data (for example, the point cloud data) generated from the image data IMG, in addition to or instead of analyzing the image indicated by the image data IMG. In this case, the imaging system 2 may be considered to serve as a measurement apparatus that is configured to indirectly measure the volume (the quantity) of target object group OBG_cb.

As a second example, the control apparatus 3 may calculate the volume of the target object group OBG_cb based on the measured result by the weight sensor 92a used by the second height calculation method described above (namely, the measured result of the volume of the target object group OBG_cb). Specifically, it is expected that the weight of the target object group OBG_cb is heavier as the volume of the target object group OBG_cb is larger. In other words, it is expected that the weight of the target object group OBG_cb is lighter as the volume of the target object group OBG_cb is smaller. Namely, it is expected that the volume of the target object group OBG_cb and the weight of the target object group OBG_cb have a relationship that the volume of the target object group OBG_cb is larger as the weight of the target object group OBG_cb is heavier. In other words, it is expected that the volume of the target object group OBG_cb and the weight of the target object group OBG_cb have a relationship that the volume of the target object group OBG_cb is smaller as the weight of the target object group OBG_cb is lighter. The control apparatus 3 may calculate (in this case, estimate) the volume of the target object group OBG_cb based on the measured result by the weight sensor 92a (namely, the measured result of the weight of the target object group OBG_cb) by using this relationship. For example, the control apparatus 3 may calculate (in this case, estimate) the volume of the target object group OBG_cb by using a table, which indicates the relationship between the volume of the target object group OBG_cb and the weight of the target object group OBG_cb, and the measured result by the weight sensor 92a. In this case, the weight sensor 92a may be considered to serve as a measurement apparatus that is configured to directly measure the volume (the quantity) of the target object group OBG_cb.

As a third example, the control apparatus 3 may calculate the volume of the target object group OBG_cb based on the information that is related to the number of target objects OBJ released by the end effector 4 and that is used by the fifth height calculation method described above. Specifically, it is expected that the volume of the target object group OBG_cb remaining in the container CB is larger as the number of target objects OBJ that has been released by the end effector 4 (namely, the number of target objects OBJ that has been taken out from the container CB) is smaller. In other words, it is expected that the volume of the target object group OBG_cb remaining in the container CB is smaller as the number of target objects OBJ that has been released by the end effector 4 (namely, the number of target objects OBJ that has been taken out from the container CB) is larger. Namely, it is expected that the number of target objects OBJ that has been released by the end effector 4 and the volume of the target object group OBG_cb has a relationship that the volume of the target object group OBG_cb is larger as the number of target objects OBJ that has been released by the end effector 4 is smaller. In other words, it is expected that the number of target objects OBJ that has been released by the end effector 4 and the volume of the target object group OBG_cb has a relationship that the volume of the target object group OBG_cb is smaller as the number of target objects OBJ that has been released by the end effector 4 is larger. The control apparatus 3 may calculate (in this case, estimate) the volume of the target object group OBG_cb based on the information related to the number of target objects OBJ that has been released by the end effector 4 by using this relationship. For example, the control apparatus 3 may calculate (in this case, estimate) the volume of the target object group OBG_cb by using a table, which indicates the relationship between the number of target object OBJ that has been released by the end effector 4 and the volume of the target object group OBG_cb, and the information related to the number of target object OBJ that has been released by the end effector 4.

Note that the control apparatus 3 may calculate the volume of the target object group OBG_cb based on the detected result by the object detection sensor 93a that is used by the third height calculation method described above. The control apparatus 3 may calculate the volume of the target object group OBG_cb based on the imaged result of the marker 94a that is used by the fourth height calculation method described above. This is because it is expected that the volume of the target object group OBG_cb and the object height Ho of the target object group OBG_cb have a relationship that the volume of the target object group OBG_cb is larger as the object height Ho of the target object group OBG_cb is higher (namely, the volume of the target object group OBG_cb is smaller as the object height Ho of the target object group OBG_cb is lower).

### (4-2) Second Modified Example

In a second modified example, the signal generation unit 312 may generate a second robot control signal for controlling at least one of the robot 1 and the end effector 4 in a control aspect, which is different from a control aspect based on a first robot control signal, to drop at least the non-process performed object OBJ_ntgt into the container CB, in a case where it is determined that at least the non-process performed object OBJ_ntgt has not dropped after at least one of the robot 1 and the end effector 4 is controlled based on the first robot control signal for dropping at least the non-process performed object OBJ_ntgt (the step S31 in FIG. 5: No). Namely, in a case where the processing for dropping at least the non-process performed object OBJ_ntgt into the container CB fails by controlling at least one of the robot 1 and the end effector 4 based on the first robot control signal, the control apparatus 3 may perform the processing for dropping at least the non-process performed object OBJ_ntgt into the container CB by controlling at least one of the robot 1 and the end effector 4 based on new second robot control signal. In other words, in a case where the processing for dropping at least the non-process performed object OBJ_ntgt into the container CB fails by a controlling at least one of the robot 1 and the end effector 4 in a first control aspect, the control apparatus 3 may perform the processing for dropping at least the non-process performed object OBJ_ntgt into the container CB by controlling at least one of the robot 1 and the end effector 4 in a second control aspect that is different from the first control aspect. Namely, in a case where the processing for dropping at least the non-process performed object OBJ_ntgt into the container CB fails, the control apparatus 3 may perform the processing for dropping at least the non-process performed object OBJ_ntgt into the container CB again after changing the control aspect of at least one of the robot 1 and the end effector 4 for dropping at least the non-process performed object OBJ_ntgt into the container CB.

In a case where the processing for dropping at least the non-process performed object OBJ_ntgt into the container CB is performed again after changing the control aspect of at least one of the robot 1 and the end effector 4 for dropping at least the non-process performed object OBJ_ntgt into the container CB in this manner, it is more likely that at least the non-process performed object OBJ_ntgt drops into the container CB, compared to a case where the processing for dropping the non-process performed object OBJ_ntgt into the container CB is not performed again.

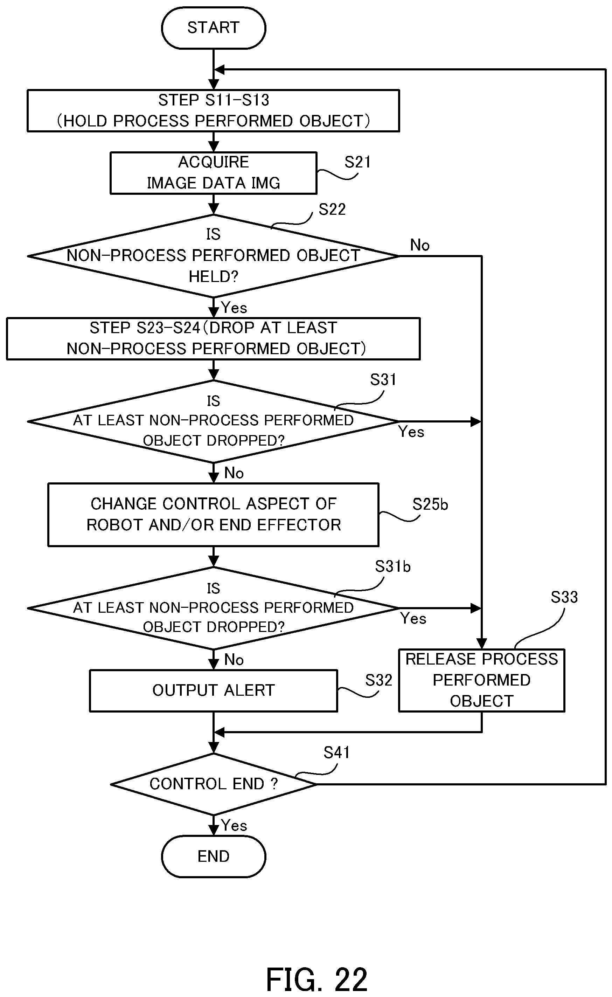

Next, with reference to FIG. 22, the robot control processing in the second modified example will be described. FIG. 22 is a flowchart that illustrates the flow of the robot control processing in the second modified example. Note that a detailed description of the processing that has been already described is omitted by assigning the same step number thereto.

As illustrated in FIG. 22, even in the second modified example, the control apparatus 3 controls at least one of the robot 1 and the end effector 4 to hold the process performed object OBJ_tgt (the step S11 to the step S13). Furthermore, even in the second modified example, in a case where it is determined that the end effector 4 is holding the non-process performed object OBJ_ntgt together with the process performed object OBJ_tgt (the step S22: Yes) , the control apparatus 3 controls at least one of the robot 1 and the end effector 4 to drop at least the non-process performed object OBJ_ntgt into the container CB (the step S23 to the step S24).

Then, in a case where it is determined that at least the non-process performed object OBJ_ntgt has not dropped into the container CB (the step S31: No) , the control apparatus 3 (especially, the signal generation unit 312) changes the control aspect of at least one of the robot 1 and the end effector 4 for dropping at least the non-process performed object OBJ_ntgt into the container CB (a step S25b). Namely, the signal generation unit 312 generates the robot control signal to drop at least the non-process performed object OBJ_ntgt into the container CB by controlling at least one of the robot 1 and the end effector 4 in a control aspect, which is different from the control aspect of at least one of the robot 1 and the end effector 4 that has been previously used to drop at least the non-process performed object OBJ_ntgt into the container CB (the step S25b).

The control aspect of the robot 1 may include a movement aspect of the end effector 4 controlled by the robot 1. In this case, in a case where it is determined that at least the non-process performed object OBJ_ntgt has not dropped into the container CB after moving the end effector 4 in a first movement aspect to drop at least the non-process performed object OBJ_ntgt into the container CB, the signal generation unit 312 may generate the robot control signal for controlling the robot 1 to drop the non-process performed object OBJ_ntgt by moving the end effector 4 in a second movement aspect that is different from the first movement aspect.

The movement aspect of the end effector 4 controlled by the robot 1 may include a movement type of the end effector 4. The movement type of the end effector 4 may indicate whether the end effector 4 translationally moves or rotationally moves. The movement aspect of the end effector 4 controlled by the robot 1 may include a movement direction of the end effector 4. The movement aspect of the end effector 4 controlled by the robot 1 may include a movement distance of the end effector 4. The movement aspect of the end effector 4 controlled by the robot 1 may include a speed (a movement speed) of the end effector 4. The movement aspect of the end effector 4 by the robot 1 may include an acceleration (a movement acceleration) of the end effector 4.

The control aspect of the end effector 4 may include the holding force of the end effector 4. In this case, in a case where it is determined that at least the non-process performed object OBJ_ntgt has not dropped into the container CB, the signal generation unit 312 may generate the robot control signal for controlling the end effector 4 to drop at least the non-process performed object OBJ_ntgt into the container CB by decreasing the holding force of the end effector 4.

In a case where it is determined that at least the non-process performed object OBJ_ntgt has not dropped into the container CB after the robot 1 is controlled (namely, the movement of the end effector 4 is controlled by the robot 1) to drop at least the non-process performed object OBJ_ntgt into the container CB, the signal generation unit 312 may change the control aspect of the end effector 4, in addition to or instead of changing the control aspect of the robot 1. For example, in a case where it is determined that at least one the non-process performed object OBJ_ntgt has not dropped into the container CB after the end effector 4 rotationally moves (namely, the pose of the end effector 4 changes) to drop at least one non-process performed object OBJ_ntgt into the container CB, the signal generation unit 312 may change (for example, may decrease) the holding force of the end effector 4, in addition to or instead of changing the control aspect of the robot 1 (namely, the movement aspect of the end effector 4 controlled by robot 1). In this case, it is expected to be more likely that at least the non-process performed object OBJ_ntgt drops into the container CB.

Similarly, in a case where it is determined that at least the non-process performed object OBJ_ntgt has not dropped into the container CB after the end effector 4 is controlled to drop at least the non-process performed object OBJ_ntgt into the container CB, the signal generation unit 312 may change the control aspect of the robot 1 (namely, the movement aspect of the end effector 4 controlled by the robot 1), in addition to or instead of changing the control aspect of the end effector 4. For example, in a case where it is determined that at least one the non-process performed object OBJ_ntgt has not dropped into the container CB after the holding force of the end effector 4 is decreased to drop at least one non-process performed object OBJ_ntgt into the container CB, the signal generation unit 312 may control the robot 1 to move (for example, rotationally move) the end effector 4, in addition to or instead of changing the control aspect (for example, the holding force) of the end effector 4. In this case, it is expected to be more likely that at least the non-process performed object OBJ_ntgt drops into the container CB.

The control apparatus 3 (especially, the signal generation unit 312) may determine the control aspect of at least one of the robot 1 and the end effector 4 for dropping at least the non-process performed object OBJ_ntgt into the container CB by performing a simulation that simulates a motion of the end effector 4 holding the non-process performed object OBJ_ntgt together with the process performed object OBJ_tgt.

For example, the signal generation unit 312 may place a held target object model, which is a three-dimensional model of the held target object group OBG_h including the non-process performed object OBJ_ntgt and the process performed object OBJ_tgt, and an end effector mode, which is a three-dimensional model of the end effector 4, in a virtual simulation space that simulates a three-dimensional space in which the end effector 4, which holds the held target object group OBG_h including the non-process performed object OBJ_ntgt and the process performed object OBJ_tgt, is positioned. Furthermore, the signal generation unit 312 may place a container model, which is a three-dimensional model of the container CB, in the virtual simulation space. Furthermore, the signal generation unit 312 may place a contained object model, which is a three-dimensional model of the target object group OBG_cb including at least one target object OBJ contained in the container CB.

In this case, the signal generation unit 312 may place the held target object model, the end effector model, the container model, and the contained object model in the simulation space so that a relative positional relationship among the held target object model, the end effector model, the container model, and the contained object model in the simulation space is the same as a relative positional relationship among the held target object group OBG_h, the end effector 4, the container CB, and the target object group OBG_cb in a real space.

In order to place the held target object model in the simulation space, the signal generation unit 312 may use the held state determined at the step S23. This is because the held state determined at the step S23 indicates at least one of the position and the pose of the held target object group OBG_h in the real space. In this case, the signal generation unit 312 may place the held target object model at a position, which is indicated by the held state determined at the step S23, in the simulation space. The signal generation unit 312 may place the held target object model with a pose, which is indicated by the held state determined at the step S23, in the simulation space.

In order to place the end effector model in the simulation space, the signal generation unit 312 may control the position pose calculation unit 311 to calculate at least one of the position and the pose of the end effector 4. In this case, the false hold detection unit 313 may calculate at least one of the position and the pose of the end effector 4 by performing the matching processing using the image data IMG acquired at the step S21 in FIG. 5 or FIG. 22 and a template model indicating a shape of the end effector 4. Note that the matching processing itself using the template model indicating the shape of the end effector 4 may be the same as the matching processing using the template model indicating the shape of the target object OBJ described above. Then, the signal generation unit 312 may place the end effector model at a position, which is the same as the calculated position of the end effector 4, in the simulation space. The signal generation unit 312 may place the end effector model with a pose, which is the same as the calculated pose of the end effector 4, in the simulation space.

In order to place the container model in the simulation space, the signal generation unit 312 may acquire information related to a position that is specified in advance as the position of the container CB and / or information related to a pose that is specified in advance as the pose for the container CB. However, the false hold detection unit 313 may calculate at least one of the position and the pose of the container CB by performing the matching processing using the image data IMG acquired at the step S21 in FIG. 5 or FIG. 22 and a template model indicating a shape of the container CB. Note that the matching processing itself using the template model indicating the shape of the container CB may be the same as the matching processing using the template model indicating the shape of the target object OBJ described above. Then, the signal generation unit 312 may place the container model at a position, which is the same as the position of the matching process, in the simulation space. The signal generation unit 312 may place the container model with a pose, which is the same as the pose of the matching process, in the simulation space.

In order to place the contained object model in the simulation space, the signal generation unit 312 may control the position pose calculation unit 311 to calculate at least one of the position and the pose of the target object group OBG_cb contained in the container CB. In this case, the false hold detection unit 313 may calculate at least one of the position and the pose of the target object group OBG_cb contained in the container CB by performing the matching processing using the image data IMG acquired at the step S21 in FIG. 5 or FIG. 22 and a template model indicating a shape of the target object OBJ. Alternatively, the false hold detection unit 313 may calculate at least one of the position and the pose of the target object group OBG_cb contained in the container CB by performing the matching processing using the image data IMG, which is generated by the imaging apparatus 21 imaging the target object group OBG_cb contained in the container CB after the end effector 4 holds the process performed object OBJ_tgt, and a template model indicating a shape of the target object OBJ. Then, the signal generation unit 312 may place the contained object model at a position, which is the same as the calculated position of the target object group OBG_cb, in the simulation space. The signal generation unit 312 may place the contained object model with a pose, which is the same as the calculated pose of the target object group OBG_cb, in the simulation space.

Then, the signal generation unit 312 may estimate a motion of the held target object model (especially, the held target object model indicating a three-dimensional shape of the non-process performed object OBJ_ntgt) by moving the end effector model in the simulation space. In this case, the signal generation unit 312 may determine a movement aspect of the end effector model, which satisfies a condition that at least the held target object model of the non-process performed object OBJ_ntgt drops into the container model in the simulation space, as the control aspect of the robot 1 (namely, the movement aspect of the end effector 4 controlled by the robot 1) for dropping at least the non-process performed object OBJ_ntgt. In a case where there are a plurality of movement aspects of the end effector model, each of which satisfies the condition that at least the held target object model of the non-process performed object OBJ_ntgt drops into the container model in the simulation space, the signal generation unit 312 may determine at least one of the plurality of movement aspects of the end effector model as the control aspect of the robot 1 (namely, the movement aspect of the end effector 4 controlled by the robot 1) for dropping at least the non-process performed object OBJ_ntgt.

The signal generation unit 312 may estimate the motion of the held object model to be held (especially, the held object model to be held indicating the three-dimensional shape of the non-process performed object OBJ_ntgt) by changing a frictional force between the end effector model and the held target object model (especially, the held target object model indicating the three-dimensional shape of the non-process performed object OBJ_ntgt) in the simulation space, in addition to or instead of moving the end effector model in the simulation space. In this case, the signal generation unit 312 may determine the holding force of the end effector 4 achieving the friction force, which satisfies the condition that at least the held target object model of the non-process performed object OBJ_ntgt drops into the container model in the simulation space, as the control aspect of the end effector 4 for dropping at least the non-process performed object OBJ_ntgt. In a case where there are a plurality of friction forces, each of which satisfies the condition that at least the held target object model of the non-process performed object OBJ_ntgt drops into the container model in the simulation space, the signal generation unit 312 may determine the holding force of the end effector 4 achieving at least one of the plurality of friction forces as the control aspect of the end effector 4 for dropping at least the non-process performed object OBJ_ntgt.

Incidentally, in a case where the end effector model cannot be moved so that at least the held target object model of the non-process performed object OBJ_ntgt drops into the container model in the simulation space and the friction force between the held target object model of the non-process performed object OBJ_ntgt and the end effector model cannot be modified so that at least the held target object model of the non-process performed object OBJ_ntgt drops into the container model in the simulation space, it is estimated that the control aspect of at least one of the robot 1 and the end effector 4 for dropping at least the non-process performed object OBJ_ntgt cannot be calculated by the simulation. Namely, in a case where the movement aspect of the end effector, which satisfies the condition that at least the held target object model of the non-process performed object OBJ_ntgt drops into the container model in the simulation space, cannot be calculated and the friction force between the held target object model and the end effector model, which satisfies the condition that at least the held target object model of the non-process performed object OBJ_ntgt drops into the container model in the simulation space, cannot be calculated, cannot be calculated, it is estimated that the control aspect of at least one of the robot 1 and the end effector 4 for dropping at least the non-process performed object OBJ_ntgt cannot be calculated by the simulation. In this case, the false hold detection unit 313 may control the output apparatus 35 to output an alert for notifying the user (the operator) of the robot system SYS that it is unable to drop at least the non-process performed object OBJ_ntgt into the container CB (the step S32).

Moreover, even in a case where the robot control signal for dropping at least the non-process performed object OBJ_ntgt into the container CB is generated not only at the step S25b but also at the step S24, the signal generation unit 312 may determine the control aspect of at least one of the robot 1 and the end effector 4 for dropping at least the non-process performed object OBJ_ntgt into the container CB by performing the simulation that simulates the motion of the end effector 4 holding the non-process performed object OBJ_ntgt together with the process performed object OBJ_tgt.

Thus, in a case where the control aspect of at least one of the robot 1 and the end effector 4 for dropping at least the non-process performed object OBJ_ntgt into the container CB is calculated by the simulation, it is more likely that at least the non-process performed object OBJ_ntgt drops into the container CB, compared to a case where the control aspect of at least one of the robot 1 and the end effector 4 for dropping at least the non-process performed object OBJ_ntgt into the container CB is not calculated by the simulation.

The signal generation unit 312 may change the control aspect of at least one of the robot 1 and the end effector 4 for dropping at least the non-process performed object OBJ_ntgt into the container CB a plurality of times. For example, in a case where the processing for dropping at least the non-process performed object OBJ_ntgt into the container CB fails by controlling at least one of the robot 1 and the end effector 4 in a first control aspect, the signal generation unit 312 may generate the robot control signal for dropping at least the non-process performed object OBJ_ntgt into the container CB by controlling at least one of the robot 1 and the end effector 4 in a second control aspect that is different from the first control aspect (a first change of control aspect). Then, in a case where the processing for dropping at least the non-process performed object OBJ_ntgt into the container CB fails by controlling at least one of the robot 1 and the end effector 4 in the second control aspect, the signal generation unit 312 may generate the robot control signal for dropping at least the non-process performed object OBJ_ntgt into the container CB by controlling at least one of the robot 1 and the end effector 4 in a third control aspect that is different from the first and second control aspects (a third change of control aspect). Then, the signal generation unit 312 may repeat changing the control aspect of at least one of the robot 1 and the end effector 4 until at least the non-process performed object OBJ_ntgt drops into the container CB.

In a case where it is determined that at least the non-process performed object OBJ_ntgt has not dropped into the container CB (the step S31b: No) even after changing the control aspect of at least one of the robot 1 and the end effector 4 one time or the plurality of times, the false hold detection unit 313 may control the output apparatus 35 to output an alert for notifying the user (the operator) the robot system SYS that it is unable to drop at least the non-process performed object OBJ_ntgt into the container CB (the step S32).

On the other hand, in a case where it is determined that at least the non-process performed object OBJ_ntgt has dropped into the container CB (the step S31b: Yes) by changing the control aspect of at least one of the robot 1 and the end effector 4 one time or the plurality of times, as a result of changing the control aspect of at least one of the robot 1 and the end effector 4 once or the plurality of times, the false hold detection unit 313 may not control the output apparatus 35 to output the alert. In this case, the end effector 4 may perform the releasing process for releasing the process performed object OBJ_tgt held by the end effector 4 (the step S33).

### (4-3) Third Modified Example

In a third modified example, the signal generation unit 312 may generate the robot control signal for dropping the non-process performed object OBJ_ntgt into the container CB so that the pose of the non-process performed object OBJ_ntgt, which has dropped to be positioned in the container CB, becomes a desired pose at the step S24 in FIG. 5 or FIG. 22. the signal generation unit 312 may generate the robot control signal for dropping the non-process performed object OBJ_ntgt into the container CB so that the pose of the non-process performed object OBJ_ntgt, which positioned in the container CB assuming that the non-process performed object OBJ_ntgt has dropped into the container CB by controlling at least one of the robot 1 and the end effector 4 based on the robot control signal generated at the step S24 in FIG. 5 or FIG. 22, becomes a desired pose at the step S24 in FIG. 5 or FIG. 22.

The desired pose may include a pose satisfying a condition that the position pose data POI, which indicates at least one of the position and the pose of the non-process performed object OBJ_ntgt positioned in the container CB, can be properly generated.

In a case where the position pose data POI is generated by the matching processing as describe above, the desired pose may include a pose satisfying a condition that the non-process performed object OBJ_ntgt positioned in the container CB is properly detected as the target object OBJ by the matching processing that is performed after the non-process performed object OBJ_ntgt actually drops into the container CB. As one example, the desired pose may include a pose satisfying a condition that a probability of selecting the non-process performed object OBJ_ntgt as the process performed object OBJ_tgt by the matching processing that is performed in a situation where the pose of the non-process performed object OBJ_ntgt, which has dropped to be positioned in the container CB, is the desired pose is higher than a probability of selecting the non-process performed object OBJ_ntgt as the process performed object OBJ_tgt by the matching processing that is performed in a situation where the pose of the non-process performed object OBJ_ntgt, which has dropped to be positioned in the container CB, is not the desired pose.

In a case where the matching score is calculated by the matching processing as described above, the desired pose may include a pose satisfying a condition that the matching score of the non-process performed object OBJ_ntgt, which is calculated by the matching processing performed after the non-process performed object OBJ_ntgt actually drops into the container CB, is higher than the matching determination threshold value described above. As one example, the desired pose may include a pose satisfying a condition that a probability of the matching score of the non-process performed object OBJ_ntgt, which is calculated by the matching processing that is performed in a situation where the pose of the non-process performed object OBJ_ntgt dropped to be positioned in the container CB is the desired pose, is higher than the matching determination threshold value is higher than a probability of the matching score of the non-process performed object OBJ_ntgt, which is calculated by the matching processing that is performed in a situation where the pose of the non-process performed object OBJ_ntgt dropped to be positioned in the container CB is not the desired pose, is higher than the matching determination threshold value. As another example, the desired pose may include a pose satisfying a condition that the matching score of the non-process performed object OBJ_ntgt, which is calculated by the matching processing that is performed in a situation where the pose of the non-process performed object OBJ_ntgt dropped to be positioned in the container CB is the desired pose, is higher than the matching score of the non-process performed object OBJ_ntgt, which is calculated by the matching processing that is performed in a situation where the pose of the non-process performed object OBJ_ntgt dropped to be positioned in the container CB is not the desired pose.

In a case where the pose, which satisfies the condition that position pose data POI that indicates at least one of the position and the pose of the non-process performed object OBJ_ntgt positioned in the container CB can be properly generated, is used as the desired pose, it is likely that the position pose data POI of the non-process performed object OBJ_ntgt positioned in the container CB is properly generated by the matching processing that is performed after the non-process performed object OBJ_ntgt actually drops into the container CB. Namely, in a case where the pose of the non-process performed object OBJ_ntgt, which has dropped to be positioned in the container CB, becomes the desired pose, it is more likely that the position pose data POI of the non-process performed object OBJ_ntgt positioned in the container CB is properly generated, compared to a case where the pose of the non-process performed object OBJ_ntgt, which has dropped to be positioned in the container CB, does not become the desired pose. In this case, it is more likely that the control apparatus 3 can select the non-process performed object OBJ_ntgt that has dropped into the container CB as new process performed object OBJ_tgt that should be held by the end effector 4 next. As a result, it is unlikely that the control apparatus 3 cannot select new process performed object OBJ_tgt (for example, no target object OBJ is detected by the matching processing). Namely, the end effector 4 has more opportunities to be able to hold the target object OBJ. Therefore, it become less necessary to perform the matching processing again as a result of the matching processing failing to detect the target object OBJ, and it is possible to improve the throughput (reduce the tact time) of the robot system SYS.

A state in which "the pose of the non-process performed object OBJ_ntgt positioned in the container CB becomes the desired pose" may include a state in which "a desired part of the non-process performed object OBJ_ntgt positioned in the container CB faces a desired direction". The desired part of the non-process performed object OBJ_ntgt may include a part of the non-process performed object OBJ_ntgt that is set in advance. For example, the desired part of the non-process performed object OBJ_ntgt may include a part of the non-process performed object OBJ_ntgt that is specified by the user.

The desired part of the non-process performed object OBJ_ntgt may include a part of the non-process performed object OBJ_ntgt (namely, the target object OBJ) that is usable to generate the position pose data POI of the non-process performed object OBJ_ntgt. For example, the template model, which indicates the shape of a part of the target object OBJ, is used by the matching processing that is performed to generate the position pose data POI as described above. In this case, the desired part of the non-process performed object OBJ_ntgt may include a part corresponding to the template model.

The desired direction toward which the desired part of the non-process performed object OBJ_ntgt should face may include a direction satisfying a condition that a probability of generating the position pose data POI of the non-process performed object OBJ_ntgt positioned in the container CB in a case where the desired part of the non-process performed object OBJ_ntgt faces the desired direction is higher than a probability of generating the position pose data POI of the non-process performed object OBJ_ntgt positioned in the container CB in a case where the desired part of the non-process performed object OBJ_ntgt does not face the desired direction. In a case where the position pose data POI is generated by the matching processing, the desired direction may include a direction satisfying a condition that a probability of detecting the non-process performed object OBJ_ntgt positioned in the CB as the target object OBJ in a case where the desired part of the non-process performed object OBJ_ntgt faces the desired direction is higher than a probability of detecting the non-process performed object OBJ_ntgt positioned in the CB as the target object OBJ in a case where the desired part of the non-process performed object OBJ_ntgt does not face the desired direction. For example, the desired direction may include a direction satisfying a condition that a probability of the matching score of the non-process performed object OBJ_ntgt, which is calculated by the matching processing that is performed in a situation where the desired part of the non-process performed object OBJ_ntgt faces the desired direction, is higher than the matching determination threshold value is higher than a probability of the matching score of the non-process performed object OBJ_ntgt, which is calculated by the matching processing that is performed in a situation where the desired part of the non-process performed object OBJ_ntgt does not face the desired direction, is higher than the matching determination threshold value. For example, the desired direction may include a direction satisfying a condition that the matching score of the non-process performed object OBJ_ntgt, which is calculated by the matching processing that is performed in a situation where the desired part of the non-process performed object OBJ_ntgt faces the desired direction, is higher than the matching score of the non-process performed object OBJ_ntgt, which is calculated by the matching processing that is performed in a situation where the desired part of the non-process performed object OBJ_ntgt does not face the desired direction.

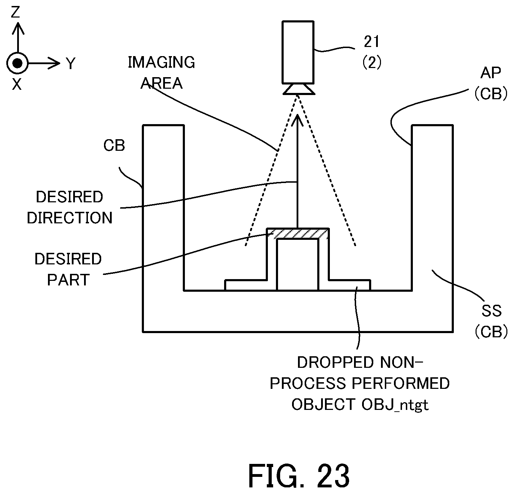

As a first example, as illustrated in FIG. 23 that is a cross-sectional view illustrating an example state in which the desired part of the non-process performed object OBJ_ntgt faces the desired direction, the desired direction may include a direction that allows the imaging system 2 (especially, the imaging apparatus 21) to be positioned to image the non-process performed object OBJ_ntgt that has dropped to be positioned in the container CB. In this case, a state in which the desired part of the non-process performed object OBJ_ntgt faces the desired direction may include a state in which the desired part of the non-process performed object OBJ_ntgt faces the direction that allows the imaging system 2 (especially, the imaging apparatus 21) to be positioned to image the non-process performed object OBJ_ntgt.

As a second example, as illustrated in FIG. 23, the desired direction may include a direction that allows the desired part of the non-process performed object OBJ_ntgt, which has dropped to be positioned in the container CB, to face the imaging system 2 (especially, the imaging apparatus 21) imaging the non-process performed object OBJ_ntgt, which has dropped to be positioned in the container CB. In this case, a state in which the desired part of the non-process performed object OBJ_ntgt faces the desired direction may include a state in which the desired part of the non-process performed object OBJ_ntgt faces the direction that allows the desired part of the non-process performed object OBJ_ntgtz faces the imaging system 2 (especially, the imaging apparatus 21) imaging the non-process performed object OBJ_ntgt.

As a third example, as illustrated in FIG. 23, the desired direction may include a direction that allows the desired part of the non-process performed object OBJ_ntgt, which has dropped to be positioned in the container CB, to be included in an imaging area (in other words, the imaging field of view) of the imaging system 2 (especially, the imaging apparatus 21) that images the non-process performed object OBJ_ntgt, which has dropped to be positioned in the container CB. In this case, a state in which the desired part of the non-process performed object OBJ_ntgt faces the desired direction may include a state in which the desired part of the non-process performed object OBJ_ntgt is included in the imaging area of the imaging system 2 that images the non-process performed object OBJ_ntgt.

As a fourth example, as illustrated in FIG. 23, the desired direction may include a direction so that the direction of an opening AP, which is formed in the container CB as an entry port through which the end effector 4 enters to hold the target object OBJ contained in the container CB, as viewed from the non-process performed object OBJ_ntgt, which has dropped to be positioned in the container CB. In this case, the state in which the desired part of the non-process performed object OBJ_ntgt faces the desired direction may include a state in which the desired part of the non-process performed object OBJ_ntgt faces the opening AP of the container CB.

As a fifth example, in a case where the imaging system 2 (especially, the imaging apparatus 21) images the target object OBJ contained in the container CB above the container CB, the desired direction may include an upward direction as viewed from the non-process performed object OBJ_ntgt, which has dropped to be positioned in the container CB, as illustrated in FIG. 23. In this case, the state in which the desired part of the non-process performed object OBJ_ntgt faces the desired direction may include the state in which the desired part of the non-process performed object OBJ_ntgt faces upward.

Note that the desired pose may include a pose satisfying a condition that the end effector 4 can properly hold the non-process performed object OBJ_ntgt positioned in the container CB, in addition to or instead of the condition that the position pose data POI of the non-process performed object OBJ_ntgt positioned in the container CB can be properly generated. Even in this case, the state "the pose of the non-process performed object OBJ_ntgt positioned in the container CB becomes the desired pose" may include the state "the desired part of the non-process performed object OBJ_ntgt positioned in the container CB faces the desired direction". However, in a case where the desired pose satisfies the condition that the end effector 4 can properly hold the non-process performed object OBJ_ntgt positioned in the container CB, the desired part of the non-process performed object OBJ_ntgt may include a part of the non-process performed object OBJ_ntgt held by the end effector 4. Namely, the desired part of the non-process performed object OBJ_ntgt may include at least partial part, which should be held by the end effector 4, of the non-process performed object OBJ_ntgt. The part of the non-process performed object OBJ_ntgt (namely, the part of the target object OBJ) held by the end effector 4 may be set in advance. The part of the non-process performed object OBJ_ntgt (namely, the part of the target object OBJ) held by the end effector 4 may be specified by the user. As a result, it is likely that the imaging system 2 can properly image the part of the non-process performed object OBJ_ntgt held by the end effector 4. As a result, it is likely that the end effector 4 can properly hold the non-process performed object OBJ_ntgt, which is newly selected as the process performed object OBJ_tgt, in a situation where the non-process performed object OBJ_ntgt that has dropped to be positioned in the container CB is selected as new process performed object OBJ_tgt.

The signal generation unit 312 may generate the robot control signal for dropping the non-process performed object OBJ_ntgt into the container CB based on at least one of the position and the pose of the held target object group OBG_h, which includes the target object OBJ held by the end effector 4, and at least one of the position and the pose of the target object group OBG_cb, which includes the target object OBJ contained in the container CB, so that the pose of the non-process performed object OBJ_ntgt, which has dropped to be positioned in the container CB, becomes the desired pose. As one example, the signal generation unit 312 may generate the robot control signal for dropping the non-process performed object OBJ_ntgt into the container CB so that the pose of the non-process performed object OBJ_ntgt, which has dropped to be positioned in the container CB, becomes the desired pose by performing the simulation described in the second modified example to estimate at least one of the position and the pose of the non-process performed object OBJ_ntgt, which has dropped to be positioned in the container CB For example, the signal generation unit 312 may move the end effector model in the simulation space to determine the movement aspect of the end effector model, which satisfies a condition that the pose of the held target object model (especially, the held target object model indicating the three-dimensional shape of the non-process performed object OBJ_ntgt) that has dropped into the container model becomes the desired model, as the control aspect of the robot 1 (namely, the movement aspect of the end effector 4 controlled by the robot 1) for making the poser of the non-process performed object OBJ_ntgt that has dropped to be positioned in the container CB becomes the desired pose.

### (4-4) Fourth Modified Example

After the non-process performed object OBJ_ntgt has dropped into the container CB, the end effector 4 may release the processed target object OBJ_tgt held by the end effector 4 outside the container CB, and then, the imaging apparatus 21 images the target object OBJ contained in the CB for allowing the end effector 4 to newly hold the target object OBJ contained in the container CB, as described above. Furthermore, in a case where the non-process performed object OBJ_ntgt drops into the container CB, there is a possibility that the imaging apparatus 21 images the non-process performed object OBJ_ntgt, which has dropped to be positioned in the container CB, and the position pose calculation unit 311 selects the non-process performed object OBJ_ntgt, which has dropped to be positioned in the container CB, as new process performed object OBJ_tgt based on the image data IMG that is generated by the imaging apparatus 21 imaging the non-process performed object OBJ_ntgt.

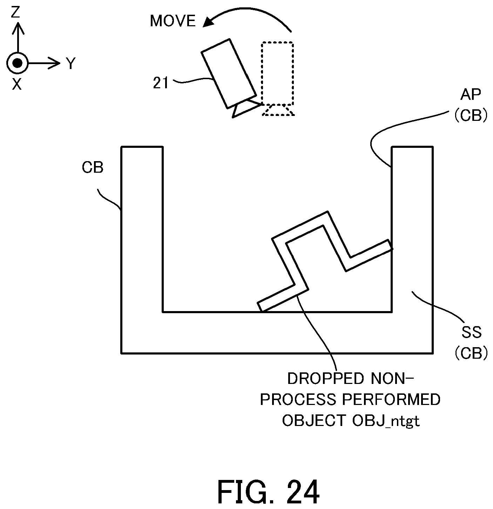

In this case, the signal generation unit 312 may generate the robot control signal for moving the imaging apparatus 21 to change at least one of the position and the pose of the imaging apparatus 21 so that the imaging apparatus 21 can properly images the non-process performed object OBJ_ntgt, which has dropped to be positioned in the container CB, before the imaging apparatus images the non-process performed object OBJ_ntgt, which has dropped to be positioned in the container CB. As a result, as illustrated in FIG. 24, at least one of the position and the pose of the imaging apparatus 21 may be changed so that the imaging apparatus 21 can properly images the non-process performed object OBJ_ntgt, which has dropped to be positioned in the container CB, before the imaging apparatus images the non-process performed object OBJ_ntgt, which has dropped to be positioned in the container CB. Then, the imaging apparatus 21 may image the non-process performed object OBJ_ntgt, which has dropped to be positioned in the container CB.

Note that a state in which "the imaging apparatus 21 can properly image the non-process performed object OBJ_ntgt, which has dropped to be positioned in the container CB" in the fourth modified example may include the state in which "the desired part of the non-process performed object OBJ_ntgt, which has dropped to be positioned in the container CB, faces the desired direction" that is already described in the third modified example. Especially, the state "the imaging apparatus 21 can properly image the non-process performed object OBJ_ntgt, which has dropped to be positioned in the container CB" in the fourth modified example may include at least one of a state in which "the desired part of the non-process performed object OBJ_ntgt, which has dropped to be positioned in the container CB, faces the direction that allows the imaging system 2 (especially, the imaging apparatus 21) to be positioned to image the non-process performed object OBJ_ntgt" (namely, the first example described in the third modified example), the state in which "the desired part of the non-process performed object OBJ_ntgt, which has dropped to be positioned in the container CB, faces the imaging system 2 (especially, the imaging apparatus 21) that images the non-process performed object OBJ_ntgt" (namely, the second example described in the third modified example), and a state where "the desired part of the non-process performed object OBJ_ntgt, which has dropped to be positioned in the container CB, is included in the imaging area of the imaging system 2 (especially, the imaging apparatus 21) that images the non-process performed object OBJ_ntgt" (namely, the third example described in the third modified example).

In this case, in order to generate the robot control signal for moving the imaging apparatus 21 to change at least one of the position and the pose of the imaging apparatus 21, the signal generation unit 312 may first estimate at least one of the position and the pose of the non-process performed object OBJ_ntgt, which has dropped to be positioned in the container CB.

As one example, the signal generation unit 312 may estimate at least one of the position and the pose of the non-process performed object OBJ_ntgt, which has dropped to be positioned in the container CB, based on the held state (namely, the held state of the held target object group OBG_h held by the end effector 4) determined at the step S21 in FIG. 5 or FIG. 22. Note that the signal generation unit 312 may be considered to estimate at least one of the position and the pose of the non-process performed object OBJ_ntgt, which has dropped to be positioned in the container CB, based on the image data IMG acquired at the step S21 in FIG. 5 or FIG. 22, because the held state is determined based on the image data IMG acquired at the step S21 in FIG. 5 or

FIG. 22.

Incidentally, in a case where the non-process performed object OBJ_ntgt drops into the desired position in the container CB so that the non process performed object OBJ_ntgt drops to the desired position in the container CB as described in the first modified example, the desired position may be used as an estimated value of the position of the non-process performed object OBJ_ntgt, which has dropped to be positioned in the container CB. In this case, the signal generation unit 312 may not estimate the position of the non-process performed object OBJ_ntgt, which has dropped to be positioned in the container CB.

Similarly, in a case where the non-process performed object OBJ_ntgt drops into the container CB so that the pose of the non-process performed object OBJ_ntgt, which has dropped to be positioned in the container CB, becomes the desired pose as described in the third modified example, the desired pose may be used as an estimated value of the pose of the non-process performed object OBJ_ntgt, which has dropped to be positioned in the container CB. In this case, the signal generation unit 312 may not estimate the pose of the non-process performed object OBJ_ntgt, which has dropped to be positioned in the container CB.

In this case, the signal generation unit 312 may estimate at least one of the position and the pose of the non-process performed object OBJ_ntgt, which has dropped to be positioned in the container CB, by performing the simulation described in the second modified example. Specifically, the signal generation unit 312 may estimate at least one of the position and the pose of the non-process performed object OBJ_ntgt, which has dropped to be positioned in the container CB, by performing the simulation described in the second modified example to estimate the motion of the non-process performed object OBJ_ntgt in a case where at least one of the robot 1 and the end effector 4 is controlled based on the robot control signal for dropping the non-process performed object OBJ_ntgt generated at the step S24 in FIG. 5 or FIG. 22.

Then, the signal generation unit 312 may generate the robot control signal for moving the imaging apparatus 21 to change at least one of the position and the pose of the imaging apparatus 21 based on the estimated result of at least one of the position and the pose of the non-process performed object OBJ_ntgt, which has dropped to be positioned in the container CB. For example, the signal generation unit 312 may generate the robot control signal for moving the imaging apparatus 21 to change at least one of the position and the pose of the imaging apparatus 21 so that the desired part of the non-process performed object OBJ_ntgt, which is positioned at the estimated position in the container CB, faces the desired direction. For example, the signal generation unit 312 may generate the robot control signal for moving the imaging apparatus 21 to change at least one of the position and the pose of the imaging apparatus 21 so that a desired part of the non-process performed object OBJ_ntgt, which is positioned in the estimated pose in the container CB, faces the desired direction.

As a result, compared to a case where the position and the pose of the imaging apparatus 21 are not changed before the imaging apparatus 21 images the non-process performed object OBJ_ntgt, it is more likely that the imaging apparatus 21 can properly image the non-process performed object OBJ_ntgt that has dropped to be positioned in the container CB (namely, the non-process performed object OBJ_ntgt whose desired part faces the desired direction).

As a result, in a case where the desired part of the non-process performed object OBJ_ntgt includes the part (for example, the part corresponding to the template model) of the non-process performed object OBJ_ntgt positioned in the container CB that is usable to generate the position pose data POI as described above, it is more likely that the position pose data POI of the non-process performed object OBJ_ntgt positioned in the container CB is properly generated. In this case, it is more likely that the control apparatus 3 can select the non-process performed object OBJ_ntgt that has dropped into the container CB as new process performed object OBJ_tgt that should be held by the end effector 4 next. As a result, it is unlikely that the control apparatus 3 cannot select new process performed object OBJ_tgt (for example, no target object OBJ is detected by the matching processing). Namely, the end effector 4 has more opportunities to be able to hold the target object OBJ. Therefore, it become less necessary to perform the matching processing again as a result of the matching processing failing to detect the target object OBJ, and it is possible to improve the throughput (reduce the tact time) of the robot system SYS.

Moreover, in a case where the desired part of the non-process performed object OBJ_ntgt includes at least partial part, which should be held by the end effector 4 should hold, of the non-process performed object OBJ_ntgt as described above, it is likely that the end effector 4 can properly hold the non-process performed object OBJ_ntgt, which is selected as new the process performed object OBJ_tgt, in a situation where the non-process performed object OBJ_ntgt that has dropped into the container CB is selected as new the process performed object OBJ_tgt.

Note that the signal generation unit 312 may not generate the robot control signal for moving the imaging apparatus 21 to change at least one of the position and the pose of the imaging apparatus 21 based on the estimated result of at least one of the position and the pose of the non-process performed object OBJ_ntgt, which has dropped to be positioned in the container CB. Namely, the control apparatus 3 may not change at least one of the position and the pose of the imaging apparatus 21 based on the estimated result of at least one of the position and the pose of the non-process performed object OBJ_ntgt, which has dropped to be positioned in the container CB, before the imaging apparatus 21 images the non-process performed object OBJ_ntgt. In this case, the signal generation unit 312 may generate the robot control signal for controlling at least one of the robot 1 and the end effector 4 based on the estimated result of at least one of the position and the pose of the non-process performed object OBJ_ntgt, which has dropped to be positioned in the container CB, so that the end effector 4 holds the non-process performed object OBJ_ntgt, which has dropped to be positioned in the container CB. For example, the signal generation unit 312 may generate the robot control signal for controlling at least one of the robot 1 and the end effector 4 so that the end effector 4 holds the non-process performed object OBJ_ntgt, which is positioned at the estimated position in the container CB. For example, the signal generation unit 312 may generate the robot control signal for controlling at least one of the robot 1 and the end effector 4 so that the end effector 4 holds the non-process performed object OBJ_ntgt, which is positioned in the estimated pose in the container CB.

Incidentally, in a case where the non-process performed object OBJ_ntgt drops into the container so that the non-process performed object OBJ_ntgt drops to the desired position in the container CB as described in the first modified example, the desired position may be used as the estimated value of the position of the non-process performed object OBJ_ntgt, which has dropped to be positioned in the container CB. In this case, the signal generation unit 312 may generate the robot control signal for controlling at least one of the robot 1 and the end effector 4 so that the end effector 4 holds the non-process performed object OBJ_ntgt, which has dropped to be positioned in the container CB, based on information related to the desired position that is used to control the robot 1 so that the non-process performed object OBJ_ntgt drops to the desired position in the container CB.

Similarly, in a case where the non-process performed object OBJ_ntgt drops into the container CB so that the pose of the non-process performed object OBJ_ntgt, which has dropped to be positioned in the container CB, becomes the desired pose as described in the third modified example, the desired pose may be used as the estimated value of the pose of the non-process performed object OBJ_ntgt, which has dropped to be positioned in the container CB. In this case, the signal generation unit 312 may generate the robot control signal for controlling at least one of the robot 1 and the end effector 4 so that the end effector 4 holds the non-process performed object OBJ_ntgt, which has dropped to be positioned in the container CB, based on information related to the desired pose that is used to control the robot 1 so that the pose of non-process performed object OBJ_ntgt, which has dropped to be positioned in the container CB, becomes the desired pose.

### (4-5) Fifth Modified Example

In the above-described description, the control apparatus 3 (especially, the false hold detection unit 313) determines based on the image data IMG generated by the imaging apparatus 21 imaging the held target object group OBG_h held by the end effector 4 whether or not the end effector 4 is holding the non-process performed object OBJ_ntgt at the step S22 in FIG. 5 or FIG. 22. In a fifth modified example, the control apparatus 3 may determine by using a method different from the method using the image data IMG generated by the imaging system 2 whether or not the end effector 4 is holding the non-process performed object OBJ_ntgt at the step S22 in FIG. 5 or FIG. 22.

Furthermore, in the above-described description, the control apparatus 3 (especially, the false hold detection unit 313) determines the held state of the held target object group OBG_h held by the end effector 4 based on the image data IMG generated by the imaging apparatus 21 imaging the held target object group OBG_h held by the end effector 4 at the step S23 in FIG. 5 or FIG. 22. In the fifth modified example, the control apparatus 3 may determine the held state of the held target object group OBG_h held by the end effector 4 using a method different from the method using the image data IMG generated by the imaging system 2 at the step S23 in FIG. 5 or FIG. 22.

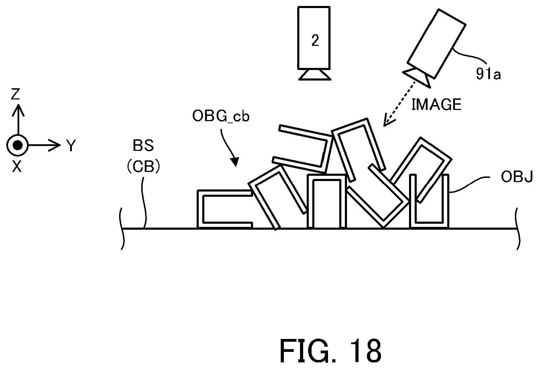

As a first example, the control apparatus 3 may determine based on the image data generated by the imaging system 91a (see FIG. 18), which is different from the imaging system 2, imaging the held target object group OBG_h held by the end effector 4 whether or not the end effector 4 is holding the non-process performed object OBJ_ntgt. Note that the processing for determining whether or not the end effector 4 is holding the non-process performed object OBJ_ntgt based on the image data generated by the imaging system 91a may be the same as the processing for determining whether or not the end effector 4 is holding the non-process performed object OBJ_ntgt based on the image data IMG generated by the imaging system 2. Therefore, a detailed description of the processing for determining whether or not the end effector 4 is holding the non-process performed object OBJ_ntgt based on the image data generated by the imaging system 91a is omitted.

In a case where the imaging system 91a images the held target object group OBG_h held by the end effector 4, the control apparatus 3 may move the end effector 4 relative to the imaging system 91a so that at least a part of the end effector 4 (especially, a part of the end effector 4 for holding the target object OBJ) is included in the imaging range (the imaging angle of view) of the imaging system 91a before the imaging system 91a images the held target object group OBG_h held by the end effector 4. As a result, the imaging system 91a can properly image the held target object group OBG_h held by the end effector 4. However, in a case where at least a part of the end effector 4 (especially, the part of the end effector 4 for holding the target object OBJ) is already included in the imaging range (the imaging angle of view) of the imaging system 91a, the control apparatus 3 may not move the end effector 4 relative to the imaging system 91a.

Incidentally, in a case where the imaging system 2 mounted on the robot arm 12 images the held target object group OBG_h held by the end effector 4 as described above, once the imaging system 2 and the end effector 4 are aligned so that at least a part of the end effector 4 (especially, the part of the end effector 4 for holding the target object OBJ) is included in the imaging range (the imaging angle of view) of the imaging system 2, the control apparatus 3 may not move the end effector 4 so that at least a part of the end effector 4 (especially, the part of the end effector 4 for holding the target object OBJ) is included in the imaging range (the imaging angle of view) of the imaging system 2. Therefore, the throughput improves (the tact time is reduced).

As a second example, the control apparatus 3 may determine the held state of the held target object group OBG_h held by the end effector 4 based on the image data generated by the imaging system 91a (see FIG. 18), which is different from the imaging system 2, imaging the held target object group OBG_h held by the end effector 4. Note that the processing for determining the held state of the held target object group OBG_h held by the end effector 4 based on the image data IMG generated by the imaging system 91a may be the same as the processing for determining the held state of the held target object group OBG_h held by the end effector 4 based on the image data IMG generated by the imaging system 2. Therefore, a detailed description of the processing for determining the held state of the held target object group OBG_h held by the end effector 4 based on the image data generated by the imaging system 91a is omitted.

Incidentally, in a case where the imaging system 91a images the held target object group OBG_h held by the end effector 4, the imaging system 91a may be considered to serve as a measurable measurement apparatus that is configured to measure the held target object group OBG_h held by the end effector 4. For example, the imaging system 91a may be considered to serve as the measurement apparatus that is usable to determine whether or not the end effector 4 is holding non-process performed object OBJ_ntgt. For example, the imaging system 91a may be considered to serve as the measurement apparatus that is usable to determine the held state of the held target object group OBG_h held by the end effector 4.

As a third example, the control apparatus 3 may acquire information related to at least one of the position and the pose of the reference point TCP (for example, the tool center point) of the end effector 4 from the robot control apparatus 13 of the robot 1, and determine (estimate) the held state of the held target object group OBG_h (especially, the held state of the process performed object OBJ_tgt that should be directly held by the end effector 4) based on the acquired information.

For example, the relative positional relationship between the end effector 4 and the target object OBJ when the end effector 4 holds the target object OBJ may be registered in advance as the hold target positional relationship, as described above. In this case, the end effector 4 holds the process performed object OBJ_tgt at a timing at which the relative positional relationship between the end effector 4 and the process performed object OBJ_tgt becomes the hold target position relationship that is registered in advance. Therefore, it is likely that the relative positional relationship between the end effector 4 and the process performed object OBJ_tgt held by the end effector 4 is the same as the hold target position relationship that is registered in advance. Therefore, the control apparatus 3 may estimate the held state (for example, at least one of the position and the pose) of the process performed object OBJ_tgt held by the end effector 4 based on information related to at least one of the position and the pose of the reference point TCP of the end effector 4 and information related to the hold target position relationship that is registered in advance.

For example, the relative postural relationship between the end effector 4 and the target object OBJ when the end effector 4 holds the target object OBJ may be registered in advance as the hold target postural relationship, as described above. In this case, the end effector 4 holds the process performed object OBJ_tgt at a timing at which the relative postural relationship between the end effector 4 and the process performed object OBJ_tgt becomes the hold target pose relationship that is registered in advance. Therefore, it is likely that the relative postural relationship between the end effector 4 and the process performed object OBJ_tgt held by the end effector 4 is the same as the hold target pose relationship that is registered in advance. Therefore, the control apparatus 3 may estimate the held state (for example, at least one of the pose and the pose) of the process performed object OBJ_tgt held by the end effector 4 based on information related to at least one of the pose and the pose of the reference point TCP of the end effector 4 and information related to the hold target pose relationship that is registered in advance.

As a fourth example, the control apparatus 3 may determine based on the detected result by a weight sensor (in other words, a load sensor) of the robot whether is not the end effector 4 is holding the non-process performed object OBJ_ntgt. As one example, a weight sensor that is configured to detect a changes of the weight of the target object OBJ held by the end effector 4 may be used as the weight sensor. The weight sensor may be positioned at the joint 122 of the robot arm 12, or may be positioned between a flange surface of the robot arm 12 (especially, a flange surface to which the end effector 4 is attached) and the end effector 4, or may be positioned at the end effector 4. A detected value of the weight, which is the detected result by the weight sensor in a case where the end effector 4 is holding the non-process performed object OBJ_ntgt, should be heavier than a detected value of the weight, which is the detected result by the weight sensor in a case where the end effector 4 is not holding the non-process performed object OBJ_ntgt. Therefore, the control apparatus 3 can accurately determine based on the detected result by the weight sensor whether or not the end effector 4 is holding the process performed object OBJ_tgt.

Note that the control apparatus 3 may determine the held state of the process performed object OBJ_tgt held by the end effector 4 based on the detected result by the weight sensor (in other words, the load sensor) of the robot 1.

Note that the weight sensor of the robot 1 may be considered to serve as a measurement apparatus that is configured to measure the held target object group OBG_h held by the end effector 4. For example, the weight sensor of the robot 1 may be considered to serve as a measurement apparatus that is usable to determine whether or not the end effector 4 is holding the non-process performed object OBJ_ntgt. For example, the weight sensor of the robot 1 may be considered to serve as a measurement apparatus that is usable to determine the held state of the held target object group OBG_h held by the end effector 4.

As a fifth example, the control apparatus 3 may determine based on the detected result by the weight sensor 92a (see FIG. 19), which is configured to measure the weight of the target object group OBG_cb contained in the container CB, whether or not the end effector 4 is holding the non-process performed object OBJ_ntgt. As one example, a detected value of the weight, which is the detected result by the weight sensor 92a in a case where the end effector 4 is holding the non-process performed object OBJ_ntgt together with the process performed object OBJ_tgt from the container CB, should be lighter than a detected value of the weight, which is the detected result by the weight sensor 92a in a case where the end effector 4 is holding the process performed object OBJ_tgt but is not holding the non-process performed object OBJ_ntgt from the container CB. Therefore, the control apparatus 3 can accurately determine based on the detected result by the weight sensor 92a whether or not the end effector 4 is holding the process performed object OBJ_tgt.

Note that the control apparatus 3 may determine the held state of the process performed object OBJ_tgt held by the end effector 4 based on the detected result by the weight sensor 92a, which is configured to measure the weight of the target object group OBG_cb contained in the container CB.

Note that the weight sensor 92a may be considered to serve as a measurement apparatus that is configured to measure the held target object group OBG_h held by the end effector 4. For example, the weight sensor 92a may be considered to serve as a measurement apparatus that is usable to determine whether or not the end effector 4 is holding the non-process performed object OBJ_ntgt. For example, the weight sensor 92a may be considered to serve as a measurement apparatus that is usable to determine the held state of the held target object group OBG_h held by the end effector 4.

### (4-6) Sixth Modified Example

As described above, at the step S23, the false hold detection unit 313 may determine the held state of the held target object group OBG held by the end effector 4 based on the image data IMG acquired at the step S21. Here, the held state may include a type of an object held by the end effector 4. There is a possibility that at least one object (it is referred to as a different type object in the below-described description as necessary), whose type is different from the target objects OBJ, is accidentally or intentionally contained in the container CB (the placing apparatus T), in addition to the plurality of target objects OBJ. In this case, in a case where the end effector 4 performs the holding operation for holding the target object OBJ at the step S13 described above, there is a possibility that the end effector 4 holds the different type object. Especially, it is more likely that the end effector 4 unintentionally holds the different type object as a difference in shape between the different type object and the target object OBJ (for example, the process performed object OBJ_tgt) is smaller. In a case where the releasing process for the different type object held by the end effector 4 is performed, it is likely that the desired releasing process cannot be performed. For example, there is a possibility that the different type object collides with the object (for example, the placing apparatus T) to which the process performed object OBJ_tgt should be released, and therefore, the object (for example, the placing apparatus T) to which the process performed object OBJ_tgt should be released is damaged.

In this case, the false hold detection unit 313 may determine the type of the object held by the end effector 4 by determining (identifying) whether the object held by the end effector 4 is the target object OBJ (for example, the process performed object OBJ_tgt) or the different type object, as the held state of the target object OBJ held by the end effector 4 based on the image data IMG acquired at the step S21. Note that the type of the object held by the end effector 4 may be referred to as the held state of the object held by the end effector 4. Moreover, the type of the object held by the end effector 4 may be referred to as the held aspect of the object (for example, at least one of the process performed object OBJ_tgt and the different type object) by the end effector 4.

For example, the false hold detection unit 313 may determine (identify) whether the object held by the end effector 4 is the process performed object OBJ_tgt or the different type object by controlling the position pose calculation unit 311 to perform the above-described matching processing based on the image data IMG acquired at the step S21. As one example, the false hold detection unit 313 may determine (identify) whether the object held by the end effector 4 is the process performed object OBJ_tgt or the different type object by controlling the position pose calculation unit 311 to perform the matching processing using the image data IMG acquired at the step S21, a template model indicating a shape of at least a part of the target object OBJ (the process performed object OBJ_tgt), and a template model indicating a shape of at least a part of the different type object.

Then, the signal generation unit 312 may generate the robot control signal for controlling at least one of the robot 1 and the end effector 4 based on the type of the object held by the end effector 4, which is determined at the step S23 (the step S24). In a case where the object held by the end effector 4 is determined as the different type object, the signal generation unit 312 may generate the robot control signal for controlling at least one of the robot 1 and the end effector 4 in a control aspect, which is different from a control aspect that is used to control at least one of the robot 1 and the end effector 4 to perform the releasing process of the process performed object OBJ_tgt held by the end effector 4. In this case, as one example, the signal generation unit 312 may generate the robot control signal for controlling at least one of the robot 1 and the end effector 4 so that the different type object held by the end effector 4 is placed (for example, dropped) on the placing apparatus T that is different from the container CB (for example, a container that is different from the container CB). Note that the processing that is performed in a case where the object held by the end effector 4 is determined as the target object OBJ (for example, the process performed object OBJ) at the step S23 is already described above, so a detailed description thereof is omitted.

According to the above-described processing, even in a case where the different type object is contained in the placing apparatus T (for example, the container CB) together with the plurality of target objects OBJ, it is possible to determine the different type object and to perform the desired process (for example, desired releasing process) on the target object OBJ.

Incidentally, in a case where the object held by the end effector 4 is determined as the different type object at the step S23, the false hold detection unit 313 may control the output apparatus 35 to output an alert for notifying the user that the object held by the end effector 4 is the different type object, in addition to or instead of the signal generation unit 312 generating the above-described robot control signal.

### (4-7) Other Modified Example

### (4-7-1) Modified Example of Robot Control Processing

In the above description, the control apparatus 3 controls at least one of the robot 1 and the end effector 4 to drop the non-process performed object OBJ_ntgt into the container CB. The control apparatus 3 may control other robot that is different from the robot 1, in addition to or instead of controlling at least one of the robot 1 and the end effector 4 to drop the non-process performed object OBJ_ntgt into the container CB. For example, the control apparatus 3 may control other robot including other end effector, which is configured to hold the target object OBJ and which is different from the end effector 4, to drop the non-process performed object OBJ_ntgt into the container CB. In this case, the control apparatus 3 may control other robot sot that other end effector of other robot holds the non-process performed object OBJ_ntgt held by the end effector 4, and then, other end effector of other robot returns (for example, releases) the held non-process performed object OBJ_ntgt to the container CB.

### (4-7-2) Modified Example of Robot 1

In the above-described description, the end effector 4 (for example, the hand clipper or the vacuum clipper), which performs the placing process (for example, at least one of the holding process and the releasing process), is attached to the robot arm 12. However, the end effector 4 is not limited to an apparatus that performs the placing process (for example, at least one of the holding process and the releasing process), and may be an apparatus that performs another process on the target object OBJ.

As one example, a processing apparatus for processing the target object OBJ may be attached to the robot arm 12 as one example of the end effector 4. The processing apparatus may perform at least one of an additive manufacturing for adding a new build object to the target object OBJ, a subtractive manufacturing for removing a part of the target object OBJ, a welding processing for jointing two target objects OBJ, and a cutting processing for cutting the target object OBJ. The processing apparatus may process the target object OBJ by using a tool. In this case, the processing apparatus including the tool may be attached to the robot arm 12. Alternatively, the processing apparatus may process the target object OBJ by irradiating the target object OBJ with an energy beam (for example, light, electromagnetic wave, and charged particle beam). In this case, the processing apparatus including an irradiation apparatus that irradiates the target object OBJ with the energy beam may be attached to the robot arm 12.

The processing apparatus that is one example of the end effector 4 may perform soldering processing for soldering a component to the target object OBJ. The processing apparatus may solder the component to the target object OBJ by using a soldering copper. In this case, the processing apparatus including the soldering copper may be attached to the robot arm 12. Alternatively, the processing apparatus may solder the component to the target object OBJ by irradiating the solder with an energy beam (for example, light, electromagnetic wave, and charged particle beam). In this case, the processing apparatus including an irradiation apparatus that irradiates the target object OBJ with the energy beam may be attached to the robot arm 12.

As another example, a measurement apparatus for measuring the target object OBJ may be attached to the robot arm 12 as one example of the end effector 4. The measurement apparatus may be configured to measure a characteristic of the target object OBJ. At least one of a shape of the target object OBJ, a size of the target object OBJ, a distance from the measurement apparatus to the target object OBJ, a reflectance of the target object OBJ, a transmittance of the target object OBJ, and a temperature of the target object OBJ is one example of the characteristic of the target object OBJ. The measurement apparatus may be an existing contact type of measurement apparatus. For example, the measurement apparatus may measure the target object OBJ by using a touch probe. In this case, the measurement apparatus including the touch probe may be attached to the robot arm 12. Alternatively, the measurement apparatus may be an existing non-contact type of measurement apparatus. For example, the measurement apparatus may measure the target object OBJ by irradiating the target object OBJ with an energy beam (for example, light, electromagnetic wave, and charged particle beam). In this case, the measurement apparatus including an irradiation apparatus that irradiates the target object OBJ with the energy beam may be attached to the robot arm 12. Note that the measurement apparatus may be an imaging apparatus including one or more monocular cameras. As one example, the measurement apparatus may be a stereo camera including two monocular cameras.

In a case where at least one of the processing apparatus and the measurement apparatus is attached to the robot arm 12 as one example of the end effector 4, the control apparatus 3 may generate a control signal for controlling an operation of at least one of the processing apparatus and the measurement apparatus. For example, the control apparatus 3 may generate the control signal for controlling a rotation of the tool of the processing apparatus. For example, the control apparatus 3 may generate the control signal for controlling an ON / OFF of the energy beam by the irradiation apparatus of at least one of the processing apparatus and the measurement apparatus.

As another example, a discharging apparatus may be attached to the robot arm 12 as one example of the end effector 4. For example, the discharging apparatus may discharge at least one of an adhesive material, a seal material, a paint material, and a solder. The discharging apparatus may discharge at least one of the adhesive material, the seal material, the paint material, and the solder toward the target object OBJ. For example, the control apparatus 3 may generate a control signal for controlling at least one of ON / OFF of a discharge from the discharging apparatus and an discharged amount. Note that the discharging apparatus may be referred to as a processing apparatus, because it can be said that discharging at least one of the adhesive material, the seal material, the paint material, and the solder to the target object OBJ is processing the target object OBJ.

### (4-7-3) Modified Example of Imaging System 2

In the above description, the imaging system 2 includes the illumination apparatus 23. In this case, the illumination apparatus 23 may be integrated with the imaging apparatus 21 or may be an apparatus separated from the imaging apparatus 21. In a case where the illumination apparatus 23 is the apparatus separated from the imaging apparatus 21, not the imaging system 2 but the robot 1 may include the illumination apparatus 23. Namely, the illumination apparatus 23 may be attached to the robot 1 independently of the imaging system 2.

In the above description, the imaging system 2 includes a single imaging apparatus 21. However, the imaging system 2 may include a plurality of imaging apparatuses 21. For example, the imaging system 2 may include a first imaging apparatus 21, which is a monocular camera, and a second the imaging apparatus 21, which is a stereo camera. In this case, the control apparatus 3 may calculate at least one of the position and the pose of the target object OBJ by performing at least one of the 2D matching processing using the image data IMG generated by the first imaging apparatus 21 and the 3D matching processing using three-dimensional position data generated based on the image data IMG generated by the second the imaging apparatus 21.

Alternatively, in a case where the imaging system 2 includes a single imaging apparatus 21 that is the stereo camera, the control apparatus 3 may calculate at least one of the position and the pose of the target object OBJ by performing at least one of the 2D matching processing using the image data IMG generated by the imaging apparatus 21 and the 3D matching processing using the three-dimensional position data generated based on the image data IMG generated by the imaging apparatus 21. Specifically, the control apparatus 3 may calculate at least one of the position and the pose of the target object OBJ by performing the 2D matching processing using the image data IMG generated by one monocular camera of the imaging apparatus 21. Furthermore, the control apparatus 3 may generate three-dimensional position data based on the image data IMG generated by two monocular cameras of the imaging apparatus 21 and calculate at least one of the position and the pose of the target object OBJ by performing the 3D matching processing using the three-dimensional position data.

In the above description, the imaging system 2 is mounted on the robot 1 that includes the robot arm 12. However, the imaging system 2 may be mounted on a robot that does not include the robot arm 12. For example, the imaging system 2 may be mounted on the robot 1 that includes a support apparatus configured to suspending the imaging system 2 above the target object OBJ. In this case, the imaging system 2 may be mounted on the support apparatus. The support apparatus may include a plurality of leg members each of which extends upward from the support surface S and a beam member that connects the plurality of leg members through upper ends of the plurality of leg members or parts adjacent to the upper ends. For example, the robot 1 may be configured to move the support apparatus.

### (4-7-4) Alternative of Imaging System 2

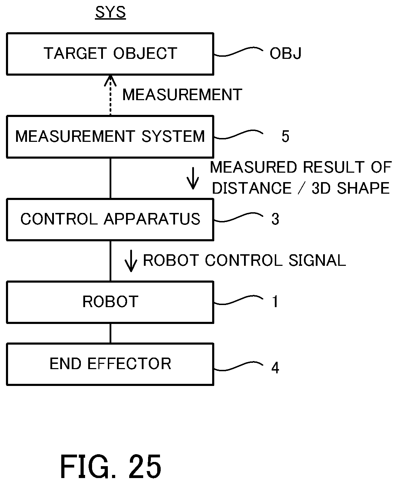

As illustrated in FIG. 25, the robot system SYS may include a measurement system 5 that is configured to measure at least one of a distance to the target object OBJ and its three-dimensional shape, in addition to or instead of the imaging system 2 that is configured to image the target object OBJ. In this case, the control apparatus 3 (especially, the position pose calculation unit 311) may generate the three-dimensional position data, which may be used for the 3D matching processing, based on a measured result of at least one of the distance to the target object OBJ and its three-dimensional shape. Then, the control apparatus 3 (especially, the position pose calculation unit 311) may perform the 3D matching processing using the three-dimensional position data, as in a case where the three-dimensional position data is generated from the image data IMG generated by the imaging system 2.

The measurement system 5 may be an existing system that is configured to optically measure at least one of the distance to the target object OBJ and its three-dimensional shape. For example, the measurement system 5 may be an existing system that is configured to measure of at least one of the distance to the target object OBJ and its three-dimensional shape with a non-contact method. For example, the measurement system 5 may be configured to optically measure at least one of the distance to target object OBJ and its three-dimensional shape by irradiating the target object OBJ with measurement electromagnetic wave and detect the electromagnetic wave returning to the measurement system 5 from the target object OBJ onto which the electromagnetic wave is irradiated. The measurement electromagnetic wave may be light (in this case, the light irradiated onto the target object OBJ may be referred to as measurement light) or radio wave (in this case, the radio wave irradiated onto the target object OBJ may be measurement wave). At least one of a TOF (Time Of Flight) type of interferometer, a FMCW (Frequency Modulated Continuous Wave) type of interferometer, an optical comb type of interferometer using light (an optical frequency comb) including frequency components arranged with equal intervals on the frequency axis as the measurement light, a triangulation-based measurement apparatus, and a millimeter-wave radar using millimeter waves as the measurement wave is one example of the measurement system 5. Note that at least one of the TOF type of measuring instrument and the FMCW type of measuring instrument may be referred to as LiDAR (Light Detection and Ranging). In a case where the measurement system 5 is this type of measurement sensor, the control apparatus 3 (especially, the position pose calculation unit 311) may generate the three-dimensional position data, which is point cloud data, based on the measured result of the target object OBJ by the measurement sensor. Then, the control apparatus 3 (especially, the position pose calculation unit 311) may perform the 3D matching processing using the three-dimensional position data, as in a case where the three-dimensional position data is generated from the image data IMG generated by the imaging system 2. Note that the measurement system 5 may be referred to as a measurement apparatus or a measurement sensor.

Note that imaging system 2 images the target object OBJ by using an imaging element of the imaging apparatus 21 to detect returning light from the target object OBJ. Namely, both the imaging system 2 and the measurement system 5 detect the returning light from the target object OBJ. Therefore, the imaging system 2 and the measurement system 5 may collectively be referred to as a light detection system.

### (5) Supplementary Note

Regarding the above-described example embodiment, below described Supplementary notes are further disclosed.

### [Supplementary Note A1]

A control apparatus that generates a control signal for controlling at least one of a robot, on which a holding apparatus that is configured to hold a target object is mounted and which moves the holding apparatus, and a holding apparatus, wherein
the control apparatus includes:
a computing apparatus that generates the control signal; and
a communication apparatus that outputs the control signal generated by the computing apparatus,
the computing apparatus:
   generates, as the control signal, a first control signal for controlling at least one of the robot and the holding apparatus so that at least a second target object drops onto a placing member, in a case where the second target object of a plurality of target objects placed on the placing member is held by the holding apparatus together with a first target object of a plurality of target objects placed on the placing member when the holding apparatus holds the first target object; and
   generates, as the control signal, a second control signal for controlling at least one of the robot and the holding apparatus so that at least a fourth target object drops onto the placing member from a position that is lower than a position from which at least the second target object starts to drop onto the placing member, in a case where the fourth target object of a plurality of target objects placed on the placing member is held by the holding apparatus together with a third target object of a plurality of target objects placed on the placing member, when the holding apparatus holds the third target object after at least the second target object has dropped onto the placing member based on the first control signal.

### [Supplementary Note A2]

The control apparatus according to the Supplementary Note A1, wherein
the second control signal includes at least one signal of a signal for controlling at least one of the robot and the holding apparatus so that at least the fourth target object positioned at the lower position drops from the holding apparatus onto the placing member, and a signal for controlling at least one of the robot and the holding apparatus so that at least the fourth target object drops onto the placing member from the holding apparatus positioned at the lower position.

### [Supplementary Note A3]

The control apparatus according to the Supplementary Note A1 or A2, wherein
a height of at least a part of a plurality of target objects placed on the placing member when at least the fourth target object starts to drop based on the second control signal is lower than a height of at least a part of a plurality of target objects placed on the placing member when at least the second target object starts to drop based on the first control signal.

### [Supplementary Note A4]

The control apparatus according to any one of the Supplementary Notes A1 to A3, wherein
the number of target objects placed on the placing member when at least the fourth target object starts to drop is smaller than the number of target objects placed on the placing member when at least the second target object starts to drop.

### [Supplementary Note A5]

The control apparatus according to any one of the Supplementary Notes A1 to A4, wherein
the computing apparatus determines a first drop height, from which at least the second target object starts to drop onto the placing member, based on an imaged result by an imaging system imaging at least a part of a plurality of target objects placed on the placing member, and
the first control signal includes a signal for controlling at least one of the robot and the holding apparatus so that at least the second target object drops onto the placing member from the determined first drop height.

### [Supplementary Note A6]

The control apparatus according to the Supplementary Note A5, wherein
the first drop height is a height of the second target object when at least the second target object starts to drop, a height of the first target object when at least the second target object starts to drop, heights of the first and second target objects when at least the second target object starts to drop, a height of the imaging system when at least the second target object starts to drop, or a height of the holding apparatus when at least the second target object starts to drop.

### [Supplementary Note A7]

The control apparatus according to the Supplementary Note A5 or A6, wherein
the holding apparatus is controlled so as to hold the first target object, based on an imaged result by the imaging system imaging a target object group including at least a part of a plurality of target objects placed on the placing member, and
the imaged result that is used to determine the first drop height is an imaged result by the imaging system imaging the target object group.

### [Supplementary Note A8]

The control apparatus according to any one of the Supplementary Notes A1 to A7, wherein
the holding apparatus is controlled so as to hold the first target object, based on an imaged result by an imaging system imaging a first target object group including at least a part of a plurality of target objects placed on the placing member, and
the second control signal includes a signal for controlling at least one of the robot and the holding apparatus so that at least the fourth target object drops onto the placing member from the lower position, in a case where the fourth target object is held by the holding apparatus together with the third target object when the holding apparatus holds the third target object of a second target object group, which includes at least a part of a plurality of target objects placed on the placing member, based on an imaged result by the imaging system imaging the second target object group.

### [Supplementary Note A9]

The control apparatus according to the Supplementary Note A8, wherein
a height of the second target object group is lower than a height of the first target object group.

### [Supplementary Note A10]

The control apparatus according to the Supplementary Note A8 or A9, wherein
the computing apparatus determines a second drop height, from which at least the fourth target object starts to drop onto the placing member, based on an imaged result by the imaging system imaging at least a part of a plurality of target objects placed on the placing member, and
the second control signal includes a signal for controlling at least one of the robot and the holding apparatus so that at least the fourth target object drops onto the placing member from the determined second drop height.

### [Supplementary Note A11]

The control apparatus according to the Supplementary Note A10, wherein
the second drop height is a height of the fourth target object when at least the fourth target object starts to drop, a height of the third target object when at least the fourth target object starts to drop, heights of the third and fourth target objects when at least the fourth target object starts to drop, a height of the imaging system when at least the fourth target object starts to drop, or a height of the holding apparatus when at least the fourth target object starts to drop.

### [Supplementary Note A12]

The control apparatus according to the Supplementary Note A10 or A11, wherein
the imaged result that is used to determine the second drop height is an imaged result by the imaging system imaging the second target object group.

### [Supplementary Note A13]

The control apparatus according to any one of the Supplementary Notes A1 to A12, wherein
a state in which the second target object is held by the holding apparatus together with the first target object includes a state in which the second target object is indirectly or directly held by the holding apparatus, and
a state in which the fourth target object is held by the holding apparatus together with the third target object includes a state in which the fourth target object is indirectly or directly held by the holding apparatus.

### [Supplementary Note A14]

The control apparatus according to the Supplementary Note A13, wherein
the state in which the second target object is indirectly held by the holding apparatus is a state in which the second target object is held by the first target object held by the holding apparatus,
the state in which the second target object is directly held by the holding apparatus is a state in which each of the first target object and the second target object is directly held by the holding apparatus,
the state in which the fourth target object is indirectly held by the holding apparatus is a state in which the fourth target object is held by the third target object held by the holding apparatus, and
the state in which the fourth target object is directly held by the holding apparatus is a state in which each of the third target object and the fourth target object is directly held by the holding apparatus.

### [Supplementary Note A15]

The control apparatus according to the Supplementary Note A14, wherein
in a case of the state in which the second target object is held by the first target object held by the holding apparatus, the computing apparatus generates, as the first control signal, a signal for controlling at least one of the robot and the holding apparatus so that the second target object drops onto the placing member from the first target object in a state where the first target object is held by the holding apparatus.

### [Supplementary Note A16]

The control apparatus according to the Supplementary Note A15, wherein
the first control signal includes a signal for controlling the robot so that the second target object drops onto the placing member from the first target object by moving the holding apparatus while holding the first target object.

### [Supplementary Note A17]

The control apparatus according to the Supplementary Note A16, wherein
the moving the holding apparatus includes changing a pose of the holding apparatus.

### [Supplementary Note A18]

The control apparatus according to the Supplementary Note A17, wherein
the changing the pose of the holding apparatus by the first control signal includes rotationally moving a reference point of the holding apparatus in a direction directed from an end part of the first target object held by the holding apparatus toward the reference point of the holding apparatus.

### [Supplementary Note A19]

The control apparatus according to the Supplementary Note A18, wherein
the end part of the first target object is a part of the end part of the first target object that is farthest from the reference point of the holding apparatus.

### [Supplementary Note A20]

The control apparatus according to any one of the Supplementary Notes A15 to A19, wherein
the first control signal includes a signal for controlling the holding apparatus so that the second target object drops onto the placing member from the first target object by decreasing a holding force of the holding apparatus while holding the first target object.

### [Supplementary Note A21]

The control apparatus according to any one of the Supplementary Notes A14 to A20, wherein
in a case of the state in which the fourth target object is held by the third target object held by the holding apparatus, the computing apparatus generates, as the third control signal, a signal for controlling at least one of the robot and the holding apparatus so that the fourth target object drops onto the placing member from the third target object in a state where the third target object is held by the holding apparatus.

### [Supplementary Note A22]

The control apparatus according to the Supplementary Note A21, wherein
the third control signal includes a signal for controlling the robot so that the fourth target object drops onto the placing member from the third target object by moving the holding apparatus while holding the third target object.

### [Supplementary Note A23]

The control apparatus according to the Supplementary Note A22, wherein
the moving the holding apparatus includes changing a pose of the holding apparatus.

### [Supplementary Note A24]

The control apparatus according to the Supplementary Note A23, wherein
the changing the pose of the holding apparatus by the third control signal includes rotationally moving a reference point of the holding apparatus in a direction directed from an end part of the third target object held by the holding apparatus toward the reference point of the holding apparatus.

### [Supplementary Note A25]

The control apparatus according to the Supplementary Note A24, wherein
the end part of the third target object is a part of the end part of the third target object that is farthest from the reference point of the holding apparatus.

### [Supplementary Note A26]

The control apparatus according to any one of the Supplementary Notes A21 to A25, wherein
the third control signal includes a signal for controlling the holding apparatus so that the fourth target object drops onto the placing member from the third target object by decreasing a holding force of the holding apparatus while holding the third target object.

### [Supplementary Note A27]

The control apparatus according to any one of the Supplementary Notes A14 to A26, wherein
in a case of the state in which each of the first target object and the second target object is directly held by the holding apparatus, the computing apparatus generates, as the first control signal, a signal for controlling at least one of the robot and the holding apparatus so that the first target object and the second target object drop onto the placing member from the holding apparatus.

### [Supplementary Note A28]

The control apparatus according to any one of the Supplementary Notes A14 to A27, wherein
in a case of the state in which each of the third target object and the fourth target object is directly held by the holding apparatus, the computing apparatus generates, as the first control signal, a signal for controlling at least one of the robot and the holding apparatus so that the third target object and the fourth target object drop onto the placing member from the holding apparatus.

### [Supplementary Note A29]

The control apparatus according to any one of the Supplementary Notes A1 to A28, wherein
the first control signal includes a first signal for controlling at least one of the robot and the holding apparatus so that at least the second target object drops onto the placing member, and
in a case where at least the second target object has not dropped even after at least one of the robot and the holding apparatus is controlled based on the first signal, the computing apparatus generates, as a part of the first control signal, a second signal for controlling at least one of the robot and the holding apparatus in a control aspect, which is different from a control aspect based on the first signal, so that at least the second target object drops onto the placing member.

### [Supplementary Note A30]

The control apparatus according to any one of the Supplementary Notes A1 to A29, wherein
the first control signal includes a third signal for controlling at least one of the robot and the holding apparatus so that at least the fourth target object drops onto the placing member, and
in a case where at least the fourth target object has not dropped even after at least one of the robot and the holding apparatus is controlled based on the third signal, the computing apparatus generates, as a part of the first control signal, a fourth signal for controlling at least one of the robot and the holding apparatus in a control aspect, which is different from a control aspect based on the third signal, so that at least the fourth target object drops onto the placing member.

### [Supplementary Note A31]

The control apparatus according to the Supplementary Note A29 or A30, wherein
the control aspect includes at least one of a control aspect of the robot and a control aspect of the holding apparatus.

### [Supplementary Note A32]

The control apparatus according to any one of the Supplementary Notes A1 to A31, wherein
the computing apparatus generates the first control signal after the holding apparatus holds the first target object.

### [Supplementary Note A33]

The control apparatus according to the Supplementary Note A32, wherein
the computing apparatus generates the first control signal based on a measured result by a measurement apparatus.

### [Supplementary Note A34]

The control apparatus according to the Supplementary Note A33, wherein
the computing apparatus generates the first control signal for controlling at least one of the robot and the holding apparatus based on the measured result so that a pose of at least the second target object, which has dropped to be positioned on the placing member, becomes a desired pose.

### [Supplementary Note A35]

The control apparatus according to the Supplementary Note A34, wherein
the desired pose includes a pose that allows a desired part of at least the second target object, which has dropped to be positioned on the placing member, to face a desired direction.

### [Supplementary Note A36]

The control apparatus according to any one of the Supplementary Notes A1 to A35, wherein
the computing apparatus generates the second control signal after the holding apparatus holds the third target object.

### [Supplementary Note A37]

The control apparatus according to the Supplementary Note A36, wherein
the computing apparatus generates the second control signal based on a measured result by a measurement apparatus.

### [Supplementary Note A38]

The control apparatus according to the Supplementary Note A37, wherein
the computing apparatus generates the second control signal for controlling at least one of the robot and the holding apparatus based on the measured result so that a pose of at least the fourth target object, which has dropped to be positioned on the placing member, becomes a desired pose.

### [Supplementary Note A39]

The control apparatus according to the Supplementary Note A38, wherein
the desired pose includes a pose that allows a desired part of at least the fourth target object, which has dropped to be positioned on the placing member, to face a desired direction.

### [Supplementary Note A40]

The control apparatus according to any one of the Supplementary Notes A33 to A39, wherein
the computing apparatus generates the first control signal for controlling at least one of the robot and the holding apparatus based on the measured result so that at least the second target object drops to a desired position on the placing member.

### [Supplementary Note A41]

The control apparatus according to any one of the Supplementary Notes A33 to A40, wherein
the computing apparatus generates the first control signal for controlling at least one of the robot and the holding apparatus based on the measured result so that at least the fourth target object drops to a desired position on the placing member.

### [Supplementary Note A42]

The control apparatus according to the Supplementary Note A40 or A41, wherein
the desired position includes a position on the placing member at which there is no target object.

### [Supplementary Note A43]

The control apparatus according to any one of the Supplementary Notes A33 to A42, wherein
the computing apparatus determines whether to drop only the second target object onto the placing member or to drop the first target object and the second target object onto the placing member, among the first target object and the second target object held by the holding apparatus, based on the measured result, and generates the first control signal based on a determined result.

### [Supplementary Note A44]

The control apparatus according to any one of the Supplementary Notes A33 to A43, wherein
the computing apparatus determines whether to drop only the fourth target object onto the placing member or to drop the third target object and the fourth target object onto the placing member, among the third target object and the fourth target object held by the holding apparatus, based on the measured result, and generates the first control signal based on a determined result.

### [Supplementary Note A45]

The control apparatus according to any one of the Supplementary Notes A33 to A44, wherein
the measurement apparatus includes the imaging system, and
the computing apparatus generates the first control signal based on an imaged result by the imaging system after the holding apparatus holds the first target object based on an imaged result by the imaging system imaging the target object group.

### [Supplementary Note A46]

The control apparatus according to any one of the Supplementary Notes A33 to A45, wherein
the measurement apparatus includes the imaging system, and
the computing apparatus generates the second control signal based on an imaged result by the imaging system after the holding apparatus holds the third target object based on an imaged result by the imaging system imaging the target object group.

### [Supplementary Note A47]

The control apparatus according to the Supplementary Note A45 or A46, wherein
the imaging system is mounted on the robot.

### [Supplementary Note A48]

The control apparatus according to any one of the Supplementary Notes A1 to A47, wherein
the computing apparatus generates the control signal based on an imaged result by an imaging system imaging at least a part of a plurality of target objects placed on the placing member.

### [Supplementary Note A49]

The control apparatus according to the Supplementary Note A48, wherein
the imaging system is mounted on the robot.

### [Supplementary Note A50]

The control apparatus according to any one of the Supplementary Notes A1 to A49, wherein
the placing member includes a container configured to contain a plurality of target objects.

### [Supplementary Note A51]

A control system comprising:
the control apparatus according to any one of the Supplementary Notes A1 to A50; and
the imaging system.

### [Supplementary Note A52]

A robot system comprising:
the control apparatus according to any one of the Supplementary Notes A1 to A50; and
the imaging system;
the robot.

### [Supplementary Note A53]

A control method that generates a control signal for controlling at least one of a robot, on which a holding apparatus that is configured to hold a target object is mounted and which moves the holding apparatus, and a holding apparatus, wherein
the control method includes:
generating, as the control signal, a first control signal for controlling at least one of the robot and the holding apparatus so that at least a second target object drops onto a placing member, in a case where the second target object of a plurality of target objects placed on the placing member is held by the holding apparatus together with a first target object of a plurality of target objects placed on the placing member when the holding apparatus holds the first target object; and
generating, as the control signal, a second control signal for controlling at least one of the robot and the holding apparatus so that at least a fourth target object drops onto the placing member from a position that is lower than a position from which at least the second target object starts to drop onto the placing member, in a case where the fourth target object of a plurality of target objects placed on the placing member is held by the holding apparatus together with a third target object of a plurality of target objects placed on the placing member, when the holding apparatus holds the third target object after at least the second target object has dropped onto the placing member based on the first control signal.

### [Supplementary Note A54]

A computer program for causing a computer to execute the control method according to the Supplementary Note A53.

### [Supplementary Note B1]

A control apparatus that generates a control signal for controlling at least one of a robot, on which a holding apparatus that is configured to hold a target object is mounted and which moves the holding apparatus, and a holding apparatus, wherein
the control apparatus includes:
a computing apparatus that generates the control signal; and
a communication apparatus that outputs the control signal generated by the computing apparatus,
the computing apparatus generates, as the control signal, a first control signal for controlling at least one of the robot and the holding apparatus based on a held state of a held target object group held by the holding apparatus, which is detected based on a measured result acquired by the measurement apparatus measuring the held target object group that includes a plurality of target objects held by the holding apparatus, after a holding operation by the holding apparatus is performed on a plurality of target objects placed on a placing member.

### [Supplementary Note B2]

The control apparatus according to the Supplementary Note B1, wherein
the computing apparatus:
generates, as a part of the first control signal, a signal for controlling the robot so that the holding apparatus moves away from a plurality of target objects placed on the placing member from a position at which the holding apparatus holds the held target object group, after the holding operation by the holding apparatus is performed on the target object placed on the placing member, and
the held state is detected based on the measured result acquired by the measurement apparatus measuring the held target object group held by the holding apparatus that has moved away from the plurality of target objects placed on the placing member based on the signal that is a part of the first control signal.

### [Supplementary Note B3]

The control apparatus according to the Supplementary Note B2, wherein
the signal that is a part of the first control signal includes a signal for controlling the robot so that the holding apparatus moves to a position that is higher than a position at which the held target object group is held by the holding apparatus.

### [Supplementary Note B4]

The control apparatus according to any one of the Supplementary Notes B1 to B3, wherein
the computing apparatus generates the first control signal for controlling at least one of the robot and the holding apparatus based on the held state so that at least one target object of the held target object group is placed on the placing member, and
a position from which at least one target object of the held target object group starts to be placed on the placing member is closer to the placing member than a position at which the measurement apparatus measures the held target object group in order to acquire the measured result.

### [Supplementary Note B5]

The control apparatus according to the Supplementary Note B4, wherein
the first control signal includes a signal for controlling at least one of the robot and the holding apparatus so that at least one target object of the held target object group is placed on the placing member from a position that is lower than a position at which the measurement apparatus measures the held target object group in order to acquire the measured result.

### [Supplementary Note B6]

The control apparatus according to the Supplementary Note B4 or B5, wherein
the placing at least one target object of the held target object group on the placing member includes dropping at least one target object of the held target object group onto the placing member.

### [Supplementary Note B7]

The control apparatus according to any one of the Supplementary Notes B1 to B6, wherein
the holding operation includes an operation for holding one target object of a plurality of target objects placed on the placing member by the holding apparatus, and
the target object, which is other than the one target object held by the holding apparatus, of the held target object group is an excess target object held by the holding apparatus when the one target object is held by the holding operation.

### [Supplementary Note B8]

The control apparatus according to any one of the Supplementary Notes B1 to B7, wherein
the held state includes a state in which at least one target object of the held target object group held by the holding apparatus is indirectly held by the holding apparatus, and a state in which two or more target objects of the held target object group held by the holding apparatus are directly held by the holding apparatus.

### [Supplementary Note B9]

The control apparatus according to the Supplementary Note B8, wherein
the computing apparatus discriminates between the indirectly held state and the directly held state based on the measured result, and generates the first control signal based on a discriminated result.

### [Supplementary Note B10]

The control apparatus according to the Supplementary Note B8 or B9, wherein
the indirectly held state includes a state in which another target object is held by one target object of the held target object group held by the holding apparatus, and
the directly held state includes a state in which each of two or more target objects of the held target object group is directly held by the holding apparatus.

### [Supplementary Note B11]

The control apparatus according to the Supplementary Note B10, wherein
in a case where the detected held state is the state in which the another target object is held by the one target object held by the holding apparatus, the first control signal includes a signal for controlling at least one of the robot and the holding apparatus so that the another target object is placed on the placing member while holding the one target object.

### [Supplementary Note B12]

The control apparatus according to the Supplementary Note B11, wherein
in a case where the another target object has placed onto the placing member based on the first control signal, the one target object held by the holding apparatus is transported from the placing member and released from the holding apparatus outside the placing member.

### [Supplementary Note B13]

The control apparatus according to the Supplementary Note B11 or B12, wherein
the placing the another target object on the placing member includes dropping the another target object onto the placing member.

### [Supplementary Note B14]

The control apparatus according to any one of the Supplementary Notes B10 to B13, wherein
in a case where the detected held state is a state in which each of two or more target objects of the held target object group held by the holding apparatus is directly held by the holding apparatus, the first control signal includes a signal for controlling at least one of the robot and the holding apparatus so that the held target object group held by the holding apparatus is placed on the placing member.

### [Supplementary Note B15]

The control apparatus according to the Supplementary Note B14, wherein
after the held target object group held by the holding apparatus is placed on the placing member based on the first control signal, the target object of a plurality of target objects placed on the placing member is held by the holding apparatus, or at least a part of the plurality of target objects placed on the placing member is measured by the measurement apparatus.

### [Supplementary Note B16]

The control apparatus according to the Supplementary Note B14 or B15, wherein
the placing the held target object group held by the holding apparatus on the placing member includes dropping the held target object group held by the holding apparatus onto the placing member.

### [Supplementary Note B17]

The control apparatus according to any one of the Supplementary Notes B11 to B13, wherein
the one target object includes a first target object,
the another target object includes a second target object, and
the first control signal includes a signal for controlling the robot so that the second target object is placed on the placing member from the first target object from a first placement height by moving the holding apparatus while holding the first target object.

### [Supplementary Note B18]

The control apparatus according to the Supplementary Note B17, wherein
the placing the second target object on the placing member includes dropping the second target object onto the placing member.

### [Supplementary Note B19]

The control apparatus according to any one of the Supplementary Notes B14 to B16, wherein
the two or more target objects include a first target object and a second target object, and
the first control signal includes a signal for controlling at least one of the robot and the holding apparatus so that the first and second target objects held by the holding apparatus are placed on the placing member from the holding apparatus from a first placement height.

### [Supplementary Note B20]

The control apparatus according to the Supplementary Note B19, wherein
the placing the first and second target objects on the placing member includes dropping the first and second target objects onto the placing member.

### [Supplementary Note B21]

The control apparatus according to any one of the Supplementary Notes B17 to B20, wherein
the measurement apparatus is a first measurement apparatus, and
the computing apparatus determines the first placement height based on a measured result of at least a part of a plurality of target objects placed on the placing member by a second measurement apparatus.

### [Supplementary Note B22]

The control apparatus according to the Supplementary Note B21, wherein
a position at which at least the second target object is placed on the placing member from the determined first placement height is included in a measurement range including at least a part of the plurality of target objects that is placed on the placing member and that is measured by the second measurement apparatus.

### [Supplementary Note B23]

The control apparatus according to the Supplementary Note B21 or B22, wherein
the computing apparatus determines the first placement height based on at least one of a height and a quantity of at least a part of the plurality of target objects placed on the placing member, which is calculated based on the measured result of at least a part of the plurality of target objects placed on the placing member by the second measurement apparatus.

### [Supplementary Note B24]

The control apparatus according to the Supplementary Note B23, wherein
the second measurement apparatus is the first measurement apparatus, and
the computing apparatus determines the first placement height based on a measured result acquired by the first measurement apparatus measuring at least a part of the plurality of target objects placed on the placing member.

### [Supplementary Note B25]

The control apparatus according to the Supplementary Note B23 or B24, wherein
the second measurement apparatus is the first measurement apparatus, and
the computing apparatus determines the first placement height based on a measured result acquired by the first measurement apparatus measuring at least a part of the plurality of target objects placed on the placing member after the holding operation by the holding apparatus is performed.

### [Supplementary Note B26]

The control apparatus according to any one of the Supplementary Notes B1 to B25, wherein
the measurement apparatus is a first measurement apparatus, and
the computing apparatus generates the first control signal based on a measured result of at least a part of a plurality of target objects placed on the placing member by a second measurement apparatus.

### [Supplementary Note B27]

The control apparatus according to the Supplementary Note B26, wherein
the computing apparatus generates the first control signal based on at least one of a height and a quantity of at least a part of the plurality of target objects placed on the placing member, which is calculated based on the measured result by the second measurement apparatus.

### [Supplementary Note B28]

The control apparatus according to the Supplementary Note B23 or B27, wherein
the second measurement apparatus is configured to directly or indirectly measure at least one of the height and the quantity.

### [Supplementary Note B29]

The control apparatus according to the Supplementary Note B23, B27, or B28, wherein
the second measurement apparatus includes at least one of a first imaging system that is used as the first measurement apparatus and a second imaging system that is different from the first imaging system, and
the computing apparatus calculates at least one of the height or the quantity based on an imaged result by at least one of the first and second imaging systems.

### [Supplementary Note B30]

The control apparatus according to the Supplementary Note B29, wherein
the first imaging system is mounted on the robot.

### [Supplementary Note B31]

The control apparatus according to the Supplementary Note B29 or B30, wherein
the imaged result includes a result of imaging at least a part of a plurality of target objects placed on the placing member by at least one of the first and second imaging systems.

### [Supplementary Note B32]

The control apparatus according to any one of the Supplementary Notes B29 to B31, wherein
the imaged result includes an imaged result of at least one marker that is positioned at a position, which faces a space in which at least a part of a plurality of target objects is positioned, on a surface of the placing member.

### [Supplementary Note B33]

The control apparatus according to any one of the Supplementary Notes B21 to B32, wherein
the second measurement apparatus includes a weight sensor that is configured to measure a weight of at least a part of a plurality of target objects placed on the placing member.

### [Supplementary Note B34]

The control apparatus according to any one of the Supplementary Notes B21 to B33, wherein
the second measurement apparatus includes at least one sensor that is configured to detect at least one target object of a plurality of target objects placed on the placing member.

### [Supplementary Note B35]

The control apparatus according to the Supplementary Note B34, wherein
the at least one sensor is positioned in the placing member.

### [Supplementary Note B36]

The control apparatus according to any one of the Supplementary Notes B17 to B25, wherein
the computing apparatus determines the first placement height based on the number of target objects that has been transported from the placing member and released from the holding apparatus outside the placing member.

### [Supplementary Note B37]

The control apparatus according to any one of the Supplementary Notes B1 to B36, wherein
the first control signal includes a signal that is generated by the computing apparatus based on the held state of the held target object group held by the holding apparatus and that is for controlling at least one of the robot and the holding apparatus so that a placement target object, which is at least one target object of the held target object group, is placed on the placing member.

### [Supplementary Note B38]

The control apparatus according to the Supplementary Note B37, wherein
the held state includes at least one of a position and a pose of at least the placement target object of the held target object group.

### [Supplementary Note B39]

The control apparatus according to the Supplementary Note B37 or B38, wherein
thee first control signal includes a signal that is generated by the computing apparatus based on the held state and that is for controlling at least one of the robot and the holding apparatus so that a pose of the placement target object placed on the placing member becomes a desired pose.

### [Supplementary Note B40]

The control apparatus according to the Supplementary Note B39, wherein
the desired pose includes a pose that allows a desired part of the placement target object placed on the placing member faces a desired direction.

### [Supplementary Note B41]

The control apparatus according to any one of the Supplementary Notes B37 to B40, wherein
the measurement apparatus is a first measurement apparatus, and
the computing apparatus generates the first control signal for controlling at least one of the robot and the holding apparatus so that the placement target object is placed on the placing member, based on a measured result by a second measurement apparatus and the held state of the held target object group held by the holding apparatus.

### [Supplementary Note B42]

The control apparatus according to the Supplementary Note B41, wherein
the second measurement apparatus includes an imaging system that is used as the first measurement apparatus, and
the measured result includes an imaged result of at least a part of a plurality of target objects placed on the placing member by the imaging system.

### [Supplementary Note B43]

The control apparatus according to any one of the Supplementary Notes B1 to B42, wherein
the measurement apparatus is a first measurement apparatus,
the first control signal includes a first signal for controlling at least one of the robot and the holding apparatus so that a placement target object, which is at least one target object of the held target object group, is placed on the placing member, and
the computing apparatus determines whether or not the placement target object is held by the holding apparatus, based on a measured result by a second measurement apparatus while or after at least one of the robot and the holding apparatus is controlled based on the first signal.

### [Supplementary Note B44]

The control apparatus according to the Supplementary Note B43, wherein
the second measurement apparatus includes an imaging system that is used as the first measurement apparatus, and
the measured result is an imaged result by the imaging system.

### [Supplementary Note B45]

The control apparatus according to the Supplementary Note B42 or B44, wherein
the imaging system is mounted on the robot.

### [Supplementary Note B46]

The control apparatus according to any one of the Supplementary Notes B43 to B45, wherein
the first signal is a signal for controlling at least one of the robot and the holding apparatus so that the placement target object is placed on the placing member, and
in a case where the computing apparatus determines that at least one placement target objects is held by the holding apparatus, the computing apparatus generates, as a part of the first control signal, a second signal for controlling at least one of the robot and the holding apparatus in a control aspect, which is different from a control aspect based on the first signal, so that at least one placement target objects is placed.

### [Supplementary Note B47]

The control apparatus according to any one of the Supplementary Notes B37 to B46, wherein
the placing the placement target object on the placing member includes dropping the placement target object onto the placing member.

### [Supplementary Note B48]

The control apparatus according to any one of the Supplementary Notes B1 to B47, wherein
the computing apparatus:
generates the first control signal for controlling at least one of the robot and the holding apparatus based on the held state so that at least one target object of the held target object group is placed on the placing member; and
estimates at least one of a position and a pose of the target object, which has been placed on the placing member based on the first control signal, based on the measured result, and
a holding operation by the holding apparatus is performed on the target object based on at least one of the estimated position and pose of the target object.

### [Supplementary Note B49]

The control apparatus according to any one of the Supplementary Notes B10 to B13 and B17 to B18, wherein
the another target object includes two target objects, and
the computing apparatus, the control signal includes a signal for controlling the robot and the holding apparatus so that the two target objects are placed on the placing member in a state where the holding apparatus holds the one target object.

### [Supplementary Note B50]

The control apparatus according to the Supplementary Note B49, wherein
the placing the two target objects on the placing member includes dropping the two target objects onto the placing member.

### [Supplementary Note B51]

The control apparatus according to the Supplementary Note B49 or B50, wherein
the another target object includes a first target object and a second target object,
the state in which the another target object is held by the one target object held by the holding apparatus is a state in which the first target object is held by the one target object held by the holding apparatus, and the second target object is held by the first target object held by the one target object, and
the control signal includes a signal for controlling at least one of the robot and the holding apparatus so that the second target object is placed from the first target object on the placing member in a state where the first target object is held by the one target object held by the holding apparatus, and a signal for controlling at least one of the robot and the holding apparatus so that the first target object is placed from the one target object on the placing member in a state where the one target object is held by the holding apparatus.

### [Supplementary Note B52]

The control apparatus according to the Supplementary Note B51, wherein
the placing the first target object on the placing member includes dropping the first target object onto the placing member, and
the placing the second target object on the placing member includes dropping the second target object onto the placing member.

### [Supplementary Note B53]

The control apparatus according to any one of the Supplementary Notes B14 to B16 and B19 to B20, wherein
the held target object group includes three target objects, and
in a case of a state in which each of two target objects or three target objects of the held target object group is directly held by the holding apparatus, the control signal includes a signal for controlling the robot and the holding apparatus so that the two target objects or the three target objects directly held by the holding apparatus are placed on the placing member while holding the one target object.

### [Supplementary Note B54]

The control apparatus according to the Supplementary Note B53, wherein
the placing the two target objects or the three target objects on the placing member includes dropping the two target objects or the three target objects onto the placing member.

### [Supplementary Note B55]

The control apparatus according to any one of the Supplementary Notes B1 to B56, wherein
the computing apparatus generates, as the control signal, a second control signal for controlling at least one of the robot and the holding apparatus to perform the holding operation based on an imaged result acquired by an imaging system imaging at least a part of a plurality of target objects placed on the placing member.

### [Supplementary Note B56]

The control apparatus according to the Supplementary Note B55, wherein
the imaging system is mounted on the robot.

### [Supplementary Note B57]

The control apparatus according to any one of the Supplementary Notes B1 to B56, wherein
the placing member includes a container configured to contain a plurality of target objects.

### [Supplementary Note B58]

A control system comprising:
the control apparatus according to any one of the Supplementary Notes B1 to B57; and
the imaging system.

### [Supplementary Note B59]

A robot system comprising:
the control apparatus according to any one of the Supplementary Notes B1 to B57;
the imaging system; and
the robot.

### [Supplementary Note B60]

A control method that generates a control signal for controlling at least one of a robot, on which a holding apparatus that is configured to hold a target object is mounted and which moves the holding apparatus, and a holding apparatus, wherein
the control method includes generating, as the control signal, a first control signal for controlling at least one of the robot and the holding apparatus based on a held state of a held target object group held by the holding apparatus, which is detected based on a measured result acquired by the measurement apparatus measuring the held target object group that includes a plurality of target objects held by the holding apparatus, after a holding operation by the holding apparatus is performed on a plurality of target objects placed on a placing member.

### [Supplementary Note B61]

A computer program for causing a computer to execute the control method according to the Supplementary Note B60.

### [Supplementary Note C1]

A control apparatus that generates a control signal for controlling at least one of a robot, on which a holding apparatus that is configured to hold a target object is mounted and which moves the holding apparatus, and a holding apparatus, wherein
the control apparatus includes:
a computing apparatus that generates the control signal; and
a communication apparatus that outputs the control signal generated by the computing apparatus,
the computing apparatus:
   determines the number of target objects held by the holding apparatus based on a second imaged result acquired by imaging the target objects held by the holding apparatus, after a holding operation by the holding apparatus is performed on the target object of a plurality of target objects placed on a placing member, and
   generates the control signal for controlling at least one of the robot and the holding apparatus so that a control aspect of at least one of the robot and the holding apparatus changes based on the determined number.

### [Supplementary Note C2]

The control apparatus according to the Supplementary Note C1, wherein
the computing apparatus generates the control signal for controlling at least one of the robot and the holding apparatus so that the control aspect in a case where it is determined that the number is one is different from the control aspect in a case where it is determined that the number is plural.

### [Supplementary Note C3]

The control apparatus according to the Supplementary Note C1 or C2, wherein
in a case where it is determined that the number is plural, the computing apparatus generates the control signal for controlling at least one of the robot and the holding apparatus so that the control aspect in a state where at least one target object of the plurality of target objects held by the holding apparatus is indirectly held by the holding apparatus is different from the control aspect in a state where two or more target objects of the held target object group held by the holding apparatus are directly held by the holding apparatus.

### [Supplementary Note C4]

The control apparatus according to any one of the Supplementary Notes C1 to C3, wherein
in a case where it is determined that the number is one, the computing apparatus generates the control signal for controlling at least one of the robot and the holding apparatus so that the one target object held by the holding apparatus is transported from the container and released from the holding apparatus outside the container.

### [Supplementary Note C5]

The control apparatus according to any one of the Supplementary Notes C1 to C4, wherein
the control aspect of the robot includes at least one of a movement direction, a movement distance, a movement speed, and a movement acceleration of the holding apparatus controlled by the robot, and
the control aspect of the holding apparatus includes a holding force of the holding apparatus.

### [Supplementary Note C6]

The control apparatus according to any one of the Supplementary Notes C1 to C5, wherein
the computing apparatus generates the control signal for controlling at least one of the robot and the holding apparatus to perform the holding operation based on an imaged result acquired by an imaging system imaging at least a part of a plurality of target objects placed on the placing member.

### [Supplementary Note C7]

The control apparatus according to the Supplementary Note C6, wherein
the imaging system is mounted on the robot.

### [Supplementary Note C8]

The control apparatus according to the Supplementary Note C6 or C7, wherein
the measurement apparatus includes the imaging system.

### [Supplementary Note C9]

The control apparatus according to any one of the Supplementary Notes C6 to C8, wherein
the imaging system is a first imaging system, and
the measurement apparatus includes a second imaging system that is different from the first imaging system.

### [Supplementary Note C10]

The control apparatus according to any one of the Supplementary Notes C1 to C5, wherein
the measurement apparatus includes an imaging system.

### [Supplementary Note C11]

The control apparatus according to any one of the Supplementary Notes C1 to C10, wherein
the placing member includes a container configured to contain a plurality of target objects.

### [Supplementary Note C12]

A control system comprising:
the control apparatus according to any one of the Supplementary Notes C1 to C11; and
the imaging system.

### [Supplementary Note C13]

A robot system comprising:
the control apparatus according to any one of the Supplementary Notes C1 to C11; and
the imaging system;
the robot.

### [Supplementary Note C14]

A control method that generates a control signal for controlling at least one of a robot, on which a holding apparatus that is configured to hold a target object is mounted and which moves the holding apparatus, and a holding apparatus, wherein
the control method includes:
determining the number of target objects held by the holding apparatus based on a second imaged result acquired by imaging the target objects held by the holding apparatus, after a holding operation by the holding apparatus is performed on the target object of a plurality of target objects placed on a placing member, and
generating the control signal for controlling at least one of the robot and the holding apparatus so that a control aspect of at least one of the robot and the holding apparatus changes based on the determined number.

### [Supplementary Note C15]

A computer program for causing a computer to execute the control method according to the Supplementary Note C14.

### [Supplementary Note D1]

A control apparatus that generates a control signal for controlling at least one of a robot, on which a holding apparatus that is configured to hold a target object is mounted and which moves the holding apparatus, and a holding apparatus, wherein
the control apparatus includes:
at least one processor;
at least one memory including a computer program code; and
a communication apparatus that outputs the control signal generated by the at least one processor,
the at least one processor:
   generates, as the control signal, a first control signal for controlling at least one of the robot and the holding apparatus so that at least a second target object drops onto a placing member, in a case where the second target object of a plurality of target objects placed on the placing member is held by the holding apparatus together with a first target object of a plurality of target objects placed on the placing member when the holding apparatus holds the first target object; and
   generates, as the control signal, a second control signal for controlling at least one of the robot and the holding apparatus so that at least a fourth target object drops onto the placing member from a position that is lower than a position from which at least the second target object starts to drop onto the placing member, in a case where the fourth target object of a plurality of target objects placed on the placing member is held by the holding apparatus together with a third target object of a plurality of target objects placed on the placing member, when the holding apparatus holds the third target object after at least the second target object has dropped onto the placing member based on the first control signal.

### [Supplementary Note D2]

A control apparatus that generates a control signal for controlling at least one of a robot, on which a holding apparatus that is configured to hold a target object is mounted and which moves the holding apparatus, and a holding apparatus, wherein
the control apparatus includes:
at least one processor;
at least one memory including a computer program code; and
a communication apparatus that outputs the control signal generated by the at least one processor,
the at least one processor generates, as the control signal, a first control signal for controlling at least one of the robot and the holding apparatus based on a held state of a held target object group held by the holding apparatus, which is detected based on a measured result acquired by the measurement apparatus measuring the held target object group that includes a plurality of target objects held by the holding apparatus, after a holding operation by the holding apparatus is performed on a plurality of target objects placed on a placing member.

### [Supplementary Note D3]

A control apparatus that generates a control signal for controlling at least one of a robot, on which a holding apparatus that is configured to hold a target object is mounted and which moves the holding apparatus, and a holding apparatus, wherein
the control apparatus includes:
at least one processor;
at least one memory including a computer program code; and
a communication apparatus that outputs the control signal generated by the at least one processor,
the at least one processor:
   determines the number of target objects held by the holding apparatus based on a second imaged result acquired by imaging the target objects held by the holding apparatus, after a holding operation by the holding apparatus is performed on the target object of a plurality of target objects placed on a placing member, and
   generates the control signal for controlling at least one of the robot and the holding apparatus so that a control aspect of at least one of the robot and the holding apparatus changes based on the determined number.

### [Supplementary Note D4]

A control apparatus that generates a control signal for controlling at least one of a robot, on which a holding apparatus that is configured to hold a target object and an imaging system that images the target object are mounted and which moves the holding apparatus and the imaging system, and a holding apparatus, wherein
the control apparatus includes:
at least one processor;
at least one memory including a computer program code; and
a communication apparatus that outputs the control signal generated by the at least one processor,
the at least one processor:
   generates, as the control signal, a first control signal for controlling at least one of the robot and the holding apparatus so that at least a second target object drops into a container, in a case where the second target object of a plurality of target objects contained in the container is held by the holding apparatus together with a first target object, which is the target object in a target object group including at least a part of a plurality of target objects contained in the container, when the holding apparatus holds the first target object based on an imaged result by the imaging system imaging the target object group; and
   generates, as the control signal, a second control signal for controlling at least one of the robot and the holding apparatus so that at least a fourth target object drops into the container from a position that is lower than a position from which at least the second target object starts to drop into the container, in a case where the fourth target object of a plurality of target objects contained in the container is held by the holding apparatus together with a third target object of a plurality of target objects contained in the container, when the holding apparatus holds the third target object after at least the second target object has dropped into the container based on the first control signal.

### [Supplementary Note D5]

A control apparatus that generates a control signal for controlling at least one of a robot, on which a holding apparatus that is configured to hold a target object and an imaging system that images the target object are mounted and which moves the holding apparatus and the imaging system, and a holding apparatus, wherein
the control apparatus includes:
at least one processor;
at least one memory including a computer program code; and
a communication apparatus that outputs the control signal generated by the at least one processor,
the at least one processor generates, as the control signal, a first control signal for controlling at least one of the robot and the holding apparatus based on a held state of a held target object group held by the holding apparatus, which is detected based on a second imaged result acquired by the imaging system imaging the held target object group that includes a plurality of target objects held by the holding apparatus, after a holding operation by the holding apparatus is performed on the target object contained in a container based on a first imaged result acquired by the imaging system imaging at least a part of a plurality of target objects contained in the container.

### [Supplementary Note D6]

A control apparatus that generates a control signal for controlling at least one of a robot, on which a holding apparatus that is configured to hold a target object and an imaging system that images the target object are mounted and which moves the holding apparatus and the imaging system, and a holding apparatus, wherein
the control apparatus includes:
at least one processor;
at least one memory including a computer program code; and
a communication apparatus that outputs the control signal generated by the at least one processor,
the at least one processor:
   determines the number of target objects held by the holding apparatus based on a second imaged result acquired by imaging the target objects held by the holding apparatus, after a holding operation by the holding apparatus is performed on the target object contained in a container based on a first imaged result acquired by the imaging system imaging at least a part of a plurality of target objects contained in the container, and
   generates the control signal for controlling at least one of the robot and the holding apparatus so that a control aspect of at least one of the robot and the holding apparatus changes based on the determined number.

At least a part of the feature of each example embodiment described above is allowed to be combined with at least another part of the feature of each example embodiment described above. A part of the feature of each example embodiment described above may not be used. Moreover, the disclosures of all publications and United States patents that are cited in each example embodiment described above are incorporated in the disclosures of the present application by reference if it is legally permitted.

The present invention is allowed to be changed, if desired, without departing from the essence or spirit of the invention which can be read from the claims and the entire specification, and a control apparatus, a control system, a robot system, a control method, and a computer program, which involve such changes, are also intended to be within the technical scope of the present invention.

### Description of Reference Codes

- SYS: robot system
- 1: robot
- 12: robot arm
- 13: robot control apparatus
- 2: imaging system
- 21: imaging apparatus
- 3: control apparatus
- 31: computing apparatus
- 311: position pose calculation unit
- 312: signal generation unit
- 313: false hold detection unit
- 33: communication unit
- 4: end effector
- OBJ: target object
- W: workpiece
- T: placing apparatus
- IMG: image data

## Claims

1. A control apparatus that generates a control signal for controlling at least one of a robot, on which a holding apparatus that is configured to hold a target object and an imaging system that images the target object are mounted and which moves the holding apparatus and the imaging system, and a holding apparatus, wherein
the control apparatus comprises:
a computing apparatus that generates the control signal; and
a communication apparatus that outputs the control signal generated by the computing apparatus,
the computing apparatus:
generates, as the control signal, a first control signal for controlling at least one of the robot and the holding apparatus so that at least a second target object drops into a container, in a case where the second target object of a plurality of target objects contained in the container is held by the holding apparatus together with a first target object, which is the target object in a target object group including at least a part of a plurality of target objects contained in the container, when the holding apparatus holds the first target object based on an imaged result by the imaging system imaging the target object group; and
generates, as the control signal, a second control signal for controlling at least one of the robot and the holding apparatus so that at least a fourth target object drops into the container from a position that is lower than a position from which at least the second target object starts to drop into the container, in a case where the fourth target object of a plurality of target objects contained in the container is held by the holding apparatus together with a third target object of a plurality of target objects contained in the container, when the holding apparatus holds the third target object after at least the second target object has dropped into the container based on the first control signal.

2. The control apparatus according to claim 1, wherein
the second control signal includes at least one signal of a signal for controlling at least one of the robot and the holding apparatus so that at least the fourth target object positioned at the lower position drops from the holding apparatus into the container, and a signal for controlling at least one of the robot and the holding apparatus so that at least the fourth target object drops into the container from the holding apparatus positioned at the lower position.

3. The control apparatus according to claim 1 or 2, wherein
a height of at least a part of a plurality of target objects contained in the container when at least the fourth target object starts to drop based on the second control signal is lower than a height of at least a part of a plurality of target objects contained in the container when at least the second target object starts to drop based on the first control signal.

4. The control apparatus according to any one of claims 1 to 3, wherein
the number of target objects contained in the container when at least the fourth target object starts to drop is smaller than the number of target objects contained in the container when at least the second target object starts to drop.

5. The control apparatus according to any one of claims 1 to 4, wherein
the computing apparatus determines a first drop height, from which at least the second target object starts to drop into the container, based on an imaged result by the imaging system imaging at least a part of a plurality of target objects contained in the container, and
the first control signal includes a signal for controlling at least one of the robot and the holding apparatus so that at least the second target object drops into the container from the determined first drop height.

6. The control apparatus according to claim 5, wherein
the first drop height is a height of the second target object when at least the second target object starts to drop, a height of the first target object when at least the second target object starts to drop, heights of the first and second target objects when at least the second target object starts to drop, a height of the imaging system when at least the second target object starts to drop, or a height of the holding apparatus when at least the second target object starts to drop.

7. The control apparatus according to claim 5 or 6, wherein
the imaged result that is used to determine the first drop height is an imaged result by the imaging system imaging the target object group.

8. The control apparatus according to any one of claims 1 to 7, wherein
the target object group is a first target object group,
the second control signal includes a signal for controlling at least one of the robot and the holding apparatus so that at least the fourth target object drops into the container from the lower position, in a case where the fourth target object is held by the holding apparatus together with the third target object when the holding apparatus holds the third target object of a second target object group, which includes at least a part of a plurality of target objects contained in the container, based on an imaged result by the imaging system imaging the second target object group.

9. The control apparatus according to claim 8, wherein
a height of the second target object group is lower than a height of the first target object group.

10. The control apparatus according to claim 8 or 9, wherein
the computing apparatus determines a second drop height, from which at least the fourth target object starts to drop into the container, based on an imaged result by the imaging system imaging at least a part of a plurality of target objects contained in the container, and
the second control signal includes a signal for controlling at least one of the robot and the holding apparatus so that at least the fourth target object drops into the container from the determined second drop height.

11. The control apparatus according to claim 10, wherein
the second drop height is a height of the fourth target object when at least the fourth target object starts to drop, a height of the third target object when at least the fourth target object starts to drop, heights of the third and fourth target objects when at least the fourth target object starts to drop, a height of the imaging system when at least the fourth target object starts to drop, or a height of the holding apparatus when at least the fourth target object starts to drop.

12. The control apparatus according to claim 10 or 11, wherein
the imaged result that is used to determine the second drop height is an imaged result by the imaging system imaging the second target object group.

13. The control apparatus according to any one of claims 1 to 12, wherein
a state in which the second target object is held by the holding apparatus together with the first target object includes a state in which the second target object is indirectly or directly held by the holding apparatus, and
a state in which the fourth target object is held by the holding apparatus together with the third target object includes a state in which the fourth target object is indirectly or directly held by the holding apparatus.

14. The control apparatus according to claim 13, wherein
the state in which the second target object is indirectly held by the holding apparatus is a state in which the second target object is held by the first target object held by the holding apparatus,
the state in which the second target object is directly held by the holding apparatus is a state in which each of the first target object and the second target object is directly held by the holding apparatus,
the state in which the fourth target object is indirectly held by the holding apparatus is a state in which the fourth target object is held by the third target object held by the holding apparatus, and
the state in which the fourth target object is directly held by the holding apparatus is a state in which each of the third target object and the fourth target object is directly held by the holding apparatus.

15. The control apparatus according to claim 14, wherein
in a case of the state in which the second target object is held by the first target object held by the holding apparatus, the computing apparatus generates, as the first control signal, a signal for controlling at least one of the robot and the holding apparatus so that the second target object drops from the first target object in a state where the first target object is held by the holding apparatus.

16. The control apparatus according to claim 15, wherein
the first control signal includes a signal for controlling the robot so that the second target object drops from the first target object by moving the holding apparatus while holding the first target object.

17. The control apparatus according to claim 16, wherein
the moving the holding apparatus includes changing a pose of the holding apparatus.

18. The control apparatus according to claim 17, wherein
the changing the pose of the holding apparatus by the first control signal includes rotationally moving a reference point of the holding apparatus in a direction directed from an end part of the first target object held by the holding apparatus toward the reference point of the holding apparatus.

19. The control apparatus according to claim 18, wherein
the end part of the first target object is a part of the end part of the first target object that is farthest from the reference point of the holding apparatus.

20. The control apparatus according to any one of claims 17 to 19, wherein
the dropping the second target object from the first target object based on the first control signal includes dropping the second target object, which has moved in a direction that is different from a direction in which the pose of the holding apparatus is changed based on the first control signal, from the first target object.

21. The control apparatus according to any one of claims 17 to 20, wherein
the dropping the second target object from the first target object based on the first control signal includes dropping the second target object, which has moved by changing the pose of the holding apparatus based on the first control signal in a direction that is different from a direction in which the holding apparatus is positioned based on the first control signal, from the first target object.

22. The control apparatus according to any one of claims 16 to 21, wherein
the moving the holding apparatus includes changing a height of the holding apparatus.

23. The control apparatus according to claim 22, wherein
the moving the holding apparatus includes changing a pose of the holding apparatus, and
the first control signal includes a signal for controlling the robot so that the second target object drops from the first target object from a position, which is higher than a position from which at least the fourth target object starts to drop into the container, by changing the height of the holding apparatus based on a change amount of the pose of the holding apparatus.

24. The control apparatus according to claim 22 or 23, wherein
the first control signal includes a signal for controlling the robot so that the second target object drops from the first target object from a position, which is higher than a position from which at least the fourth target object starts to drop into the container, by changing the height of the holding apparatus while changing a pose of the holding apparatus.

25. The control apparatus according to any one of claims 15 to 24, wherein
the first control signal includes a signal for controlling the holding apparatus so that the second target object drops from the first target object by decreasing a holding force of the holding apparatus while holding the first target object.

26. The control apparatus according to any one of claims 15 to 24, wherein
after the second target object drops from the first target object into the container based on the first control signal in a state where the holding apparatus holds the first target object, the first target object held by the holding apparatus is transported from the container and released from the holding apparatus outside the container.

27. The control apparatus according to any one of claims 14 to 26, wherein
in a case of the state in which each of the first target object and the second target object is directly held by the holding apparatus, the computing apparatus generates, as the first control signal, a signal for controlling at least one of the robot and the holding apparatus so that the first target object and the second target object drop from the holding apparatus.

28. The control apparatus according to claim 27, wherein
the first control signal includes a signal for controlling the holding apparatus so that the first target object and the second target object drop from the holding apparatus.

29. The control apparatus according to claim 27 or 28, wherein
the first control signal includes a signal for controlling the robot so that the first target object and the second target object drop from the holding apparatus by moving the holding apparatus.

30. The control apparatus according to any one of claims 27 to 29, wherein
the first control signal includes a signal for controlling at least one of the robot and the holding apparatus so that the first target object and the second target object drop from the holding apparatus from a position, which is higher than a position from which at least the fourth target object starts to drop into the container, by changing a height of the holding apparatus.

31. The control apparatus according to any one of claims 1 to 30, wherein
the first control signal includes a first signal for controlling at least one of the robot and the holding apparatus so that at least the second target object drops into the container, and
in a case where at least the second target object has not dropped even after at least one of the robot and the holding apparatus is controlled based on the first signal, the computing apparatus generates, as a part of the first control signal, a second signal for controlling at least one of the robot and the holding apparatus in a control aspect, which is different from a control aspect based on the first signal, so that at least the second target object drops.

32. The control apparatus according to claim 31, wherein
the control aspect includes at least one of a control aspect of the robot and a control aspect of the holding apparatus.

33. The control apparatus according to claim 32, wherein
the control aspect of the robot includes at least one of a movement direction, a movement distance, a movement speed, and a movement acceleration of the holding apparatus controlled by the robot.

34. The control apparatus according to claim 32 or 33, wherein
the control aspect of the holding apparatus includes a holding force of the holding apparatus.

35. The control apparatus according to any one of claims 1 to 34, wherein
the computing apparatus generates the first control signal after the holding apparatus holds the first target object based on an imaged result by the imaging system imaging the target object group.

36. The control apparatus according to claim 35, wherein
the computing apparatus generates the first control signal based on a measured result by a measurement apparatus.

37. The control apparatus according to claim 36, wherein
the computing apparatus generates the first control signal for controlling at least one of the robot and the holding apparatus based on the measured result so that a pose of at least the second target object, which has dropped to be positioned in the container, becomes a desired pose.

38. The control apparatus according to claim 37, wherein
the desired pose includes a pose that allows a desired part of at least the second target object, which has dropped to be positioned in the container, to face a desired direction.

39. The control apparatus according to claim 38, wherein
the desired part includes a hold target part that is set in advance and that is at least a part of the target object held by the holding apparatus.

40. The control apparatus according to claim 38 or 39, wherein
the first target object is held by the holding apparatus from among the plurality of target objects contained in the container, based on a result of a matching processing using a model indicating a shape of at least a part of the target object and the imaged result by the imaging system imaging the target object group, and
the desired part includes a part of at least the second target object that corresponds to the model.

41. The control apparatus according to any one of claims 38 to 40, wherein
the desired part includes a part of the second target object that is selected by a user.

42. The control apparatus according to any one of claims 38 to 41, wherein
the desired direction includes a direction that allows the imaging system to be positioned to image at least the second target object that has dropped to be positioned in the container.

43. The control apparatus according to any one of claims 38 to 42, wherein
the desired direction includes a direction that allows the desired part of at least the second target object, which has dropped to be positioned in the container, to face the imaging system that images at least the second target object that has dropped to be positioned in the container.

44. The control apparatus according to any one of claims 38 to 43, wherein
an opening, through which the holding apparatus enters the container by a control of the robot to hold the target object contained in the container, is formed in the container, and
the desired direction includes a direction of the opening as viewed from at least the second target object that has dropped to be positioned in the container.

45. The control apparatus according to any one of claims 38 to 44, wherein
the desired direction includes an upward direction as viewed from at least the second target object that has dropped to be positioned in the container.

46. The control apparatus according to any one of claims 38 to 45, wherein
the desired direction includes a direction that is different from a direction in which at least a part of the container is positioned as viewed from at least the second target object that has dropped to be positioned in the container.

47. The control apparatus according to any one of claims 36 to 46, wherein
the computing apparatus generates the first control signal for controlling at least one of the robot and the holding apparatus based on the measured result so that at least the second target object drops to a desired position in the container.

48. The control apparatus according to claim 47, wherein
the desired position includes a position in the container at which there is no target object.

49. The control apparatus according to any one of claims 36 to 48, wherein
the computing apparatus determines whether to drop only the second target object into the container or to drop the first target object and the second target object into the container, among the first target object and the second target object held by the holding apparatus, based on the measured result, and generates the first control signal based on a determined result.

50. The control apparatus according to claim 49, wherein
in a case where it is determined to drop only the second target object into the container, the computing apparatus generates the first control signal including a signal for controlling at least one of the robot and the holding apparatus so that only the second target object drops into the container while holding the first target object.

51. The control apparatus according to claim 50, wherein
the first control signal includes a signal for controlling the robot so that only the second target object drops into the container by moving the holding apparatus while holding the first target object.

52. The control apparatus according to claim 50 or 51, wherein
after at least the second target object starts to drop into the container based on the first control signal, the first target object held by the holding apparatus is transported from the container and released from the holding apparatus outside the container.

53. The control apparatus according to any one of claims 49 to 52, wherein
in a case where it is determined to drop the first target object and the second target object into the container, the computing apparatus generates the first control signal including a signal for controlling at least one of the robot and the holding apparatus so that the first target object and the second target object held by the holding apparatus drop into the container.

54. The control apparatus according to claim 53, wherein
the first control signal includes a signal for controlling the holding apparatus so that the first target object and the second target object drop into the container after controlling the robot to change a height of the holding apparatus.

55. The control apparatus according to claim 53 or 54, wherein
after the first target object and the second target object have dropped into the container based on the first control signal, the target object of a plurality of target objects contained in the container is held by the holding apparatus or at least a part of the plurality of target objects contained in the container is imaged by the imaging system.

56. The control apparatus according to any one of claims 36 to 55, wherein
the measurement apparatus includes the imaging system, and
the computing apparatus generates the first control signal based on an imaged result by the imaging system after the holding apparatus holds the first target object based on an imaged result by the imaging system imaging the target object group.

57. The control apparatus according to claim 56, wherein
the imaged result that is used to generate the first control signal includes an imaged result by the imaging system imaging at least one of the first target object and the second target object held by the holding apparatus.

58. The control apparatus according to claim 57, wherein
the computing apparatus:
generates, as a part of the first control signal, a signal for controlling the robot so that the holding apparatus moves away from a plurality of target objects contained in the container from a position at which the first target object is held by the holding apparatus, after the first target object is held by the holding apparatus based on the imaged result by the imaging system imaging the target object group, and
at least one of the first target object and the second target object held by the holding apparatus, which has moved away from the plurality of target objects contained in the container based on the signal that is a part of the first control signal, is imaged by the imaging system.

59. The control apparatus according to claim 58, wherein
the signal that is a part of the first control signal is a signal for controlling the robot so that the holding apparatus moves to a position that is higher than a position at which the first target object is held by the holding apparatus.

60. The control apparatus according to claim 58 or 59, wherein
the first control signal includes a signal for controlling the robot so that the holding apparatus approaches the container from a position when the imaging system images at least one of the first target object and the second target object.

61. The control apparatus according to any one of claims 58 to 60, wherein
the first control signal includes a signal for controlling at least one of the robot and the holding apparatus so that at least the second target object drops after the holding apparatus approaches the container from a position when the imaging system images at least one of the first target object and the second target object.

62. The control apparatus according to any one of claims 56 to 61, wherein
the imaged result that is used to generate the first control signal includes an imaged result by the imaging system imaging at least a part of a plurality of target objects contained in the container.

63. The control apparatus according to claim 62, wherein
the imaged result that is used to generate the first control signal is an imaged result by the imaging system imaging the target object group.

64. A control system comprising:
the control apparatus according to any one of claims 1 to 63; and
the imaging system.

65. A robot system comprising:
the control apparatus according to any one of claims 1 to 63;
the imaging system; and
the robot.

66. A control method that generates a control signal for controlling at least one of a robot, on which a holding apparatus that is configured to hold a target object and an imaging system that images the target object are mounted and which moves the holding apparatus and the imaging system, and a holding apparatus, wherein
the control method comprises:
generating, as the control signal, a first control signal for controlling at least one of the robot and the holding apparatus so that at least a second target object drops into a container, in a case where the second target object of a plurality of target objects contained in the container is held by the holding apparatus together with a first target object, which is the target object in a target object group including at least a part of a plurality of target objects contained in the container, when the holding apparatus holds the first target object based on an imaged result by the imaging system imaging the target object group; and
generating, as the control signal, a second control signal for controlling at least one of the robot and the holding apparatus so that at least a fourth target object drops into the container from a position that is lower than a position from which at least the second target object starts to drop into the container, in a case where the fourth target object of a plurality of target objects contained in the container is held by the holding apparatus together with a third target object of a plurality of target objects contained in the container, when the holding apparatus holds the third target object after at least the second target object has dropped into the container based on the first control signal.

67. A computer program that allows a computer to execute the control method according to claim 66.

68. A control apparatus that generates a control signal for controlling at least one of a robot, on which a holding apparatus that is configured to hold a target object and an imaging system that images the target object are mounted and which moves the holding apparatus and the imaging system, and a holding apparatus, wherein
the control apparatus comprises:
a computing apparatus that generates the control signal; and
a communication apparatus that outputs the control signal generated by the computing apparatus,
the computing apparatus generates, as the control signal, a first control signal for controlling at least one of the robot and the holding apparatus based on a held state of a held target object group held by the holding apparatus, which is detected based on a second imaged result acquired by the imaging system imaging the held target object group that includes a plurality of target objects held by the holding apparatus, after a holding operation by the holding apparatus is performed on the target object contained in a container based on a first imaged result acquired by the imaging system imaging at least a part of a plurality of target objects contained in the container.

69. The control apparatus according to claim 68, wherein
the computing apparatus:
generates, as a part of the first control signal, a signal for controlling the robot so that the holding apparatus moves away from a plurality of target objects contained in the container from a position at which the holding apparatus holds the held target object group, after the holding operation by the holding apparatus is performed on the target object contained in the container based on the first imaged result, and
the held state is detected based on the second imaged result acquired by the imaging system imaging the held target object group held by the holding apparatus that has moved away from the plurality of target objects contained in the container based on the signal that is a part of the first control signal.

70. The control apparatus according to claim 69, wherein
the signal that is a part of the first control signal includes a signal for controlling the robot so that the holding apparatus moves to a position that is higher than a position at which the held target object group is held by the holding apparatus.

71. The control apparatus according to any one of claims 68 to 70, wherein
the computing apparatus generates the first control signal for controlling at least one of the robot and the holding apparatus based on the held state so that at least one target object of the held target object group drops into the container, and
a position from which at least one target object of the held target object group starts to drop into the container is closer to the container than a position at which the imaging system images the held target object group in order to acquire the second imaged result.

72. The control apparatus according to claim 71, wherein
the first control signal includes a signal for controlling at least one of the robot and the holding apparatus so that at least one target object of the held target object group drops into the container from a position that is lower than a position at which the imaging system images the held target object group in order to acquire the second imaged result.

73. The control apparatus according to any one of claims 68 to 72, wherein
the holding operation includes an operation for holding one target object of a plurality of target objects contained in the container by the holding apparatus, and
the target object, which is other than the one target object held by the holding apparatus, of the held target object group is an excess target object held by the holding apparatus when the one target object is held by the holding operation.

74. The control apparatus according to any one of claims 68 to 73, wherein
the holding operation includes an operation for holding one target object, which is included in a part of a plurality of target objects contained in the container and which is imaged by the imaging system as the first imaged result, by the holding apparatus, and
the target object, which is other than the one target object held by the holding apparatus, of the held target object group is an excess target object held by the holding apparatus when the one target object is held by the holding operation.

75. The control apparatus according to any one of claims 68 to 74, wherein
the held state includes a state in which at least one target object of the held target object group held by the holding apparatus is indirectly held by the holding apparatus, and a state in which two or more target objects of the held target object group held by the holding apparatus are directly held by the holding apparatus.

76. The control apparatus according to claim 75, wherein
the computing apparatus discriminates between the indirectly held state and the directly held state based on the second imaged result, and generates the first control signal based on a discriminated result.

77. The control apparatus according to claim 75 or 76, wherein
the indirectly held state includes a state in which another target object is held by one target object of the held target object group held by the holding apparatus, and
the directly held state includes a state in which each of two or more target objects of the held target object group is directly held by the holding apparatus.

78. The control apparatus according to claim 77, wherein
in a case where the detected held state is the state in which the another target object is held by the one target object held by the holding apparatus, the first control signal includes a signal for controlling at least one of the robot and the holding apparatus so that the another target object drops into the container while holding the one target object.

79. The control apparatus according to claim 78, wherein
the first control signal includes a signal for controlling the robot so that the another target object drops into the container by moving the holding apparatus while holding the one target object.

80. The control apparatus according to claim 78 or 79, wherein
in a case where the another target object has dropped into the container based on the first control signal, the one target object held by the holding apparatus is transported from the container and released from the holding apparatus outside the container.

81. The control apparatus according to any one of claims 78 to 80, wherein
the computing apparatus generates, as the control signal, a third control signal for controlling at least one of the robot and the holding apparatus so that the one target object held by the holding apparatus is transported from the container and released from the holding apparatus outside the container.

82. The control apparatus according to any one of claims 78 to 81, wherein
the another target object is single target object,
the one target object is a first target object and the another target object is a second target object, and
the first control signal includes a signal for controlling the robot so that the second target object drops from the first target object into the container by moving the holding apparatus while holding the first target object.

83. The control apparatus according to claim 82, wherein
the moving the holding apparatus includes changing a pose of the holding apparatus.

84. The control apparatus according to claim 83, wherein
the changing the pose of the holding apparatus by the first control signal includes rotationally moving a reference point of the holding apparatus in a direction directed from an end part of the first target object held by the holding apparatus toward the reference point of the holding apparatus.

85. The control apparatus according to claim 84, wherein
the end part of the first target object is a part of the end part of the first target object that is farthest from the reference point of the holding apparatus.

86. The control apparatus according to any one of claims 83 to 85, wherein
the dropping the second target object from the first target object based on the first control signal includes dropping the second target object, which has moved in a direction that is different from a direction in which the pose of the holding apparatus is changed based on the first control signal, from the first target object.

87. The control apparatus according to any one of claims 83 to 86, wherein
the dropping the second target object from the first target object based on the first control signal includes dropping the second target object, which has moved by changing the pose of the holding apparatus based on the first control signal in a direction that is different from a direction in which the holding apparatus is positioned based on the first control signal, from the first target object.

88. The control apparatus according to any one of claims 82 to 87, wherein
the first control signal includes a signal for controlling the robot so that the second target object drops from the first target object from a first drop height by moving the holding apparatus while holding the first target object.

89. The control apparatus according to claim 88, wherein
the first drop height is a height of the second target object when it drops from the first target object, a height of the first target object when the second target object drops from the first target object, or a height of the holding apparatus when the second target object drops from the first target object.

90. The control apparatus according to claim 88 or 89, wherein
the moving the holding apparatus includes changing a height of the holding apparatus.

91. The control apparatus according to claim 90, wherein
the moving the holding apparatus includes changing a pose of the holding apparatus, and
the first control signal includes a signal for controlling the robot so that the second target object drops from the first target object from the first drop height by changing the height of the holding apparatus based on a change amount of the pose of the holding apparatus.

92. The control apparatus according to claim 90 or 91, wherein
the first control signal includes a signal for controlling the robot so that the second target object drops from the first target object from the first drop height by changing the height of the holding apparatus while changing a pose of the holding apparatus.

93. The control apparatus according to any one of claims 77 to 92, wherein
in a case where the detected held state is a state in which each of two or more target objects of the held target object group held by the holding apparatus is directly held by the holding apparatus, the first control signal includes a signal for controlling at least one of the robot and the holding apparatus so that the held target object group held by the holding apparatus drops into the container.

94. The control apparatus according to claim 93, wherein
the first control signal includes a signal for controlling the holding apparatus so that the held target object group held by the holding apparatus drops into the container.

95. The control apparatus according to claim 93 or 94, wherein
after the held target object group held by the holding apparatus drops into the container based on the first control signal, the target object of a plurality of target objects contained in the container is held by the holding apparatus, or at least a part of the plurality of target objects contained in the container is imaged by the imaging system.

96. The control apparatus according to any one of claims 93 to 95, wherein
after the held target object group held by the holding apparatus drops into the container based on the first control signal, the computing apparatus generates, as the control signal, a third control signal for controlling at least one of the robot and the holding apparatus so that the target object of a plurality of target objects contained in the container is held by the holding apparatus, or at least a part of the plurality of target objects contained in the container is imaged by the imaging system.

97. The control apparatus according to any one of claims 93 to 96, wherein
the held target object group held by the holding apparatus includes a first target object and a second target object, and
the first control signal includes a signal for controlling at least one of the robot and the holding apparatus so that the first target object and the second target object held by the holding apparatus drop from the holding apparatus into the container.

98. The control apparatus according to claim 97, wherein
the first control signal includes a signal for controlling at least one of the robot and the holding apparatus so that the first target object and the second target object held by the holding apparatus drop from the holding apparatus into the container from a first drop height.

99. The control apparatus according to claim 98, wherein
the first control signal includes a signal for controlling the robot so that at least one of the holding apparatus, the first target object, and the second target object is positioned at the first drop height by changing a height of the holding apparatus, and a signal for controlling the holding apparatus so that the first target object and the second target object drop from the holding apparatus from the first drop height.

100. The control apparatus according to claim 98 or 99, wherein
the first drop height is a height of at least one of the first target object and the second target object when the first target object and the second target object drop, or a height of the holding apparatus when the first target object and the second target object drop.

101. The control apparatus according to any one of claims 88 to 92 and 98 to 100, wherein
the computing apparatus determines the first drop height based on a measured result of at least a part of a plurality of target objects contained in the container by a measurement apparatus.

102. The control apparatus according to claim 101, wherein
a position to which at least the second target object drops into the container from the determined first drop height is included in a measurement range including at least a part of the plurality of target objects that is contained in the container and that is measured by the measurement apparatus.

103. The control apparatus according to claim 101 or 102, wherein
the computing apparatus determines the first drop height based on at least one of a height and a quantity of at least a part of the plurality of target objects contained in the container, which is calculated based on the measured result of at least a part of the plurality of target objects contained in the container by the measurement apparatus.

104. The control apparatus according to any one of claims 101 to 103, wherein
the measurement apparatus is the imaging system, and
the computing apparatus determines the first drop height based on the first imaged result.

105. The control apparatus according to any one of claims 101 to 104, wherein
the measurement apparatus is the imaging system, and
the computing apparatus determines the first drop height based on a third imaged result, which is acquired by the imaging system imaging at least a part of the plurality of target objects contained in the container after the holding operation by the holding apparatus is performed.

106. The control apparatus according to any one of claims 68 to 105, wherein
the computing apparatus generates the first control signal based on a measured result of at least a part of a plurality of target objects contained in the container by a measurement apparatus.

107. The control apparatus according to claim 106, wherein
the first control signal includes a signal for controlling at least one of the robot and the holding apparatus so that a drop target object, which is at least one target object of the held target object, drops from a first drop height by moving the holding apparatus while holding a first target object, which is at least one of the held target object, and
the computing apparatus determines the first drop height based on the measured result.

108. The control apparatus according to claim 106 or 107, wherein
the computing apparatus generates the first control signal for controlling at least one of the robot and the holding apparatus based on the measured result by the measurement apparatus so that a drop target object, which is at least one target object of the held target object group held by the holding apparatus, drops to a desired position in the container,.

109. The control apparatus according to claim 108, wherein
the desired position includes a position in the container at which there is no target object.

110. The control apparatus according to any one of claims 106 to 109, wherein
the computing apparatus generates the first control signal based on at least one of a height and a quantity of at least a part of the plurality of target objects contained in the container, which is calculated based on the measured result by the measurement apparatus.

111. The control apparatus according to claim 109 or 110, wherein
the measurement apparatus is configured to directly or indirectly measure at least one of the height and the quantity.

112. The control apparatus according to claim 103, 110, or 111, wherein
the imaging system is a first imaging system,
the measurement apparatus includes at least one of the first imaging system and a second imaging system that is different from the first imaging system, and
the computing apparatus calculates at least one of the height or the quantity based on a third imaged result by at least one of the first and second imaging systems.

113. The control apparatus according to claim 112, wherein
the third imaged result includes an imaged result of at least a part of a plurality of target objects contained in the container by at least one of the first and second imaging systems.

114. The control apparatus according to claim 112 or 113, wherein
the third imaged result includes an imaged result of at least one marker that is positioned at a position, which faces a space in which at least a part of a plurality of target objects is positioned, on a surface of the container.

115. The control apparatus according to any one of claims 101 to 114, wherein
the measurement apparatus includes a weight sensor that is configured to measure a weight of at least a part of a plurality of target objects contained in the container.

116. The control apparatus according to any one of claims 101 to 115, wherein
the measurement apparatus includes at least one sensor that is configured to detect at least one target object of a plurality of target objects contained in the container.

117. The control apparatus according to claim 116, wherein
the at least one sensor is positioned in the container.

118. The control apparatus according to any one of claims 88 to 92, 98 to 105, and 107, wherein
the computing apparatus determines the first drop height based on the number of target objects that has been transported from the container and released from the holding apparatus outside the container.

119. The control apparatus according to any one of claims 68 to 118, wherein
the computing apparatus generates the first control signal based on the number of target objects that has been transported from the container and released from the holding apparatus outside the container.

120. The control apparatus according to any one of claims 68 to 119, wherein
the first control signal includes a signal that is generated by the computing apparatus based on the held state of the held target object group held by the holding apparatus and that is for controlling at least one of the robot and the holding apparatus so that a drop target object, which is at least one target object of the held target object group, drops into the container.

121. The control apparatus according to claim 120, wherein
the held state includes at least one of a position and a pose of at least the drop target object of the held target object group.

122. The control apparatus according to claim 120 or 121, wherein
the first control signal includes a signal that is generated by the computing apparatus based on the held state and that is for controlling at least one of the robot and the holding apparatus so that a pose of the drop target object, which has dropped to be positioned in the container, becomes a desired pose.

123. The control apparatus according to claim 122, wherein
the desired pose includes a pose that allows a desired part of the drop target object, which has dropped to be positioned in the container, to face a desired direction.

124. The control apparatus according to claim 123, wherein
the desired part includes a hold target part that is set in advance and that is at least a part of the target object held by the holding apparatus.

125. The control apparatus according to claim 123 or 124, wherein
the holding operation is performed based on a result of a matching processing using a model indicating a shape of at least a part of the target object and the first imaged result, and
the desired part includes a part of the drop target object corresponding to the model.

126. The control apparatus according to any one of claims 123 to 125, wherein
the desired part includes a part of the drop target object that is selected by a user.

127. The control apparatus according to any one of claims 123 to 126, wherein
the desired direction includes a direction that allows the imaging system to be positioned to image the drop target object that has dropped to be positioned in the container.

128. The control apparatus according to any one of claims 123 to 127, wherein
the desired direction includes a direction that allows the desired part of at least the drop target object, which has dropped to be positioned in the container, to face the imaging system that images the drop target object that has dropped to be positioned in the container.

129. The control apparatus according to any one of claims 123 to 128, wherein
an opening, through which the holding apparatus enters the container by a control of the robot to hold the target object contained in the container, is formed in the container, and
the desired direction includes a direction of the opening as viewed from the drop target object that has dropped to be positioned in the container.

130. The control apparatus according to any one of claims 123 to 129, wherein
the desired direction includes an upward direction as viewed from the drop target object that has dropped to be positioned in the container.

131. The control apparatus according to any one of claims 123 to 130, wherein
the desired direction includes a direction that is different from a direction in which at least a part of the container is positioned as viewed from the drop target object that has dropped to be positioned in the container.

132. The control apparatus according to any one of claims 123 to 131, wherein
the computing apparatus generates the first control signal for controlling at least one of the robot and the holding apparatus based on a measured result by a measurement apparatus and the held state of the held target object group held by the holding apparatus so that the drop target object drops into the container,.

133. The control apparatus according to claim 132, wherein
the measurement apparatus includes the imaging system, and
the measured result includes an imaged result of at least a part of a plurality of target objects contained in the container by the imaging system.

134. The control apparatus according to any one of claims 68 to 133, wherein
the first control signal includes a first signal for controlling at least one of the robot and the holding apparatus so that a drop target object, which is at least one target object of the held target object group, drops into the container, and
the computing apparatus determines whether or not the drop target object is held by the holding apparatus, based on a measured result by a measurement apparatus while or after at least one of the robot and the holding apparatus is controlled based on the first signal.

135. The control apparatus according to claim 134, wherein
the measurement apparatus is the imaging system, and
the measured result is an imaged result by the imaging system.

136. The control apparatus according to claim 134 or 135, wherein
the first signal is a signal for controlling at least one of the robot and the holding apparatus so that the drop target object drops into the container, and
in a case where the computing apparatus determines that at least one drop target objects is held by the holding apparatus, the computing apparatus generates, as a part of the first control signal, a second signal for controlling at least one of the robot and the holding apparatus in a control aspect, which is different from a control aspect based on the first signal, so that at least one drop target objects drops.

137. The control apparatus according to claim 136, wherein
the control aspect includes at least one of a control aspect of the robot and a control aspect of the holding apparatus,
the control aspect of the robot includes at least one of a movement direction, a movement distance, a movement speed, and a movement acceleration of the holding apparatus controlled by the robot, and
the control aspect of the holding apparatus includes a holding force of the holding apparatus.

138. The control apparatus according to any one of claims 1 to 137, wherein
the computing apparatus:
generates the first control signal for controlling at least one of the robot and the holding apparatus based on the held state so that at least one target object of the held target object group drops into the container; and
estimates at least one of a position and a pose of the target object, which has dropped into the container based on the first control signal, based on the second imaged result, and
a holding operation by the holding apparatus is performed on the target object based on at least one of the estimated position and pose of the target object.

139. The control apparatus according to any one of claims 77 to 92, wherein
the another target object includes two target objects, and
the computing apparatus, the control signal includes a signal for controlling the robot and the holding apparatus so that the two target objects drop into the container in a state where the holding apparatus holds the one target object.

140. The control apparatus according to claim 139, wherein
the another target object includes a first target object and a second target object,
the state in which the another target object is held by the one target object held by the holding apparatus is a state in which the first target object is held by the one target object held by the holding apparatus, and the second target object is held by the first target object held by the one target object, and
the control signal includes a signal for controlling at least one of the robot and the holding apparatus so that the second target object drops from the first target object into the container in a state where the first target object is held by the one target object held by the holding apparatus, and a signal for controlling at least one of the robot and the holding apparatus so that the first target object drops from the one target object into the container in a state where the one target object is held by the holding apparatus.

141. The control apparatus according to any one of claims 77 and 93 to 120, wherein
the held target object group includes three target objects, and
in a case of a state in which each of two target objects or three target objects of the held target object group is directly held by the holding apparatus, the control signal includes a signal for controlling the robot and the holding apparatus so that the two target objects or the three target objects directly held by the holding apparatus drop into the container while holding the one target object.

142. A control system comprising:
the control apparatus according to any one of claims 68 to 141; and
the imaging system.

143. A robot system comprising:
the control apparatus according to any one of claims 1 to 141;
the imaging system; and
the robot.

144. A control method that generates a control signal for controlling at least one of a robot, on which a holding apparatus that is configured to hold a target object and an imaging system that images the target object are mounted and which moves the holding apparatus and the imaging system, and a holding apparatus, wherein
the control method generates, as the control signal, a first control signal for controlling at least one of the robot and the holding apparatus based on a held state of a held target object group held by the holding apparatus, which is detected based on a second imaged result acquired by the imaging system imaging the held target object group that includes a plurality of target objects held by the holding apparatus, after a holding operation by the holding apparatus is performed on the target object contained in a container based on a first imaged result acquired by the imaging system imaging at least a part of a plurality of target objects contained in the container.

145. A computer program that allows a computer to execute the control method according to claim 144.

146. A control apparatus that generates a control signal for controlling at least one of a robot, on which a holding apparatus that is configured to hold a target object and an imaging system that images the target object are mounted and which moves the holding apparatus and the imaging system, and a holding apparatus, wherein
the control apparatus comprises:
a computing apparatus that generates the control signal; and
a communication apparatus that outputs the control signal generated by the computing apparatus,
the computing apparatus:
determines the number of target objects held by the holding apparatus based on a second imaged result acquired by imaging the target objects held by the holding apparatus, after a holding operation by the holding apparatus is performed on the target object contained in a container based on a first imaged result acquired by the imaging system imaging at least a part of a plurality of target objects contained in the container, and
generates the control signal for controlling at least one of the robot and the holding apparatus so that a control aspect of at least one of the robot and the holding apparatus changes based on the determined number.

147. The control apparatus according to claim 146, wherein
the computing apparatus generates the control signal for controlling at least one of the robot and the holding apparatus so that the control aspect in a case where it is determined that the number is one is different from the control aspect in a case where it is determined that the number is plural.

148. The control apparatus according to claim 146 or 147, wherein
in a case where it is determined that the number is plural, the computing apparatus generates the control signal for controlling at least one of the robot and the holding apparatus so that the control aspect in a state where at least one target object of the plurality of target objects held by the holding apparatus is indirectly held by the holding apparatus is different from the control aspect in a state where two or more target objects of the held target object group held by the holding apparatus are directly held by the holding apparatus.

149. The control apparatus according to any one of claims 146 to 148, wherein
in a case where it is determined that the number is one, the computing apparatus generates the control signal for controlling at least one of the robot and the holding apparatus so that the one target object held by the holding apparatus is transported from the container and released from the holding apparatus outside the container.

150. The control apparatus according to any one of claims 146 to 149, wherein
the control aspect of the robot includes at least one of a movement direction, a movement distance, a movement speed, and a movement acceleration of the holding apparatus controlled by the robot, and
the control aspect of the holding apparatus includes a holding force of the holding apparatus.

151. A control system comprising:
the control apparatus according to any one of claims 146 to 150; and
the imaging system.

152. A robot system comprising:
the control apparatus according to any one of claims 146 to 150;
the imaging system; and
the robot.

153. A control method that generates a control signal for controlling at least one of a robot, on which a holding apparatus that is configured to hold a target object and an imaging system that images the target object are mounted and which moves the holding apparatus and the imaging system, and a holding apparatus, wherein
the control method comprises:
determining the number of target objects held by the holding apparatus based on a second imaged result acquired by imaging the target objects held by the holding apparatus, after a holding operation by the holding apparatus is performed on the target object contained in a container based on a first imaged result acquired by the imaging system imaging at least a part of a plurality of target objects contained in the container, and
generating the control signal for controlling at least one of the robot and the holding apparatus so that a control aspect of at least one of the robot and the holding apparatus changes based on the determined number.

154. A computer program that allows a computer to execute the control method according to claim 153.
